# EUROPEAN PATENT APPLICATION

(11) **EP 4 397 408 A1**
(43) Date of publication of application: **10.07.2024**
(21) Application number: 22864066.0
(22) Date of filing: 12.07.2022
(51) Int. Cl.: B01J 39/07, B01J 39/18, B01J 41/07, B01J 41/12, B01J 47/026, B01J 47/028, B01J 47/14, B01J 49/06, B01J 49/07, B01J 49/08, B01J 49/16, B01J 49/53, B01J 49/57, B01J 49/75, B01J 49/85, C02F 1/42, C02F 1/461

(54) **WATER SOFTENING DEVICE**

(30) Priority: 31.08.2021 JP 2021140599; 03.09.2021 JP 2021143636; 30.09.2021 JP 2021160414; 28.10.2021 JP 2021176053; 21.12.2021 JP 2021206578; 28.02.2022 JP 2022028803; 25.03.2022 JP 2022049197
(71) Applicant: Panasonic Intellectual Property Management Co., Ltd., Kadoma-shi, Osaka 571-0057 (JP)
(72) Inventor: TSUCHIDA, Naoki, Kadoma-shi Osaka 571-0057 (JP); MURASE, Hiroki, Kadoma-shi Osaka 571-0057 (JP); MATSUMOTO, Yui, Kadoma-shi Osaka 571-0057 (JP); ISHIKAWA, Hiroki, Kadoma-shi Osaka 571-0057 (JP); NAGATA, Ayaka, Kadoma-shi Osaka 571-0057 (JP); KATO, Minato, Kadoma-shi Osaka 571-0057 (JP); MARUO, Yuko, Kadoma-shi Osaka 571-0057 (JP); SHIOI, Masahiko, Kadoma-shi Osaka 571-0057 (JP)
(74) Representative: Grünecker Patent- und Rechtsanwälte PartG mbB
(86) International application number: PCT/JP2022/027459
(87) International publication number: WO 2023/032478

(57) **Abstract**

Water softening device (1) includes water softening tank (3), neutralization tank (4), and electrolytic tank (9). Electrolytic tank (9) generates acidic electrolytic water for regenerating weakly acidic cation exchange resin (7) and alkaline electrolytic water for regenerating weakly basic anion exchange resin (8). Then, water softening device (1) includes an acidic electrolytic water circulation flow path that circulates the acidic electrolytic water through electrolytic tank (9), first discharge port (13), water softening tank (3), and first water intake port (12) in the stated order, and an alkaline electrolytic water circulation flow path that circulates the alkaline electrolytic water through electrolytic tank (9), second discharge port (17), neutralization tank (4), and second water intake port (16) in the stated order.

## Description

### TECHNICAL FIELD

The present disclosure relates to a water softening device that softens raw water containing a hardness component.

### BACKGROUND ART

In a conventional water softening device using a weakly acidic cation exchange resin, as a method of regenerating a cation exchange resin without using salt, a method of regenerating a cation exchange resin with acidic electrolytic water generated by electrolysis is known (See, for example, PTL 1.). The weakly acidic cation exchange resin has a proton (hydrogen ion) at the terminal of the functional group, and softens the raw water by exchanging the hardness component (for example, calcium ions and magnesium ions) in the raw water with the proton. Furthermore, water softened with a weakly acidic cation exchange resin becomes acidic because protons are released instead of hardness ions, and may be used in combination with a weakly basic anion exchange resin to neutralize this. As a method of regenerating the anion exchange resin, a method using alkaline electrolytic water generated by electrolysis is known. The weakly basic anion exchange resin neutralizes softened raw water by adsorbing protons and anions contained in water softened by the weakly acidic cation exchange resin.

### Citation List

### Patent Literature

PTL 1: Unexamined Japanese Patent Publication No. 2011-30973
PTL 2: Unexamined Japanese Patent Publication No. 2010-142674

### SUMMARY OF THE INVENTION

In the conventional water softening device, for example, when the regeneration of the weakly acidic cation exchange resin is completed prior to the regeneration of the weakly basic anion exchange resin during the regeneration treatment, hydrogen ions subjected to the regeneration of the weakly acidic cation exchange resin react with hydroxide ions, and the hydroxide ions are consumed by neutralization. As described above, when the regeneration of one ion exchange resin is completed first, there is a problem that the regeneration performance of the other ion exchange resin is deteriorated.

Therefore, the present disclosure has been made to solve the above conventional problems, and an object of the present disclosure is to provide a water softening device capable of suppressing a decrease in regeneration efficiency of the other ion exchange resin caused by completion of a regeneration treatment of one ion exchange resin in the regeneration treatment of a weakly acidic cation exchange resin and a weakly basic anion exchange resin.

The water softening device according to the present disclosure includes a water softening tank, a neutralization tank, and an electrolytic tank. The water softening tank softens raw water containing a hardness component with a weakly acidic cation exchange resin. In the neutralization tank, soft water that has passed through the water softening tank is neutralized with a weakly basic ion exchange resin. The electrolytic tank generates acidic electrolytic water for regenerating the weakly acidic cation exchange resin and alkaline electrolytic water for regenerating the weakly basic anion exchange resin. The electrolytic tank includes a first discharge port through which the acidic electrolytic water is discharged from the electrolytic tank to the water softening tank, a first water intake port through which the soft water that has passed through the water softening tank is taken in the electrolytic tank, a second discharge port through which the alkaline electrolytic water is discharged from the electrolytic tank to the neutralization tank, and a second water intake port through which neutralized water that has passed through the neutralization tank is taken in the electrolytic tank. The water softening device further includes an acidic electrolytic water circulation flow path for circulating the acidic electrolytic water through the electrolytic tank, the first discharge port, the water softening tank, and the first water intake port in the stated order, and an alkaline electrolytic water circulation flow path for circulating the alkaline electrolytic water through the electrolytic tank, the second discharge port, the neutralization tank, and the second water intake port in the stated order. The above structure can achieve the intended object.

According to the water softening device of the present disclosure, it is possible to provide a water softening device capable of suppressing a decrease in regeneration efficiency of the other ion exchange resin caused by completion of the regeneration treatment of one ion exchange resin in the regeneration treatment of the weakly acidic cation exchange resin and the weakly basic anion exchange resin.

### BRIEF DESCRIPTION OF THE DRAWINGS

Fig. 1 is a conceptual diagram illustrating a configuration of a water softening device according to a first exemplary embodiment of the present disclosure.
Fig. 2 is a configuration diagram illustrating an acidic electrolytic water circulation flow path and an alkaline electrolytic water circulation flow path of the water softening device.
Fig. 3 is a diagram illustrating a state during operation of the water softening device.
Fig. 4 is a conceptual diagram illustrating a configuration of a water softening device according to a second exemplary embodiment of the present disclosure.
Fig. 5 is a configuration diagram illustrating a circulation flow path during a first regeneration treatment of the water softening device according to the second exemplary embodiment.
Fig. 6 is a configuration diagram illustrating a circulation flow path during a second regeneration treatment of the water softening device according to the second exemplary embodiment.
Fig. 7 is a diagram illustrating a state during operation of the water softening device according to the second exemplary embodiment.
Fig. 8 is a conceptual diagram illustrating a configuration of a water softening device according to a third exemplary embodiment-1.
Fig. 9 is a configuration diagram illustrating a circulation flow path of the water softening device according to the third exemplary embodiment-1.
Fig. 10 is a configuration diagram illustrating a replacement flow path of the water softening device according to the third exemplary embodiment-1.
Fig. 11 is a diagram illustrating a state during operation of the water softening device according to the third exemplary embodiment-1.
Fig. 12 is a conceptual diagram illustrating a configuration of a water softening device according to a third exemplary embodiment-2.
Fig. 13 is a configuration diagram illustrating a circulation flow path of the water softening device according to the third exemplary embodiment-2.
Fig. 14 is a configuration diagram illustrating a replacement flow path of the water softening device according to the third exemplary embodiment-2.
Fig. 15 is a diagram illustrating a state during operation of the water softening device according to the third exemplary embodiment-2.
Fig. 16 is a conceptual diagram illustrating a configuration of a water softening device according to a third exemplary embodiment-3.
Fig. 17 is a conceptual diagram illustrating a configuration of a water softening device according to a third exemplary embodiment-4.
Fig. 18 is a conceptual diagram illustrating a configuration of a water softening device according to a fourth exemplary embodiment of the present disclosure.
Fig. 19 is a diagram illustrating a state of each component at the time of a resin regeneration treatment of the water softening device according to the fourth exemplary embodiment.
Fig. 20 is a diagram illustrating a state of each component at the time of an electrode regeneration treatment of the water softening device according to the fourth exemplary embodiment.
Fig. 21 is a diagram illustrating a state during operation of the water softening device according to the fourth exemplary embodiment.
Fig. 22 is a conceptual diagram illustrating a configuration of a water softening device according to a fifth exemplary embodiment-1 of the present disclosure.
Fig. 23 is a diagram illustrating a state of each component at the time of operation of the water softening device according to the fifth exemplary embodiment-1.
Fig. 24 is a conceptual diagram illustrating a configuration of a water softening device according to a fifth exemplary embodiment-2 of the present disclosure.
Fig. 25 is a conceptual diagram illustrating a configuration of a water softening device according to a sixth exemplary embodiment.
Fig. 26 is a configuration diagram illustrating a water softening flow path of the water softening device according to the sixth exemplary embodiment.
Fig. 27 is a configuration diagram illustrating a water softening tank regeneration circulation flow path and a neutralization tank regeneration circulation flow path of the water softening device according to the sixth exemplary embodiment.
Fig. 28 is a diagram illustrating a regeneration flow path washing flow path of the water softening device according to the sixth exemplary embodiment.
Fig. 29 is a conceptual diagram illustrating an electrolytic tank washing flow path of the water softening device according to the sixth exemplary embodiment.
Fig. 30 is a configuration diagram illustrating a capture unit washing flow path of the water softening device according to the sixth exemplary embodiment.
Fig. 31 is a configuration diagram illustrating a method of controlling the water softening device according to the sixth exemplary embodiment.
Fig. 32 is a conceptual diagram illustrating a configuration of a water softening device according to a seventh exemplary embodiment.
Fig. 33 is a configuration diagram illustrating a water softening flow path of the water softening device according to the seventh exemplary embodiment.
Fig. 34 is a configuration diagram illustrating a water softening tank regeneration circulation flow path and a neutralization tank regeneration circulation flow path of the water softening device according to the seventh exemplary embodiment.
Fig. 35 is a configuration diagram illustrating a water storage flow path of the water softening device according to the seventh exemplary embodiment.
Fig. 36 is a diagram illustrating a regeneration flow path washing flow path of the water softening device according to the seventh exemplary embodiment.
Fig. 37 is a conceptual diagram illustrating an electrolytic tank washing flow path of the water softening device according to the seventh exemplary embodiment.
Fig. 38 is a configuration diagram illustrating a capture unit washing flow path of the water softening device according to the seventh exemplary embodiment.
Fig. 39 is a configuration diagram illustrating a raw water introduction flow path and a supply flow path of the water softening device according to the seventh exemplary embodiment.
Fig. 40 is a configuration diagram illustrating a method of controlling the water softening device according to the seventh exemplary embodiment.

### DESCRIPTION OF EMBODIMENT

A water softening device according to the present disclosure includes a water softening tank, a neutralization tank, and an electrolytic tank. The water softening tank softens raw water containing a hardness component with a weakly acidic cation exchange resin. The neutralization tank neutralizes the pH of soft water that has passed through the water softening tank with a weakly basic ion exchange resin. The electrolytic tank generates acidic electrolytic water for regenerating the weakly acidic cation exchange resin and alkaline electrolytic water for regenerating the weakly basic anion exchange resin. The electrolytic tank includes a first discharge port through which the acidic electrolytic water is discharged from the electrolytic tank to the water softening tank, a first water intake port through which the soft water that has passed through the water softening tank is taken in the electrolytic tank, a second discharge port through which the alkaline electrolytic water is discharged from the electrolytic tank to the neutralization tank, and a second water intake port through which neutralized water that has passed through the neutralization tank is taken in the electrolytic tank. Then, the water softening device further includes an acidic electrolytic water circulation flow path that circulates the acidic electrolytic water through the electrolytic tank, the first discharge port, the water softening tank, and the first water intake port in the stated order, and an alkaline electrolytic water circulation flow path that circulates the alkaline electrolytic water through the electrolytic tank, the second discharge port, the neutralization tank, and the second water intake port in the stated order.

Accordingly, at the time of the regeneration treatment, the acidic electrolytic water flows through the acidic electrolytic water circulation flow path, and the alkaline electrolytic water flows through the alkaline electrolytic water circulation flow path, so that the mixing of the acidic electrolytic water and the alkaline electrolytic water can be suppressed. Therefore, even after the regeneration of one of the ion exchange resins is completed, the acidic electrolytic water having a pH acidic flows through the acidic electrolytic water circulation flow path, and the alkaline electrolytic water having a pH alkaline flows through the alkaline electrolytic water circulation flow path. Therefore, it is possible to suppress a decrease in the regeneration efficiency of the other ion exchange resin.

Furthermore, in the water softening device according to the present disclosure, the electrolytic tank may further include an anode chamber in which an anode is stored, a cathode chamber in which a cathode is stored, and a diaphragm provided between the anode chamber and the cathode chamber. The electrolytic tank generates the acidic electrolytic water in the anode chamber and the alkaline electrolytic water in the cathode chamber. According to such a configuration, since the anode chamber and the cathode chamber of the electrolytic tank are separated by the diaphragm, it is possible to suppress a neutralization reaction between protons and hydroxide ions due to mixing of the acidic electrolytic water and the alkaline electrolytic water. Therefore, it is possible to suppress a decrease in the regeneration efficiency of the weakly acidic cation exchange resin and the weakly basic anion exchange resin.

Furthermore, the water softening device according to the present disclosure may further include an acidic electrolytic water circulation pump provided in the acidic electrolytic water circulation flow path and an alkaline electrolytic water circulation pump provided in the alkaline electrolytic water circulation flow path. This makes it possible to control the flow rates of the acidic electrolytic water flowing through the acidic electrolytic water circulation flow path and the alkaline electrolytic water flowing through the alkaline electrolytic water circulation flow path. Therefore, by controlling the flow rate to a constant flow rate in order to regenerate each ion exchange resin by the acidic electrolytic water circulation pump and the alkaline electrolytic water circulation pump, a constant regeneration performance of the weakly acidic cation exchange resin and the weakly basic anion exchange resin can be maintained.

Furthermore, the water softening device according to the present disclosure may be configured to include an acidic electrolytic water storage tank at a rear stage of the water softening tank and a front stage of the first water intake port in the acidic electrolytic water circulation flow path. According to such a configuration, by storing the acidic electrolytic water in the acidic electrolytic water storage tank, a total amount of the acidic electrolytic water flowing through the acidic electrolytic water circulation flow path can be controlled.

Furthermore, the water softening device according to the present disclosure may be configured to include an alkaline electrolytic water storage tank at a rear stage of the neutralization tank and a front stage of the second water intake port in the alkaline electrolytic water circulation flow path. According to such a configuration, by storing the alkaline electrolytic water in the alkaline electrolytic water storage tank, a total amount of the alkaline electrolytic water flowing through the alkaline electrolytic water circulation flow path can be controlled.

Furthermore, the water softening device according to the present disclosure may be configured to include a capture unit that is provided at a rear stage of the second discharge port and a front stage of the neutralization tank in the alkaline electrolytic water circulation flow path and separates a solid in the alkaline electrolytic water. According to such a configuration, it is possible to separate a solid generated when the alkaline electrolytic water is generated. Therefore, it is possible to suppress inflow and accumulation of the solid into the neutralization tank and to suppress deterioration in performance during the water softening treatment.

Furthermore, the water softening device according to the present disclosure may be configured such that the acidic electrolytic water discharged from the first discharge port circulates from a downstream side to the water softening tank when the weakly acidic cation exchange resin is regenerated. As a result, during a regeneration treatment, the acidic electrolytic water discharged from the anode chamber of the electrolytic tank flows in from the downstream side where an adsorption amount of a hardness component is smaller in the water softening tank, and the water softening tank is regenerated. In the regeneration of the weakly acidic cation exchange resin on the downstream side, since the consumption of protons in the acidic electrolytic water is smaller than that on an upstream side, a reduction in the proton concentration of the acidic electrolytic water can be suppressed. Accordingly, it is possible to suppress re-adsorption on the upstream side of the hardness components contained in the acidic electrolytic water from the downstream side. Therefore, it is possible to suppress a decrease in the regeneration treatment efficiency of the water softening tank and to shorten the regeneration time.

Furthermore, the water softening device according to the present disclosure may be configured such that, when the weakly basic anion exchange resin is regenerated, the alkaline electrolytic water discharged from the second discharge port flows from a downstream side to the neutralization tank. Thus, during the regeneration treatment, the alkaline electrolytic water discharged from the cathode chamber of the electrolytic tank flows in from the downstream side where an adsorption amount of an anion component is smaller in the neutralization tank, and the neutralization tank is regenerated. In the regeneration of the weakly basic anion exchange resin on the downstream side, since the consumption of hydroxide ions in the alkaline electrolytic water is smaller than that on an upstream side, a reduction in the hydroxide ion concentration of the alkaline electrolytic water can be suppressed. Accordingly, it is possible to suppress re-adsorption on the upstream side of anions contained in the alkaline electrolytic water from the downstream side. Therefore, it is possible to suppress a decrease in the regeneration treatment efficiency of the neutralization tank and to shorten the regeneration time.

Furthermore, the water softening tank of the water softening device according to the present disclosure may include a first water softening tank and a second water softening tank, and the neutralization tank may include a first neutralization tank and a second neutralization tank, and the water softening device may be configured to circulate the raw water through the first water softening tank, the first neutralization tank, the second water softening tank, and the second neutralization tank in the stated order when the raw water is softened. As a result, the raw water containing the hardness component flows out from the first water softening tank before the pH of the raw water is lowered by the water softening treatment in the first water softening tank, is neutralized in the first neutralization tank, is softened in the second water softening tank, and is neutralized in the second neutralization tank. Accordingly, as compared with the case where each of the water softening tank and the neutralization tank is constituted by a single body, it is possible to suppress a decrease in pH of water flowing in the water softening tank, that is, acidification, and thus exchange between the hardness components and protons held by the weakly acidic cation exchange resin in the water softening tank (particularly, the second water softening tank) easily occurs. Therefore, the water softening performance can be improved.

Furthermore, the water softening device according to the present disclosure may be configured such that the acidic electrolytic water discharged from the anode chamber of the electrolytic tank flows through the second water softening tank and then flows through the first water softening tank during the regeneration treatment for regenerating the weakly acidic cation exchange resin. Thus, during the regeneration treatment, the acidic electrolytic water discharged from the anode chamber of the electrolytic tank flows into the second water softening tank having a smaller adsorption amount of the hardness component than the first water softening tank, and the acidic electrolytic water containing the hardness component is discharged from the second water softening tank to the first water softening tank. In the regeneration of the weakly acidic cation exchange resin in the second water softening tank, since the consumption of protons in the acidic electrolytic water is smaller than that in the first water softening tank, a reduction in the proton concentration can be suppressed as compared with the regeneration of the first water softening tank. Accordingly, the acidic electrolytic water containing a large amount of protons can be prevented from flowing into the first water softening tank, and the hardness component can be prevented from being re-adsorbed in the first water softening tank. Therefore, it is possible to suppress a decrease in the regeneration treatment efficiency and to shorten the regeneration time.

Furthermore, the water softening device according to the present disclosure may be configured such that, during the regeneration treatment for regenerating the weakly basic anion exchange resin, the alkaline electrolytic water discharged from the cathode chamber of the electrolytic tank flows through the second neutralization tank and then flows through the first neutralization tank. Thus, during the regeneration treatment, the alkaline electrolytic water discharged from the cathode chamber of the electrolytic tank flows into the second neutralization tank having a smaller adsorption amount of anions than the first neutralization tank, and the alkaline electrolytic water containing anions is discharged from the second neutralization tank to the first neutralization tank. In the regeneration of the weakly basic anion exchange resin in the second neutralization tank, since the consumption of hydroxide ions in the alkaline electrolytic water is smaller than that in the first neutralization tank, a reduction in the hydroxide ion concentration can be suppressed as compared with the regeneration of the first neutralization tank. Accordingly, it is possible to prevent the alkaline electrolytic water containing a large amount of hydroxide ions from flowing into the first neutralization tank, and the anions can be prevented from being re-adsorbed in the first neutralization tank. Therefore, it is possible to suppress a decrease in the regeneration treatment efficiency and to shorten the regeneration time.

An exemplary embodiment of the present disclosure will now be explained with reference to some drawings. Note that the following exemplary embodiments are examples embodying the present disclosure, and do not limit the technical scope of the present disclosure. Furthermore, the drawings described in the exemplary embodiment are schematic views, and the ratios of the sizes and the thicknesses of the components in the drawings do not necessarily reflect the actual dimensional ratios.

### (First exemplary embodiment)

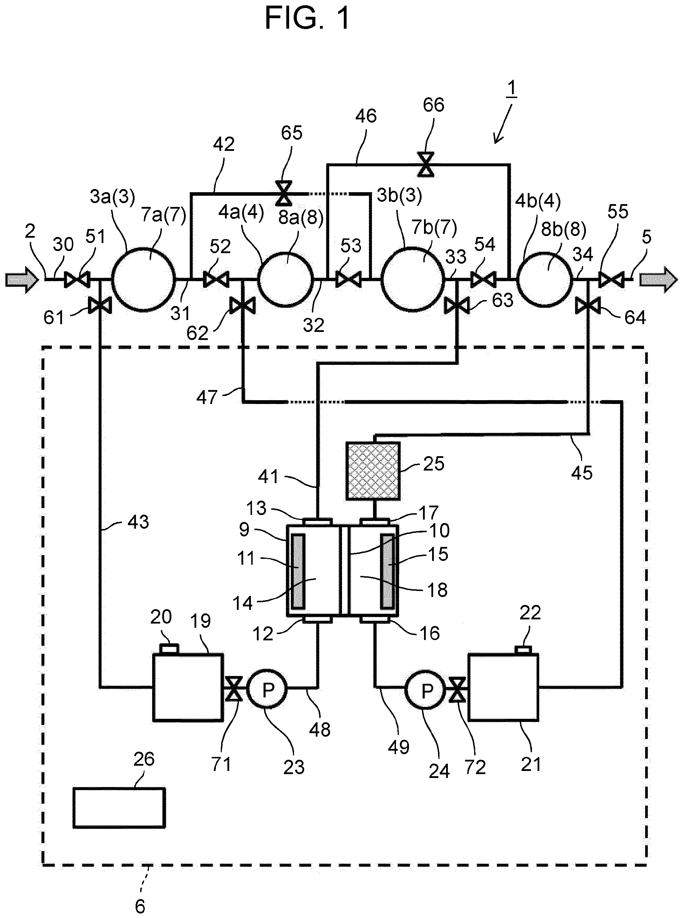

With reference to Fig. 1, water softening device 1 according to a first exemplary embodiment of the present disclosure will be described. Fig. 1 is a conceptual diagram illustrating a configuration of water softening device 1 according to the first exemplary embodiment of the present disclosure. Note that Fig. 1 conceptually illustrates each element of water softening device 1.

### (Overall configuration)

Water softening device 1 is a device that generates city water (raw water containing a hardness component) containing a hardness component supplied from the outside as neutral soft water that can be used as living water. Specifically, as illustrated in Fig. 1, water softening device 1 includes inlet port 2 for raw water from the outside, water softening tank 3, neutralization tank 4, water intake port 5 for treated soft water, and regeneration device 6. Water softening tank 3 includes first water softening tank 3a and second water softening tank 3b. Neutralization tank 4 includes first neutralization tank 4a and second neutralization tank 4b. Furthermore, regeneration device 6 includes electrolytic tank 9, acidic electrolytic water storage tank 19, acidic electrolytic water circulation pump 23, alkaline electrolytic water storage tank 21, alkaline electrolytic water circulation pump 24, and capture unit 25. Furthermore, water softening device 1 includes a plurality of on-off valves (on-off valve 51 to on-off valve 55, on-off valve 61 to on-off valve 66, on-off valve 71, and on-off valve 72) and controller 26.

Inlet port 2 is connected to city water (raw water containing hardness components). Inlet port 2 is an opening through which city water (raw water containing hardness components) is introduced into the device.

Water intake port 5 is an opening for discharging neutral soft water treated by water softening tank 3 and neutralization tank 4 to the outside of the device. That is, water softening device 1 can take out water after the water softening treatment from water intake port 5 by the pressure of city water.

Flow path 30, flow path 31, flow path 32, flow path 33, and flow path 34 connect inlet port 2 to water intake port 5. Flow path 30 is a flow path connecting inlet port 2 to first water softening tank 3a. Flow path 31 is a flow path connecting first water softening tank 3a to first neutralization tank 4a. Flow path 32 is a flow path connecting first neutralization tank 4a to second water softening tank 3b. Flow path 33 is a flow path connecting second water softening tank 3b to second neutralization tank 4b. Flow path 34 is a flow path connecting second neutralization tank 4b to water intake port 5.

In other words, flow path 30 is a flow path for guiding raw water containing a hardness component from inlet port 2 to first water softening tank 3a. Furthermore, flow path 31 is a flow path for guiding the water softened in first water softening tank 3a to first neutralization tank 4a. Flow path 32 is a flow path for guiding the water neutralized in first neutralization tank 4a to second water softening tank 3b. Flow path 33 is a flow path for guiding the water softened in second water softening tank 3b to second neutralization tank 4b. Flow path 34 is a flow path that guides water (soft water) neutralized by second neutralization tank 4b to water intake port 5.

That is, in water softening device 1, in the water softening treatment, city water supplied from the outside flows through inlet port 2, flow path 30, first water softening tank 3a, flow path 31, first neutralization tank 4a, flow path 32, second water softening tank 3b, flow path 33, second neutralization tank 4b, flow path 34, and water intake port 5 in this order, and is discharged as neutral soft water.

### (Water softening tank and neutralization tank)

Water softening tank 3 is configured by, for example, filling a cylindrical container with weakly acidic cation exchange resin 7. Furthermore, neutralization tank 4 is configured by, for example, filling a cylindrical container with weakly basic anion exchange resin 8.

Water softening tank 3 includes first water softening tank 3a and second water softening tank 3b. First water softening tank 3a is filled with first weakly acidic cation exchange resin 7a. Second water softening tank 3b is filled with second weakly acidic cation exchange resin 7b. Furthermore, first water softening tank 3a and second water softening tank 3b have the same flow path length, the same flow path cross-sectional area, and the same volume of weakly acidic cation exchange resin 7. Note that hereinafter, first weakly acidic cation exchange resin 7a and second weakly acidic cation exchange resin 7b will be described as weakly acidic cation exchange resin 7 in a case where it is not particularly necessary to distinguish between them.

Furthermore, neutralization tank 4 includes first neutralization tank 4a and second neutralization tank 4b. First neutralization tank 4a is configured by, for example, filling a cylindrical container with first weakly basic anion exchange resin 8a. Furthermore, second neutralization tank 4b is filled with second weakly basic anion exchange resin 8b. Furthermore, first neutralization tank 4a and second neutralization tank 4b have the same flow path length, the same flow path cross-sectional area, and the same volume of weakly basic anion exchange resin 8. Note that hereinafter, first weakly basic anion exchange resin 8a and second weakly basic anion exchange resin 8b will be described as weakly basic anion exchange resin 8 in a case where it is not particularly necessary to distinguish between them.

Here, weakly acidic cation exchange resin 7 is not particularly limited, and ones for general purposes can be used. Examples thereof include a resin having a carboxyl group (-COOH) as an exchange group. Furthermore, a proton (H+) as a counter ion of a carboxyl group may be a cation such as a metal ion or an ammonium ion (NH4+).

Furthermore, weakly basic anion exchange resin 8 is not particularly limited, and ones for general purposes can be used. Examples thereof include a resin in free-base ion form.

Water softening tank 3 softens raw water containing a hardness component by the action of weakly acidic cation exchange resin 7. More specifically, water softening tank 3 includes weakly acidic cation exchange resin 7 having a proton at the terminal of the functional group. Water softening tank 3 exchanges cations (calcium ion, magnesium ion) which are hardness components contained in flowing water (raw water) with hydrogen ions to allow the hardness of the raw water to decrease and the raw water to be softened. Furthermore, since the terminal of the functional group of weakly acidic cation exchange resin 7 is a proton, weakly acidic cation exchange resin 7 can be regenerated using acidic electrolytic water in the regeneration treatment described later. At this time, cations, which are hardness components taken in during the water softening treatment, are released from weakly acidic cation exchange resin 7.

More specifically, in first water softening tank 3a, the raw water containing the hardness component is made to pass from flow path 30 and passes through first weakly acidic cation exchange resin 7a filled inside, thereby softening the raw water containing the hardness component and allowing the softened water to pass through flow path 31 to first neutralization tank 4a. However, the water softened by first weakly acidic cation exchange resin 7a contains a large amount of protons that have been exchanged for hardness components and flowed out, and becomes acidic water having a low pH. Here, when water containing a large amount of the permanent hardness component (for example, a sulfate such as calcium sulfate or a chloride such as magnesium chloride) as the hardness component is softened, the pH of water containing a large amount of the permanent hardness component is more likely to decrease comparing with the pH of water containing a large amount of the temporary hardness component (carbonates such as, for example, calcium carbonate). Since water softening is less likely to proceed in a state in which the pH is lowered, water flowing through first water softening tank 3a is caused to pass through first neutralization tank 4a to perform neutralization.

On the other hand, in second water softening tank 3b, neutralized neutral water is passed through flow path 32, and passes through second weakly acidic cation exchange resin 7b filled inside. As a result, hardness components that cannot be removed in first water softening tank 3a are exchanged for protons of second weakly acidic cation exchange resin 7b. Therefore, the water flowing into second water softening tank 3b is softened. However, the water softened with second weakly acidic cation exchange resin 7b contains protons that have been exchanged for hardness components and flowed out, and thus becomes acidic water.

Neutralization tank 4 neutralizes the pH of soft water (acidified soft water) containing protons coming out of water softening tank 3 by the action of weakly basic anion exchange resin 8, and converts the soft water into neutral soft water. More specifically, neutralization tank 4 includes weakly basic anion exchange resin 8, and adsorbs protons contained in the soft water from water softening tank 3 together with anions, so that the pH of the soft water increases, and neutral soft water can be obtained. Furthermore, weakly basic anion exchange resin 8 can be regenerated using alkaline electrolytic water regeneration treatment to be described later.

More specifically, in first neutralization tank 4a, proton-containing softened water is allowed to pass from flow path 31 and circulated to first weakly basic anion exchange resin 8a filled in first neutralization tank 4a to neutralize acidified water flowing out from first water softening tank 3a, and the acidified water is caused to flow into second water softening tank 3b via flow path 32 as neutral water. That is, first neutralization tank 4a is acidic water flowing out of first water softening tank 3a, and by neutralizing acidic water containing protons released from first weakly acidic cation exchange resin 7a, water flowing through first neutralization tank 4a is sent to second water softening tank 3b as water that is easy to soften because the pH is neutral.

On the other hand, in second neutralization tank 4b, soft water containing protons is allowed to pass from flow path 33 and circulated to second weakly basic anion exchange resin 8b filled in second neutralization tank 4b to neutralize the acidified soft water coming out of second water softening tank 3b, and the water is caused to pass to the outside via flow path 34 as neutral soft water. That is, second neutralization tank 4b is neutralizes acidic water flowing out of second water softening tank 3b and containing hydrogen ions released from second weakly acidic cation exchange resin 7b, thereby releasing soft water that can be used as domestic water to water intake port 5.

### (Regeneration device)

Regeneration device 6 is a device for regenerating weakly acidic cation exchange resin 7 of water softening tank 3 and regenerating weakly basic anion exchange resin 8 of neutralization tank 4. Specifically, as described above, regeneration device 6 includes electrolytic tank 9, acidic electrolytic water storage tank 19, acidic electrolytic water circulation pump 23, alkaline electrolytic water storage tank 21, alkaline electrolytic water circulation pump 24, and capture unit 25. In regeneration device 6, first supply flow path 41, first collection flow path 43, second supply flow path 45, and second collection flow path 47 are connected to flow path 33, flow path 30, flow path 34, and flow path 31 from inlet port 2 to the water intake port 5, respectively. Furthermore, flow path 31 and flow path 32 are connected by first bypass flow path 42. Furthermore, flow path 32 and flow path 33 are connected by second bypass flow path 46. Each flow path constitutes acidic electrolytic water circulation flow path 40 and alkaline electrolytic water circulation flow path 44 described later. Here, first supply flow path 41 is a flow path for supplying acidic electrolytic water from electrolytic tank 9 to second water softening tank 3b. First bypass flow path 42 is a flow path for supplying the acidic electrolytic water flowing through second water softening tank 3b to first water softening tank 3a while bypassing first neutralization tank 4a. First collection flow path 43 is a flow path for collecting the acidic electrolytic water containing a hardness component, which has flowed out of water softening tank 3 by the regeneration treatment of water softening tank 3, into acidic electrolytic water storage tank 19. Second supply flow path 45 is a flow path for supplying the alkaline electrolytic water from electrolytic tank 9 to second neutralization tank 4b. Second bypass flow path 46 is a flow path that supplies the alkaline electrolytic water flowing through second neutralization tank 4b to first neutralization tank 4a while bypassing second water softening tank 3b. Second collection flow path 47 is a flow path for collecting the alkaline electrolytic water having passed through first neutralization tank 4a into alkaline electrolytic water storage tank 21. Water flow path 48 is a flow path for supplying the acidic electrolytic water stored in acidic electrolytic water storage tank 19 to anode chamber 14 of electrolytic tank 9 by using acidic electrolytic water circulation pump 23. Water flow path 49 is a flow path for supplying the alkaline electrolytic water stored in alkaline electrolytic water storage tank 21 to cathode chamber 18 of electrolytic tank 9 by using alkaline electrolytic water circulation pump 24.

### (Electrolytic tank)

Electrolytic tank 9 includes diaphragm 10, anode chamber 14, and cathode chamber 18. Electrolytic tank 9 is separated into anode chamber 14 and cathode chamber 18 by diaphragm 10 provided therein.

Diaphragm 10 is a fluorine-based porous membrane, and suppresses mixing of acidic electrolytic water generated in anode chamber 14 and alkaline electrolytic water generated in cathode chamber 18 by electrolysis. This makes it possible to suppress consumption of hydrogen ions in acidic electrolytic water and hydroxide ions in alkaline electrolytic water by neutralization reaction, so that it is possible to suppress a decrease in regeneration efficiency of weakly acidic cation exchange resin 7 and weakly basic anion exchange resin 8. Furthermore, it is possible to suppress a decrease in the regeneration efficiency of the other ion exchange resin in a case where the regeneration of one ion exchange resin ends first. Specifically, in a case where diaphragm 10 is not provided, an environment in which acidic electrolytic water and alkaline electrolytic water are easily mixed is obtained. Then, for example, when the regeneration of weakly acidic cation exchange resin 7 is completed earlier than the regeneration of weakly basic anion exchange resin 8, hydrogen ions in the acidic electrolytic water subjected to the regeneration of weakly acidic cation exchange resin 7 react with hydroxide ions in the alkaline electrolytic water, and the hydroxide ions are consumed by neutralization. That is, in a case where diaphragm 10 is not provided, when the regeneration of one ion exchange resin is completed first, the regeneration efficiency of the other ion exchange resin is likely to decrease. However, by separating the inside of electrolytic tank 9 into anode chamber 14 and cathode chamber 18 by diaphragm 10, even in a case where the regeneration of one ion exchange resin is completed, it is possible to suppress the mixing with the electrolytic water used for the regeneration of the other ion exchange resin. Therefore, diaphragm 10 can also suppress a decrease in the regeneration efficiency of the other ion exchange resin in a case where the regeneration of one ion exchange resin ends first. Note that as the porous membrane used for diaphragm 10, instead of a fluorine-based porous membrane, a generally used porous membrane such as a hydrocarbon-based porous membrane may be used, but a fluorine-based porous membrane is used in water softening device 1 because a fluorine-based porous membrane is excellent in durability.

Anode chamber 14 includes anode 11, first water intake port 12, and first discharge port 13. Anode 11 generates hydrogen ions by electrolyzing water. As anode 11, for example, a platinum electrode can be used. First water intake port 12 is an opening through which acidic electrolytic water stored in acidic electrolytic water storage tank 19 is introduced into anode chamber 14 through water flow path 48. First discharge port 13 is an opening for supplying acidic electrolytic water containing hydrogen ions generated by anode 11 to water softening tank 3 through first supply flow path 41. The acidic electrolytic water supplied from electrolytic tank 9 to water softening tank 3 is used for regenerating weakly acidic cation exchange resin 7. Cathode chamber 18 includes cathode 15, second water intake port 16, and second discharge port 17. Cathode 15 generates hydroxide ions by electrolyzing water. As cathode 15, for example, a platinum electrode can be used. Second water intake port 16 is an opening through which alkaline electrolytic water stored in alkaline electrolytic water storage tank 21 is introduced into cathode chamber 18 through water flow path 49. Second discharge port 17 is an opening through which alkaline electrolytic water containing hydroxide ions generated in cathode 15 is supplied to neutralization tank 4 through second supply flow path 45. The alkaline electrolytic water supplied from electrolytic tank 9 to neutralization tank 4 is used for regenerating weakly basic anion exchange resin 8.

Note that electrolytic tank 9 is configured such that an energization state to anode 11 and cathode 15 can be controlled by controller 26 described later.

### (Acidic electrolytic water storage tank and alkaline electrolytic water storage tank)

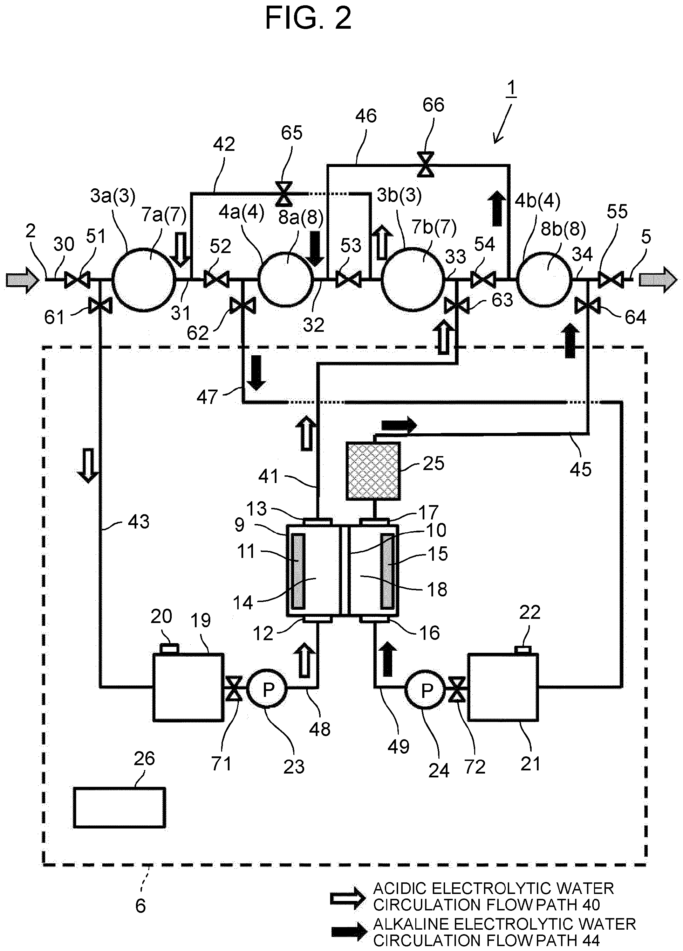

Acidic electrolytic water storage tank 19 is a tank or a container including air bleed valve 20. Acidic electrolytic water storage tank 19 secures and stores water to be flowed in acidic electrolytic water circulation flow path 40 (see Fig. 2) when weakly acidic cation exchange resin 7 is regenerated. Air bleed valve 20 is configured to vent gas contained in acidic electrolytic water to prevent gas from accumulating in acidic electrolytic water circulation flow path 40. Alkaline electrolytic water storage tank 21 is a tank or a container provided with air bleed valve 22.

By storing acidic electrolytic water in acidic electrolytic water storage tank 19, it is possible to control the total amount of acidic electrolytic water flowing through acidic electrolytic water circulation flow path 40. For example, by increasing the volume of acidic electrolytic water storage tank 19, the ion concentration in acidic electrolytic water circulation flow path 40 can be reduced in a case where the amount of ions in acidic electrolytic water circulation flow path 40 is constant. Since the equilibrium of the reaction in weakly acidic cation exchange resin 7 is inclined to the regeneration reaction (reaction in which hardness components are desorbed from weakly acidic cation exchange resin 7 and hydrogen ions are adsorbed) side due to the decrease in the concentration of cations such as hardness components, the regeneration efficiency can be increased. Furthermore, by reducing the volume of acidic electrolytic water storage tank 19, the ion concentration in acidic electrolytic water circulation flow path 40 can be increased in a case where the amount of ions (cations such as hardness components) in acidic electrolytic water circulation flow path 40 is constant. Due to the increase in the ion concentration of the acidic electrolytic water, the solution resistance at the time of performing electrolysis in electrolytic tank 9 decreases. Therefore, the applied voltage applied by electrolytic tank 9 can be reduced, and the power consumption can be reduced. That is, the performance of water softening device 1 can be improved by using acidic electrolytic water storage tank 19 having a volume according to a purpose.

Alkaline electrolytic water storage tank 21 secures and stores water to be flowed in alkaline electrolytic water circulation flow path 44 (see Fig. 2) when weakly basic anion exchange resin 8 is regenerated. Air bleed valve 22 is configured to vent gas contained in alkaline electrolytic water to prevent gas from accumulating in alkaline electrolytic water circulation flow path 44.

By storing the alkaline electrolytic water in alkaline electrolytic water storage tank 21, the total amount of the alkaline electrolytic water flowing through alkaline electrolytic water circulation flow path 44 can be controlled. For example, by increasing the volume of alkaline electrolytic water storage tank 21, the ion concentration in alkaline electrolytic water circulation flow path 44 can be reduced in a case where the amount of ions in alkaline electrolytic water circulation flow path 44 is constant. Due to the decrease in anion concentration, the equilibrium of the reaction in weakly basic anion exchange resin 8 is inclined to the regeneration reaction side, so that the regeneration efficiency can be enhanced. Furthermore, by reducing the volume of alkaline electrolytic water storage tank 21, the ion concentration in alkaline electrolytic water circulation flow path 44 can be increased in a case where the amount of ions in alkaline electrolytic water circulation flow path 44 is constant. Due to the increase in the ion concentration of the alkaline electrolytic water, the solution resistance at the time of performing electrolysis in electrolytic tank 9 decreases. Therefore, the applied voltage applied by electrolytic tank 9 can be reduced, and the power consumption can be reduced. That is, the performance of water softening device 1 can be improved by using alkaline electrolytic water storage tank 21 having a volume according to the purpose.

### (Acidic electrolytic water circulation pump and alkaline electrolytic water circulation pump)

Acidic electrolytic water circulation pump 23 is a device that flows water in acidic electrolytic water circulation flow path 40 (see Fig. 2) during the regeneration treatment by regeneration device 6. Acidic electrolytic water circulation pump 23 is provided in water flow path 48 that communicatively connects between acidic electrolytic water storage tank 19 and first water intake port 12.

Acidic electrolytic water circulation pump 23 can control a flow rate of acidic electrolytic water flowing through acidic electrolytic water circulation flow path 40. For example, when the flow rate of the acidic electrolytic water is increased in a case where the production rate of hydrogen ions in electrolytic tank 9 is constant, the hydrogen ion concentration decreases (pH increases). Furthermore, when the flow rate of the acidic electrolytic water is reduced, the hydrogen ion concentration increases (pH decreases). That is, the hydrogen ion concentration in the acidic electrolytic water to be supplied to weakly acidic cation exchange resin 7 can be adjusted by adjusting the flow rate of the acidic electrolytic water by acidic electrolytic water circulation pump 23. Therefore, hydrogen ions can be supplied according to the state of weakly acidic cation exchange resin 7, and the performance of water softening device 1 can be improved.

Alkaline electrolytic water circulation pump 24 is a device that flows water in alkaline electrolytic water circulation flow path 44 (see Fig. 2) during the regeneration treatment by regeneration device 6. Alkaline electrolytic water circulation pump 24 is provided in water flow path 49 that communicatively connects between alkaline electrolytic water storage tank 21 and second water intake port 16. Furthermore, acidic electrolytic water circulation pump 23 and alkaline electrolytic water circulation pump 24 are connected to controller 26 to be described later so as to be able to communicate with the controller 26 in a wireless or wired manner.

The flow rate of the alkaline electrolytic water flowing through alkaline electrolytic water circulation flow path 44 can be controlled by alkaline electrolytic water circulation pump 24. For example, in a case where the rate of generation of hydroxide ions in electrolytic tank 9 is constant, when the flow rate of the alkaline electrolytic water is increased, the hydroxide ion concentration decreases. Furthermore, when the flow rate of the alkaline electrolytic water is reduced, the hydroxide ion concentration increases. That is, the hydroxide ion concentration of the alkaline electrolytic water to be supplied to weakly basic anion exchange resin 8 can be adjusted by adjusting the flow rate of the alkaline electrolytic water by alkaline electrolytic water circulation pump 24. Therefore, hydroxide ions can be supplied according to the state of weakly basic anion exchange resin 8, and the performance of water softening device 1 can be improved.

By providing acidic electrolytic water circulation pump 23 and alkaline electrolytic water circulation pump 24 independently of each other without forming one pump, it is possible to individually set the flow rate of acidic electrolytic water capable of supplying hydrogen ions suitable for regeneration of weakly acidic cation exchange resin 7 and the flow rate of alkaline electrolytic water capable of supplying hydroxide ions suitable for regeneration of weakly basic anion exchange resin 8.

### (Capture unit)

Capture unit 25 is provided in second supply flow path 45 at the rear stage of electrolytic tank 9 and the front stage of second neutralization tank 4b.

Capture unit 25 separates a solid contained in the alkaline electrolytic water supplied from electrolytic tank 9. The solid is a reaction product precipitated by reaction between a hardness component in alkaline electrolytic water and hydroxide ions generated by cathode 15 in cathode chamber 18 of electrolytic tank 9. For example, in a case where the hardness component contained in the alkaline electrolytic water is magnesium ions, magnesium hydroxide is generated. The solid precipitated during the regeneration treatment remains in neutralization tank 4 if not removed, and the hardness component is eluted from the solid, so that the soft water hardness during the water softening treatment is increased, that is, the water softening performance is deteriorated.

Therefore, by separating the precipitates by capture unit 25, inflow and deposition of the precipitates into second neutralization tank 4b can be suppressed, and deterioration in water softening performance during the water softening treatment can be suppressed.

The form of capture unit 25 is not limited as long as a reaction product with the hardness component contained in the alkaline electrolytic water supplied from electrolytic tank 9 can be separated. For example, a form using a cartridge type filter, a filtration layer using a granular filter material, a cyclone type solid-liquid separator, a hollow fiber membrane, or the like can be mentioned.

### (On-off valve)

A plurality of on-off valves (on-off valve 51 to on-off valve 55, on-off valve 61 to on-off valve 66, on-off valve 71, and on-off valve 72) are provided in the respective flow paths, and are switched between an "open" state and a "closed" state in the respective flow paths. Furthermore, each of the plurality of on-off valves (on-off valve 51 to on-off valve 55, on-off valve 61 to on-off valve 66, on-off valve 71, and on-off valve 72) is connected to controller 26 to be described later so as to be able to communicate with controller 26 in a wireless or wired manner.

### (Controller)

Controller 26 controls water softening treatment for softening raw water containing a hardness component. Furthermore, controller 26 controls the regeneration treatment of weakly acidic cation exchange resin 7 in water softening tank 3 and weakly basic anion exchange resin 8 in neutralization tank 4. Moreover, controller 26 controls switching of the water softening treatment, the regeneration treatment, and the wastewater treatment of water softening device 1. At this time, controller 26 controls operations of anode 11, cathode 15, acidic electrolytic water circulation pump 23, alkaline electrolytic water circulation pump 24, on-off valve 51 to on-off valve 55, on-off valve 61 to on-off valve 66, on-off valve 71, and on-off valve 72, switches water softening treatment, regeneration treatment, and wastewater treatment, and executes each treatment.

### (Acidic electrolytic water circulation flow path and alkaline electrolytic water circulation flow path)

Next, acidic electrolytic water circulation flow path 40 and alkaline electrolytic water circulation flow path 44 formed at the time of the regeneration treatment of water softening device 1 will be described with reference to Fig. 2. Fig. 2 is a configuration diagram illustrating acidic electrolytic water circulation flow path 40 and alkaline electrolytic water circulation flow path 44 of water softening device 1.

As illustrated in Fig. 2, in water softening device 1, first water intake port 12 and acidic electrolytic water storage tank 19 constituting regeneration device 6 are communicably connected by water flow path 48. Furthermore, second water intake port 16 and alkaline electrolytic water storage tank 21 are communicably connected by water flow path 49. Furthermore, at first discharge port 13, acidic electrolytic water storage tank 19, second discharge port 17, and alkaline electrolytic water storage tank 21, first supply flow path 41, first collection flow path 43, second supply flow path 45, and second collection flow path 47 are connected to flow path 33, flow path 30, flow path 34, and flow path 31 from inlet port 2 to water intake port 5, respectively. Furthermore, flow path 31 and flow path 32 are bypass-connected by first bypass flow path 42. Furthermore, flow path 32 and flow path 33 are bypass-connected by second bypass flow path 46. Each flow path constitutes acidic electrolytic water circulation flow path 40 and alkaline electrolytic water circulation flow path 44 described later.

First supply flow path 41 is a flow path for supplying acidic electrolytic water from first water intake port 12 to second water softening tank 3b, and on-off valve 63 is installed in the flow path. That is, water softening device 1 includes first supply flow path 41 that can draw out the acidic electrolytic water from first water intake port 12 and supply the acidic electrolytic water to the downstream side of second water softening tank 3b.

Furthermore, first bypass flow path 42 is a flow path for supplying acidic electrolytic water from second water softening tank 3b to first water softening tank 3a, and on-off valve 65 is installed in the flow path. That is, water softening device 1 includes first bypass flow path 42 capable of supplying the acidic electrolytic water flowing through second water softening tank 3b to the downstream side of first water softening tank 3a. Note that, by providing first bypass flow path 42, the regeneration treatment can be advanced without circulating acidic electrolytic water in first neutralization tank 4a existing between first water softening tank 3a and second water softening tank 3b.

Furthermore, first collection flow path 43 is a flow path for collecting acidic electrolytic water containing a hardness component having passed through first water softening tank 3a into acidic electrolytic water storage tank 19, and on-off valve 61 is installed in the flow path. That is, water softening device 1 includes first collection flow path 43 that enables the upstream side of acidic electrolytic water storage tank 19 to be connected to the upstream side of first water softening tank 3a.

Water flow path 48 is a flow path for supplying the acidic electrolytic water stored in acidic electrolytic water storage tank 19 from first water intake port 12 to anode chamber 14 of electrolytic tank 9 using acidic electrolytic water circulation pump 23, and on-off valve 71 is installed in the flow path. That is, water softening device 1 includes water flow path 48 that enables the downstream side of acidic electrolytic water storage tank 19 to be connected to first water intake port 12 provided in electrolytic tank 9.

Second supply flow path 45 is a flow path for supplying alkaline electrolytic water from second discharge port 17 to second neutralization tank 4b through capture unit 25, and on-off valve 64 is installed in the flow path. That is, water softening device 1 includes second supply flow path 45 that can draw out the alkaline electrolytic water from second discharge port 17 and supply the alkaline electrolytic water to the downstream side of second neutralization tank 4b.

Furthermore, second bypass flow path 46 is a flow path for supplying alkaline electrolytic water from second neutralization tank 4b to first neutralization tank 4a, and on-off valve 66 is installed in the flow path. That is, water softening device 1 includes second bypass flow path 46 that can supply the alkaline electrolytic water flowing through second neutralization tank 4b to the downstream side of first neutralization tank 4a.

Furthermore, second collection flow path 47 is a flow path for collecting the alkaline electrolytic water having passed through first neutralization tank 4a into alkaline electrolytic water storage tank 21, and on-off valve 62 is installed in the flow path. That is, water softening device 1 includes second collection flow path 47 that enables the upstream side of alkaline electrolytic water storage tank 21 to be connected to the upstream side of first neutralization tank 4a.

Water flow path 49 is a flow path for supplying the acidic electrolytic water stored in alkaline electrolytic water storage tank 21 from second water intake port 16 to cathode chamber 18 of electrolytic tank 9 using alkaline electrolytic water circulation pump 24, and on-off valve 72 is installed in the flow path. That is, water softening device 1 includes water flow path 49 that enables the downstream side of alkaline electrolytic water storage tank 21 to be connected to second water intake port 16 provided in electrolytic tank 9.

As illustrated in Fig. 2 (white arrow), acidic electrolytic water circulation flow path 40 is a flow path through which water sent out from acidic electrolytic water storage tank 19 by acidic electrolytic water circulation pump 23 flows through electrolytic tank 9, second water softening tank 3b, and first water softening tank 3a, and returns to acidic electrolytic water storage tank 19 to circulate. More specifically, acidic electrolytic water circulation flow path 40 is a flow path through which water delivered from acidic electrolytic water storage tank 19 by acidic electrolytic water circulation pump 23 circulates through water flow path 48, first water intake port 12, anode chamber 14, first discharge port 13, first supply flow path 41, on-off valve 63, second water softening tank 3b, first bypass flow path 42, on-off valve 65, first water softening tank 3a, first collection flow path 43, on-off valve 61, and acidic electrolytic water storage tank 19 in this order.

As illustrated in Fig. 2 (black arrow), alkaline electrolytic water circulation flow path 44 is a flow path through which water delivered from alkaline electrolytic water storage tank 21 by alkaline electrolytic water circulation pump 24 circulates through electrolytic tank 9, second neutralization tank 4b, and first neutralization tank 4a, and returns to alkaline electrolytic water storage tank 21 to circulate. More specifically, alkaline electrolytic water circulation flow path 44 is a flow path through which water delivered from alkaline electrolytic water storage tank 21 by alkaline electrolytic water circulation pump 24 circulates through water flow path 49, second water intake port 16, cathode chamber 18, second discharge port 17, second supply flow path 45, capture unit 25, on-off valve 64, second neutralization tank 4b, second bypass flow path 46, on-off valve 66, first neutralization tank 4a, second collection flow path 47, on-off valve 62, and alkaline electrolytic water storage tank 21 in this order.

Here, the states of the respective flow paths for circulating water in acidic electrolytic water circulation flow path 40 and alkaline electrolytic water circulation flow path 44 will be described.

In flow path 33, on-off valve 54 is installed on the downstream side of first supply flow path 41 and on the upstream side of first bypass flow path 42. By closing on-off valve 54 and opening on-off valve 63, first supply flow path 41 is brought into a state of being communicably connected to the downstream side of second water softening tank 3b. This makes it possible to supply the acidic electrolytic water from anode chamber 14 of electrolytic tank 9 to second water softening tank 3b.

In flow path 31, on-off valve 52 is installed on the downstream side of first bypass flow path 42 and on the upstream side of second collection flow path 47. Furthermore, in flow path 32, on-off valve 53 is disposed on the downstream side of second bypass flow path 46 and on the upstream side of first bypass flow path 42. Then, by closing on-off valve 52 and on-off valve 53 and opening on-off valve 65, first bypass flow path 42 is in a state of being communicatively connected to the upstream side of second water softening tank 3b and the downstream side of first water softening tank 3a. As a result, the acidic electrolytic water flowing through second water softening tank 3b can be supplied to first water softening tank 3 a.

In flow path 30, on-off valve 51 is installed on the downstream side of inlet port 2 and on the upstream side of first collection flow path 43. By closing on-off valve 51 and on-off valve 52 and opening on-off valve 61, first collection flow path 43 is communicatively connected to the upstream side of first water softening tank 3a. As a result, water softening device 1 can recover water (acidic electrolytic water containing hardness components) flowing through first water softening tank 3a and second water softening tank 3b into acidic electrolytic water storage tank 19.

In flow path 34, on-off valve 54 is installed on the downstream side of second supply flow path 45 and on the upstream side of second bypass flow path 46. Furthermore, in flow path 34, on-off valve 55 is installed on the upstream side of water intake port 5 and on the downstream side of second neutralization tank 4b. By closing on-off valve 54 and on-off valve 55 and opening on-off valve 64, second supply flow path 45 is in a state of being communicatively connected to the downstream side of second neutralization tank 4b. As a result, the alkaline electrolytic water from cathode chamber 18 of electrolytic tank 9 can be supplied to second neutralization tank 4b.

In flow path 32, on-off valve 53 is installed on the downstream side of second bypass flow path 46 and on the upstream side of second water softening tank 3b. Furthermore, by closing on-off valve 52, on-off valve 53, and on-off valve 54 and opening on-off valve 66, second bypass flow path 46 is brought into a state of being communicably connected to the downstream side of first neutralization tank 4a and the upstream side of second neutralization tank 4b. As a result, the alkaline electrolytic water flowing through second neutralization tank 4b can be supplied to first neutralization tank 4a.

Furthermore, by closing on-off valve 52 and opening on-off valve 62, second collection flow path 47 is communicatively connected to the upstream side of first neutralization tank 4a. As a result, water softening device 1 can recover water (alkaline electrolytic water containing anions) flowing through first neutralization tank 4a and second neutralization tank 4b into the alkaline electrolytic water storage tank 21.

Furthermore, on water flow path 48, on-off valve 71 is disposed on a downstream side of acidic electrolytic water storage tank 19 (a position between acidic electrolytic water storage tank 19 and acidic electrolytic water circulation pump 23). By closing on-off valve 71, water can be stored in acidic electrolytic water storage tank 19. On the other hand, by opening on-off valve 71, water can be supplied to water flow path 48.

Furthermore, in water flow path 49, on-off valve 72 is disposed on a downstream side of alkaline electrolytic water storage tank 21 (a position between alkaline electrolytic water storage tank 21 and alkaline electrolytic water circulation pump 24). By closing on-off valve 72, water can be stored in alkaline electrolytic water storage tank 21. On the other hand, by opening on-off valve 72, water can be supplied to water flow path 49.

Furthermore, by closing on-off valve 51 and on-off valve 55, the circulation of water to acidic electrolytic water circulation flow path 40 and alkaline electrolytic water circulation flow path 44 can be started, and by opening on-off valve 51 and on-off valve 55, the circulation of water to acidic electrolytic water circulation flow path 40 and alkaline electrolytic water circulation flow path 44 can be stopped.

### (Water softening treatment and regeneration treatment)

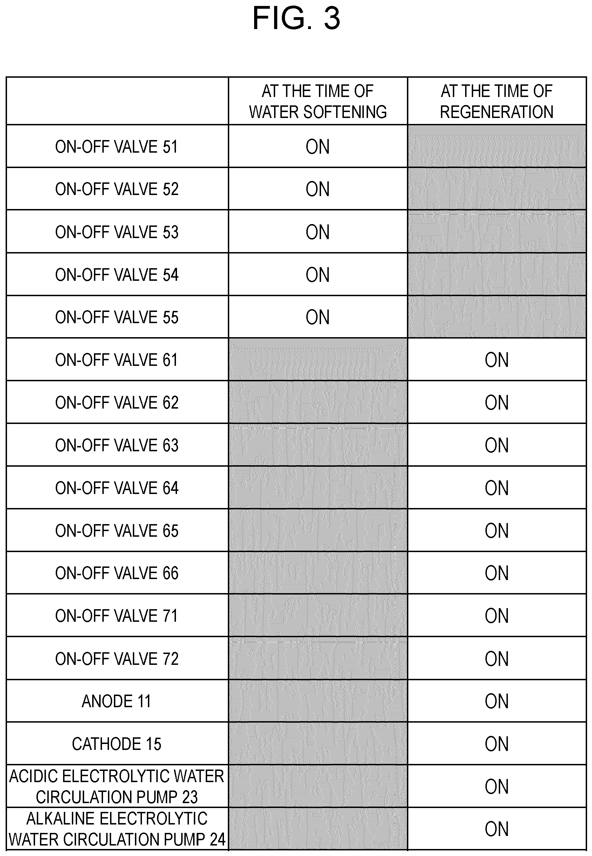

Next, water softening treatment, regeneration treatment, and wastewater treatment of water softening device 1 starting from the regeneration treatment will be described with reference to Fig. 3. Fig. 3 is a diagram illustrating a state of water softening device 1 in operation.

In the water softening treatment, the regeneration treatment, and the wastewater treatment, as illustrated in Fig. 3, controller 26 switches on-off valve 51 to on-off valve 55, on-off valve 61 to on-off valve 66, on-off valve 71, on-off valve 72, anode 11, cathode 15, acidic electrolytic water circulation pump 23, and alkaline electrolytic water circulation pump 24 to control them to be in their respective flowing states and operating states. Note that controller 26 includes a computer system including a processor and a memory. The computer system functions as a controller by causing the processor to execute a program stored in the memory. In the example explained herein, the program executed by the processor is recorded in the memory of the computer system in advance, but may be provided in a manner recorded in a non-transitory recording medium, such as a memory card, or provided over a telecommunication line such as the Internet.

Here, "ON" in Fig. 3 indicates a state in which the corresponding on-off valve is "opened", a state in which anode 11 and cathode 15 are energized, and a state in which the acidic electrolytic water circulation pump 23 and the alkaline electrolytic water circulation pump 24 are operating. Blanks indicate a state in which the corresponding on-off valve is "closed", a state in which anode 11 and cathode 15 are not energized, and a state in which the acidic electrolytic water circulation pump 23 and the alkaline electrolytic water circulation pump 24 are stopped.

### (Regeneration treatment)

First, the operation of water softening device 1 at the time of regeneration treatment by regeneration device 6 will be sequentially described with reference to a column of "at the time of regeneration" in Fig. 3.

In water softening device 1, when water softening tank 3 filled with weakly acidic cation exchange resin 7 is continuously used, the cation exchange capacity decreases or disappears. That is, ion exchange cannot be performed after all the hydrogen ions, which are functional groups of the cation exchange resin, are exchanged for calcium ions or magnesium ions, which are hardness components. In such a state, the hardness component is contained in the treatment water. Therefore, in water softening device 1, it is necessary to perform regeneration treatment of water softening tank 3 and neutralization tank 4 by regeneration device 6.

At the time of regeneration, when on-off valve 51 to on-off valve 55 are closed, and on-off valve 61 to on-off valve 66, on-off valve 71, and on-off valve 72 are opened, acidic electrolytic water circulation flow path 40 and alkaline electrolytic water circulation flow path 44 are formed, respectively, as illustrated in Fig. 2.

Then, when anode 11, cathode 15, acidic electrolytic water circulation pump 23, and alkaline electrolytic water circulation pump 24 are operated, the water stored in acidic electrolytic water storage tank 19 and alkaline electrolytic water storage tank 21 circulates through acidic electrolytic water circulation flow path 40 and alkaline electrolytic water circulation flow path 44, respectively.

At this time, the acidic electrolytic water generated in anode chamber 14 of electrolytic tank 9 is supplied into second water softening tank 3b from first discharge port 13 through first supply flow path 41, and flows through second weakly acidic cation exchange resin 7b therein. Then, the acidic electrolytic water flowing through second water softening tank 3b flows through first bypass flow path 42, is supplied into first water softening tank 3a, and flows through first weakly acidic cation exchange resin 7a therein. That is, by passing acidic electrolytic water through first weakly acidic cation exchange resin 7a and second weakly acidic cation exchange resin 7b, cations (hardness components) adsorbed to first weakly acidic cation exchange resin 7a and second weakly acidic cation exchange resin 7b cause an ion exchange reaction with protons contained in the acidic electrolytic water. As a result, first weakly acidic cation exchange resin 7a and second weakly acidic cation exchange resin 7b are regenerated. Thereafter, the acidic electrolytic water flowing through first weakly acidic cation exchange resin 7a contains cations and flows into first collection flow path 43. That is, the acidic electrolytic water containing cations that have flowed through first weakly acidic cation exchange resin 7a and second weakly acidic cation exchange resin 7b is recovered in acidic electrolytic water storage tank 19 via first bypass flow path 42 and first collection flow path 43.

As described above, the acidic electrolytic water circulation flow path 40 is configured to cause the acidic electrolytic water to flow from the downstream side of second water softening tank 3b located most downstream from the inlet port of the raw water and having second weakly acidic cation exchange resin 7b having a small adsorption amount of hardness components, and to flow into the downstream side of first water softening tank 3a located upstream and having first weakly acidic cation exchange resin 7a to which more hardness components are adsorbed as compared with second weakly acidic cation exchange resin 7b. That is, acidic electrolytic water circulation flow path 40 is a flow path that causes the acidic electrolytic water fed from electrolytic tank 9 to flow through second water softening tank 3b, then to be fed to first water softening tank 3a by first bypass flow path 42, to flow through first water softening tank 3a, to be collected in acidic electrolytic water storage tank 19, and then to flow into electrolytic tank 9 from first water intake port 12. Furthermore, acidic electrolytic water circulation flow path 40 includes a path for introducing the acidic electrolytic water fed from electrolytic tank 9 into first water softening tank 3a and second water softening tank 3b from the downstream sides of first water softening tank 3a and second water softening tank 3b, and allowing the acidic electrolytic water to flow out from the upstream side having a larger adsorption amount of the hardness component than the downstream side of water softening tank 3. Note that the downstream side refers to the downstream side in the flow path during the water softening treatment.

Furthermore, acidic electrolytic water circulation flow path 40 is a flow path independent of alkaline electrolytic water circulation flow path 44, and thus suppresses mixing of acidic electrolytic water and alkaline electrolytic water.

On the other hand, the alkaline electrolytic water generated in cathode chamber 18 of electrolytic tank 9 is supplied from the second discharge port 17 into second neutralization tank 4b through second supply flow path 45 and capture unit 25, and flows through second weakly basic anion exchange resin 8b inside. Then, the alkaline electrolytic water flowing through second neutralization tank 4b flows through second bypass flow path 46, is fed into first neutralization tank 4a, and flows through first weakly basic anion exchange resin 8a therein. That is, by allowing the alkaline electrolytic water to pass through first weakly basic anion exchange resin 8a and second weakly basic anion exchange resin 8b, anions adsorbed to first weakly basic anion exchange resin 8a and second weakly basic anion exchange resin 8b cause an ion exchange reaction with hydroxide ions contained in the alkaline electrolytic water. As a result, first weakly basic anion exchange resin 8a and second weakly basic anion exchange resin 8b are regenerated. Thereafter, the alkaline electrolytic water flowing through second weakly basic anion exchange resin 8b contains anions and flows into second collection flow path 47. That is, the alkaline electrolytic water containing anions that has flowed through first weakly basic anion exchange resin 8a and second weakly basic anion exchange resin 8b is recovered into alkaline electrolytic water storage tank 21 via second bypass flow path 46 and second collection flow path 47.

As described above, the alkaline electrolytic water circulation flow path 44 is configured to cause the alkaline electrolytic water to flow from the downstream side of second neutralization tank 4b located most downstream from the inlet port of the raw water and including second weakly basic anion exchange resin 8b having a small adsorption amount of anions, and to flow into the downstream side of first neutralization tank 4a located upstream and including first weakly basic anion exchange resin 8a to which more anions are adsorbed as compared with second weakly basic anion exchange resin 8b. That is, alkaline electrolytic water circulation flow path 44 is a flow path that causes the alkaline electrolytic water fed from electrolytic tank 9 to flow through second neutralization tank 4b, then to be fed to first neutralization tank 4a by second bypass flow path 46, to flow through first neutralization tank 4a, to be recovered in alkaline electrolytic water storage tank 21, and then to flow into electrolytic tank 9 from second water intake port 16. Furthermore, alkaline electrolytic water storage tank 21 includes a path through which the alkaline electrolytic water delivered from electrolytic tank 9 is introduced into first neutralization tank 4a and second neutralization tank 4b from the downstream sides of first neutralization tank 4a and second neutralization tank 4b, and is caused to flow out from the upstream side where the adsorption amount of anions is larger than that on the downstream side of each neutralization tank. Note that the downstream side refers to the downstream side in the flow path during the water softening treatment.

Furthermore, alkaline electrolytic water circulation flow path 44 is a flow path independent of acidic electrolytic water circulation flow path 40, and thus suppresses mixing of acidic electrolytic water and alkaline electrolytic water.

In water softening device 1, when the regeneration treatment is completed, the operations of anode 11, cathode 15, the acidic electrolytic water circulation pump 23, and the alkaline electrolytic water circulation pump 24 are stopped. Note that the end of the regeneration treatment may be a certain period of time (for example, 7 hours) from the start of the regeneration treatment (at the start of operation of anode 11 and cathode 15).

### (Water softening treatment)

First, an operation at the time of water softening treatment by water softening device 1 will be described with reference to the column "AT THE TIME OF WATER SOFTENING" in Fig. 3.

In water softening device 1, as illustrated in Fig. 3, in the water softening treatment (at the time of water softening), on-off valve 55 provided in water intake port 5 is opened in a state where on-off valve 51 to on-off valve 54 are opened. This allows water softening device 1 to cause city water (raw water containing a hardness component) to flow through water softening tank 3 and neutralization tank 4 from the outside, and therefore allows the softened water (neutral softened water) to be taken out from water intake port 5. At this time, all of on-off valve 61 to on-off valve 66, on-off valve 71, and on-off valve 72 are in a closed state. Furthermore, the operations of anode 11, cathode 15, acidic electrolytic water circulation pump 23, and alkaline electrolytic water circulation pump 24 are also stopped.

Specifically, as illustrated in Fig. 1, in the water softening treatment, the raw water to be supplied is supplied from inlet port 2 to first water softening tank 3a through flow path 30 by the pressure of the city water. The raw water supplied to first water softening tank 3a flows through first weakly acidic cation exchange resin 7a provided in first water softening tank 3a. At this time, cations as hardness components in the raw water are adsorbed by the action of first weakly acidic cation exchange resin 7a, and protons are released (ion exchange is performed). Then, cations are removed from the raw water, whereby the raw water is softened. Since softened water contains a large amount of protons that have been exchanged for hardness components and flowed out, the water is acidified to be acidic water having a low pH. The softened water further flows through flow path 31 and flows into first neutralization tank 4a. In first neutralization tank 4a, protons contained in the softened water are adsorbed by the action of weakly basic anion exchange resin 8a. That is, since protons are removed from water softened by first water softening tank 3a, the lowered pH is increased and neutralized. Therefore, as compared with the case where water softened in first water softening tank 3a is directly softened in second water softening tank 3b, the water softening treatment in second water softening tank 3b easily proceeds. The water neutralized by first neutralization tank 4a further flows through flow path 32 and flows into second water softening tank 3b. In second water softening tank 3b, cations as hardness components are adsorbed and protons are released by the action of second weakly acidic cation exchange resin 7b. That is, the water flowing into second water softening tank 3b is softened to be softened water. The soft water containing protons flows through flow path 33 and flows into second neutralization tank 4b. In second neutralization tank 4b, protons contained in the inflowing soft water are adsorbed by the action of second weakly basic anion exchange resin 8b. That is, since protons are removed from the soft water, the lowered pH increases, and the soft water becomes neutral soft water that can be used as domestic water. The neutral soft water can be taken out from water intake port 5 through flow path 34.

Then, in water softening device 1, the regeneration treatment is executed when the time zone specified by controller 26 is reached or when the water softening treatment exceeds a certain period of time.

As described above, in water softening device 1, the water softening treatment and the regeneration treatment are repeatedly executed.

According to water softening device 1 of the present first exemplary embodiment, the following effects can be obtained.
(1) Water softening device 1 includes water softening tank 3, neutralization tank 4, and electrolytic tank 9. Water softening tank 3 softens raw water containing a hardness component with weakly acidic cation exchange resin 7. Neutralization tank 4 neutralizes the pH of softened water having passed through water softening tank 3 with weakly basic anion exchange resin 8. Electrolytic tank 9 generates acidic electrolytic water for regenerating weakly acidic cation exchange resin 7 and alkaline electrolytic water for regenerating weakly basic anion exchange resin 8. Electrolytic tank 9 has a first discharge port 13 for sending acidic electrolytic water to water softening tank 3, a first water intake port 12 for taking in water passing through water softening tank 3, a second discharge port 17 for sending alkaline electrolytic water to neutralization tank 4, and a second water intake port 16 for taking in water passing through neutralization tank 4. Water softening device 1 includes an acidic electrolytic water circulation flow path 40 that circulates and circulates acidic electrolytic water in order of electrolytic tank 9, the first discharge port 13, water softening tank 3, and first water intake port 12, and an alkaline electrolytic water circulation flow path 44 that circulates and circulates alkaline electrolytic water in order of electrolytic tank 9, the second discharge port 17, neutralization tank 4, and second water intake port 16.
   Accordingly, at the time of the regeneration treatment, the acidic electrolytic water flows through acidic electrolytic water circulation flow path 40, and the alkaline electrolytic water flows through alkaline electrolytic water circulation flow path 44, so that the mixing of the acidic electrolytic water and the alkaline electrolytic water can be suppressed. Therefore, even after the regeneration of one of the ion exchange resins is completed, the acidic electrolytic water having an acidic pH flows through acidic electrolytic water circulation flow path 40, and the alkaline electrolytic water having an alkaline pH flows through alkaline electrolytic water circulation flow path 44, so that a decrease in the regeneration efficiency of the other ion exchange resin can be suppressed.
(2) In water softening device 1, electrolytic tank 9 includes anode chamber 14 in which anode 11 is stored, cathode chamber 18 in which cathode 15 is stored, and diaphragm 10 provided between anode chamber 14 and cathode chamber 18. Electrolytic tank 9 generates acidic electrolytic water in anode chamber 14, and generates alkaline electrolytic water in cathode chamber 18.
   According to such a configuration, since anode chamber 14 and cathode chamber 18 of electrolytic tank 9 are separated by the diaphragm 10, it is possible to suppress the neutralization reaction of protons and hydroxide ions due to the mixing of acidic electrolytic water and alkaline electrolytic water. Therefore, it is possible to suppress deterioration in regeneration performance of weakly acidic cation exchange resin 7 and weakly basic anion exchange resin 8.
(3) Water softening device 1 includes acidic electrolytic water circulation pump 23 provided in acidic electrolytic water circulation flow path 40, and alkaline electrolytic water circulation pump 24 provided in alkaline electrolytic water circulation flow path 44.
   According to such a configuration, a flow rate of acidic electrolytic water in acidic electrolytic water circulation flow path 40 and a flow rate of alkaline electrolytic water in alkaline electrolytic water circulation flow path 44 can be controlled. During the regeneration treatment, the flow rate of the acidic electrolytic water affects the regeneration performance of weakly acidic cation exchange resin 7, and the flow rate of the alkaline electrolytic water affects the regeneration performance of weakly basic anion exchange resin 8. Therefore, by controlling the flow rate of acidic electrolytic water in acidic electrolytic water circulation flow path 40 to be constant using acidic electrolytic water circulation pump 23 and the flow rate of alkaline electrolytic water in alkaline electrolytic water circulation flow path 44 to be constant using alkaline electrolytic water circulation pump 24, the regeneration performance of the weakly acidic cation exchange resin and the weakly basic anion exchange resin can be maintained at a constant regeneration performance.
(4) Water softening device 1 is configured to include an acidic electrolytic water storage tank 19 provided at a rear stage of water softening tank 3 and a front stage of first water intake port 12 in acidic electrolytic water circulation flow path 40.
   According to such a configuration, by storing the acidic electrolytic water in acidic electrolytic water storage tank 19, it is possible to control the total amount of acidic electrolytic water flowing through acidic electrolytic water circulation flow path 40.
(5) Water softening device 1 is configured to include, in the alkaline electrolytic water circulation flow path 44, an alkaline electrolytic water storage tank 21 provided in a rear stage of neutralization tank 4 and in a front stage of second water intake port 16.
   According to such a configuration, by storing the alkaline electrolytic water in the alkaline electrolytic water storage tank 21, the total amount of the alkaline electrolytic water flowing through the alkaline electrolytic water circulation flow path 44 can be controlled.
(6) Water softening device 1 is configured to include capture unit 25 that is provided in the alkaline electrolytic water circulation flow path 44 at the rear stage of the second discharge port 17 and the front stage of neutralization tank 4 and separates solids in the alkaline electrolytic water.
   According to such a configuration, it is possible to separate a solid generated when the alkaline electrolytic water is generated. During the regeneration treatment, a hardness component in the alkaline electrolytic water may react with hydroxide ions generated by cathode 15 in electrolytic tank 9 to precipitate a solid (magnesium hydroxide or the like). The solid derived from the hardness component contained in the alkaline electrolytic water is accumulated in neutralization tank 4 if not removed, and the hardness component is eluted from the solid, so that the soft water hardness at the time of the water softening treatment is increased, that is, the water softening performance is deteriorated. Therefore, with the configuration including capture unit 25, the solid generated when the alkaline electrolytic water is generated can be separated in the front stage of neutralization tank 4, the inflow and deposition of the solid into neutralization tank 4 can be suppressed, and the performance deterioration during the water softening treatment can be suppressed.
(7) In water softening device 1, when weakly acidic cation exchange resin 7 is regenerated, the acidic electrolytic water discharged from the first discharge port 13 flows into water softening tank 3 from the downstream side.
   According to such a configuration, during the regeneration treatment, the acidic electrolytic water discharged from anode chamber 14 of electrolytic tank 9 flows in from the downstream side where the adsorption amount of the hardness component is smaller in water softening tank 3, and water softening tank 3 is regenerated. In the regeneration of weakly acidic cation exchange resin 7 on the downstream side, since the consumption of hydrogen ions in the acidic electrolytic water is smaller than that on the upstream side, a reduction in the hydrogen ion concentration of the acidic electrolytic water can be suppressed. Accordingly, it is possible to suppress re-adsorption on the upstream side of the hardness components contained in the acidic electrolytic water from the downstream side. Therefore, it is possible to suppress a decrease in the regeneration treatment efficiency of water softening tank 3 and to shorten the regeneration time.
(8) In water softening device 1, when weakly basic anion exchange resin 8 is regenerated, the alkaline electrolytic water discharged from the second discharge port 17 flows into neutralization tank 4 from the downstream side.
   According to such a configuration, during the regeneration treatment, the alkaline electrolytic water discharged from cathode chamber 18 of electrolytic tank 9 flows in from the downstream side where the adsorption amount of the anion component is smaller in neutralization tank 4, and neutralization tank 4 is regenerated. In the regeneration of weakly basic anion exchange resin 8 on the downstream side, the consumption of hydroxide ions in the alkaline electrolytic water is smaller than that on the upstream side, so that the reduction in the hydroxide ion concentration of the alkaline electrolytic water can be suppressed. Accordingly, it is possible to suppress re-adsorption on the upstream side of anions contained in the alkaline electrolytic water from the downstream side. Therefore, it is possible to suppress a decrease in the regeneration treatment efficiency of neutralization tank 4 and to shorten the regeneration time.
(9) Water softening tank 3 of water softening device 1 includes first water softening tank 3a and second water softening tank 3b, and neutralization tank 4 includes first neutralization tank 4a and second neutralization tank 4b, and is configured to cause the raw water to flow through first water softening tank 3a, first neutralization tank 4a, second water softening tank 3b, and second neutralization tank 4b in this order when raw water is softened.
   According to such a configuration, the raw water containing the hardness component flows out of first water softening tank 3a before the pH of the raw water is lowered by the water softening treatment in first water softening tank 3a, is neutralized in first neutralization tank 4a, is softened in second water softening tank 3b, and is neutralized in second neutralization tank 4b. Therefore, as compared with the case where each of water softening tank 3 and neutralization tank 4 is constituted by a single body, it is possible to suppress a decrease in pH of water flowing in water softening tank 3, that is, acidification, and thus exchange of hardness components with protons held by the weakly acidic cation exchange resin in water softening tank 3 (particularly, second water softening tank 3b) easily occurs. Therefore, the water softening performance can be improved.
(10) In water softening device 1, in the regeneration treatment for regenerating weakly acidic cation exchange resin 7, the acidic electrolytic water discharged from anode chamber 14 of electrolytic tank 9 flows through second water softening tank 3b and then flows through first water softening tank 3a.
   According to such a configuration, at the time of the regeneration treatment, the acidic electrolytic water discharged from anode chamber 14 of electrolytic tank 9 flows into second water softening tank 3b having a smaller adsorption amount of the hardness component than that of first water softening tank 3a, and the acidic electrolytic water containing the hardness component is discharged from second water softening tank 3b to first water softening tank 3a. In the regeneration of second weakly acidic cation exchange resin 7b in second water softening tank 3b, since the consumption of protons in the acidic electrolytic water is smaller than that in first water softening tank 3a, a reduction in the proton concentration can be suppressed as compared with the regeneration of first water softening tank 3a. Therefore, it is possible to suppress the acidic electrolytic water containing a large amount of protons from flowing into first water softening tank 3a and the hardness component from being re-adsorbed in first water softening tank 3a. Therefore, it is possible to suppress a decrease in the regeneration treatment efficiency and to shorten the regeneration time.
(11) In water softening device 1, during the regeneration treatment for regenerating weakly basic anion exchange resin 8, the alkaline electrolytic water discharged from cathode chamber 18 of electrolytic tank 9 flows through second neutralization tank 4b and then flows through first neutralization tank 4a.
   According to such a configuration, during the regeneration treatment, alkaline electrolytic water discharged from cathode chamber 18 of electrolytic tank 9 flows into second neutralization tank 4b having a smaller adsorption amount of anions than first neutralization tank 4a, and alkaline electrolytic water containing anions is discharged from second neutralization tank 4b to first neutralization tank 4a. In the regeneration of second weakly basic anion exchange resin 8b in second neutralization tank 4b, since the consumption of hydroxide ions in the alkaline electrolytic water is smaller than that in first neutralization tank 4a, the reduction in the hydroxide ion concentration can be suppressed as compared with the regeneration of first neutralization tank 4a. Therefore, it is possible to suppress the alkaline electrolytic water containing a large amount of hydroxide ions from flowing into first neutralization tank 4a and anions from being re-adsorbed in first neutralization tank 4a. Therefore, it is possible to suppress a decrease in the regeneration treatment efficiency and to shorten the regeneration time.
(12) In water softening device 1, first water softening tank 3a and second water softening tank 3b have the same flow path length, flow path cross-sectional area, volume of resin filled in water softening tank 3, and type of resin filled in water softening tank 3.
   According to such a configuration, since first water softening tank 3a and second water softening tank 3b can be formed of the same members, the cost of water softening device 1 can be reduced.
(13) In water softening device 1, first neutralization tank 4a and second neutralization tank 4b have the same flow path length, the flow path cross-sectional area, the volume of the resin filled in neutralization tank 4, and the type of the resin filled in neutralization tank 4.

According to such a configuration, since first neutralization tank 4a and second neutralization tank 4b can be formed of the same members, the cost of water softening device 1 can be reduced.

The present disclosure has been described above based on the exemplary embodiments. It will be understood by those skilled in the art that the exemplary embodiments are merely examples, that the components or the processes disclosed in the exemplary embodiments may be combined as various modifications, and that such modifications also fall within the scope of the present disclosure.

In water softening device 1 according to the present first exemplary embodiment, the number of water softening tanks 3 and the number of neutralization tanks 4 are two, but the present disclosure is not limited thereto. For example, one each may be used. This simplifies the device configuration. Furthermore, for example, the number may be three or more. As a result, since the number of times of alternately performing water softening and neutralization in the water softening treatment increases, the water softening performance can be further improved.

Furthermore, in water softening device 1 according to the present first exemplary embodiment, first water softening tank 3a and second water softening tank 3b have the same flow path length and flow path cross-sectional area, but the present disclosure is not limited thereto. For example, the flow path length or the flow path cross-sectional area may be different, or both the flow path length and the flow path cross-sectional area may be different. Even in this case, the same effects as those of the first exemplary embodiment can be obtained.

Furthermore, in water softening device 1 according to the present first exemplary embodiment, the volumes of first weakly acidic cation exchange resin 7a filled in first water softening tank 3a and second weakly acidic cation exchange resin 7b filled in second water softening tank 3b are equal to each other, but the present disclosure is not limited thereto. For example, the volumes of first weakly acidic cation exchange resin 7a and second weakly acidic cation exchange resin 7b may be different from each other, or different types of weakly acidic cation exchange resins 7 may be used. Thus, the water softening performance can be adjusted, and water softening device 1 having water softening performance suitable for the purpose can be obtained.

Furthermore, in water softening device 1 according to the present first exemplary embodiment, the flow path lengths and the flow path cross-sectional areas of first neutralization tank 4a and second neutralization tank 4b are equal to each other, but the present disclosure is not limited thereto. For example, the flow path length or the flow path cross-sectional area may be different, or both the flow path length and the flow path cross-sectional area may be different. In this way, the same effect as that of the first exemplary embodiment can be obtained.

Furthermore, in water softening device 1 according to the present first exemplary embodiment, the volumes of first weakly basic anion exchange resin 8a filled in first neutralization tank 4a and second weakly basic anion exchange resin 8b filled in second neutralization tank 4b are equal to each other, but the present disclosure is not limited thereto. For example, the volumes of first weakly basic anion exchange resin 8a and second weakly basic anion exchange resin 8b may be different from each other, or different types of weakly basic anion exchange resins 8 may be used. However, the volume of second weakly basic anion exchange resin 8b filled in second neutralization tank 4b may be a volume sufficient to adsorb hydrogen ions released from second water softening tank 3b and to make acidic softened water flowing in from second water softening tank 3b into neutral softened water. Thus, the water softening performance can be adjusted, and water softening device 1 having water softening performance suitable for the purpose can be obtained.

Furthermore, in water softening device 1 according to the present first exemplary embodiment, the acidic electrolytic water is circulated in the order of second water softening tank 3b and first water softening tank 3a, but the present disclosure is not limited thereto. For example, the acidic electrolytic water may be circulated through first water softening tank 3a and second water softening tank 3b in this order. Further, in water softening device 1 according to the present first exemplary embodiment, the acidic electrolytic water is circulated from the downstream side of water softening tank 3, but may be circulated from the upstream side. Even in this case, the regeneration treatment of water softening tank 3 can be performed.

Furthermore, in water softening device 1 according to the present first exemplary embodiment, the acidic electrolytic water is circulated in the order of second water softening tank 3b and first water softening tank 3a, but the present disclosure is not limited thereto. For example, a first regeneration device and a second regeneration device having functions equivalent to those of regeneration device 6 may be used to perform the regeneration treatment in independent distribution paths. As a result, the regeneration treatment of first water softening tank 3a and second water softening tank 3b can be independently performed, and the time required for the regeneration treatment can be shortened.

Furthermore, in water softening device 1 according to the first exemplary embodiment, the alkaline electrolytic water is circulated in the order of second neutralization tank 4b and first neutralization tank 4a, but the present disclosure is not limited thereto. For example, the alkaline electrolytic water may flow through first neutralization tank 4a and second neutralization tank 4b in this order. Further, in water softening device 1 according to the first exemplary embodiment, the acidic electrolytic water is circulated from the downstream side of neutralization tank 4, but may be circulated from the upstream side. Also in this way, the regeneration treatment of neutralization tank 4 can be performed.

Furthermore, in water softening device 1 according to the first exemplary embodiment, the alkaline electrolytic water is circulated in the order of second neutralization tank 4b and first neutralization tank 4a, but the present disclosure is not limited thereto. For example, a first regeneration device and a second regeneration device having functions equivalent to those of regeneration device 6 may be used to perform the regeneration treatment in independent distribution paths. As a result, the regeneration treatment of first neutralization tank 4a and second neutralization tank 4b can be independently performed, and the time required for the regeneration treatment can be shortened.

Furthermore, in water softening device 1 according to the present first exemplary embodiment, the regeneration treatment is executed in a case where the time zone specified by controller 26 is reached or in a case where the water softening treatment exceeds a certain period of time, but the present disclosure is not limited thereto. For example, an ion concentration detection unit may be provided on the downstream side of second neutralization tank 4b and on the upstream side of on-off valve 55, the ion concentration detection unit may constantly detect the ion concentration (for example, the hardness component concentration) of soft water flowing through flow path 34, and the regeneration treatment may be executed not only in a case where the time zone specified by controller 26 is reached or the water softening treatment exceeds a certain time, but also in a case where the ion concentration exceeds a preset reference value. Thus, the execution of the regeneration treatment can be determined based on the ion concentration of water after flowing through second neutralization tank 4b. Therefore, the state of weakly acidic cation exchange resin 7 in water softening tank 3 can be determined more accurately, and weakly acidic cation exchange resin 7 and weakly basic anion exchange resin 8 can be regenerated at an appropriate timing.

### (Second exemplary embodiment)

In a conventional water softening device using a weakly acidic cation exchange resin, as a method of regenerating a cation exchange resin without using salt, a method of regenerating a cation exchange resin with acidic electrolytic water generated by electrolysis is known (See, for example, PTL 1.). The weakly acidic cation exchange resin has a proton at the terminal of the functional group, and softens raw water by exchanging hardness components (for example, calcium ions and magnesium ions) in raw water with hydrogen ions. Then, hydrogen ions in water softened with the weakly acidic cation exchange resin are neutralized by being adsorbed to the weakly basic anion exchange resin provided at the subsequent stage of the weakly acidic cation exchange resin. In a conventional water softening device, as a method for regenerating a weakly basic anion exchange resin, a method for regenerating a weakly basic anion exchange resin with alkaline electrolytic water generated by electrolysis is known (See, for example, PTL 2.).

In such a conventional water softening device, when the regeneration treatment is switched to the water softening treatment, the electrolytic water used for the regeneration treatment remains in the ion exchange resin and the pipe, thereby affecting the water quality such as pH or hardness of the obtained soft water. Therefore, it is necessary to wash the ion exchange resin and the pipe by passing city water into the water softening device after the regeneration treatment. However, when city water is passed after the regeneration treatment, there is a problem that the transition from the regeneration treatment to the water softening treatment is not rapid.

The present disclosure has been made to solve the above conventional problems, and an object of the present disclosure is to provide a water softening device capable of rapidly shifting from a regeneration treatment to a water softening treatment and efficiently softening water.

In order to achieve this object, a water softening device according to the present disclosure includes: a plurality of water softening tanks for softening raw water containing a hardness component with a weakly acidic cation exchange resin; a plurality of neutralization tanks for neutralizing pH of soft water flowing through the water softening tanks with a weakly basic anion exchange resin; and an electrolytic tank for generating acidic electrolytic water for regenerating the weakly acidic cation exchange resin in the water softening tanks, and alkaline electrolytic water for regenerating the weakly basic anion exchange resin in the neutralization tanks. In the water softening treatment, the water softening tanks and the neutralization tanks are alternately connected to communicate with each other to soften the raw water. In the regeneration treatment, the water softening tanks and the neutralization tanks are regenerated by a first regeneration treatment of regenerating the water softening tanks and the neutralization tanks excluding the neutralization tank at a last stage and a second regeneration treatment of regenerating the water softening tanks and the neutralization tanks including the neutralization tank at the last stage. As a result, the above structure can achieve the intended object.

According to the present disclosure, it is possible to provide a water softening device capable of rapidly shifting from the regeneration treatment to the water softening treatment, and efficiently softening water.

The water softening device according to the present disclosure includes: the plurality of water softening tanks for softening raw water containing a hardness component with the weakly acidic cation exchange resin; the plurality of neutralization tanks for neutralizing pH of soft water flowing through the water softening tanks with the weakly basic anion exchange resin; and an electrolytic tank for generating acidic electrolytic water for regenerating the weakly acidic cation exchange resin in the water softening tanks and alkaline electrolytic water for regenerating the weakly basic anion exchange resin in the neutralization tanks. In the water softening treatment, the water softening tanks and the neutralization tanks are alternately connected to communicate with each other to soften the raw water. In the regeneration treatment, the water softening tanks and the neutralization tanks are regenerated by a first regeneration treatment of regenerating the water softening tanks and the neutralization tanks excluding the neutralization tank at a last stage and a second regeneration treatment of regenerating the water softening tanks and the neutralization tanks including the neutralization tank at the last stage.

According to such a configuration, by switching from the second regeneration treatment to the first regeneration treatment, the regeneration treatment is performed in a state where the neutralization tank at the last stage is excluded. Then, in the first regeneration treatment, since the alkaline electrolytic water is not circulated to the neutralization tank at the last stage, even in a case where it is immediately shifted to the water softening treatment after the end of the first regeneration treatment, neutral soft water can be obtained from the water intake port instead of soft water containing alkaline electrolytic water. That is, the water softening device can quickly shift from the regeneration treatment to the water softening treatment and efficiently soften the water.

Furthermore, in the water softening device according to the present disclosure, the second regeneration treatment may be executed in a set period set based on a use status of the device, and the first regeneration treatment may be executed in a state where the water softening treatment is not executed outside the set period. In this way, since the first regeneration treatment is executed in a state where the water softening treatment is not executed outside the set period, the treatment time of the second regeneration treatment executed in the set period can be shortened. That is, the water softening device can quickly shift from the regeneration treatment to the water softening treatment and efficiently soften the water.

Furthermore, in the water softening device according to the present disclosure, in a case where the second regeneration treatment is completed, it is preferable that the water softening treatment is executed after executing a wastewater treatment for discharging the acidic electrolytic water used for regenerating the water softening tanks and the alkaline electrolytic water used for regenerating the neutralization tanks to the outside, and in a case where the first regeneration treatment is completed, the water softening treatment is executed without executing the wastewater treatment. In this way, in the second regeneration treatment, it is possible to reliably suppress the influence of the alkaline electrolytic water remaining in the neutralization tank at the last stage, and in the first regeneration treatment, it is possible to quickly shift to the water softening treatment while suppressing the influence of the alkaline electrolytic water remaining in the neutralization tank at the last stage.

An exemplary embodiment of the present disclosure will now be explained with reference to some drawings. Note that the following exemplary embodiments are merely examples of exemplary embodiments of the present disclosure, and are not intended to limit the technical scope of the present disclosure in any way. Furthermore, the drawings explained in the exemplary embodiments are schematic representations, and the ratios of the sizes and the thicknesses of the elements in each of the drawings do not necessarily reflect the actual dimensional ratios.

### (Second exemplary embodiment)

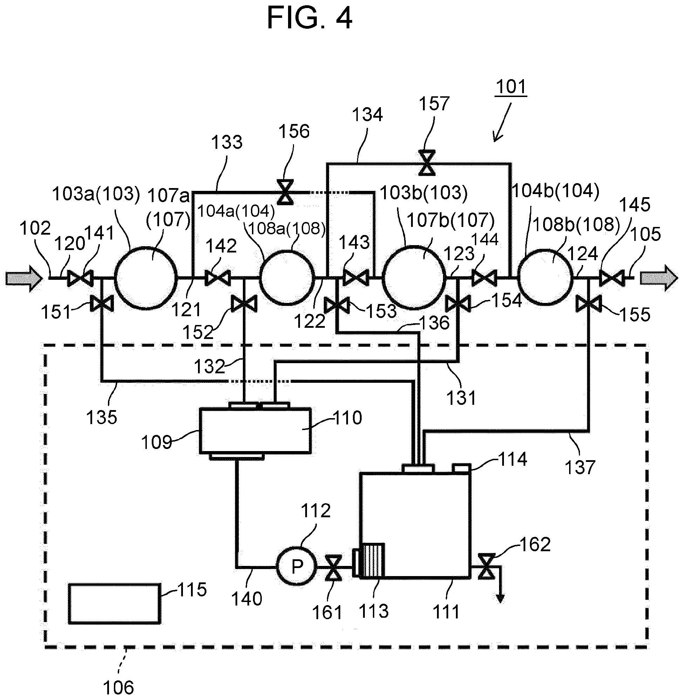

With reference to Fig. 4, water softening device 101 according to a second exemplary embodiment of the present disclosure will be described. Fig. 4 is a conceptual diagram illustrating a configuration of water softening device 101 according to the second exemplary embodiment of the present disclosure. Note that Fig. 4 conceptually illustrates each element of water softening device 101.

### (Overall configuration)

Water softening device 101 is a system for generating neutral soft water that can be used as domestic water from city water (raw water containing a hardness component) supplied from the outside.

Specifically, as shown in Fig. 4, water softening device 101 includes inlet port 102 for raw water from the outside, water softening tank 103, neutralization tank 104, water intake port 105 for treated soft water, and regeneration device 106. Water softening tank 103 includes first water softening tank 103a and second water softening tank 103b. Neutralization tank 104 includes first neutralization tank 104a and second neutralization tank 104b. Furthermore, regeneration device 106 includes electrolytic tank 109, treatment tank 111, and water pump 112. Furthermore, water softening device 101 includes a plurality of on-off valves (on-off valve 141 to on-off valve 145, on-off valve 151 to on-off valve 157, on-off valve 161, and on-off valve 162) and controller 115.

Inlet port 102 is connected to city water. Water softening device 101 can take out water after the water softening treatment from water intake port 105 by the pressure of city water.

Flow path 120, flow path 121, flow path 122, flow path 123, and flow path 124 connect inlet port 102 to water intake port 105. Flow path 120 is a flow path connecting inlet port 102 to first water softening tank 103a. Flow path 121 is a flow path connecting first water softening tank 103a to first neutralization tank 104a. Flow path 122 is a flow path connecting first neutralization tank 104a to second water softening tank 103b. Flow path 123 is a flow path connecting second water softening tank 103b to second neutralization tank 104b. Flow path 124 is a flow path connecting second neutralization tank 104b to water intake port 105.

In other words, flow path 120 is a flow path for guiding raw water containing a hardness component from inlet port 102 to first water softening tank 103a. Furthermore, flow path 121 is a flow path for guiding the water subjected to the water softening treatment in first water softening tank 103a to first neutralization tank 104a. Flow path 122 is a flow path for guiding the water neutralized in first neutralization tank 104a to second water softening tank 103b. Flow path 123 is a flow path for guiding raw water softened by second water softening tank 103b to second neutralization tank 104b. Flow path 124 is a flow path for guiding softened water neutralized by second neutralization tank 104b to water intake port 105.

That is, in water softening device 101, in the water softening treatment, city water supplied from the outside flows through inlet port 102, flow path 120, first water softening tank 103a, flow path 121, first neutralization tank 104a, flow path 122, second water softening tank 103b, flow path 123, second neutralization tank 104b, flow path 124, and water intake port 105 in this order, and is discharged as neutral softened water.

### (Water softening tank and neutralization tank)

Water softening tank 103 is configured by, for example, filling a cylindrical container with weakly acidic cation exchange resin 107. Furthermore, neutralization tank 104 is configured by, for example, filling a cylindrical container with weakly basic anion exchange resin 108.

Water softening tank 103 includes first water softening tank 103a and second water softening tank 103b. First water softening tank 103a is filled with first weakly acidic cation exchange resin 107a. Second water softening tank 103b is filled with second weakly acidic cation exchange resin 107b. Furthermore, first water softening tank 103a and second water softening tank 103b have the same flow path length, the same flow path cross-sectional area, and the same volume of weakly acidic cation exchange resin 107. Note that hereinafter, first weakly acidic cation exchange resin 107a and second weakly acidic cation exchange resin 107b will be described as weakly acidic cation exchange resin 107 unless it is particularly necessary to distinguish between them.

Neutralization tank 104 includes first neutralization tank 104a and second neutralization tank 104b. First neutralization tank 104a is configured by, for example, filling a cylindrical container with first weakly basic anion exchange resin 108a. Furthermore, second neutralization tank 104b is filled with second weakly basic anion exchange resin 108b. Furthermore, first neutralization tank 104a and second neutralization tank 104b have the same flow path length, the same flow path cross-sectional area, and the same volume of weakly basic anion exchange resin 108. Note that hereinafter, first weakly basic anion exchange resin 108a and second weakly basic anion exchange resin 108b will be described as weakly basic anion exchange resin 108 unless it is particularly necessary to distinguish between them.

Here, weakly acidic cation exchange resin 107 is not particularly limited, and ones for general purposes can be used. Examples thereof include a resin having a carboxyl group (-COOH) as an exchange group. Furthermore, a resin in which a hydrogen ion (H⁺) as a counter ion of a carboxyl group is substituted by a cation such as a metal ion or an ammonium ion (NH4⁺) may also be used.

Furthermore, weakly basic anion exchange resin 108 is not particularly limited, and a general-purpose anion exchange resin can be used, and examples thereof include those in a free base form.

Water softening tank 103 softens raw water containing a hardness component by the action of weakly acidic cation exchange resin 107. More specifically, water softening tank 103 includes weakly acidic cation exchange resin 107 having a hydrogen ion at the terminal of the functional group. Water softening tank 103 exchanges cations (calcium ion, magnesium ion) which are hardness components contained in flowing water (raw water) with hydrogen ions to allow the hardness of the raw water to decrease and the raw water to be softened. Furthermore, since the terminal of the functional group of weakly acidic cation exchange resin 107 is a hydrogen ion, weakly acidic cation exchange resin 107 can be regenerated using acidic electrolytic water in the regeneration treatment described later. At this time, cations, which are hardness components taken in during the water softening treatment, are released from weakly acidic cation exchange resin 107.

More specifically, in first water softening tank 103a, the raw water containing the hardness component is made to pass from flow path 120 and passes through first weakly acidic cation exchange resin 107a filled inside, thereby softening the raw water containing the hardness component and allowing the softened water to pass to first neutralization tank 104a via flow path 121. However, the water softened by first weakly acidic cation exchange resin 107a contains a large amount of hydrogen ions exchanged for the hardness components and flowed out, and becomes acidic water having a low pH.

On the other hand, in second water softening tank 103b, neutralized neutral water passes from flow path 122, and passes through second weakly acidic cation exchange resin 107b filled inside. As a result, the hardness components that could not be removed in first water softening tank 103a are exchanged for hydrogen ions of second weakly acidic cation exchange resin 107b. Therefore, the water flowing into second water softening tank 103b is softened. However, the water softened with second weakly acidic cation exchange resin 107b contains hydrogen ions that have been exchanged for hardness components and have flowed out, and thus becomes acidic water.

Neutralization tank 104 neutralizes the pH of the softened water (acidified softened water) containing hydrogen ions that have come out of water softening tank 103 by the action of weakly basic anion exchange resin 108, and converts the softened water into neutral softened water. More specifically, neutralization tank 104 is provided with weakly basic anion exchange resin 108, and adsorbs hydrogen ions contained in softened water from water softening tank 103 together with anions, thereby increasing the pH of the softened water to obtain neutral softened water. Furthermore, weakly basic anion exchange resin 108 can be regenerated using alkaline electrolytic water in a regeneration treatment to be described later.

More specifically, in first neutralization tank 104a, softened water containing hydrogen ions is passed from flow path 121 and is circulated to first weakly basic anion exchange resin 108a filled in first neutralization tank 104a to neutralize acidified water flowing out of first water softening tank 103a, and the acidified water is caused to flow into second water softening tank 103b via flow path 122 as neutral water. That is, by first neutralization tank 104a neutralizing acidic water flowing out of first water softening tank 103a and containing hydrogen ions released from first weakly acidic cation exchange resin 107a, water flowing through first neutralization tank 104a is fed to second water softening tank 103b as water that is easily softened.

On the other hand, in second neutralization tank 104b, the softened water containing hydrogen ions is passed from flow path 123 and is circulated to second weakly basic anion exchange resin 108b filled in second neutralization tank 104b to neutralize the acidified softened water coming out from second water softening tank 103b, and the acidified softened water is passed as neutral softened water to the outside through flow path 124. That is, by second neutralization tank 104b neutralizing acidic water flowing out of second water softening tank 103b and containing hydrogen ions released from second weakly acidic cation exchange resin 107b, thereby flowing out softened water that can be used as domestic water.

Here, as illustrated in Fig. 4, by alternately providing water softening tanks 103 and neutralization tanks 104, the water softening performance can be improved as compared with the case of using one weakly acidic cation exchange resin 107 and one weakly basic anion exchange resin 108 having the same volumes. Furthermore, when water containing a large amount of the permanent hardness component (for example, a sulfate such as calcium sulfate or a chloride such as magnesium chloride) is softened, the pH of water containing a large amount of the permanent hardness component is likely to decrease compared with the pH of water containing a large amount of the temporary hardness component (carbonates such as, for example, calcium carbonate). Therefore, water containing a large amount of permanent hardness components causes deterioration in water softening performance of water softening device 101 in a case where water softening and neutralization are performed once, respectively. On the other hand, when the pH of water reduced by water softening in first water softening tank 103a is neutralized in first neutralization tank 104a, and then the water is softened again in second water softening tank 103b, the water is hardly affected by the water quality of the raw water (ratio of permanent hardness to hardness components), and high water softening performance can be obtained regardless of the water quality of the raw water.

### (Regeneration device)

Regeneration device 106 is a device that regenerates weakly acidic cation exchange resin 107 in water softening tank 103 and regenerates weakly basic anion exchange resin 108 in neutralization tank 104. Specifically, as described above, regeneration device 106 includes electrolytic tank 109, treatment tank 111, and water pump 112. Then, in regeneration device 106, first supply flow path 131, first collection flow path 135, second supply flow path 132, second collection flow path 136, and third collection flow path 137 are connected to flow path 123, flow path 120, flow path 121, flow path 122, and flow path 124 from inlet port 102 to water intake port 105, respectively. Furthermore, flow path 121 and flow path 122 are connected by first bypass flow path 133. Furthermore, flow path 122 and flow path 123 are connected by second bypass flow path 134. Then, each of the flow paths constitutes circulation flow path 130 (first circulation flow path 130a, second circulation flow path 130b, and third circulation flow path 130c) to be described later.

Here, first supply flow path 131 is a flow path for supplying acidic electrolytic water from electrolytic tank 109 to second water softening tank 103b. First bypass flow path 133 is a flow path for supplying the acidic electrolytic water flowing through second water softening tank 103b to first water softening tank 103a while bypassing first neutralization tank 104a. First collection flow path 135 is a flow path for collecting water containing a hardness component that has passed through first water softening tank 103a into treatment tank 111. Second supply flow path 132 is a flow path for supplying alkaline electrolytic water from electrolytic tank 109 to first neutralization tank 104a. Second bypass flow path 134 is a flow path for supplying the alkaline electrolytic water flowing through first neutralization tank 104a to second neutralization tank 104b while bypassing second water softening tank 103b. Second collection flow path 136 is a flow path for collecting water having passed through first neutralization tank 104a into treatment tank 111. Third collection flow path 137 is a flow path for collecting water having passed through second neutralization tank 104b into treatment tank 111.

### (Electrolytic tank)

Electrolytic tank 109 applies electrolysis to the inflowing water (water supplied from treatment tank 111) using electrodes 110 provided inside, thereby generating acidic electrolytic water and alkaline electrolytic water, and discharges them. More specifically, in an electrode serving as an anode during electrolysis, hydrogen ions are generated by electrolysis, and acidic electrolytic water is generated. Furthermore, in an electrode serving as a cathode during electrolysis, hydroxide ions are generated by electrolysis, and alkaline electrolytic water is generated. Then, electrolytic tank 109 supplies the acidic electrolytic water to second water softening tank 103b via first supply flow path 131. Furthermore, electrolytic tank 109 supplies the alkaline electrolytic water to first neutralization tank 104a via second supply flow path 132. Although details will be described later, the acidic electrolytic water generated by electrolytic tank 109 is used for regenerating first weakly acidic cation exchange resin 107a in first water softening tank 103a and second weakly acidic cation exchange resin 107b in second water softening tank 103b. Furthermore, alkaline electrolytic water generated by electrolytic tank 109 is used for regenerating first weakly basic anion exchange resin 108a in first neutralization tank 104a and second weakly basic anion exchange resin 108b in second neutralization tank 104b. Note that electrolytic tank 109 is configured such that an energization state to the electrodes 110 can be controlled by a controller 115 described later.

### (Treatment tank)

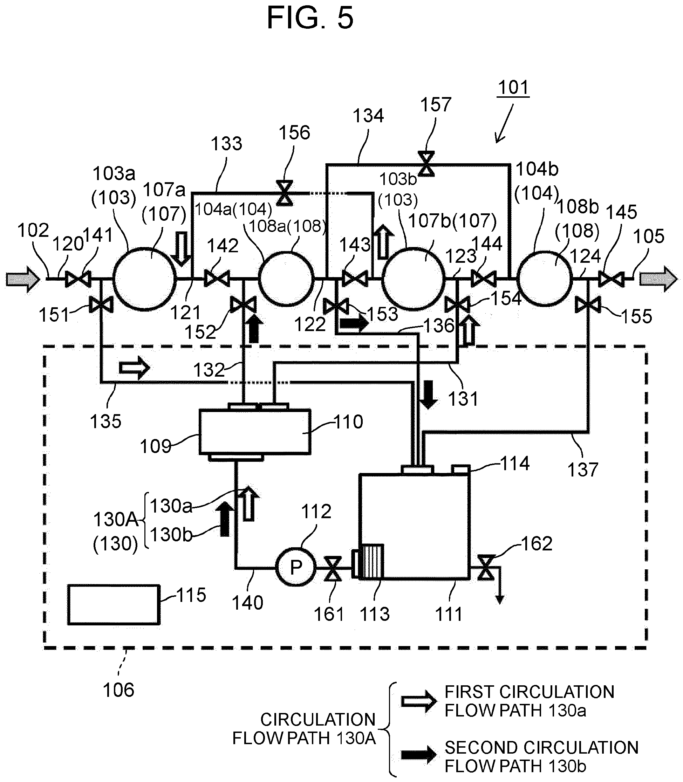

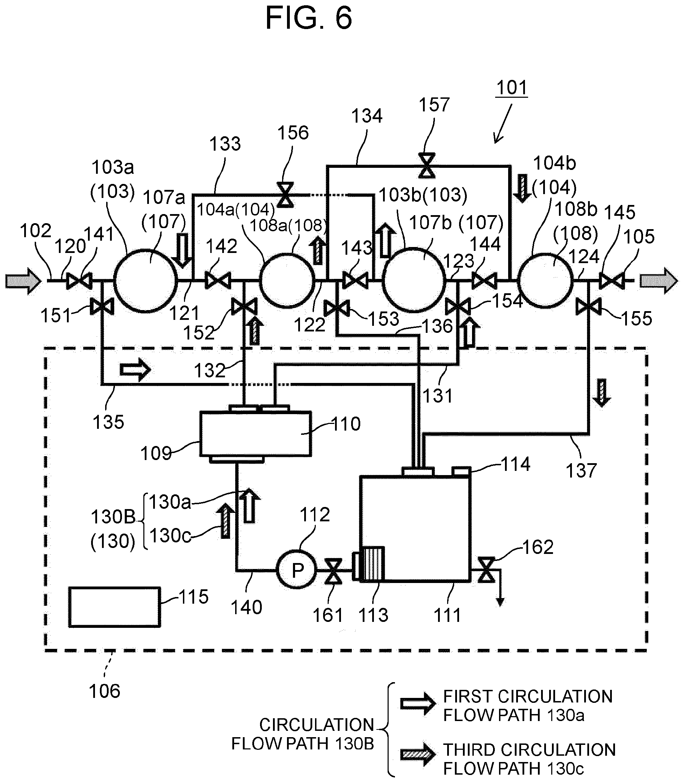

Treatment tank 111 is a tank or a container provided with air bleed valve 114. Treatment tank 111 secures and stores water to be flowed in circulation flow path 130 (see Figs. 5 and 6) when weakly acidic cation exchange resin 107 and weakly basic anion exchange resin 108 are regenerated. Furthermore, treatment tank 111 mixes acidic electrolytic water containing a hardness component flowing through water softening tank 103 and alkaline electrolytic water containing anions flowing through neutralization tank 104, and supplies the mixture to electrolytic tank 109.

In treatment tank 111, a reaction product (reaction product originating from the hardness component contained in raw water) is generated by the reaction between the mixed hardness component and alkaline electrolytic water. More specifically, acidic electrolytic water containing a hardness component after regenerating weakly acidic cation exchange resin 107 in water softening tank 103 passes through treatment tank 111 via first collection flow path 135. Furthermore, alkaline electrolytic water containing anions (for example, chloride ions and hydroxide ions) after regenerating weakly basic anion exchange resin 108 in neutralization tank 104 passes through treatment tank 111 via second collection flow path 136 or third collection flow path 137. Then, in treatment tank 111, the acidic electrolytic water containing a hardness component and the alkaline electrolytic water containing anions are mixed, and the hardness component reacts with the alkaline electrolytic water. For example, when the hardness component in the acidic electrolytic water is calcium ions, a reaction in which calcium carbonate is generated or calcium hydroxide is generated occurs by mixing the calcium ions with the alkaline electrolytic water. Then, the reacted hardness component can be separated as a reaction product by filtration unit 113 described later, and treated water can be obtained.

Note that "the hardness components react" includes not only a state in which all the hardness components react but also a state in which a component that does not react or a component that does not exceed the solubility product is contained in treatment tank 111.

Then, the treated water obtained by the reaction of the hardness component in treatment tank 111 passes to electrolytic tank 109, is electrolyzed in electrolytic tank 109, becomes acidic electrolytic water and alkaline electrolytic water, and they are supplied to water softening tank 103 and neutralization tank 104, respectively. Then, the acidic electrolytic water and the alkaline electrolytic water are reused in water softening tank 103 and neutralization tank 104, respectively, and thereafter pass into treatment tank 111 again. Therefore, the acidic electrolytic water and the alkaline electrolytic water used for the regeneration of weakly acidic cation exchange resin 107 and the regeneration of weakly basic anion exchange resin 108 can be reused. In addition, because water in which the hardness component has reacted is reused, it is possible to suppress a reduction in regeneration efficiency when weakly acidic cation exchange resin 107 is regenerated.

### (Water pump)

Water pump 112 is a device that flows water through circulation flow path 130 (see Figs. 5 and 6) during the regeneration treatment by regeneration device 106. Water pump 112 is provided in water flow path 140 that communicatively connects between treatment tank 111 and electrolytic tank 109. Note that water pump 112 is preferably disposed on the upstream side of electrolytic tank 109 and on the downstream side of treatment tank 111. Such an arrangement is adopted because one water pump 112 can easily circulate water to first circulation flow path 130a, second circulation flow path 130b, and third circulation flow path 130c described later. Furthermore, water pump 112 is connected to controller 115 described later so as to be able to communicate with controller 115 in a wireless or wired manner.

### (Filtration unit)

Filtration unit 113 is provided at a front stage of water flow path 140 connected from treatment tank 111 to electrolytic tank 109. Then, filtration unit 113 separates the precipitate contained in the water flowing through treatment tank 111. The precipitate is a reaction product generated by a reaction between acidic electrolytic water containing a hardness component flowing through water softening tank 103 and alkaline electrolytic water containing anions flowing through neutralization tank 104.

By separating the precipitates by the filtration unit 113, the treated water flowing through water flow path 140 contains less hardness components than the city water or the treated water treated by water softening device not including filtration unit 113. That is, since the hardness of the treatment water is reduced by separating the precipitate by filtration part 113, the hardness of the acidic electrolytic water generated in electrolytic tank 109 is also reduced. Therefore, the hardness component flowing into water softening tank 103 can be reduced, and a decrease in the regeneration efficiency of weakly acidic cation exchange resin 107 can be suppressed.

The form of filtration part 113 is not limited as long as the reaction product from the hardness component in treatment tank 111 can be separated. For example, a form using a cartridge type filter, a filtration layer using a granular filter material, a cyclone type solid-liquid separator, a hollow fiber membrane, or the like can be mentioned. Furthermore, filtration unit 113 may be additionally provided in second supply flow path 132 as a rear stage of electrolytic tank 109 as necessary.

### (On-off valve)

A plurality of on-off valves (on-off valve 141 to on-off valve 145, on-off valve 151 to on-off valve 157, on-off valve 161, and on-off valve 162) are provided in the respective flow paths, and are switched between an "open" state and a "closed" state in the respective flow paths. Furthermore, each of the plurality of on-off valves (on-off valve 141 to on-off valve 145, on-off valve 151 to on-off valve 157, on-off valve 161, and on-off valve 162) is connected to controller 115 to be described later so as to be able to communicate with controller 115 in a wireless or wired manner.

### (Controller)

Controller 115 controls water softening treatment for softening raw water containing a hardness component. Furthermore, controller 115 controls the regeneration treatment of weakly acidic cation exchange resin 107 in water softening tank 103 and weakly basic anion exchange resin 108 in neutralization tank 104. Moreover, controller 115 controls switching of the water softening treatment, the regeneration treatment, and the wastewater treatment of water softening device 101. At this time, controller 115 controls the operations of electrodes 110, water pump 112, on-off valve 141 to on-off valve 145, on-off valve 151 to on-off valve 157, on-off valve 161, and on-off valve 162, switches the water softening treatment, the regeneration treatment, and the wastewater treatment, and executes each treatment.

### (Flow path)

Next, with reference to Figs. 5 and 6, circulation flow path 130 formed at the time of the regeneration treatment of water softening device 101 will be described. Fig. 5 is a configuration diagram illustrating circulation flow path 130A during the first regeneration treatment of water softening device 101. Fig. 6 is a configuration diagram illustrating circulation flow path 130B during the second regeneration treatment of water softening device 101. Note that although details will be described later, the first regeneration treatment is a treatment for regenerating first water softening tank 103a, first neutralization tank 104a, and second water softening tank 103b excluding second neutralization tank 104b positioned at the last stage in the flow path of the water softening treatment. Furthermore, the second regeneration treatment is a treatment for regenerating first water softening tank 103a, first neutralization tank 104a, second water softening tank 103b, and second neutralization tank 104b.

Although the description overlaps, as illustrated in Fig. 5, in water softening device 101, electrolytic tank 109 and treatment tank 111 constituting regeneration device 106 are communicably connected by water flow path 140. Furthermore, in electrolytic tank 109 and treatment tank 111, first supply flow path 131, first collection flow path 135, second supply flow path 132, second collection flow path 136 and third collection flow path 137 are connected to flow path 123, flow path 120, flow path 121, flow path 122, and flow path 124 from inlet port 102 to water intake port 105, respectively. Furthermore, flow path 121 and flow path 122 are bypass-connected by first bypass flow path 133. Furthermore, flow path 122 and flow path 123 are bypass-connected by second bypass flow path 134. Each of the flow paths constitutes circulation flow path 130 (first circulation flow path 130a, second circulation flow path 130b, and third circulation flow path 37) to be described later.

First supply flow path 131 is a flow path for supplying acidic electrolytic water from electrolytic tank 109 to second water softening tank 103b, and on-off valve 154 is installed in the flow path. That is, water softening device 101 includes first supply flow path 131 that can draw out the acidic electrolytic water from electrolytic tank 109 and supply the acidic electrolytic water to the downstream side of second water softening tank 103b.

First bypass flow path 133 is a flow path for supplying acidic electrolytic water from second water softening tank 103b to first water softening tank 103a, and on-off valve 156 is installed in the flow path. That is, water softening device 101 includes first bypass flow path 133 capable of supplying the acidic electrolytic water flowing through second water softening tank 103b to the downstream side of first water softening tank 103a. Note that, by providing first bypass flow path 133, the regeneration treatment can be advanced without circulating acidic electrolytic water in first neutralization tank 104a existing between first water softening tank 103a and second water softening tank 103b.

First collection flow path 135 is a flow path for collecting acidic electrolytic water containing a hardness component having passed through first water softening tank 103a into treatment tank 111, and on-off valve 151 is installed in the flow path. That is, water softening device 101 includes first collection flow path 135 that enables the upstream side of treatment tank 111 to be connected to the upstream side of first water softening tank 103a.

Second supply flow path 132 is a flow path for supplying alkaline electrolytic water from electrolytic tank 109 to first neutralization tank 104a, and on-off valve 152 is installed in the flow path. That is, water softening device 101 includes second supply flow path 132 that can draw out the alkaline electrolytic water from electrolytic tank 109 and supply the alkaline electrolytic water to the upstream side of first neutralization tank 104a.

Second collection flow path 136 is a flow path for collecting the alkaline electrolytic water having passed through first neutralization tank 104a into treatment tank 111, and on-off valve 153 is installed in the flow path. That is, water softening device 101 includes second collection flow path 136 that enables the upstream side of treatment tank 111 to be connected to the downstream side of first neutralization tank 104a.

Second bypass flow path 134 is a flow path for supplying alkaline electrolytic water from first neutralization tank 104a to second neutralization tank 104b, and on-off valve 157 is installed in the flow path. That is, water softening device 101 includes second bypass flow path 134 that can supply the alkaline electrolytic water flowing through first neutralization tank 104a to the upstream side of second neutralization tank 104b. Note that, by providing second bypass flow path 134, the regeneration treatment can be advanced without circulating alkaline electrolytic water to second water softening tank 103b existing between first neutralization tank 104a and second neutralization tank 104b.

Third collection flow path 137 is a flow path for collecting the alkaline electrolytic water having passed through second neutralization tank 104b into treatment tank 111, and on-off valve 155 is installed in the flow path. That is, water softening device 101 includes third collection flow path 137 that enables the upstream side of treatment tank 111 to be connected to the downstream side of second neutralization tank 104b.

Circulation flow path 130 includes a circulation flow path 130A (see Fig. 5) formed during the first regeneration treatment and a circulation flow path 130B (see Fig. 6) formed during the second regeneration treatment. Note that hereinafter, circulation flow path 130A and circulation flow path 130B will be described as circulation flow path 130 in a case where it is not particularly necessary to distinguish between them.

As illustrated in Fig. 5, circulation flow path 130A includes first circulation flow path 130a through which water sent out from treatment tank 111 by water pump 112 flows through second water softening tank 103b and first water softening tank 103a, and a second circulation flow path 130b through which water sent out from treatment tank 111 by water pump 112 flows through first neutralization tank 104a without flowing through second neutralization tank 104b.

As indicated by a white arrow in Fig. 5, first circulation flow path 130a is a flow path through which water sent out from treatment tank 111 by water pump 112 flows through electrolytic tank 109, second water softening tank 103b, and first water softening tank 103a, returns to treatment tank 111, and circulates. More specifically, first circulation flow path 130a is a flow path through which water sent out from treatment tank 111 by water pump 112 circulates through water flow path 140, electrolytic tank 109, first supply flow path 131, on-off valve 154, second water softening tank 103b, first bypass flow path 133, on-off valve 156, first water softening tank 103a, first collection flow path 135, on-off valve 151, and treatment tank 111 in this order.

As indicated by a black arrow in Fig. 5, second circulation flow path 130b is a flow path through which water delivered from treatment tank 111 by water pump 112 circulates through electrolytic tank 109 and first neutralization tank 104a, and returns to treatment tank 111 to circulate. More specifically, second circulation flow path 130b is a flow path through which the water sent out from treatment tank 111 by water pump 112 circulates through water flow path 140, electrolytic tank 109, second supply flow path 132, on-off valve 152, first neutralization tank 104a, second collection flow path 136, on-off valve 153, and treatment tank 111 in this order.

Next, as illustrated in Fig. 6, circulation flow path 130B includes a first circulation flow path 130a through which water sent out from treatment tank 111 by water pump 112 flows through second water softening tank 103b and first water softening tank 103a, and a third circulation flow path 130c through which water sent out from treatment tank 111 by water pump 112 flows through first neutralization tank 104a and second neutralization tank 104b.

As indicated by a white arrow in Fig. 6, first circulation flow path 130a is a flow path through which water sent out from treatment tank 111 by water pump 112 flows through electrolytic tank 109, second water softening tank 103b, and first water softening tank 103a, returns to treatment tank 111, and circulates. Since first circulation flow path 130a of circulation flow path 130B is the same flow path as first circulation flow path 130a of circulation flow path 130A, details thereof are omitted.

As indicated by a shaded arrow in Fig. 6, third circulation flow path 130c is a flow path through which water sent out from treatment tank 111 by water pump 112 circulates through electrolytic tank 109, first neutralization tank 104a, and second neutralization tank 104b, and returns to treatment tank 111 to circulate. More specifically, third circulation flow path 130c is a flow path through which the water sent out from treatment tank 111 by water pump 112 circulates through water flow path 140, electrolytic tank 109, second supply flow path 132, on-off valve 152, first neutralization tank 104a, second bypass flow path 134, on-off valve 157, second neutralization tank 104b, third collection flow path 137, on-off valve 155, and treatment tank 111 in this order.

Here, the state of each flow path for circulating water in circulation flow path 130 will be described.

In flow path 123, on-off valve 144 is installed on the downstream side of first supply flow path 131 and on the upstream side of second bypass flow path 134. By closing on-off valve 144 and opening on-off valve 154, first supply flow path 131 is brought into a state of being communicably connected to the downstream side of second water softening tank 103b. Thus, the acidic electrolytic water from electrolytic tank 109 can be supplied to second water softening tank 103b.

In flow path 121, on-off valve 142 is installed on the downstream side of first bypass flow path 133 and on the upstream side of second supply flow path 132. Furthermore, in flow path 122, on-off valve 143 is disposed on the downstream side of second bypass flow path 134 and second collection flow path 136 and on the upstream side of first bypass flow path 133. By closing on-off valve 142 and on-off valve 143 and opening on-off valve 156, first bypass flow path 133 is communicatively connected to the upstream side of second water softening tank 103b and the downstream side of first water softening tank 103a. As a result, the acidic electrolytic water flowing through second water softening tank 103b can be supplied to first water softening tank 103a.

In flow path 120, on-off valve 141 is installed on the downstream side of inlet port 102 and on the upstream side of first collection flow path 135. By closing on-off valve 141 and on-off valve 142 and opening on-off valve 151, first collection flow path 135 is communicatively connected to the upstream side of first water softening tank 103a. As a result, water softening device 101 can recover water (acidic electrolytic water containing hardness components) flowing through first water softening tank 103a and second water softening tank 103b into treatment tank 111.

Furthermore, when on-off valve 142 is closed and on-off valve 152 is opened, second supply flow path 132 is communicatively connected to the upstream side of first neutralization tank 104a. As a result, the alkaline electrolytic water from electrolytic tank 109 can be supplied to first neutralization tank 104a.

Furthermore, by closing on-off valve 143 and on-off valve 157 and opening on-off valve 153, second collection flow path 136 is communicatively connected to the downstream side of first neutralization tank 104a. As a result, water softening device 101 can recover the water (alkaline electrolytic water containing anions) flowing through first neutralization tank 104a into treatment tank 111.

Furthermore, by closing on-off valve 142, on-off valve 143, and on-off valve 144 and opening on-off valve 157, second bypass flow path 134 is brought into a state of being communicably connected to the downstream side of first neutralization tank 104a and the upstream side of second neutralization tank 104b. As a result, the alkaline electrolytic water flowing through first neutralization tank 104a can be supplied to second neutralization tank 104b.

Furthermore, by closing on-off valve 144 and on-off valve 145 and opening on-off valve 155, third collection flow path 137 is communicatively connected to the downstream side of second neutralization tank 104b. As a result, in water softening device 101, the water (alkaline electrolytic water containing anions) flowing through first neutralization tank 104a and second neutralization tank 104b can be recovered to treatment tank 111.

Furthermore, in water flow path 140, on-off valve 161 is installed on the downstream side of treatment tank 111 (at a position between treatment tank 111 and water pump 112). By closing on-off valve 161, water can be stored in treatment tank 111. On the other hand, by opening on-off valve 161, water can be supplied to water flow path 140.

Furthermore, by closing on-off valve 141 and on-off valve 145, the circulation of water to circulation flow path 130 can be started, and on the other hand, by opening on-off valve 141 and on-off valve 145, the circulation of water to circulation flow path 130 can be stopped.

### (Water softening treatment, regeneration treatment, and wastewater treatment)

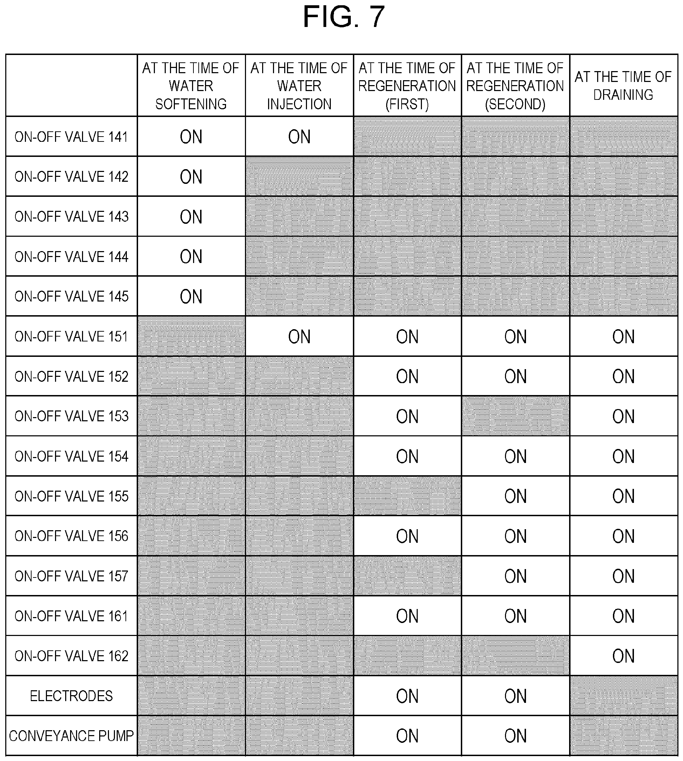

Next, a water softening treatment, a regeneration treatment, and a wastewater treatment of water softening device 101 starting from the regeneration treatment will be described with reference to Fig. 7. Fig. 7 is a diagram illustrating a state of water softening device 101 during operation.

In the water softening treatment, the regeneration treatment, and the wastewater treatment, as illustrated in Fig. 7, controller 115 switches on-off valve 141 to on-off valve 145, on-off valve 151 to on-off valve 157, on-off valve 161, on-off valve 162, the electrodes 110 of electrolytic tank 109, and water pump 112 to control them to be in respective circulation states. Note that controller 115 includes a computer system including a processor and a memory. The computer system functions as a controller by causing the processor to execute a program stored in the memory. In the example explained herein, the program executed by the processor is recorded in the memory of the computer system in advance, but may be provided in a manner recorded in a non-transitory recording medium, such as a memory card, or provided over a telecommunication line such as the Internet.

Here, "ON" in Fig. 7 indicates a state in which the corresponding on-off valve is "opened", a state in which the electrodes 110 are energized, and a state in which water pump 112 is operating, respectively. Blanks indicate a state in which the corresponding on-off valve is "closed", a state in which the electrodes 110 are not energized, and a state in which water pump 112 is stopped, respectively.

### (Regeneration treatment)

In water softening device 101, in water softening tank 103 filled with weakly acidic cation exchange resin 107, the cation exchange capacity decreases or disappears as the use is continued. That is, ion exchange cannot be performed after all the hydrogen ions, which are functional groups of the cation exchange resin, are exchanged for calcium ions or magnesium ions, which are hardness components. In such a state, the hardness component is contained in the treatment water. Therefore, in water softening device 101, it is necessary to regenerate water softening tank 103 and the neutralization tank 104 by regeneration device 106.

In the present exemplary embodiment, the regeneration treatment includes a second regeneration treatment executed during a predetermined set period and a first regeneration treatment executed when a predetermined condition is satisfied outside the set period.

The second regeneration treatment is a treatment for regenerating first water softening tank 103a, first neutralization tank 104a, second water softening tank 103b, and second neutralization tank 104b. The second regeneration treatment is executed in a set period that is a predetermined time zone. The second regeneration treatment is performed until the regeneration treatment of water softening tank 103 and the neutralization tank 104 by regeneration device 106 is completed. After completion of the second regeneration treatment, wastewater treatment for discharging water in circulation flow path 130B is performed, and then the process shifts to water softening treatment. Note that the second regeneration treatment corresponds to a treatment of "regenerating a neutralization tank including a water softening tank and a neutralization tank at the last stage" in the claims.

Here, the set period is set, for example, by specifying a time zone in which the regeneration treatment can be performed once a day (24 hours). More specifically, as the set period, controller 115 may refer to the use history of water softening device 101 to set a time zone in which the frequency of performing the water softening treatment in one day is low, or the user may set an appropriate time zone (for example, at night) in advance.

The first regeneration treatment is a treatment for regenerating first water softening tank 103a, first neutralization tank 104a, and second water softening tank 103b excluding second neutralization tank 104b positioned at the last stage in the flow path of the water softening treatment. The first regeneration treatment is performed when the water softening treatment is not performed, that is, when the inflow of the city water from inlet port 102 is not performed, outside the set period described above (time zone in which the second regeneration treatment is not performed). Then, the first regeneration treatment is executed until the user uses soft water, that is, until the inflow of city water from inlet port 102 is performed. Then, when the user starts using soft water, the first regeneration treatment is immediately terminated, and the process proceeds to the water softening treatment. In other words, in the first regeneration treatment, unlike the second regeneration treatment, the process immediately shifts to the water softening treatment without performing the wastewater treatment for discharging water in circulation flow path 130B.

In the first regeneration treatment, since the alkaline electrolytic water is not circulated to second neutralization tank 104b at the last stage, even when the water softening treatment is immediately shifted after the end of the first regeneration treatment, it is possible to obtain not water (soft water) containing the alkaline electrolytic water but neutral soft water same as that in the normal water softening treatment from water intake port 105. On the other hand, the water (soft water) containing acidic electrolytic water remaining in second water softening tank 103b flows through second neutralization tank 104b located downstream of the second water softening tank 103b, and thus is treated by second neutralization tank 104b to become neutral soft water same as normal water softening treatment. The same applies to the respective electrolytic water remaining in first water softening tank 103a and first neutralization tank 104a.

Note that in the first regeneration treatment, in a case where the regeneration treatment of water softening tank 103 and neutralization tank 104 (excluding second neutralization tank 104b) by regeneration device 106 is completed, a wastewater treatment of discharging water in circulation flow path 130B is performed, and then the process proceeds to the water softening treatment.

Hereinafter, each operation of the regeneration treatment (first regeneration treatment and second regeneration treatment), the wastewater treatment, and the water softening treatment in water softening device 101 will be described in detail.

### (Operation of first regeneration treatment)

The operation of water softening device 101 at the time of the first regeneration treatment by regeneration device 106 will be sequentially described with reference to the columns of "at the time of water injection" and "at the time of regeneration (first)" in Fig. 7.

First, as illustrated in Fig. 7, at the time of injecting water, on-off valve 141 and on-off valve 151 are opened. As a result, water softening device 101 introduces the raw water into treatment tank 111 from inlet port 102 via first collection flow path 135 by the pressure of the city water. At this time, on-off valve 142 to on-off valve 145, on-off valve 152 to on-off valve 157, on-off valve 161, and on-off valve 162 are closed. By storing a predetermined amount of water corresponding to the capacity of water softening device 101 in the treating tank 111, regeneration device 106 can secure an amount of water at the time of regeneration.

Next, when on-off valve 141 to on-off valve 145, on-off valve 155, on-off valve 157, and on-off valve 162 are closed and on-off valve 151 to on-off valve 154, on-off valve 156, and on-off valve 161 are opened at the time of regeneration (first), circulation flow path 130A (first circulation flow path 130a and second circulation flow path 130b) is formed as illustrated in Fig. 5.

Then, when electrodes 110 of electrolytic tank 109 and water pump 112 are operated, the water stored in treatment tank 111 circulates through each of first circulation flow path 130a and second circulation flow path 130b.

The acidic electrolytic water generated in electrolytic tank 109 flows through first circulation flow path 130a to regenerate water softening tank 103. More specifically, the acidic electrolytic water generated in electrolytic tank 109 flows through first supply flow path 131, is supplied into second water softening tank 103b, and flows through second weakly acidic cation exchange resin 107b inside. Then, the acidic electrolytic water flowing through second water softening tank 103b flows through first bypass flow path 133, is supplied into first water softening tank 103a, and flows through first weakly acidic cation exchange resin 107a therein. That is, by passing acidic electrolytic water through first weakly acidic cation exchange resin 107a and second weakly acidic cation exchange resin 107b, cations (hardness components) adsorbed on first weakly acidic cation exchange resin 107a and second weakly acidic cation exchange resin 107b undergo an ion exchange reaction with hydrogen ions contained in the acidic electrolytic water. As a result, first weakly acidic cation exchange resin 107a and second weakly acidic cation exchange resin 107b are regenerated. Thereafter, the acidic electrolytic water flowing through first weakly acidic cation exchange resin 107a contains cations and flows into first collection flow path 135. That is, the acidic electrolytic water containing cations that have flowed through first weakly acidic cation exchange resin 107a and second weakly acidic cation exchange resin 107b is recovered into treatment tank 111 via first bypass flow path 133 and first collection flow path 135.

As described above, first circulation flow path 130a is configured to cause the acidic electrolytic water to flow from the downstream side of second water softening tank 103b located most downstream from inlet port 102 of the raw water and having second weakly acidic cation exchange resin 107b having a small adsorption amount of hardness components, and to flow into the downstream side of first water softening tank 103a located upstream and having first weakly acidic cation exchange resin 107a to which more hardness components are adsorbed as compared with second weakly acidic cation exchange resin 107b.

On the other hand, the alkaline electrolytic water generated in electrolytic tank 109 flows through second circulation flow path 130b to regenerate the neutralization tank 104. More specifically, the alkaline electrolytic water generated in electrolytic tank 109 is fed into first neutralization tank 104a through second supply flow path 132, and flows through first weakly basic anion exchange resin 108a inside. That is, by allowing the alkaline electrolytic water to pass through first weakly basic anion exchange resin 108a, anions adsorbed on first weakly basic anion exchange resin 108a cause an ion exchange reaction with hydroxide ions contained in the alkaline electrolytic water. As a result, first weakly basic anion exchange resin 108a is regenerated. Thereafter, the alkaline electrolytic water flowing through first weakly basic anion exchange resin 108a contains anions and flows into second collection flow path 136. That is, the alkaline electrolytic water containing anions that has flowed through first weakly basic anion exchange resin 108a is recovered into treatment tank 111 via second collection flow path 136.

In treatment tank 111, acidic electrolytic water containing cations recovered from first water softening tank 103a and second water softening tank 103b and alkaline electrolytic water containing anions recovered from first neutralization tank 104a are mixed and neutralized.

At this time, by mixing the acidic electrolytic water containing cations (hardness components) and the alkaline electrolytic water containing anions, the hardness components react with hydroxide ions contained in the alkaline electrolytic water, and a precipitate is generated. For example, when the hardness component in the acidic electrolytic water is calcium ions, calcium hydroxide is generated by the alkaline electrolytic water, or calcium carbonate is generated from bond between calcium ions and carbonate ions existing in water.

Thereafter, when the treated water treated in treatment tank 111 flows through filtration unit 113, the reaction product is removed, and the treated water is again passed through electrolytic tank 109 through water flow path 140. Then, the passed water is electrolyzed again in electrolytic tank 109.

Here, the electrolytic water (acidic electrolytic water, alkaline electrolytic water) electrolyzed again in electrolytic tank 109 is used for regeneration of weakly acidic cation exchange resin 107 and regeneration of weakly basic anion exchange resin 108, respectively. That is, the acidic electrolytic water used for regenerating weakly acidic cation exchange resin 107 is reused as the electrolytic water again in treatment tank 111 from a state where the hardness component is changed into a reaction product and filtered. In addition, in the electrolytic acidic water to be reused, the hardness component contained in the water is reduced as compared with the case of city water (raw water containing a hardness component) supplied from the outside or the case where treatment tank 111 is not provided. Furthermore, since the hardness component, which is a cation, moves to the alkaline electrolytic water side when electrolyzed in electrolytic tank 109, the hardness of the acidic electrolytic water decreases, and a decrease in the regeneration efficiency of weakly acidic cation exchange resin 107 can be suppressed. Furthermore, it is possible to suppress adhesion of a fixed material caused by a hardness component inside electrolytic tank 109 and water softening tank 103.

Thereafter, in water softening device 101, when the user starts using soft water, the operations of the electrodes 110 and water pump 112 are stopped to end the first regeneration treatment. Then, by closing on-off valves 151 to 157 and on-off valves 161 to 162 and opening on-off valves 141 to 145, the process immediately proceeds to the water softening treatment. Note that in the first regeneration treatment, in a case where the regeneration treatment of water softening tank 103 and the neutralization tank 104 (excluding second neutralization tank 104b) by regeneration device 106 is completed, it is only required to shift to the water softening treatment after performing the wastewater treatment of discharging the water in circulation flow path 130B.

### (Operation of second regeneration treatment)

The operation of water softening device 101 at the time of the second regeneration treatment by regeneration device 106 will be sequentially described with reference to the columns of "at the time of water injection" and "at the time of regeneration (second)" in Fig. 7.

First, as illustrated in Fig. 7, at the time of injecting water, on-off valve 141 and on-off valve 151 are opened. As a result, water softening device 101 introduces the raw water into treatment tank 111 from inlet port 102 via first collection flow path 135 by the pressure of the city water. At this time, on-off valve 142 to on-off valve 145, on-off valve 152 to on-off valve 157, on-off valve 161, and on-off valve 162 are closed. By storing a predetermined amount of water corresponding to the capacity of water softening device 101 in the treating tank 111, regeneration device 106 can secure an amount of water at the time of regeneration.

Next, when on-off valve 141 to on-off valve 145, on-off valve 153, and on-off valve 162 are closed and on-off valve 151, on-off valve 152, on-off valve 154 to on-off valve 157, and on-off valve 161 are opened at the time of regeneration (second), circulation flow path 130B (first circulation flow path 130a and third circulation flow path 130c) is formed as illustrated in Fig. 6.

When the electrodes 110 of electrolytic tank 109 and water pump 112 are operated, the water stored in treatment tank 111 circulates through each of first circulation flow path 130a and third circulation flow path 130c.

The acidic electrolytic water generated in electrolytic tank 109 flows through first circulation flow path 130a to regenerate water softening tank 103. Details of first circulation flow path 130a are the same as those in the operation of the first regeneration treatment, and thus are omitted.

On the other hand, the alkaline electrolytic water generated in electrolytic tank 109 flows through third circulation flow path 130c to regenerate the neutralization tank 104. More specifically, the alkaline electrolytic water generated in electrolytic tank 109 is fed into first neutralization tank 104a through second supply flow path 132, and flows through first weakly basic anion exchange resin 108a inside. Then, the alkaline electrolytic water flowing through first neutralization tank 104a flows through second bypass flow path 134, is supplied into second neutralization tank 104b, and flows through second weakly basic anion exchange resin 108b inside. That is, by allowing the alkaline electrolytic water to pass through first weakly basic anion exchange resin 108a and second weakly basic anion exchange resin 108b, anions adsorbed on first weakly basic anion exchange resin 108a and second weakly basic anion exchange resin 108b cause an ion exchange reaction with hydroxide ions contained in the alkaline electrolytic water. As a result, first weakly basic anion exchange resin 108a and second weakly basic anion exchange resin 108b are regenerated. Thereafter, the alkaline electrolytic water flowing through second weakly basic anion exchange resin 108b contains anions and flows into third collection flow path 137. That is, the alkaline electrolytic water containing anions that has flowed through first weakly basic anion exchange resin 108a and second weakly basic anion exchange resin 108b is recovered into treatment tank 111 via second bypass flow path 134 and third collection flow path 137.

In treatment tank 111, acidic electrolytic water containing cations recovered from first water softening tank 103a and second water softening tank 103b and alkaline electrolytic water containing anions recovered from first neutralization tank 104a and second neutralization tank 104b are mixed and neutralized.

Thereafter, in water softening device 101, when the regeneration treatment of water softening tank 103 and the neutralization tank 104 by regeneration device 106 is completed, the operations of the electrodes 110 and water pump 112 are stopped to end the second regeneration treatment. When on-off valve 153 and on-off valve 162 are opened, the process shifts to the wastewater treatment. Note that the completion of the regeneration treatment may be, for example, after a certain period of time (for example, 6 hours) from the start of the regeneration treatment (at the start of operation of electrodes 110), or may be determined by detecting the pH of the acidic electrolytic water flowing through first circulation flow path 130a.

### (Operation of wastewater treatment)

In water softening device 101, when the second regeneration treatment is completed, the process proceeds to the wastewater treatment. Here, the wastewater treatment is a treatment for discharging acidic electrolytic water and alkaline electrolytic water remaining in circulation flow path 130A. Note that the same treatment may be performed when acidic electrolytic water and alkaline electrolytic water remaining in circulation flow path 130B are discharged.

Next, the operation at the time of wastewater treatment by water softening device 101 will be described with reference to the column of "at the time of draining" in Fig. 7.

As illustrated in Fig. 7, in water softening device 101, in the wastewater treatment (at the time of draining), on-off valve 141 to on-off valve 145 are closed, and on-off valve 151 to on-off valve 157 and on-off valve 161 are opened.

Thus, the acidic electrolytic water remaining in first circulation flow path 130a and the alkaline electrolytic water remaining in second circulation flow path 130b can flow into treatment tank 111.

Then, when on-off valve 162 is opened, the electrolytic water in treatment tank 111 can be discharged to the outside of the device by the action of air release valve 114.

By performing the wastewater treatment, when the water softening treatment is resumed after the second regeneration treatment, it is possible to suppress the acidic electrolytic water and the alkaline electrolytic water remaining in circulation flow path 130A from being mixed with the raw water flowing in from inlet port 102 and being discharged from the water intake port 105. That is, even after the water softening treatment is started, it is possible to suppress water containing alkaline electrolytic water from being discharged from water intake port 105.

Then, in water softening device 101, when the wastewater treatment is completed, on-off valve 151 to on-off valve 157, on-off valve 161, and on-off valve 162 are closed, and on-off valve 141 to on-off valve 145 are opened to proceed to the water softening treatment. Note that the end of the wastewater treatment may be set at the time when a certain time (for example, one minute) has elapsed from the start of the wastewater treatment.

### (Operation of water softening treatment)

When the wastewater treatment after the second regeneration treatment is completed, water softening device 101 shifts to the water softening treatment. Furthermore, when the user starts using soft water during the first regeneration treatment, water softening device 101 shifts to the water softening treatment.

Next, the operation at the time of water softening treatment by water softening device 101 will be described with reference to the column of "at the time of water softening" in Fig. 7.

In water softening device 101, as illustrated in Fig. 7, in the water softening treatment (at the time of water softening), on-off valve 145 provided in water intake port 105 is opened in a state where on-off valve 141 to on-off valve 144 are opened. As a result, since the city water (raw water containing hardness components) flows through water softening tank 103 and the neutralization tank 104 from the outside, water softening device 101 can take out softened water (neutral soft water) from water intake port 105. At this time, all of on-off valve 151 to on-off valve 157, on-off valve 161, and on-off valve 162 are in a closed state. Furthermore, the operations of electrodes 110 of electrolytic tank 109 and water pump 112 are also stopped.

Specifically, as illustrated in Fig. 4, in the water softening treatment, the raw water to be supplied is supplied from inlet port 102 to first water softening tank 103a through flow path 120 by the pressure of the city water. The raw water supplied to first water softening tank 103a flows through first weakly acidic cation exchange resin 107a provided in first water softening tank 103a. At this time, cations as hardness components in the raw water are adsorbed by the action of first weakly acidic cation exchange resin 107a, and hydrogen ions are released (ion exchange is performed). Then, cations are removed from the raw water, whereby the raw water is softened. Since the softened water contains a large amount of hydrogen ions that have been exchanged for the hardness components and flowed out, the softened water is acidified to be acidic water having a low pH. The softened water further flows through flow path 121 and flows into first neutralization tank 104a. In first neutralization tank 104a, hydrogen ions contained in the softened water are adsorbed by the action of first weakly basic anion exchange resin 108a. That is, since hydrogen ions are removed from the water softened by first water softening tank 103a, the lowered pH is increased and neutralized. Therefore, as compared with the case where water softened in first water softening tank 103a is directly softened in second water softening tank 103b, the water softening treatment in second water softening tank 103b easily proceeds. The water neutralized by first neutralization tank 104a further flows through flow path 122 and flows into second water softening tank 103b. In second water softening tank 103b, cations as hardness components are adsorbed and hydrogen ions are released by the action of second weakly acidic cation exchange resin 107b. That is, the water flowing into second water softening tank 103b is softened to be soft water. The soft water containing hydrogen ions flows through flow path 123 and flows into second neutralization tank 104b. In second neutralization tank 104b, hydrogen ions contained in the inflowing soft water are adsorbed by the action of second weakly basic anion exchange resin 108b. That is, since hydrogen ions are removed from the softened water, the lowered pH increases, and the softened water becomes softened neutral water that can be used as domestic water. The softened neutral water can be taken out from water intake port 105 through flow path 124.

Then, water softening device 101 executes the regeneration treatment when the time zone specified by controller 115 is reached or when the water softening treatment exceeds a certain period of time.

As described above, in water softening device 101, each operation of the water softening treatment, the regeneration treatment, and the wastewater treatment is repeatedly executed.

As described above, according to water softening device 101 of the present second exemplary embodiment, the following effects can be obtained.
(1) Water softening device 101 includes a plurality of water softening tanks 103 (first water softening tank 103a, second water softening tank 103b) for softening raw water containing a hardness component with weakly acidic cation exchange resin 107, a plurality of neutralization tanks 104 (first neutralization tank 104a, second neutralization tank 104b) for neutralizing the pH of the soft water flowing through water softening tanks 103 with weakly basic anion exchange resin 108, and electrolytic tank 109 for generating acidic electrolytic water for regenerating weakly acidic cation exchange resin 107 in water softening tanks 103 and alkaline electrolytic water for regenerating weakly basic anion exchange resin 108 in neutralization tanks 104. Then, in the water softening treatment, water softening tanks 103 and neutralization tanks 104 are alternately connected to communicate with each other to soften the raw water. In the regeneration treatment, water softening tanks 103 and neutralization tanks 104 are regenerated by a first regeneration treatment of regenerating water softening tanks 103 (first water softening tank 103a and second water softening tank 103b) and neutralization tank 104 (first neutralization tank 104a) excluding neutralization tank 104 (second neutralization tank 104b) at the last stage and a second regeneration treatment of regenerating water softening tanks 103 (first water softening tank 103a and second water softening tank 103b) and neutralization tanks 104 (first neutralization tank 104a and second neutralization tank 104b) including neutralization tank 104 (first neutralization tank 104a) at the last stage.
   According to such a configuration, by switching from the second regeneration treatment to the first regeneration treatment, the regeneration treatment is performed in a state where neutralization tank 104 (second neutralization tank 104b) at the last stage is excluded. Then, in the first regeneration treatment, since the alkaline electrolytic water is not circulated to neutralization tank 104 (second neutralization tank 104b) at the last stage, even in a case where it is immediately shifted to the water softening treatment after the end of the first regeneration treatment, neutral soft water can be obtained from water intake port 105 instead of soft water containing alkaline electrolytic water. That is, water softening device 101 can quickly shift from the regeneration treatment to the water softening treatment and efficiently soften the water.
(2) In water softening device 101, the second regeneration treatment is executed at a set period set based on the use status of the device, and the first regeneration treatment is executed when the water softening treatment is not executed outside the set period. As a result, since the first regeneration treatment is executed in a state where the water softening treatment is not executed outside the set period, the treatment time of the second regeneration treatment executed in the set period can be shortened. That is, water softening device 101 can quickly shift from the regeneration treatment to the water softening treatment and efficiently soften the water.
(3) In the water softening device, in a case where the second regeneration treatment is completed, the water softening treatment is executed after executing a wastewater treatment for discharging the acidic electrolytic water used for regenerating water softening tanks 103 and the alkaline electrolytic water used for regenerating neutralization tanks 104 to the outside. Furthermore, in a case where the first regeneration treatment is completed, the water softening treatment is executed without executing the wastewater treatment. This makes it possible to reliably suppress the influence of the alkaline electrolytic water remaining in neutralization tank 104 (second neutralization tank 104b) at the last stage in the second regeneration treatment, and to quickly shift to the water softening treatment while suppressing the influence of the alkaline electrolytic water remaining in neutralization tank 104 (second neutralization tank 104b) at the last stage in the first regeneration treatment.
(4) Water softening device 101 includes a plurality of water softening tanks 103 and a plurality of neutralization tanks 104. Water softening tank 103 softens the raw water containing the hardness component with weakly acidic cation exchange resin 107. Neutralization tank 104 neutralizes the pH of soft water that has passed through water softening tanks 103 with weakly basic anion exchange resin 108. Furthermore, water softening tank 103 includes first water softening tank 103a and second water softening tank 103b. Neutralization tank 104 includes first neutralization tank 104a and second neutralization tank 104b. Water softening device 101 is configured such that raw water flows through first water softening tank 103a, first neutralization tank 104a, second water softening tank 103b, and second neutralization tank 104b in this order.
   As a result, the raw water containing the hardness component flows out of first water softening tank 103a before the pH of the raw water is lowered by the water softening treatment in first water softening tank 103a, is neutralized in first neutralization tank 104a, and is softened in second water softening tank 103b. Therefore, as compared with the case where each of water softening tank 103 and the neutralization tank 104 is constituted by a single body, it is possible to suppress a decrease in pH and acidification of water flowing in water softening tank 103, and thus exchange between the hardness component and hydrogen ions held by second weakly acidic cation exchange resin 107b of second water softening tank 103b easily occurs. Therefore, water softening device 101 can improve water softening performance.
(5) Water softening device 101 includes electrolytic tank 109 that generates acidic electrolytic water for regenerating weakly acidic cation exchange resin 107 in water softening tank 103 and alkaline electrolytic water for regenerating weakly basic anion exchange resin 108 in neutralization tank 104, and treatment tank 111 that mixes the acidic electrolytic water flowing through water softening tank 103 and the alkaline electrolytic water flowing through neutralization tank 104 and supplies the mixture to electrolytic tank 109. As a result, weakly acidic cation exchange resin 107 can be regenerated by the acidic electrolytic water generated in electrolytic tank 109, and weakly basic anion exchange resin 108 can be regenerated by the alkaline electrolytic water. Therefore, the maintenance frequency of water softening device 101 can be reduced, and water softening device 101 that can be used for a long period of time can be obtained.
(6) In water softening device 101, at the time of the regeneration treatment for regenerating weakly acidic cation exchange resin 107, the acidic electrolytic water delivered from electrolytic tank 109 flows through second water softening tank 103b and then flows through first water softening tank 103a. As a result, during the regeneration treatment, the acidic electrolytic water fed from electrolytic tank 109 flows into second water softening tank 103b having a smaller adsorption amount of the hardness component than that of first water softening tank 103a, and the acidic electrolytic water containing the hardness component is fed into first water softening tank 103a. In the regeneration of second weakly acidic cation exchange resin 107b in second water softening tank 103b, since the consumption of hydrogen ions in the acidic electrolytic water is small, that is, a reduction in the hydrogen ion concentration can be suppressed as compared with the regeneration of first water softening tank 103a, it is possible to suppress the acidic electrolytic water containing a large amount of hydrogen ions from flowing into first water softening tank 103a and the hardness component from being re-adsorbed in first water softening tank 103a. Therefore, it is possible to suppress a decrease in the regeneration treatment efficiency and to shorten the regeneration time.
   Note that, since the acidic electrolytic water fed from electrolytic tank 109 flows into second water softening tank 103b having a smaller adsorption amount of the hardness component than that in first water softening tank 103a, and the acidic electrolytic water containing the hardness component is fed into first water softening tank 103a, it can be said that the hardness component flowing out by regeneration of second water softening tank 103b is smaller than that in first water softening tank 103a. Therefore, compared with the case where the acidic electrolytic water is introduced from first water softening tank 103a, in a case where the acidic electrolytic water is introduced from second water softening tank 103b, since the hardness component contained in the acidic electrolytic water is small, it is possible to suppress re-adsorption of the hardness component in first water softening tank 103a, it is possible to suppress a decrease in the regeneration treatment efficiency, and it can be said that the regeneration time can be shortened.
(7) Water softening device 101 is configured such that the acidic electrolytic water is introduced into first water softening tank 103a and second water softening tank 103b from downstream sides of first water softening tank 103a and second water softening tank 103b during the regeneration treatment. Accordingly, at the time of the regeneration treatment, the acidic electrolytic water fed from electrolytic tank 109 flows in from the downstream side where an adsorption amount of the hardness component is smaller in water softening tank 103, and water softening tank 103 is regenerated. In the regeneration of weakly acidic cation exchange resin 107 on the downstream side, since the consumption of hydrogen ions in the acidic electrolytic water is small, that is, the reduction in the hydrogen ion concentration of the acidic electrolytic water can be suppressed, the hardness component contained in the acidic electrolytic water from the downstream side can be suppressed from being re-adsorbed on an upstream side. Therefore, a decrease in the regeneration treatment efficiency of water softening tank 103 can be suppressed, and the regeneration time can be shortened.
   Note that, since the acidic electrolytic water fed from electrolytic tank 109 flows in from the downstream side where the adsorption amount of the hardness component is smaller in water softening tank 103, and water softening tank 103 is regenerated, it can be said that the hardness component flowing out by the regeneration of weakly acidic cation exchange resin 107 on the downstream side is smaller than that on the upstream side. Therefore, compared with the case where the acidic electrolytic water is introduced from the upstream side, it can be said that in a case where the acidic electrolytic water is introduced from the downstream side, it is possible to suppress re-adsorption of the hardness component to weakly acidic cation exchange resin 107 on the upstream side, it is possible to suppress a decrease in the regeneration treatment efficiency, and it is possible to shorten the regeneration time.
(8) In water softening device 101, first neutralization tank 104a is configured such that the acidic water flowing out of first water softening tank 103a flows in during the water softening treatment. Thus, first neutralization tank 104a can neutralize hydrogen ions generated from first water softening tank 103a. Therefore, inflow of acidic water into second water softening tank 103b into which water flowing out of first neutralization tank 104a flows can be suppressed. Therefore, it is possible to soften the water by second water softening tank 103b without deteriorating the water softening performance of second water softening tank 103b, and the water softening performance is improved.

The present disclosure has been described above based on the exemplary embodiments. It will be understood by those skilled in the art that the exemplary embodiments are merely examples, that the components or the processes disclosed in the exemplary embodiments may be combined as various modifications, and that such modifications also fall within the scope of the present disclosure.

In water softening device 101 according to the present second exemplary embodiment, the number of water softening tanks 103 and the number of the neutralization tanks 104 are two, respectively, but the present disclosure is not limited thereto. For example, the number may be three or more. As a result, since the number of times of alternately performing water softening and neutralization in the water softening treatment increases, the water softening performance can be further improved. Note that even in such a case, the first regeneration treatment may be executed in a state where the neutralization tank at the last stage is excluded.

Furthermore, in water softening device 101 according to the present second exemplary embodiment, the acidic electrolytic water is circulated in the order of second water softening tank 103b and first water softening tank 103a, but the present disclosure is not limited thereto. For example, the acidic electrolytic water may be circulated through first water softening tank 103a and second water softening tank 103b in this order. Moreover, in water softening device 101 according to the present second exemplary embodiment, the acidic electrolytic water is circulated from the downstream side of water softening tank 103, but may be circulated from the upstream side. Also in this way, water softening tank 103 can be regenerated.

Furthermore, in water softening device 101 according to second exemplary embodiment, in the wastewater treatment after the second regeneration treatment, the acidic electrolytic water and the alkaline electrolytic water remaining in circulation flow path 130A are caused to flow into treatment tank 111 and discharged to the outside of the device, but the present disclosure is not limited thereto. For example, as the wastewater treatment, a washing treatment may be performed in which the acidic electrolytic water and the alkaline electrolytic water remaining in circulation flow path 130A are caused to flow into treatment tank 111 and discharged to the outside of the device, and then the raw water is caused to flow through inlet port 102, first water softening tank 103a, first neutralization tank 104a, second water softening tank 103b, second neutralization tank 104b, third collection flow path 137, and treatment tank 111 in this order and discharged to the outside of the device. Accordingly, the acidic electrolytic water remaining in weakly acidic cation exchange resin 107 in water softening tank 103 is washed with the raw water, and the alkaline electrolytic water remaining in weakly basic anion exchange resin 108 in neutralization tank 104 is washed with the raw water. As a result, it is possible to further suppress the influence of the alkaline electrolytic water remaining in neutralization tank 104 (second neutralization tank 104b) at the last stage after the second regeneration treatment (the influence that the water containing the alkaline electrolytic water is temporarily discharged from water intake port 105).

### (Third exemplary embodiment)

In a conventional water softening device using a weakly acidic cation exchange resin, as a method of regenerating a cation exchange resin without using salt, a method of regenerating a cation exchange resin with acidic electrolytic water generated by electrolysis is known (See, for example, PTL 1.). The weakly acidic cation exchange resin has a proton at the terminal of the functional group, and softens raw water by exchanging hardness components (for example, calcium ions and magnesium ions) in raw water with hydrogen ions. The raw water softened with the weakly acidic cation exchange resin contains hydrogen ions and becomes acidic. The hydrogen ions in the soft water are adsorbed to the weakly basic anion exchange resin provided at the subsequent stage of the weakly acidic cation exchange resin, whereby the softened raw water is neutralized. In a conventional water softening device, as a method for regenerating a weakly basic anion exchange resin, a method for regenerating a weakly basic anion exchange resin with alkaline electrolytic water generated by electrolysis is known (See, for example, PTL 2.).

In such a conventional water softening device, as the regeneration treatment of the weakly acidic cation exchange resin and the weakly basic anion exchange resin proceeds, the hardness of the acidic electrolytic water increases due to the hardness component (for example, calcium ions and magnesium ions) released from the water softening tank. Therefore, in a system in which the acidic electrolytic water having increased hardness is electrolyzed again and reused for the regeneration treatment, the hardness of the acidic electrolytic water increases as the time from the start of the regeneration treatment elapses. Therefore, in such a system, as the hardness of the acidic electrolytic water increases, it is difficult for the hardness components to be released from the weakly acidic cation exchange resin, and there is a problem that the regeneration time of the water softening tank is extended.

The present disclosure solves the above-described conventional problems, and an object of the present disclosure is to provide a water softening device capable of reducing the time required for regeneration treatment of an ion exchange resin in the water softening device.

In order to achieve this object, a water softening device according to the present disclosure includes a water softening tank, a neutralization tank, and an electrolytic tank. The water softening tank softens raw water containing a hardness component with a weakly acidic cation exchange resin. The neutralization tank neutralizes the pH of softened water that has passed through the water softening tank with a weakly basic anion exchange resin. The electrolytic tank produces acidic electrolytic water for regenerating the weakly acidic cation exchange resin in the water softening tank and alkaline electrolytic water for regenerating the weakly basic anion exchange resin in the neutralization tank. And the water softening device achieves a desired object by performing a replacement treatment of passing raw water through the water softening tank during a regeneration treatment of the water softening tank.

According to the present disclosure, it is possible to provide a water softening device capable of reducing the time required for regeneration treatment of an ion exchange resin of the water softening device.

A water softening device according to the present disclosure includes a water softening tank, a neutralization tank, and an electrolytic tank. In the water softening tank, raw water containing a hardness component and chloride ions is softened with the weakly acidic cation exchange resin. The neutralization tank neutralizes the pH of softened water that has passed through the water softening tank with a weakly basic anion exchange resin. The electrolytic tank produces acidic electrolytic water for regenerating the weakly acidic cation exchange resin in the water softening tank and alkaline electrolytic water for regenerating the weakly basic anion exchange resin in the neutralization tank. Then, the water softening device performs the replacement treatment of passing the raw water through the water softening tank in the middle of the regeneration treatment of the water softening tank.

According to such a configuration, the water in the water softening tank can be replaced with the raw water from the acidic electrolytic water containing a large amount of hardness components released from the weakly acidic cation exchange resin in the middle of the regeneration treatment. Therefore, since the amount of hardness components in the path of the regeneration treatment can be reduced, it is possible to provide a water softening device capable of suppressing an increase in the time required for the regeneration treatment of the ion exchange resin of the water softening device.

Furthermore, the water softening device according to the present disclosure further includes a separation unit. The separation unit is provided in a flow path communicating the electrolytic tank and the neutralization tank, and separates a precipitate caused by a hardness component contained in water introduced into the electrolytic tank. In the replacement treatment, the raw water flowing through the water softening tank is caused to flow so as to pass through the separation unit. In this way, the separation unit can be washed using the acidic soft water flowing through the water softening tank, and the precipitate containing the hardness component precipitated in the separation unit can be dissolved. Therefore, it is possible to provide a water softening device capable of reducing the pressure loss of the separation unit, supplying a sufficient amount of alkaline electrolytic water to the neutralization tank, and performing the regeneration treatment without delay.

Furthermore, in the water softening device according to the present disclosure, in the replacement treatment, the raw water flowing through the water softening tank may be caused to flow into the separation unit from a downstream side of the separation unit. In this way, backwashing of the separation unit can be performed. Therefore, the treatment efficiency of the replacement treatment can be improved, and the replacement treatment can be completed in a shorter period of time.

Furthermore, the water softening device according to the present disclosure may include a flow rate detection unit that detects a flow rate of water flowing through the separation unit, and may start the replacement treatment in a case where the flow rate detected by the flow rate detection unit falls below a predetermined value. In this way, a flow rate state of the water flowing through the separation unit can be grasped, and the start of the replacement treatment can be determined based on the flow rate information. Therefore, the replacement treatment can be started at a more effective timing.

Furthermore, the water softening device according to the present disclosure may include a static pressure detection unit that detects a static pressure of flowing water at a front stage of the separation unit, and may perform replacement treatment in a case where the static pressure detected by the static pressure detection unit exceeds a predetermined value. In this way, a static pressure state of the separation unit at the time of the regeneration treatment can be grasped, and the start of the replacement treatment can be determined based on the static pressure detection information. Therefore, the replacement treatment can be started at a more effective timing.

An exemplary embodiment of the present disclosure will now be explained with reference to some drawings. Note that the following exemplary embodiments are merely examples of exemplary embodiments of the present disclosure, and are not intended to limit the technical scope of the present disclosure in any way. Furthermore, the drawings explained in the exemplary embodiments are schematic representations, and the ratios of the sizes and the thicknesses of the elements in each of the drawings do not necessarily reflect the actual dimensional ratios.

The third exemplary embodiment includes at least the third exemplary embodiment-1, the third exemplary embodiment-2, the third exemplary embodiment-3, and the third exemplary embodiment-4 described below.

### (Third exemplary embodiment-1)

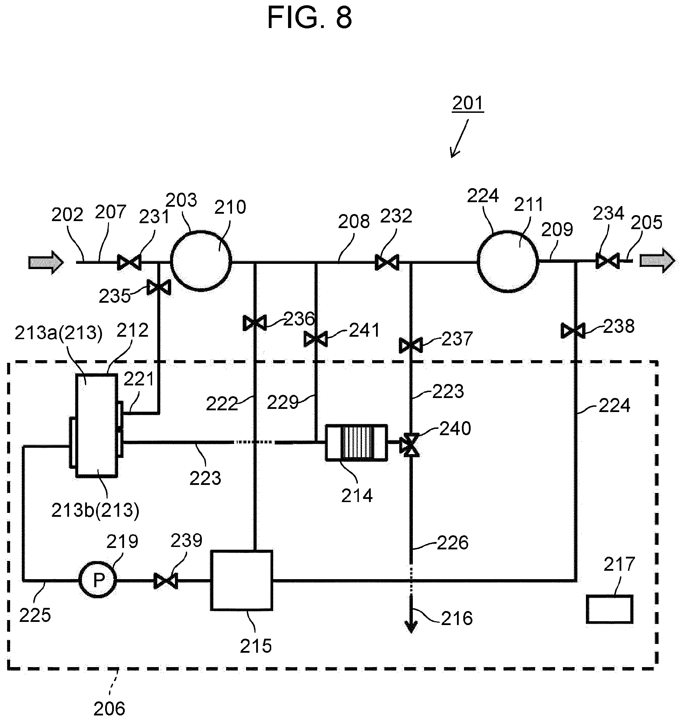

With reference to Fig. 8, water softening device 201 according to the third exemplary embodiment-1 of the present disclosure will be described. Fig. 8 is a conceptual diagram illustrating a configuration of water softening device 201 according to the third exemplary embodiment-1 of the present disclosure. Note that Fig. 8 conceptually illustrates each element of water softening device 201.

### (Overall configuration)

Water softening device 201 is a device that generates city water (raw water containing hardness components) supplied from the outside as neutral soft water that can be used as living water.

Specifically, as illustrated in Fig. 8, water softening device 201 includes inlet port 202 for raw water from the outside, water softening tank 203, neutralization tank 204, water intake port 205 for treated soft water, and regeneration device 206. Furthermore, regeneration device 206 includes electrolytic tank 212, separation unit 214, water storage tank 215, and water pump 219. Furthermore, water softening device 201 includes drainage port 216, controller 217, a plurality of on-off valves (on-off valve 231, on-off valve 232, on-off valve 234 to on-off valve 239, and on-off valve 241), and selection valve 240.

Inlet port 202 is connected to city water. Inlet port 202 is an opening for introducing city water into water softening device 201.

Water intake port 205 is an opening for supplying the water flowed through and softened in water softening device 201 to the outside of the device. Water softening device 201 can take out water after the water softening treatment from water intake port 205 by the pressure of city water.

The path from inlet port 202 to water intake port 205 is connected by flow path 207, flow path 208, flow path 209. Flow path 207 connects from inlet port 202 to water softening tank 203. Flow path 208 connects from water softening tank 203 to neutralization tank 204. Flow path 209 connects from neutralization tank 204 to water intake port 205.

In other words, flow path 207 is a flow path that guides the raw water containing the hardness component from inlet port 202 to water softening tank 203. Furthermore, flow path 208 is a flow path for guiding the raw water softened in water softening tank 203 to neutralization tank 204. Flow path 209 is a flow path that guides soft water neutralized by neutralization tank 204 to water intake port 205.

That is, in water softening device 201, in the water softening treatment, city water supplied from the outside flows through inlet port 202, flow path 207, water softening tank 203, flow path 208, neutralization tank 204, flow path 209, and water intake port 205 in this order, and is discharged as neutral soft water.

### (Water softening tank and neutralization tank)

Water softening tank 203 is filled with weakly acidic cation exchange resin 210, and neutralization tank 204 is filled with weakly basic anion exchange resin 211.

Here, weakly acidic cation exchange resin 210 is not particularly limited, and ones for general purposes can be used. Examples thereof include a resin having a carboxyl group (-COOH) as an exchange group. Furthermore, a resin in which a hydrogen ion (H+) as a counter ion of a carboxyl group is substituted by a cation such as a metal ion or an ammonium ion (NH4+) may also be used.

Furthermore, weakly basic anion exchange resin 211 is not particularly limited, and a general-purpose anion exchange resin can be used, and examples thereof include those in a free base form.

Water softening tank 203 softens the raw water containing the hardness component by the action of weakly acidic cation exchange resin 210. More specifically, water softening tank 203 includes weakly acidic cation exchange resin 210 having a hydrogen ion at the terminal of the functional group. Water softening tank 203 exchanges cations (Calcium ion, magnesium ion), which are hardness components contained in flowing water (raw water), with hydrogen ions. Therefore, the hardness of the raw water introduced into water softening tank 203 decreases, and the raw water can be softened. Furthermore, since the terminal of the functional group of weakly acidic cation exchange resin 210 is a hydrogen ion, weakly acidic cation exchange resin 210 can be regenerated using acidic electrolytic water in the regeneration treatment described later. At this time, cations, which are hardness components taken in during the water softening treatment, are released from weakly acidic cation exchange resin 210.

The raw water containing the hardness component is passed from flow path 207 to water softening tank 203, and passes through weakly acidic cation exchange resin 210 filled inside, so that the raw water containing the hardness component is passed as soft water to neutralization tank 204 through flow path 208. However, the soft water treated with weakly acidic cation exchange resin 210 contains a large amount of hydrogen ions exchanged for hardness components. That is, the soft water flowing out of water softening tank 203 is soft water (acidic soft water) acidified by containing a large amount of hydrogen ions.

Neutralization tank 204 neutralizes the pH of soft water (acidified soft water) containing hydrogen ions coming out of water softening tank 203 by the action of weakly basic anion exchange resin 211, and converts the soft water into neutral water (neutral soft water). More specifically, neutralization tank 204 includes weakly basic anion exchange resin 211, and adsorbs hydrogen ions contained in soft water from water softening tank 203 together with anions, so that the pH of the soft water increases, and neutral soft water can be obtained. Furthermore, weakly basic anion exchange resin 211 can be regenerated using alkaline electrolytic water in a regeneration treatment to be described later.

Soft water containing hydrogen ions passes through neutralization tank 204 from flow path 208, and passes through weakly basic anion exchange resin 211 filled inside, so that the acidified soft water coming out of water softening tank 203 is neutralized and made to pass through flow path 209 to the outside as neutral soft water.

### (Regeneration device)

Regeneration device 206 is a device that regenerates the weakly acidic cation exchange resin 210 in water softening tank 203 and regenerates weakly basic anion exchange resin 211 in neutralization tank 204. Specifically, as described above, regeneration device 206 includes electrolytic tank 212, separation unit 214, water storage tank 215, and water pump 219. In regeneration device 206, first supply flow path 221, first collection flow path 222, flow path 229, second supply flow path 223, and second collection flow path 224 are connected to flow path 207, flow path 208, and flow path 209 from inlet port 202 to the water intake port 205, respectively. Note that flow path 208 is connected to first collection flow path 222, flow path 229, and second supply flow path 223 in this order from the upstream side. First supply flow path 221, first collection flow path 222, flow path 229, second supply flow path 223, and second collection flow path 224 constitute circulation flow path 220 (first circulation flow path 220a, second circulation flow path 220b) or replacement flow path 227 described later.

Here, first supply flow path 221 is a flow path for supplying acidic electrolytic water from electrolytic tank 212 to water softening tank 203. First collection flow path 222 is a flow path for collecting water containing a hardness component that has passed through water softening tank 203 into water storage tank 215. Furthermore, second supply flow path 223 is a flow path for supplying alkaline electrolytic water from electrolytic tank 212 to neutralization tank 204. Second collection flow path 224 is a flow path for collecting water having passed through neutralization tank 204 into water storage tank 215. Flow path 229 is a flow path for supplying the acidic soft water released from water softening tank 203 to separation unit 214.

### (Electrolytic tank)

Electrolytic tank 212 generates acidic electrolytic water and alkaline electrolytic water by electrolyzing water (water supplied from water storage tank 215) that has entered using a pair of electrodes 213 (electrode 213a and electrode 213b) provided inside, and discharges the generated water. More specifically, in electrode 213a serving as an anode during electrolysis, hydrogen ions are generated by electrolysis, and acidic electrolytic water is generated. Furthermore, in electrode 213b serving as a cathode during electrolysis, hydroxide ions are generated by electrolysis, and alkaline electrolytic water is generated. Then, electrolytic tank 212 supplies the acidic electrolytic water to water softening tank 203 through first supply flow path 221, and supplies the alkaline electrolytic water to neutralization tank 204 through second supply flow path 223. Although details will be described later, the acidic electrolytic water generated by electrolytic tank 212 is used for regenerating weakly acidic cation exchange resin 210 in water softening tank 203, and the alkaline electrolytic water generated by electrolytic tank 212 is used for regenerating weakly basic anion exchange resin 211 in neutralization tank 204. Note that electrolytic tank 212 is configured such that an energization state to the pair of electrodes 213 can be controlled by controller 217 described later.

### (Water storage tank)

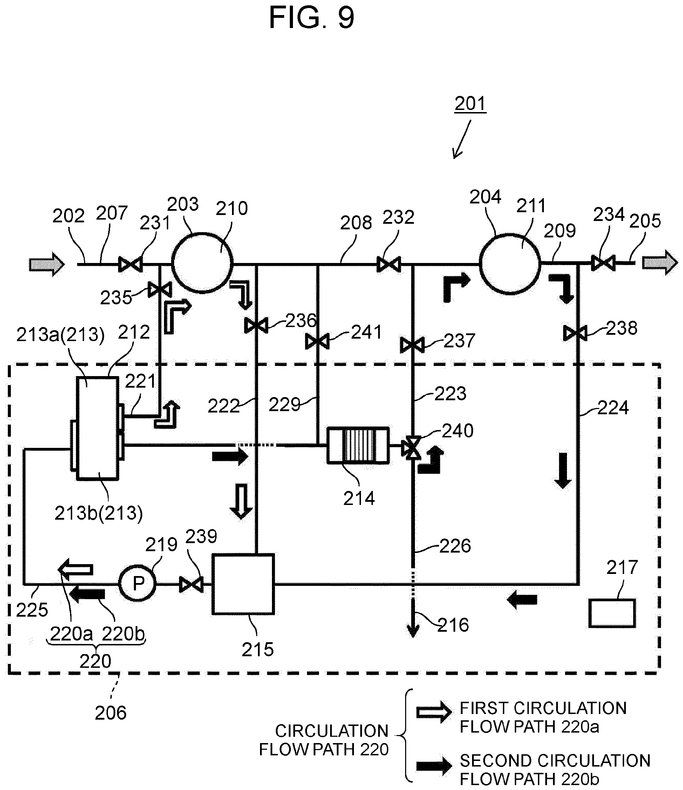

Water storage tank 215 secures and stores water to be flowed in circulation flow path 220 (see Fig. 9) when weakly acidic cation exchange resin 210 and weakly basic anion exchange resin 211 are regenerated. Furthermore, water storage tank 215 mixes acidic electrolytic water containing a hardness component flowing through water softening tank 203 and alkaline electrolytic water containing anions flowing through neutralization tank 204, and supplies the mixed water to electrolytic tank 212.

Then, the water flowing through water storage tank 215 passes through electrolytic tank 212, is electrolyzed in electrolytic tank 212, becomes acidic electrolytic water and alkaline electrolytic water, which are supplied to water softening tank 203 and neutralization tank 204, respectively. Then, the acidic electrolytic water and the alkaline electrolytic water are reused in water softening tank 203 and neutralization tank 204, respectively, and then the acidic electrolytic water and the alkaline electrolytic water are supplied (collected) to water storage tank 215 again. Therefore, the acidic electrolytic water and the alkaline electrolytic water used for the regeneration of weakly acidic cation exchange resin 210 and the regeneration of weakly basic anion exchange resin 211 can be reused.

### (Water pump)

Water pump 219 is a device that flows water through circulation flow path 220 (see Fig. 9) during the regeneration treatment by regeneration device 206. Water pump 219 is provided in water supply flow path 225 that communicatively connects water between storage tank 215 and electrolytic tank 212. Note that water pump 219 is preferably disposed on the upstream side of electrolytic tank 212 and on the downstream side of water storage tank 215. This arrangement is adopted because one water pump 219 can easily circulate water to first circulation flow path 220a and second circulation flow path 220b. Furthermore, water pump 219 is connected to controller 217 described later so as to be able to communicate with controller 217 in a wireless or wired manner.

### (Separation unit)

Separation unit 214 is provided in second supply flow path 223 that communicatively connects electrolytic tank 212 and neutralization tank 204. Then, separation unit 214 separates a precipitate contained in the alkaline electrolytic water fed from electrolytic tank 212. Here, the precipitate is a reaction product generated when a hardness component, which is a cation released from water softening tank 203 during the regeneration treatment of water softening tank 203, reacts with alkaline electrolytic water in electrolytic tank 212. More specifically, while the electrolysis of water is being performed in electrolytic tank 212, the hardness component (for example, calcium ions and magnesium ions) released from water softening tank 203 during the regeneration treatment moves to the cathode (electrode 213b) side. Since alkaline electrolytic water is generated on the cathode side, the hardness component and the alkaline electrolytic water react with each other to form a precipitate. For example, when the hardness component is calcium ions, a reaction in which calcium carbonate is generated or calcium hydroxide is generated occurs by mixing the calcium ions with the alkaline electrolytic water. Precipitates derived from the hardness component are separated as precipitates by separation unit 214 provided in second supply flow path 223. By separating the precipitates derived from the hardness components by separation unit 214, the precipitates can be prevented from flowing into neutralization tank 204 and accumulating. Therefore, in a case where the water softening treatment is resumed after the end of the regeneration treatment, it is possible to suppress the precipitate deposited in neutralization tank 204 from reacting with hydrogen ions released from water softening tank 203 to form a hardness component, and an increase in hardness of the soft water fed from neutralization tank 204. Furthermore, during the regeneration treatment, the alkaline electrolytic water from which the precipitate derived from the hardness component is separated by separation unit 214 flows through neutralization tank 204, is mixed with the acidic electrolytic water, and then electrolyzed again in electrolytic tank 212, and is provided for regeneration of weakly acidic cation exchange resin 210 and regeneration of weakly basic anion exchange resin 211 as the acidic electrolytic water and the alkaline electrolytic water, respectively. At this time, the hardness component contained in the acidic electrolytic water is reduced as compared with the case where the city water or the case where separation unit 214 is not provided. That is, since the hardness of the acidic electrolytic water is reduced by separating the precipitate by separation unit 214, the hardness component flowing into water softening tank 203 can be reduced, and the reduction in the regeneration efficiency of weakly acidic cation exchange resin 210 can be suppressed.

Note that "the hardness component reacts" includes not only a state in which all the hardness components react but also a state in which a component that does not react or a component that does not exceed the solubility product is contained.

The form of separation unit 214 is not limited as long as the precipitate generated by the reaction between the hardness component and the alkaline electrolytic water can be separated. For example, a form using a cartridge type filter, a filtration layer using a granular filter material, a cyclone type solid-liquid separator, a hollow fiber membrane, or the like can be mentioned.

As a means generally used as a form of separation unit 214, a cartridge type filter can be exemplified. As the cartridge type filter, a deep filtration type such as a yarn winding filter, a surface filtration type such as a pleated filter and a membrane filter, or a combination thereof can be used.

The yarn winding filter corresponds to a particle diameter of 1 micrometer to 150 micrometers, and is mainly used as a pre-filter. The pleated filter and the membrane filter correspond to particle sizes as wide as about 0.03 micrometers to 100 micrometers, and it is preferable to use a pleated filter and a membrane filter having an accuracy of about 0.5 micrometers to 1.5 micrometers particularly in the implementation of the present disclosure in order to capture the hardness component precipitated in the regeneration treatment described later. Since alkaline electrolytic water flows in separation unit 214 in the regeneration treatment described later and acidic electrolytic water flows in the washing treatment, the material of the cartridge-type filter is preferably a material (for example, polypropylene) having high corrosion resistance against acid and alkali.

The granular filter medium used for the filtration layer is intended to capture and remove hardness components, but it is also possible to remove particles having a surface potential to be adsorbed to the granular filter medium, particles having a particle diameter of about 1 ~ 10 micrometers or chromaticity depending on the existence state of ions and the like in raw water. As the granular filter material, a filter material suitable for an object to be removed, such as filtration sand, a pellet fiber filter material, or the like, can be used. The material of the granular filter material may be, for example, a material having hardness that is likely to settle in water and is less likely to be deformed by pressure, such as sand, anthracite, garnet, ceramics, granular activated carbon, iron oxyhydroxide, or manganese sand. The particle diameter may be, for example, 0.3 micrometers to 5.0 millimeters, and the equivalent coefficient may be 1.2 to 2.0.

Furthermore, multilayer filtration method in which a plurality of types of filter materials having different specific gravities are mixed and used is a method in which particles having different sizes are layered in order from smallest particles to largest from the bottom as a layer for filtration. In the multilayer filtration method, particles having a large specific gravity and a small size and particles having a small specific gravity and a large size are usually mixed to form a multilayer structure. The multilayer filtration method is preferable because there are advantages such as high filtration efficiency per unit volume and low head loss as compared with a case where a single kind of filter material is used. As a granular filter material, for example, 0.3 millimeters of garnet, 0.6 meters of sand, and 1.0 millimeters of anthracite are mixed at 2:1:1 and used, and it is preferable to adjust the mixing ratio or the particle diameter according to the particle characteristics of the turbidity.

### (On-off valve and selection valve)

A plurality of on-off valves (on-off valve 231, on-off valve 232, on-off valve 234 to on-off valve 239, and on-off valve 241) are provided in the respective flow paths, and switch between an "open" state and a "closed" state in the respective flow paths.

Selection valve 240 is provided between separation unit 214 and neutralization tank 204. Furthermore, selection valve 240 is provided at a junction of second supply flow path 223 and drainage flow path 226, and determines a flowing direction of the acidic soft water and the alkaline electrolytic water flowing through separation unit 214. Specifically, selection valve 240 switches between a flowing state in which the alkaline electrolytic water flowing through separation unit 214 during the regeneration treatment reaches neutralization tank 204 and a flowing state in which the water flowing out of separation unit 214 during the replacement treatment reaches drainage port 216.

Furthermore, each of the plurality of on-off valves (on-off valve 231, on-off valve 232, on-off valve 234 to on-off valve 239, and on-off valve 241) and selection valve 240 is connected to controller 217 described later so as to be able to communicate with the controller 217 in a wireless or wired manner.

### (Drainage port)

Drainage port 216 discharges the acidic soft water flowing through separation unit 214 to the outside of the device at the time of washing separation unit 214 to be described later (at the time of replacement treatment).

More specifically, at the time of replacement treatment, drainage port 216 discharges water that has flowed through flow path 207, water softening tank 203, flow path 208, flow path 229, on-off valve 241, separation unit 214, selection valve 240, and drainage flow path 226, and that contains a hardness component generated by dissolving a precipitate in separation unit 214 to the outside of the device.

### (Controller)

Controller 217 controls the regeneration treatment of weakly acidic cation exchange resin 210 in water softening tank 203 and weakly basic anion exchange resin 211 in neutralization tank 204. Furthermore, controller 217 controls replacement treatment of allowing raw water to pass through water softening tank 203. Furthermore, controller 217 controls water softening treatment for softening raw water containing a hardness component. Furthermore, controller 217 controls the operation of on-off valve 241 to control the flowing direction and the flowing amount of the acidic soft water flowing out of water softening tank 203. Furthermore, controller 217 controls the operation of selection valve 240 to control the flowing direction of the water flowing out of separation unit 214. Moreover, controller 217 controls switching of water softening device 201 between the regeneration treatment, the replacement treatment, and the water softening treatment. At this time, controller 217 controls the operations of electrodes 213, water pump 219, the plurality of on-off valves (on-off valve 231, on-off valve 232, on-off valve 234 to on-off valve 239, and on-off valve 241), and selection valve 240, and switches the regeneration treatment, the replacement treatment, and the water softening treatment and executes each treatment.

### (Flow path)

Next, circulation flow path 220 formed at the time of the regeneration treatment of water softening device 201 will be described with reference to Fig. 9. Fig. 9 is a configuration diagram illustrating circulation flow path 220 of water softening device 201.

Although the description overlaps, as illustrated in Fig. 9, in water softening device 201, electrolytic tank 212 and water storage tank 215 constituting regeneration device 206 are communicably connected by water flow path 225. Furthermore, electrolytic tank 212 and water storage tank 215 are communicably connected by connecting first supply flow path 221, first collection flow path 222, second supply flow path 223, and second collection flow path 224 with flow path 207, flow path 208, and flow path 209 from inlet port 202 to water intake port 205, respectively. In regeneration device 206, circulation flow path 220 is configured by a combination of the flow paths.

First supply flow path 221 is a flow path for supplying acidic electrolytic water from electrolytic tank 212 to water softening tank 203, and on-off valve 235 is installed in the flow path. That is, water softening device 201 includes first supply flow path 221 that can draw out the acidic electrolytic water from electrolytic tank 212 and supply the acidic electrolytic water to the upstream side of water softening tank 203.

Then, first collection flow path 222 is a flow path for collecting water containing a hardness component that has passed through water softening tank 203 into water storage tank 215, and on-off valve 236 is installed in the flow path. That is, water softening device 201 includes first collection flow path 222 that enables the upstream side of water storage tank 215 to be connected to the downstream side of water softening tank 203.

Second supply flow path 223 is a flow path for supplying alkaline electrolytic water from electrolytic tank 212 to neutralization tank 204 via separation unit 214 at the time of the regeneration treatment to be described later, and separation unit 214, selection valve 240, and on-off valve 237 are installed in the flow path. That is, water softening device 201 includes second supply flow path 223 capable of separating the precipitate derived from the hardness component contained in the alkaline electrolytic water drawn out from electrolytic tank 212 by separation unit 214 and supplying the alkaline electrolytic water from which the precipitate has been separated to the upstream side of neutralization tank 204. Note that second supply flow path 223 is connected to flow path 208 on the downstream side of first collection flow path 222 and flow path 229. This is to suppress mixing of the acidic electrolytic water discharged from water softening tank 203 and the alkaline electrolytic water delivered from electrolytic tank 212 during the regeneration treatment to be described later. That is, flow path 208 is connected to first collection flow path 222, flow path 229, and second supply flow path 223 in order from the upstream side.

Then, second collection flow path 224 is a flow path for collecting water having passed through neutralization tank 204 into water storage tank 215, and on-off valve 238 is installed in the flow path. That is, water softening device 201 includes second collection flow path 224 that enables the upstream side of water storage tank 215 to be connected to the downstream side of neutralization tank 204.

Circulation flow path 220 includes first circulation flow path 220a through which water fed from water storage tank 215 by water pump 219 flows through water softening tank 203, and second circulation flow path 220b through which water fed from water storage tank 215 by water pump 219 flows through neutralization tank 204.

As illustrated in Fig. 9 (white arrow), first circulation flow path 220a is a flow path through which water sent out from water storage tank 215 by water pump 219 flows through electrolytic tank 212 and water softening tank 203, and returns to water storage tank 215 to circulate. More specifically, first circulation flow path 220a is a flow path through which water delivered from water storage tank 215 by water pump 219 flows and circulates through water flow path 225, electrolytic tank 212, first supply flow path 221, on-off valve 235, water softening tank 203, first collection flow path 222, on-off valve 236, and water storage tank 215 in this order.

As illustrated in Fig. 9 (black arrow), second circulation flow path 220b is a flow path through which water sent out from water storage tank 215 by water pump 219 circulates through electrolytic tank 212 and neutralization tank 204, returns to water storage tank 215, and circulates. More specifically, second circulation flow path 220b is a flow path through which water delivered from water storage tank 215 by water pump 219 flows and circulates through water flow path 225, electrolytic tank 212, second supply flow path 223, separation unit 214, selection valve 240, on-off valve 237, neutralization tank 204, second collection flow path 224, on-off valve 238, and water storage tank 215 in this order.

Here, in order to circulate water in circulation flow path 220, on-off valve 231 is installed on the downstream side of inlet port 202 in flow path 207. By closing on-off valve 231 and opening on-off valve 235, first supply flow path 221 is communicably connected to the upstream side of water softening tank 203. This makes it possible to supply the acidic electrolytic water from electrolytic tank 212 to water softening tank 203.

Furthermore, in flow path 208, on-off valve 232 is installed on the downstream side of first collection flow path 222 and flow path 229 and on the upstream side of second supply flow path 223. Then, by closing on-off valve 232 and on-off valve 241 installed in flow path 229 and opening on-off valve 236, first collection flow path 222 is brought into a state of being communicably connected to the downstream side of water softening tank 203. As a result, water softening device 201 can recover water (acidic electrolytic water containing hardness components) flowing through water softening tank 203 into water storage tank 215.

Furthermore, on-off valve 232 and on-off valve 241 are closed, on-off valve 237 is opened, and the flowing direction of selection valve 240 is switched to a direction of neutralization tank 204 (a direction in which the selection valve flows from separation unit 214 to neutralization tank 204), so that second supply flow path 223 is communicably connected to the upstream side of neutralization tank 204. As a result, in water softening device 201, the alkaline electrolytic water from electrolytic tank 212 can be flowed through separation unit 214 and supplied to neutralization tank 204.

Furthermore, in flow path 209, on-off valve 234 is installed on the downstream side of neutralization tank 204. By closing on-off valve 234 and opening on-off valve 238, second collection flow path 224 is communicatively connected to the downstream side of neutralization tank 204. As a result, water (alkaline electrolytic water containing anions) that has passed through second collection flow path 224 can be collected in water storage tank 215.

Furthermore, by closing on-off valve 234, the circulation of water to circulation flow path 220 can be started. On the other hand, by opening on-off valve 234, the circulation of water to circulation flow path 220 can be stopped.

Furthermore, on water flow path 225, on-off valve 239 is disposed on a downstream side of water storage tank 215 (a position between water storage tank 215 and water pump 219). By closing on-off valve 239, water can be stored in water storage tank 215. On the other hand, by opening on-off valve 239, water can be supplied to water flow path 225.

Furthermore, in second supply flow path 223, selection valve 240 is installed between separation unit 214 and neutralization tank 204. By switching selection valve 240, a flow path state in which the alkaline electrolytic water generated by the electrolysis in electrode 213b flows through second supply flow path 223 and separation unit 214 to reach neutralization tank 204 and a flow path state in which the water flowing through separation unit 214 is discharged to the outside of the device from drainage port 216 via drainage flow path 226 to be described later can be obtained. Note that in the flow path state in which the water flowing through separation unit 214 is discharged to the outside of the device from drainage port 216, the acid soft water used for washing separation unit 214 is drained at the time of the replacement treatment.

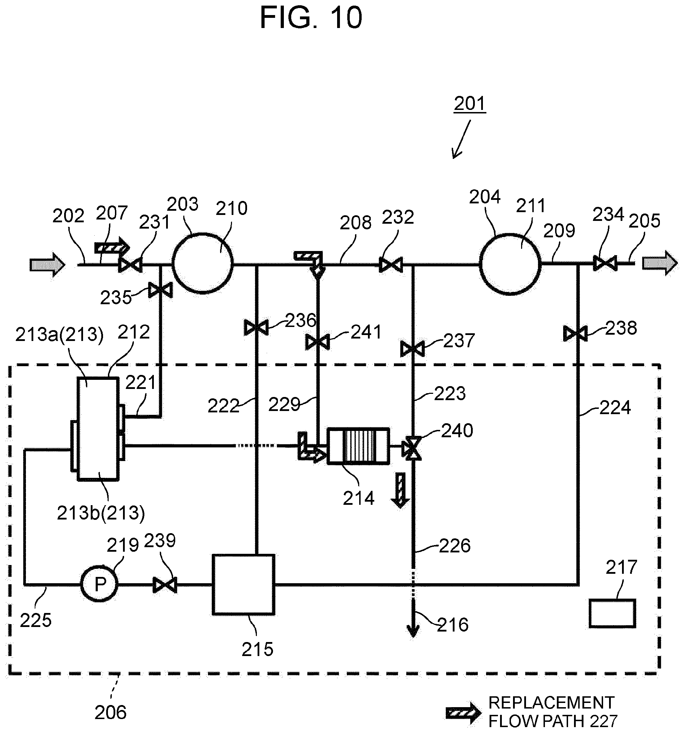

Next, replacement flow path 227 formed at the time of replacement treatment of water softening device 201 will be described with reference to Fig. 10. Fig. 10 is a configuration diagram illustrating replacement flow path 227 of water softening device 201.

As illustrated in Fig. 10, replacement flow path 227 includes flow paths connecting inlet port 202, water softening tank 203, separation unit 214, and drainage port 216. Water softening tank 203 is communicably connected to inlet port 202 by flow path 207. Furthermore, water softening tank 203 is communicably connected to separation unit 214 by flow path 208, flow path 229, and second supply flow path 223. Separation unit 214 is communicably connected to drainage port 216 by second supply flow path 223 and drainage flow path 226 to be described later. Selection valve 240 is provided at a connection portion between second supply flow path 223 and drainage flow path 226.

Flow path 229 is a flow path for supplying the acidic soft water from water softening tank 203 to separation unit 214. Flow path 229 is communicably connected to flow path 208 between water softening tank 203 and second supply flow path 223. Furthermore, flow path 229 is communicably connected to second supply flow path 223 between electrolytic tank 212 and separation unit 214. Furthermore, on-off valve 241 is provided in flow path 229. That is, water softening device 201 includes flow path 229 for supplying the acidic soft water softened by water softening tank 203 to separation unit 214 for washing separation unit 214.

Drainage flow path 226 is a flow path for discharging water from selection valve 240 to drainage port 216. Drainage flow path 226 is communicatively connected to second supply flow path 223 between separation unit 214 and neutralization tank 204. Selection valve 240 is provided in drainage flow path 226. That is, water softening device 201 includes drainage flow path 226 that allows water to be drawn out from selection valve 240 to drainage port 216 and discharged to the outside of the device.

As illustrated in Fig. 10 (hatched arrow), replacement flow path 227 is a flow path in which water introduced from inlet port 202 flows through flow path 207 and water softening tank 203 in this order, is made acidic soft water in water softening tank 203, then flows through flow path 208, flow path 229, second supply flow path 223, and separation unit 214 in this order, flows through selection valve 240 and drainage flow path 226, and is discharged from drainage port 216 to the outside of the device. At the time of replacement treatment to be described later, replacement flow path 227 is used.

### (Regeneration treatment, replacement treatment, wastewater treatment, and water softening treatment)

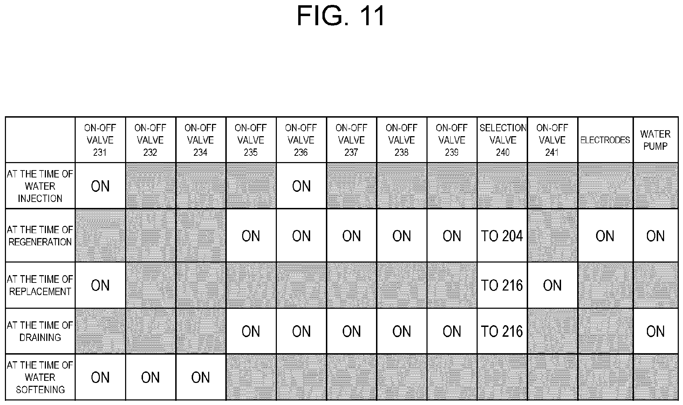

Next, with reference to Fig. 11, the regeneration treatment, replacement treatment, wastewater treatment, and water softening treatment of water softening device 201 starting from the regeneration treatment will be described. Fig. 11 is a diagram illustrating a state of water softening device 201 during operation.

In the regeneration treatment, the replacement treatment, the wastewater treatment, and the water softening treatment, as illustrated in Fig. 11, controller 217 switches on-off valve 231, on-off valve 232, on-off valve 234 to on-off valve 239, selection valve 240, on-off valve 241, electrodes 213 of electrolytic tank 212, and water pump 219 to control them to be in respective circulation states. Note that controller 217 includes a computer system including a processor and a memory. The computer system functions as a controller by causing the processor to execute a program stored in the memory. In the example explained herein, the program executed by the processor is recorded in the memory of the computer system in advance, but may be provided in a manner recorded in a non-transitory recording medium, such as a memory card, or provided over a telecommunication line such as the Internet.

Here, "ON" in Fig. 11 indicates a state in which the corresponding on-off valve is "opened", a state in which electrodes 213 are energized, and a state in which water pump 219 is operating, respectively. Blanks indicate a state in which the corresponding on-off valve is "closed", a state in which electrodes 213 are not energized, and a state in which water pump 219 is stopped, respectively. Furthermore, the notation of selection valve 240 in Fig. 11 indicates a state in which the flow path is opened to the component (neutralization tank 204 or drainage port 216) corresponding to the numeral (mark). Selection valve 240 at the normal time is in a state where the flow path is opened to neutralization tank 204, but is left blank in a case where it is not related to other treatments.

### (Regeneration treatment)

First, the operation of water softening device 201 at the time of regeneration treatment by regeneration device 206 will be sequentially described with reference to the columns of "at the time of water injection" and "at the time of regeneration" in Fig. 11.

In water softening device 201, in water softening tank 203 filled with weakly acidic cation exchange resin 210, the cation exchange capacity decreases or disappears as the use is continued. That is, ion exchange cannot be performed after all the hydrogen ions, which are functional groups of the cation exchange resin, are exchanged for calcium ions or magnesium ions, which are hardness components. In such a state, the hardness component is contained in the treatment water. Therefore, in water softening device 201, it is necessary to regenerate water softening tank 203 and neutralization tank 204 by regeneration device 206.

Therefore, in water softening device 201, controller 217 specifies a time zone in which the regeneration treatment can be performed once in a predetermined period (for example, one day (24 hours)) and executes the regeneration treatment.

First, as illustrated in Fig. 11, at the time of injecting water, on-off valve 231 and on-off valve 236 are opened. As a result, water softening device 201 introduces the raw water into water storage tank 215 from inlet port 202 through water softening tank 203 by the pressure of the city water. At this time, on-off valve 232, on-off valve 234, on-off valve 235, on-off valve 237 to on-off valve 239, and on-off valve 241 are closed. Furthermore, selection valve 240 connects the flow path in a direction in which the water flowing through separation unit 214 flows through neutralization tank 204. By storing a predetermined amount of water corresponding to the capacity of water softening device 201 in water storage tank 215, regeneration device 206 can secure the amount of water at the time of regeneration.

Next, at the time of regeneration, when on-off valve 231, on-off valve 232, on-off valve 234, and on-off valve 241 are closed, on-off valve 235 to on-off valve 239 are opened, and the water flowing direction of selection valve 240 is set to the direction of neutralization tank 204 (the direction flowing from separation unit 214 to neutralization tank 204), first circulation flow path 220a and second circulation flow path 220b are formed, respectively, as illustrated in Fig. 9.

Then, when electrodes 213 of electrolytic tank 212 and water pump 219 are operated, the water stored in water storage tank 215 circulates through each of first circulation flow path 220a and second circulation flow path 220b.

At this time, the acidic electrolytic water generated in electrolytic tank 212 is supplied into water softening tank 203 through first supply flow path 221, and flows through weakly acidic cation exchange resin 210 inside. That is, by circulating the acidic electrolytic water through weakly acidic cation exchange resin 210, cations (hardness components) adsorbed to weakly acidic cation exchange resin 210 undergo an ion exchange reaction with hydrogen ions contained in the acidic electrolytic water. As a result, weakly acidic cation exchange resin 210 is regenerated. Thereafter, the acidic electrolytic water flowing through weakly acidic cation exchange resin 210 contains cations and flows into first collection flow path 222. That is, the acidic electrolytic water containing cations flowing through weakly acidic cation exchange resin 210 is recovered into water storage tank 215 via first collection flow path 222.

On the other hand, the alkaline electrolytic water generated in electrolytic tank 212 is supplied into neutralization tank 204 through second supply flow path 223 and separation unit 214, and flows through weakly basic anion exchange resin 211 inside. That is, by flowing the alkaline electrolytic water through weakly basic anion exchange resin 211, anions adsorbed on weakly basic anion exchange resin 211 cause an ion exchange reaction with hydroxide ions contained in the alkaline electrolytic water. As a result, weakly basic anion exchange resin 211 is regenerated. Thereafter, the alkaline electrolytic water flowing through weakly basic anion exchange resin 211 contains anions and flows into second collection flow path 224. That is, the alkaline electrolytic water containing anions that has flowed through weakly basic anion exchange resin 211 is recovered into water storage tank 215 via second collection flow path 224.

In water storage tank 215, acidic electrolytic water containing cations recovered from water softening tank 203 and alkaline electrolytic water containing anions recovered from neutralization tank 204 are mixed and neutralized.

At this time, by mixing acidic electrolytic water containing cations (hardness components) and alkaline electrolytic water containing anions, the hardness components react with hydroxide ions contained in the alkaline electrolytic water, and a precipitate is generated. However, at least in the initial stage of the regeneration treatment, the amount of hydroxide ions contained in the alkaline electrolytic water flowing from neutralization tank 204 is smaller than the amount of hardness components released from water softening tank 203, so that the precipitate is unlikely to be generated. Therefore, the hardness components contained in the neutralized electrolytic water are sent to electrolytic tank 212 as they are.

Thereafter, the electrolytic water mixed in water storage tank 215 passes through electrolytic tank 212 again through water flow path 225. Then, the passed water is electrolyzed again in electrolytic tank 212.

As described above, water is electrolyzed in electrolytic tank 212, and a large amount of hydroxide ions are generated by electrolysis near the cathode, so that a precipitate is likely to be generated. That is, the hardness component (for example, calcium ions and magnesium ions) contained in the water supplied from water storage tank 215 moves to the cathode side and reacts with hydroxide ions to become a precipitate. Then, the alkaline electrolytic water containing the precipitate is delivered to second supply flow path 223 and flows into separation unit 214.

In separation unit 214, the precipitate contained in the alkaline electrolytic water is separated, and the alkaline electrolytic water (treated water) from which the hardness component has been removed can be obtained. Then, the acidic electrolytic water electrolyzed again in electrolytic tank 212 and the alkaline electrolytic water electrolyzed again in electrolytic tank 212 and separated from the precipitate by separation unit 214 are subjected to regeneration of weakly acidic cation exchange resin 210 and regeneration of weakly basic anion exchange resin 211, respectively.

Here, as a problem when separation unit 214 is not provided, there is a point that a precipitate generated by a reaction between the hardness component released from the water softening tank and the alkaline electrolytic water in the electrolytic tank during the regeneration treatment flows into the neutralization tank and is deposited in the neutralization tank. That is, when the water softening treatment is resumed in a state where the precipitate is deposited in the neutralization tank, the precipitate reacts with hydrogen ions released from the water softening tank to form a hardness component, so that the water softening performance is deteriorated. However, in the present exemplary embodiment, by separating the precipitate generated in electrolytic tank 212 by separation unit 214, it is possible to suppress the deposition of the precipitate caused by the hardness component in neutralization tank 204. However, as the regeneration treatment progresses, the precipitate separated in separation unit 214 gradually accumulates in separation unit 214. Then, the pressure loss of separation unit 214 increases. That is, in the present exemplary embodiment, the constant energy is applied to circulation flow path 220 by water pump 219, but as the pressure loss of separation unit 214 increases, the supply flow rate of the alkaline electrolytic water supplied to neutralization tank 204 gradually decreases as the regeneration treatment proceeds, and the regeneration treatment of neutralization tank 204 may be difficult to complete.

Furthermore, as the regeneration treatment proceeds, the concentration of the hardness component of the acidic electrolytic water containing the hardness component recovered from water softening tank 203 gradually increases. Weakly acidic cation exchange resin 210 has selectivity of adsorption ions, and calcium ions or magnesium ions are more easily adsorbed in a case where the concentrations of hydrogen ions and hardness components (calcium ion, magnesium ion) are about the same. Therefore, in a case where the regeneration treatment of weakly acidic cation exchange resin 210 is performed, it is necessary to increase the concentration of hydrogen ions and supply hydrogen ions having a concentration relatively higher than the concentrations of adsorbed calcium ions and magnesium ions. However, as the concentration of the hardness component of the acidic electrolytic water increases, the concentration of hydrogen ions decreases relative to the concentrations of calcium ions and magnesium ions. Therefore, the hardness component is unlikely to be released from weakly acidic cation exchange resin 210, and the amount of the hardness component that can be recovered from water softening tank 203 decreases, so that the progress of the regeneration treatment may be delayed or the regeneration treatment may not be completed.

Therefore, in the present exemplary embodiment, while water softening device 201 is performing the regeneration treatment (For example, when two hours have elapsed from the start of the regeneration treatment,), the regeneration treatment is primarily stopped and the replacement treatment is performed. That is, the operations of electrodes 213 and water pump 219 are stopped, on-off valve 235 to on-off valve 239 are closed, and on-off valve 231 and on-off valve 241 are opened. Moreover, the water flowing direction of selection valve 240 is switched from the direction of neutralization tank 204 (direction flowing from separation unit 214 to neutralization tank 204) to the direction of drainage port 216 (direction flowing from separation unit 214 to drainage port 216). As a result, the regeneration treatment proceeds to the replacement treatment.

### (Replacement treatment)

Water softening device 201 shifts to replacement treatment when the regeneration treatment is primarily stopped. Here, the replacement treatment is a treatment of discharging acidic electrolytic water having a high concentration of the hardness component remaining in water softening tank 203 to the outside of the device and passing raw water into water softening tank 203. By passing the raw water through water softening tank 203, the acidic electrolytic water in water softening tank 203 is replaced with the raw water or the acidic soft water softened by weakly acidic cation exchange resin 210. Note that, since water softening tank 203 holds the main amount of the acidic electrolytic water having a high hardness component concentration in circulation flow path 220 at the time of regeneration, the acidic electrolytic water in water softening tank 203 may be replaced in order to reduce the hardness component concentration in circulation flow path 220.

Furthermore, in the present the third exemplary embodiment-1, at the time of replacement treatment, the raw water having passed through water softening tank 203 is allowed to pass through separation unit 214. Thus, separation unit 214 can be washed by performing the replacement treatment, and the acidic soft water generated in water softening tank 203 can be flowed through separation unit 214 to dissolve the precipitate caused by the hardness component separated in separation unit 214.

That is, in the replacement treatment illustrated in the present the third exemplary embodiment-1, the acidic electrolytic water having a high hardness component concentration present in water softening tank 203 is replaced with raw water, and the acidic electrolytic water is discharged to the outside of the device, thereby reducing the hardness component concentration in the system. At this time, raw water passing through water softening tank 203 is caused to pass through separation unit 214, and separation unit 214 is washed, so that precipitates deposited in separation unit 214 can be dissolved and discharged to the outside of the system.

Next, an operation at the time of replacement treatment by water softening device 201 will be described with reference to a column of "at the time of replacement" in Fig. 11.

As illustrated in Fig. 11, in water softening device 201, in the replacement treatment, on-off valve 231 and on-off valve 241 are opened, and selection valve 240 is switched so as to be in a flow path state where water passes from separation unit 214 to drainage flow path 226. As a result, in water softening device 201, replacement flow path 227 is formed, and separation unit 214 can be washed. At this time, on-off valve 232 and on-off valve 234 to on-off valve 239 are closed.

Specifically, in the replacement treatment, as illustrated in Fig. 10, the raw water to be supplied is supplied from inlet port 202 to water softening tank 203 through flow path 207 by the pressure of the city water. The raw water supplied to water softening tank 203 flows through weakly acidic cation exchange resin 210 provided in water softening tank 203. At this time, cations as hardness components in the raw water are adsorbed by the action of weakly acidic cation exchange resin 210, and hydrogen ions are released (ion exchange is performed). Then, cations are removed from the raw water, whereby the raw water is softened. At this time, the water flowing out of water softening tank 203 becomes acidic due to the release of hydrogen ions. That is, the raw water flowing into water softening tank 203 is sent out from water softening tank 203 as acidic soft water. Furthermore, the acidic electrolytic water present in water softening tank 203 at the time of the regeneration treatment is discharged from water softening tank 203 by the inflow raw water and the acidic soft water treated with weakly acidic cation exchange resin 210, delivered to separation unit 214, and finally discharged from drainage port 216 to the outside of the device.

Next, since on-off valve 241 is opened and on-off valve 232 and on-off valve 236 are closed, the acidic soft water delivered from water softening tank 203 flows through flow path 208, flow path 229, and second supply flow path 223, and flows into separation unit 214. By allowing the acidic soft water to flow into separation unit 214, the precipitate resulting from the hardness component trapped in separation unit 214 reacts with the acidic soft water. As a result, the precipitate caused by the hardness component is dissolved and becomes a hardness component, and is contained in the acidic softened water.

Since the water flowing direction of selection valve 240 is set to the direction of drainage port 216 (the direction flowing from separation unit 214 to drainage port 216), the acidic soft water flowing through separation unit 214 flows through drainage flow path 226 and is discharged from drainage port 216 to the outside of the device. That is, by flowing the acidic soft water through separation unit 214 and discharging the flowed acidic soft water, separation unit 214 can be washed, and the hardness component can be discharged to the outside of the device. As a result, the precipitate captured by separation unit 214 can be dissolved and removed, and separation unit 214 can be washed, so that a decrease in the amount of water passing due to clogging of separation unit 214 can be reduced.

At this time, until the acidic soft water reaches separation unit 214, the acidic electrolytic water having a high concentration of the hardness component remaining in water softening tank 203 during the regeneration treatment first flows to separation unit 214, and can be discharged to the outside of the device from drainage port 216.

Note that the replacement treatment is started when a certain time (for example, two hours) has elapsed from the start of the regeneration treatment. The replacement treatment may be performed only once during the regeneration treatment, or may be frequently performed. In a case where the replacement treatment is not frequently performed during the regeneration treatment, the replacement treatment is preferably performed in the latter half of the regeneration treatment. This is because the hardness component concentration in the acidic electrolytic water introduced into water softening tank 203 increases as the regeneration treatment proceeds, and thus the total amount of the hardness components that can be discharged to the outside of the system by one replacement treatment increases when the replacement treatment is performed in the latter half of the regeneration treatment. Furthermore, even in a case where attention is paid to the washing of separation unit 214, since the precipitate gradually accumulates as time elapses from the start of the regeneration treatment, the replacement treatment is preferably performed in the latter half of the regeneration treatment. For example, in a case where the regeneration treatment takes six hours and the replacement treatment is performed only once, the replacement treatment may be performed after three hours have elapsed from the start of the regeneration treatment.

Furthermore, the replacement treatment is terminated when a certain period of time (for example, five minutes) has elapsed from the start of the replacement treatment. Here, the certain period of time is a period of time set as a period of time required for discharging acidic electrolytic water having a high concentration of the hardness component remaining in water softening tank 203 to the outside of the device and dissolving a certain amount of precipitates captured by separation unit 214, based on evaluation results in a washing experiment performed in advance.

When the replacement treatment is finished, water softening device 201 opens on-off valve 235 to on-off valve 239 and closes on-off valve 231 and on-off valve 241 in order to resume the regeneration treatment that has been primarily stopped. Moreover, selection valve 240 connects the flow path in a direction in which the water flowing through separation unit 214 flows through neutralization tank 204, restarts the operation of electrodes 213 and water pump 219, and restarts the regeneration treatment.

Note that the replacement treatment may be performed a plurality of times before the end of the regeneration treatment.

Thereafter, in water softening device 201, when the regeneration treatment is completed, the operation of electrodes 213 is stopped, and the process proceeds to the wastewater treatment.

### (Wastewater treatment)

In water softening device 201, when the regeneration treatment is completed, the process proceeds to the wastewater treatment. Here, the wastewater treatment is a treatment of discharging the raw water, the acidic electrolytic water, the alkaline electrolytic water, and the acidic soft water remaining in circulation flow path 220.

Next, the operation at the time of wastewater treatment by water softening device 201 will be described with reference to the column of "at the time of draining" in Fig. 11.

As illustrated in Fig. 11, in water softening device 201, on-off valve 231, on-off valve 232, on-off valve 234, and on-off valve 241 are closed and on-off valve 235 ~ 239 is opened in the wastewater treatment (at the time of draining). Furthermore, a water flowing direction of selection valve 240 is set to a direction of drainage port 216 (a direction flowing from separation unit 214 to drainage port 216). As a result, the inflow of the city water from inlet port 202 is stopped, and the acidic electrolytic water remaining in the path from electrolytic tank 212 to water storage tank 215 via first supply flow path 221, water softening tank 203, and first collection flow path 222 and the alkaline electrolytic water remaining in the path from separation unit 214 to water storage tank 215 via second supply flow path 223, neutralization tank 204, and second collection flow path 224 can be caused to flow into water storage tank 215.

Next, water pump 219 is started, on-off valve 239 is opened, and the flowing direction of selection valve 240 is switched to the direction of drainage port 216. As a result, it is possible to discharge the electrolytic water remaining in the path from the inside of water storage tank 215 to electrolytic tank 212 via water flow path 225, the electrolytic water remaining in the path from the inside of electrolytic tank 212 to drainage port 216 via second supply flow path 223 and drainage flow path 226, and the raw water and the acidic soft water remaining in replacement flow path 227, to the outside of the device. At this time, the operation of electrodes 213 is stopped.

Then, in water softening device 201, when the wastewater treatment is completed, the operation of water pump 219 is stopped. Furthermore, on-off valve 235 to on-off valve 239 are closed, on-off valve 231, on-off valve 232, and on-off valve 234 are opened, and the water flowing direction of selection valve 240 is set to the direction of neutralization tank 204 (the direction flowing from separation unit 214 to neutralization tank 204), thereby shifting to the water softening treatment.

Note that the end of the wastewater treatment is when a certain time (for example, one minute) has elapsed from the start of the wastewater treatment.

### (Water softening treatment)

Water softening device 201 shifts to the water softening treatment when the wastewater treatment is completed.

The operation at the time of water softening treatment by water softening device 201 will be described with reference to the column of "at the time of water softening" in Fig. 11.

In water softening device 201, as illustrated in Fig. 11, in the water softening treatment, on-off valve 231 provided in water intake port 205 is opened in a state where on-off valve 234 and on-off valve 232 are opened. As a result, in water softening device 201, since the city water (raw water containing hardness components) flows through water softening tank 203 and neutralization tank 204 from the outside, the softened water (neutral soft water) can be taken out from water intake port 205.

Specifically, in the water softening treatment, the raw water to be supplied is supplied from inlet port 202 to water softening tank 203 through flow path 207 by the pressure of the city water. The raw water supplied to water softening tank 203 flows through weakly acidic cation exchange resin 210 provided in water softening tank 203. At this time, cations as hardness components in the raw water are adsorbed by the action of weakly acidic cation exchange resin 210, and hydrogen ions are released (ion exchange is performed). Then, cations are removed from the raw water, whereby the raw water is softened. The softened water further passes through flow path 208 and proceeds to neutralization tank 204. In neutralization tank 204, hydrogen ions contained in the softened water are adsorbed by the action of weakly basic anion exchange resin 211. That is, since the hydrogen ions are removed from the soft water after the treatment, the lowered pH increases and the soft water becomes neutral water softened as domestic water, and the neutral water can be taken out from water intake port 205 through flow path 209. At this time, all of on-off valve 235 to on-off valve 239 are closed. Furthermore, the operations of electrodes 213 of electrolytic tank 212 and water pump 219 are also stopped.

Then, water softening device 201 stops the water softening treatment when the time zone specified by controller 217 is reached or when the water softening treatment exceeds a certain period of time, and executes the above-described regeneration treatment.

As described above, in water softening device 201, the regeneration treatment, the replacement treatment, and the water softening treatment are repeatedly executed. Then, water softening device 201 supplies city water (raw water containing hardness components) as neutral soft water that can be used as living water.

As described above, according to water softening device 201 of the third exemplary embodiment-1, the following effects can be obtained.
(1) Water softening device 201 includes water softening tank 203, neutralization tank 204, and electrolytic tank 212. Water softening tank 203 softens raw water containing a hardness component and chloride ions with weakly acidic cation exchange resin 210. The neutralization tank 204 neutralizes the pH of soft water that has passed through water softening tank 203 with weakly basic anion exchange resin 211. Electrolytic tank 212 generates acidic electrolytic water for regenerating weakly acidic cation exchange resin 210 in water softening tank 203 and alkaline electrolytic water for regenerating weakly basic anion exchange resin 211 in neutralization tank 204. Then, water softening device 201 performs a replacement treatment for allowing raw water to pass through water softening tank 203 in the middle of the regeneration treatment of water softening tank 203.
   This makes it possible to replace the water in water softening tank 203 with the raw water from the acidic electrolytic water containing a large amount of hardness components released from weakly acidic cation exchange resin 210 in the middle of the regeneration treatment. Therefore, since the amount of hardness components in the path of the regeneration treatment can be reduced, it is possible to provide water softening device 201 capable of suppressing an increase in the time required for the regeneration treatment of water softening device 201.
(2) Water softening device 201 further includes a separation unit 214. separation unit 214 is provided in a flow path communicating electrolytic tank 212 and neutralization tank 204, and separates a precipitate caused by a hardness component contained in water introduced into electrolytic tank 212. In the replacement treatment, the raw water flowing through water softening tank 203 is caused to flow so as to pass through separation unit 214. As a result, separation unit 214 can be washed using the acidic soft water flowing through water softening tank 203, and the precipitate containing the hardness component precipitated in separation unit 214 can be dissolved. Therefore, it is possible to provide water softening device 201 capable of reducing the pressure loss of separation unit 214, supplying a sufficient amount of alkali electrolytic water to neutralization tank 204, and performing the regeneration treatment without delay.
(3) In water softening device 201, the replacement treatment is finished after a certain period from the start of the replacement treatment. As a result, the acidic electrolytic water having a high hardness component concentration remaining in water softening tank 203 can be discharged to the outside of the device and the washing treatment of separation unit 214 can be terminated in a certain period. Therefore, it is possible to prevent the primary stop time of the regeneration treatment from becoming excessively long.

### (Third exemplary embodiment-2)

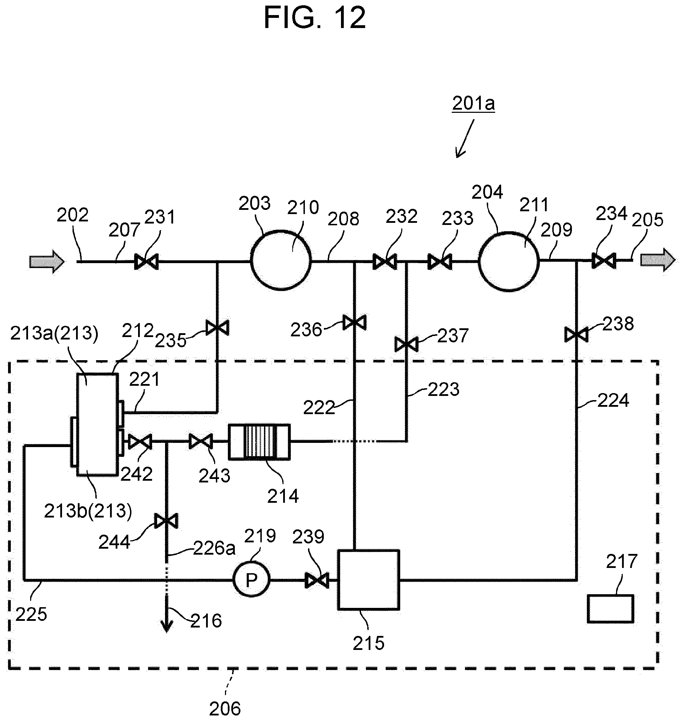

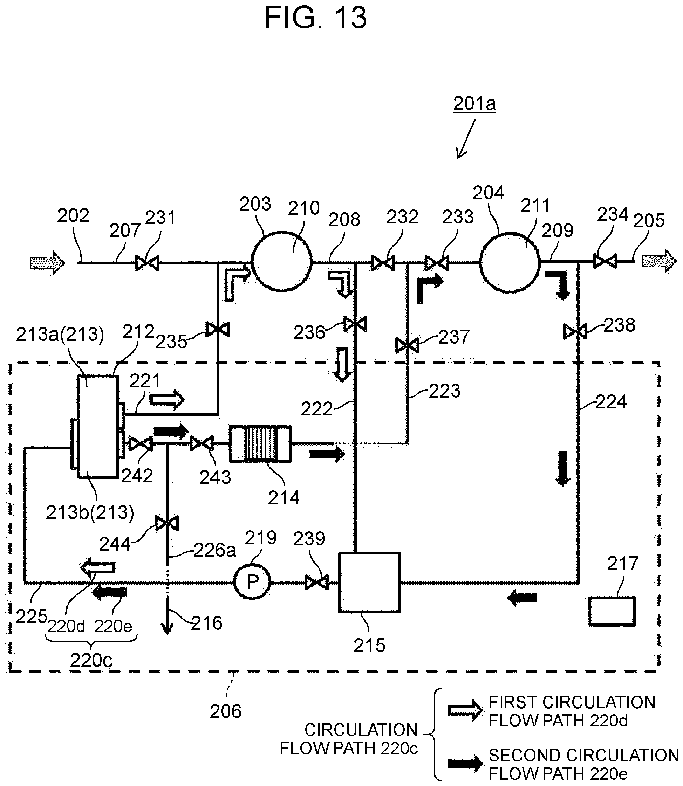

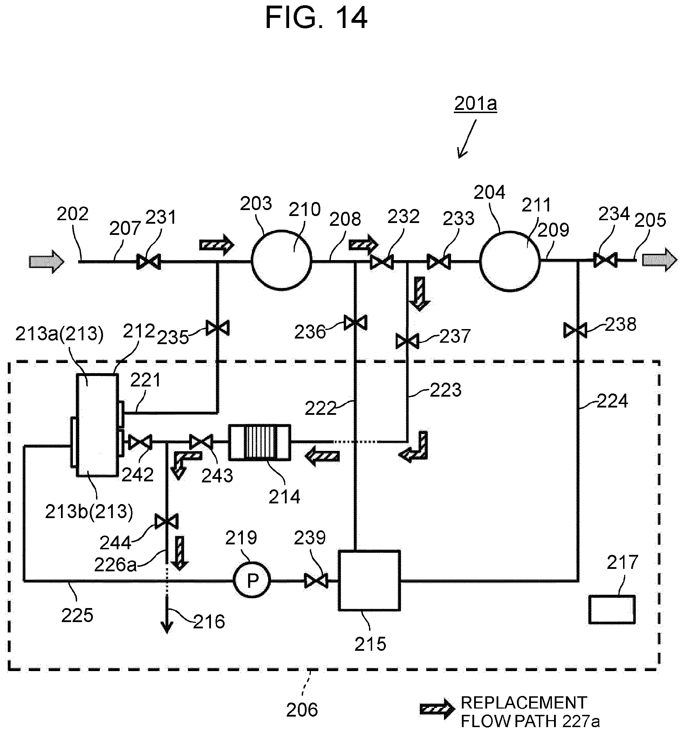

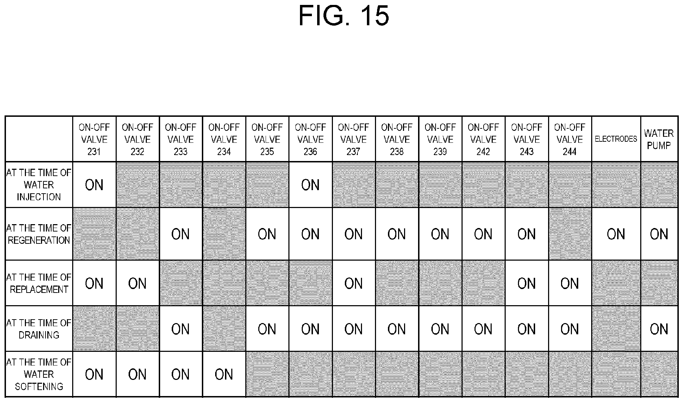

Next, water softening device 201a according to the third exemplary embodiment-2 of the present disclosure will be described with reference to Figs. 12 to 15. Fig. 12 is a conceptual diagram illustrating a configuration of water softening device 201a according to the third exemplary embodiment-2. Fig. 13 is a configuration diagram illustrating circulation flow path 220c of water softening device 201a according to the third exemplary embodiment-2. Fig. 14 is a configuration diagram illustrating replacement flow path 227a of water softening device 201a according to the third exemplary embodiment-2. Fig. 15 is a view illustrating a state during operation of water softening device 201a according to the third exemplary embodiment-2.

Water softening device 201a according to the third exemplary embodiment-2 is different from the third exemplary embodiment-1 in that water softening device 201a is configured such that backwashing of separation unit 214 is performed when the separation unit is washed. Other configurations of water softening device 201a are similar to those of water softening device 201 according to the third exemplary embodiment-1. In the following, description of the contents already described in the third exemplary embodiment-1 will be omitted as appropriate, and differences from the third exemplary embodiment-1 will be mainly described.

### (Flow path and on-off valve)

As illustrated in Fig. 12, water softening device 201a includes a plurality of on-off valves (on-off valve 231 to on-off valve 239 and on-off valve 242 to on-off valve 244). A plurality of on-off valves (on-off valve 231 to on-off valve 239 and on-off valve 242 to on-off valve 244) are provided in the respective flow paths, and switch between an "open" state and a "closed" state in the respective flow paths. Furthermore, water softening device 201a does not include a flow path corresponding to flow path 229 of the third exemplary embodiment-1. Water softening device 201a is configured to supply acidic soft water to separation unit 214 by second supply flow path 223 instead of flow path 229.

Second supply flow path 223 is a flow path that communicatively connects electrolytic tank 212 and flow path 208, and the flow path is provided with on-off valve 242, on-off valve 243, a separation unit 214, and on-off valve 237. Furthermore, second supply flow path 223 is communicably connected to drainage flow path 226a between on-off valve 242 and on-off valve 243.

On-off valve 242 is provided between a connection point between second supply flow path 223 and drainage flow path 226a and electrolytic tanks 212. Furthermore, on-off valve 243 is provided between a connection point between second supply flow path 223 and drainage flow path 226a and separation unit 214. Furthermore, on-off valve 237 is provided between a connection point between second supply flow path 223 and flow path 208 and the separation units 214. That is, the alkaline electrolytic water delivered from electrolytic tank 212 during the regeneration treatment flows through second supply flow path 223 through on-off valve 242, on-off valve 243, separation unit 214, and on-off valve 237 in this order, and flows into flow path 208.

As illustrated in Fig. 13, circulation flow path 220c includes first circulation flow path 220d through which water fed from water storage tank 215 by water pump 219 flows through water softening tank 203, and second circulation flow path 220e through which water fed from water storage tank 215 by water pump 219 flows through neutralization tank 204.

As illustrated in Fig. 13 (white arrow), first circulation flow path 220d is a flow path through which water sent out from water storage tank 215 by water pump 219 flows through electrolytic tank 212 and water softening tank 203, and returns to water storage tank 215 to circulate. More specifically, first circulation flow path 220d is a flow path through which water delivered from water storage tank 215 by water pump 219 flows and circulates through water flow path 225, electrolytic tank 212, first supply flow path 221, on-off valve 235, water softening tank 203, first collection flow path 222, on-off valve 236, and water storage tank 215 in this order.

As illustrated in Fig. 13 (black arrow), second circulation flow path 220e is a flow path through which water sent out from water storage tank 215 by water pump 219 flows through electrolytic tank 212 and neutralization tank 204, and returns to water storage tank 215 to circulate. More specifically, second circulation flow path 220e is a flow path through which water delivered from water storage tank 215 by water pump 219 flows and circulates through water flow path 225, electrolytic tank 212, second supply flow path 223, on-off valve 242, on-off valve 243, separation unit 214, on-off valve 237, on-off valve 233, neutralization tank 204, second collection flow path 224, on-off valve 238, and water storage tank 215 in this order. That is, in water softening device 201a, the upstream side of separation unit 214 is communicably connected to the downstream side of electrolytic tank 212 at the time of the regeneration treatment for forming second circulation flow path 220e.

Furthermore, water softening device 201a includes drainage flow path 226a. Drainage flow path 226a is a flow path for supplying water discharged from electrolytic tank 212 or separation unit 214 to drainage port 216 and discharging the water to the outside of the device. Drainage flow path 226a is communicably connected to second supply flow path 223 between electrolytic tank 212 and separation unit 214. On-off valve 244 is provided in drainage flow path 226a. By opening on-off valve 244, drainage flow path 226a is communicably connected to second supply flow path 223. That is, water softening device 201a includes drainage flow path 226a that allows water to be drawn out from second supply flow path 223 to drainage port 216 and discharged to the outside of the device.

As illustrated in Fig. 14, replacement flow path 227a includes flow paths connecting inlet port 202, water softening tank 203, separation unit 214, and drainage port 216. That is, water softening tank 203 is communicably connected to inlet port 202 by flow path 207. Furthermore, water softening tank 203 is communicably connected to separation unit 214 by flow path 208 and second supply flow path 223. Separation unit 214 is communicably connected to drainage port 216 by second supply flow path 223 and drainage flow path 226a. Second supply flow path 223 is provided with a separation unit 214, on-off valve 237, on-off valve 242, and on-off valve 243. As illustrated in Fig. 14 (hatched arrow), replacement flow path 227a is a flow path in which water introduced from inlet port 202 flows through flow path 207 and water softening tank 203 in this order, is made acidic soft water in water softening tank 203, then flows through flow path 208, second supply flow path 223, and separation unit 214 in this order, is used for washing separation unit 214, flows through on-off valve 243 and drainage flow path 226, and is discharged from drainage port 216 to the outside of the device. That is, in water softening device 201a, separation unit 214 is configured such that the acidic soft water flows into separation unit 214 from the downstream side of separation unit 214 and backwashing is performed at the time of replacement treatment.

### (Regeneration treatment, replacement treatment, wastewater treatment, and water softening treatment)

### (Regeneration treatment)

First, the operation of water softening device 201a at the time of regeneration treatment by regeneration device 206 will be sequentially described with reference to the columns of "at the time of water injection" and "at the time of regeneration" in Fig. 15.

First, as illustrated in Fig. 15, at the time of injecting water, on-off valve 231 and on-off valve 236 are opened. As a result, water softening device 201 introduces the raw water into water storage tank 215 from inlet port 202 through water softening tank 203 by the pressure of the city water. At this time, on-off valve 232 to on-off valve 235, on-off valve 237 to on-off valve 239, and on-off valve 242 to on-off valve 244 are closed. By storing a predetermined amount of water corresponding to the capacity of water softening device 201 in water storage tank 215, regeneration device 206 can secure the amount of water at the time of regeneration.

Next, at the time of regeneration, on-off valve 231, on-off valve 232, on-off valve 234, and on-off valve 244 are closed, and on-off valve 233, on-off valve 235 to on-off valve 239, and on-off valve 242 to on-off valve 243 are opened, so that first circulation flow path 220d and second circulation flow path 220e are respectively formed.

Then, when electrodes 213 of electrolytic tank 212 and water pump 219 are operated, the water stored in water storage tank 215 is sent to electrolytic tank 212, becomes acidic electrolytic water and alkaline electrolytic water by electrolysis, which circulate through first circulation flow path 220d and second circulation flow path 220e, respectively.

At this time, the acidic electrolytic water generated in electrolytic tank 212 is supplied into water softening tank 203 through first supply flow path 221, and flows through weakly acidic cation exchange resin 210 inside to regenerate weakly acidic cation exchange resin 210. Thereafter, the acidic electrolytic water containing cations flowing through weakly acidic cation exchange resin 210 is recovered into water storage tank 215 via first collection flow path 222.

On the other hand, the alkaline electrolytic water generated in electrolytic tank 212 is supplied into neutralization tank 204 through second supply flow path 223 and separation unit 214, and flows through weakly basic anion exchange resin 211 inside, whereby weakly basic anion exchange resin 211 is regenerated. Thereafter, the alkaline electrolytic water containing anions that has flowed through weakly basic anion exchange resin 211 is recovered into water storage tank 215 via second collection flow path 224.

Then, in water storage tank 215, the acidic electrolytic water containing cations recovered from water softening tank 203 and the alkaline electrolytic water containing anions recovered from neutralization tank 204 are mixed and neutralized, and delivered to electrolytic tank 212.

Thereafter, the electrolytic water mixed in water storage tank 215 passes through electrolytic tank 212 again through water flow path 225. Then, the passed water is electrolyzed again in electrolytic tank 212.

Then, water softening device 201a primarily stops the regeneration treatment while the regeneration treatment is in progress. That is, the operations of electrodes 213 and water pump 219 are stopped, on-off valve 233, on-off valve 235 to on-off valve 236, and on-off valve 238 to on-off valve 242 are closed, and on-off valve 231, on-off valve 232, and on-off valve 244 are opened, so that the replacement treatment is started.

### (Replacement treatment)

When the regeneration treatment is primarily stopped, water softening device 201a shifts to a replacement treatment. Here, the replacement treatment is a treatment of discharging acidic electrolytic water having a high concentration of the hardness component remaining in water softening tank 203 to the outside of the device and passing raw water into water softening tank 203. Furthermore, in the present the third exemplary embodiment-2, at the time of replacement treatment, the raw water having passed through water softening tank 203 is allowed to pass through separation unit 214 from the downstream side of separation unit 214. Thus, by performing the replacement treatment, separation unit 214 can be backwashed, and the acidic soft water generated in water softening tank 203 can be flowed to separation unit 214 to dissolve the precipitate caused by the hardness component separated in separation unit 214. That is, in the replacement treatment illustrated in the present the third exemplary embodiment-2, the acidic electrolytic water having a high hardness component concentration present in water softening tank 203 is replaced with the raw water, and the acidic electrolytic water is discharged to the outside of the device, so that the hardness component concentration in the system can be reduced, and the raw water passing through water softening tank 203 is caused to pass to separation unit 214, and backwashing of separation unit 214 is performed, so that the precipitates precipitated in separation unit 214 can be dissolved and discharged to the outside of the system.

Next, the operation of water softening device 201a at the time of replacement treatment will be described with reference to the column of "at the time of replacement" in Fig. 15.

As illustrated in Fig. 15, in water softening device 201 a, on-off valve 231, on-off valve 232, on-off valve 237, on-off valve 243, and on-off valve 244 are opened in the replacement treatment. As a result, in water softening device 201, replacement flow path 227a is formed, and backwashing of separation unit 214 can be performed. At this time, on-off valve 233 to on-off valve 239 and on-off valve 242 are closed.

As illustrated in Fig. 14, since on-off valve 232 and on-off valve 237 are opened and on-off valve 233 and on-off valve 236 are closed, the acidic soft water delivered from water softening tank 203 flows through flow path 208 and second supply flow path 223 and flows into separation unit 214. By allowing the acidic soft water to flow into separation unit 214, the precipitate resulting from the hardness component trapped in separation unit 214 reacts with the acidic soft water. As a result, the precipitate caused by the hardness component is dissolved and becomes a hardness component, and is contained in the acidic softened water.

Since on-off valve 243 and on-off valve 244 are opened and on-off valve 242 is closed, the acidic soft water fed from separation unit 214 flows through second supply flow path 223 and drainage flow path 226a, and is discharged to the outside of the device from drainage port 216.

At this time, until the acidic soft water reaches separation unit 214, the acidic electrolytic water having a high concentration of the hardness component remaining in water softening tank 203 during the regeneration treatment first flows into separation unit 214, and is discharged from drainage port 216 to the outside of the device.

When the replacement treatment is completed, water softening device 201a opens on-off valve 233, on-off valve 235 to on-off valve 236, and on-off valve 238 to on-off valve 242, and closes on-off valve 231, on-off valve 232, and on-off valve 244 in order to resume the regeneration treatment which has been primarily stopped. Moreover, the operations of electrodes 213 and water pump 219 are restarted, and the regeneration treatment is restarted.

Thereafter, in water softening device 201a, the operation of the electrodes 213 is stopped when the regeneration treatment is completed.

Note that the replacement treatment is started when a certain time (for example, two hours) has elapsed from the start of the regeneration treatment. The replacement treatment may be performed only once during the regeneration treatment, or may be frequently performed. In a case where the replacement treatment is not frequently performed during the regeneration treatment, the replacement treatment is preferably performed in the latter half of the regeneration treatment. This is because the hardness component concentration in the acidic electrolytic water introduced into water softening tank 203 increases as the regeneration treatment proceeds, and thus the total amount of the hardness components that can be discharged to the outside of the system by one replacement treatment increases when the replacement treatment is performed in the latter half of the regeneration treatment. Furthermore, even in a case where attention is paid to the washing of separation unit 214, since the precipitate gradually accumulates as time elapses from the start of the regeneration treatment, the replacement treatment is preferably performed in the latter half of the regeneration treatment. For example, in a case where the regeneration treatment takes six hours and the replacement treatment is performed only once, the replacement treatment may be performed after three hours have elapsed from the start of the regeneration treatment.

Note that the replacement treatment is ended when a certain period of time (for example, five minutes) has elapsed from the start of the replacement treatment. Here, the certain period of time is a period of time set as a period of time required for discharging acidic electrolytic water having a high concentration of the hardness component remaining in water softening tank 203 to the outside of the device and dissolving a certain amount of precipitates captured by separation unit 214, based on evaluation results in a washing experiment performed in advance.

When the replacement treatment is completed, water softening device 201a opens on-off valve 235 to on-off valve 239 and on-off valve 242 and closes on-off valve 231, on-off valve 232, and on-off valve 244 in order to resume the regeneration treatment that has been primarily stopped. Further, the operations of electrodes 213 and water pump 219 are restarted, and the regeneration treatment is restarted.

Note that the replacement treatment may be performed a plurality of times before the end of the regeneration treatment.

Thereafter, in water softening device 201, when the regeneration treatment is completed, the operation of electrodes 213 is stopped, and the process proceeds to the wastewater treatment.

### (Wastewater treatment)

In water softening device 201a, when the regeneration treatment is completed, the process proceeds to the wastewater treatment. Here, the wastewater treatment is a treatment of discharging the raw water, the acidic electrolytic water, the alkaline electrolytic water, and the acidic soft water remaining in circulation flow path 220c.

Next, an operation at the time of wastewater treatment by water softening device 201a will be described with reference to the column of "at the time of draining" in Fig. 15.

As illustrated in Fig. 15, in water softening device 201 a, on-off valve 231, on-off valve 232, and on-off valve 234 are closed, and on-off valve 235 to on-off valve 239 and on-off valve 242 to on-off valve 244 are opened in the wastewater treatment (at the time of draining). As a result, the inflow of the city water from inlet port 202 is stopped, and the acidic electrolytic water remaining in the path from electrolytic tank 212 to water storage tank 215 via first supply flow path 221, water softening tank 203, and first collection flow path 222 and the alkaline electrolytic water remaining in the path from separation unit 214 to water storage tank 215 via second supply flow path 223, neutralization tank 204, and second collection flow path 224 can be caused to flow into water storage tank 215.

Next, water pump 219 is started and on-off valve 239 is opened. As a result, it is possible to discharge the electrolytic water remaining in the path from the inside of water storage tank 215 to electrolytic tank 212 via water flow path 225, the electrolytic water remaining in the path from the inside of electrolytic tank 212 to drainage port 216 via second supply flow path 223 and drainage flow path 226, and the raw water and the acidic soft water remaining in replacement flow path 227a, to the outside of the device. At this time, the operation of electrodes 213 is stopped.

Then, in water softening device 201 a, when the wastewater treatment is finished, the operation of water pump 219 is stopped. Furthermore, on-off valve 235 to on-off valve 239 and on-off valve 242 to on-off valve 244 are closed, and on-off valve 231, on-off valve 232, and on-off valve 234 are opened, thereby shifting to the water softening treatment.

Note that the end of the wastewater treatment is when a certain time (for example, one minute) has elapsed from the start of the wastewater treatment.

### (Water softening treatment)

Water softening device 201a shifts to the water softening treatment when the wastewater treatment is completed.

The operation at the time of water softening treatment by water softening device 201a will be described with reference to the column of "at the time of water softening" in Fig. 15.

In water softening device 201a, as illustrated in Fig. 15, in the water softening treatment, on-off valve 234 provided in water intake port 205 is opened in a state where on-off valve 231 to on-off valve 233 are opened. As a result, in water softening device 201, since the city water (raw water containing hardness components) flows through water softening tank 203 and neutralization tank 204 from the outside, the softened water (neutral soft water) can be taken out from water intake port 205. At this time, all of on-off valve 235 to on-off valve 239 and on-off valve 242 to on-off valve 244 are in a closed state. Furthermore, the operations of electrodes 213 of electrolytic tank 212 and water pump 219 are also stopped.

Then, water softening device 201a stops the water softening treatment and executes the regeneration treatment when the time zone specified by controller 217 is reached or when the water softening treatment exceeds a certain period of time.

As described above, in water softening device 201a, the regeneration treatment, the replacement treatment, and the water softening treatment are repeatedly executed.

As described above, according to water softening device 201a of the present the third exemplary embodiment-2, the following effects can be obtained in addition to the effects (1) to (3) obtained by the third exemplary embodiment-1.

(4) In water softening device 201a, in the replacement treatment, the raw water flowing through water softening tank 203 is caused to flow into separation unit 214 from the downstream side of separation unit 214. As a result, the raw water which has become acidic soft water by water softening tank 203 flows in from the downstream side of separation unit 214. Since the electrolytic water containing the precipitate caused by the hardness component flows into separation unit 214 from the upstream side of separation unit 214, backwashing of separation unit 214 can be performed by flowing the acidic soft water from the downstream side. Therefore, the treatment efficiency of the replacement treatment can be improved, and the replacement treatment can be completed in a shorter period of time.

### (Third exemplary embodiment-3)

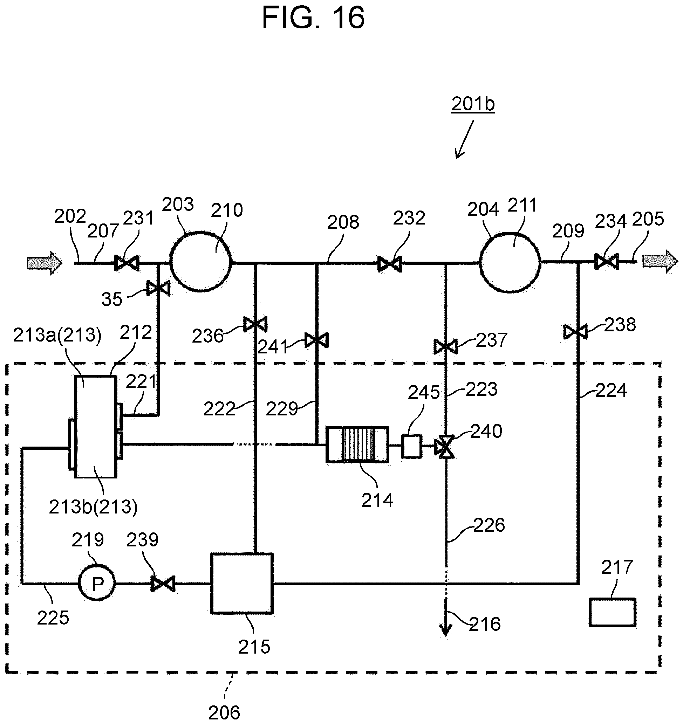

Next, a water softening device 201b according to the third exemplary embodiment-3 of the present disclosure will be described with reference to Fig. 16. Fig. 16 is a conceptual diagram illustrating a configuration of water softening device 201b according to the third exemplary embodiment-3.

Water softening device 201b according to the third exemplary embodiment-3 is different from the third exemplary embodiment-1 in that flow rate detection unit 245 is provided at the rear stage of separation unit 214 and the front stage of selection valve 240. That is, in water softening device 201b according to the third exemplary embodiment 3, based on the flow rate of the alkaline electrolytic water after flowing through separation unit 214, when the flow rate falls below a predetermined value, the regeneration treatment is primarily stopped, and the replacement treatment is performed. Other configurations and control of water softening device 201b are similar to those of water softening device 201 according to the third exemplary embodiment-1. In the following, description of the contents already described in the third exemplary embodiment-1 will be omitted as appropriate, and differences from the third exemplary embodiment-1 will be mainly described.

As illustrated in Fig. 16, water softening device 201b includes flow rate detection unit 245 at a stage subsequent to separation unit 214 and a stage preceding selection valve 240 on second supply flow path 223.

Flow rate detection unit 245 detects flow rate information of the alkaline electrolytic water having passed through separation unit 214 during the regeneration treatment. Here, the degree of deposition of the deposit deposited on separation unit 214 can be determined according to the flow rate detected by flow rate detection unit 245. Specifically, in a case where the flow rate is large, it can be said that separation unit 214 is not clogged and does not interfere with the regeneration treatment. On the other hand, in a case where the flow rate is small, it can be determined that separation unit 214 is clogged due to the deposition of the precipitate in separation unit 214, and the flow rate of the alkaline electrolytic water is decreased, and thus, the replacement treatment is performed. Furthermore, flow rate detection unit 245 is connected to controller 217 so as to be able to communicate with the controller 217 in a wireless or wired manner, and information regarding the detected flow rate is used as an input signal of controller 217.

Here, as flow rate detection unit 245, a general-purpose one can be used, and for example, a propeller-type flowmeter can be used.

At the time of the regeneration treatment, in a case where the flow rate falls below a predetermined value based on the information on the flow rate output from the flow rate detection unit 245, controller 217 performs control so as to primarily stop the regeneration treatment and shift to the replacement treatment. Accordingly, controller 217 can determine the primary stop of the regeneration treatment and the start of the replacement treatment based on the flow rate of the alkaline electrolytic water after flowing through separation unit 214. That is, when the flow rate of the alkaline electrolytic water decreases due to the precipitates precipitated in separation unit 214, the replacement treatment can be started.

As described above, according to water softening device 201b of the present the third exemplary embodiment-3, the following effects can be obtained in addition to the effects (1) and (2) obtained by the third exemplary embodiment-1.

(5) Water softening device 201b includes flow rate detection unit 245 that detects the flow rate of water flowing through separation unit 214, and is configured to start the replacement treatment in a case where the flow rate detected by flow rate detection unit 245 falls below a predetermined value. As a result, the flow rate state of the water flowing through separation unit 214 can be grasped at the time of the regeneration treatment, and the start of the replacement treatment can be determined based on the flow rate information. That is, the degree of clogging of separation unit 214 during the regeneration treatment can be grasped by the flow rate of water flowing through separation unit 214. Therefore, it is possible to temporarily stop the regeneration treatment and start the replacement treatment at a more effective timing.

### (Third exemplary embodiment-4)

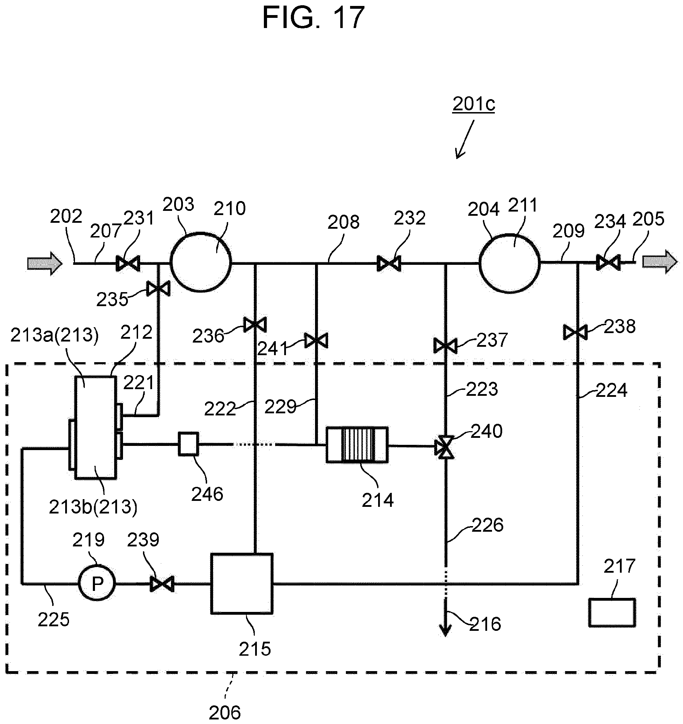

Next, water softening device 201c according to the third exemplary embodiment-4 of the present disclosure will be described with reference to Fig. 17. Fig. 17 is a conceptual diagram illustrating a configuration of water softening device 201c according to the third exemplary embodiment-4.

Water softening device 201c according to the third exemplary embodiment-4 is different from the third exemplary embodiment-1 in that static pressure detection unit 246 is provided in front of separation unit 214. That is, in water softening device 201c according to the third exemplary embodiment-4, based on the static pressure of the alkaline electrolytic water before flowing through separation unit 214, when the static pressure exceeds a predetermined value, that is, when the flow rate of the alkaline electrolytic water flowing into separation unit 214 decreases, control is performed such that the regeneration treatment is primarily stopped and the replacement treatment is performed. Other configurations and control of water softening device 201c are similar to those of water softening device 201 according to the third exemplary embodiment-1. In the following, description of the contents already described in the third exemplary embodiment-1 will be omitted as appropriate, and differences from the third exemplary embodiment-1 will be mainly described.

As illustrated in Fig. 17, water softening device 201c includes static pressure detection unit 246 in front of separation unit 214 on second supply flow path 223.

Static pressure detection unit 246 detects static pressure information of the alkaline electrolytic water before passing through separation unit 214 during the regeneration treatment. In the present exemplary embodiment, water pump 219 operates at a constant capacity. Therefore, if the flow rate of the alkali electrolytic water is large, the static pressure becomes low, and if the flow rate is small, the static pressure becomes high. Therefore, the static pressure detected by static pressure detection unit 246 changes according to the pressure loss in the flow path of water pump 219. That is, the degree of deposition of the precipitate deposited on separation unit 214 can be determined according to the static pressure detected by static pressure detection unit 246. Specifically, in a case where the static pressure is low, it can be said that separation unit 214 is not clogged and does not interfere with the regeneration treatment. On the other hand, in a case where the static pressure is high, it can be determined that separation unit 214 is clogged due to the deposition of the precipitate in separation unit 214, and the flow rate of the alkaline electrolytic water is decreased, and thus the replacement treatment is performed. Furthermore, static pressure detection unit 246 is connected to controller 217 so as to be able to communicate with the controller 217 in a wireless or wired manner, and information regarding the detected flow rate is used as an input signal of controller 217.

Here, as static pressure detection unit 246, a general-purpose static pressure detection unit can be used, and for example, a digital pressure sensor can be used.

During the regeneration treatment, when the static pressure exceeds a predetermined value based on the information on the static pressure output from static pressure detection unit 246, that is, when the flow rate of the alkaline electrolytic water flowing into separation unit 214 decreases, controller 217 performs control to primarily stop the regeneration treatment and shift to the replacement treatment. As a result, controller 217 can determine the primary stop of the regeneration treatment and the start of the replacement treatment based on the static pressure before flowing through separation unit 214.

As described above, according to water softening device 201c of the present the third exemplary embodiment-4, the following effects can be obtained in addition to the effects (1) and (2) obtained by the third exemplary embodiment-1.

(6) Water softening device 201c is configured to include static pressure detection unit 246 that detects the static pressure of the flowing water at the front stage of separation unit 214, and to perform the replacement treatment when the static pressure detected by static pressure detection unit 246 exceeds a predetermined value. As a result, the static pressure state of separation unit 214 at the time of the regeneration treatment can be grasped, and the start of the replacement treatment can be determined based on the static pressure detection information. That is, the degree of clogging of separation unit 214 during the regeneration treatment can be grasped based on the static pressure of water before passing through separation unit 214. Therefore, it is possible to temporarily stop the regeneration treatment and start the replacement treatment at a more effective timing.

The present disclosure has been described above based on the exemplary embodiments. It will be understood by those skilled in the art that the exemplary embodiments are merely examples, that the components or the processes disclosed in the exemplary embodiments may be combined as various modifications, and that such modifications also fall within the scope of the present disclosure.

In water softening device 201 according to the third exemplary embodiment-1, the raw water is caused to pass through water softening tank 203 at the time of replacement, whereby the acidic electrolytic water in water softening tank 203 is discharged to the outside of the device, but the present disclosure is not limited thereto. For example, the raw water may also pass through neutralization tank 204, or the water in circulation flow path 220 may be replaced with the raw water. Furthermore, for example, by performing a wastewater treatment, discharging acidic electrolytic water and alkaline electrolytic water in water softening device 201 to the outside of the device, and performing a treatment at the time of water injection, raw water may be introduced into water softening device 201, and then circulation flow path 220 may be formed. Accordingly, the hardness component concentration in water softening device 201 can be further reduced.

Furthermore, in water softening device 201 according to the third exemplary embodiment-1, one water softening tank 203 and one neutralization tank 204 are provided, but the present disclosure is not limited thereto. For example, a plurality of water softening tanks 203 and a plurality of neutralization tanks 204 (for example, two) may be provided, or two water softening tanks 203 and one neutralization tank 204 may be provided. In this case, at the time of replacement treatment, the raw water may be introduced into the plurality of water softening tanks 203, or only one may be selected and the raw water may be introduced. By providing the plurality of water softening tanks 203 and the plurality of neutralization tanks 204, the water softening performance can be improved.

### (Fourth exemplary embodiment)

Many conventional water softening devices using a cation exchange resin have been proposed. For example, a method is known in which a cation exchange resin (strongly acidic ion exchange resin) having a sodium ion as a functional group is used, and calcium ions and magnesium ions, which are hardness components contained in raw water, are ion-exchanged with sodium ions to obtain soft water.

By the way, when the use of the cation exchange resin is continued, the ion exchange ability is deteriorated or lost. That is, ion exchange cannot be performed after all the sodium ions, which are functional groups of the cation exchange resin, are exchanged for calcium ions and magnesium ions, which are hardness components. Therefore, it is necessary to regenerate the cation exchange resin in order to enable ion exchange again.

Examples of the regeneration treatment include a treatment in which regenerating water such as saturated saline is passed through a cation exchange resin. In such a regeneration treatment, it is necessary to replenish salt periodically according to the amount of soft water used, and it takes time and effort to replenish salt. Furthermore, the use of a large amount of common salt causes environmental problems.

Therefore, as a method for regenerating a cation exchange resin not using common salt, a method is known in which a weakly acidic cation exchange resin is used, and the cation exchange resin is regenerated with acidic electrolytic water generated by electrolysis (See, for example, PTL 1.). The weakly acidic cation exchange resin has a hydrogen ion (hydrogen ion) at the terminal of the functional group, and softens raw water by exchanging a hardness component (for example, calcium ions and magnesium ions) in raw water with a hydrogen ion. Water softened by the weakly acidic cation exchange resin becomes acidic because hydrogen ions are released instead of hardness components. In order to neutralize this, a weakly acidic cation exchange resin may be used in combination with a weakly basic anion exchange resin. That is, the weakly basic anion exchange resin neutralizes the softened raw water by adsorbing hydrogen ions and anions contained in water softened by the weakly acidic cation exchange resin. As a method for regenerating a weakly basic anion exchange resin, a method using alkaline electrolytic water generated by electrolysis is known (See, for example, PTL 2.).

In such a conventional water softening device, an electrolytic tank that generates hydrogen ions for regenerating a weakly acidic cation exchange resin and hydroxide ions for regenerating a weakly basic anion exchange resin by electrolysis of water is used. During operation of the electrolytic tank, hydroxide ions generated at the cathode react with calcium ions or magnesium ions in water, and a solid (scale) is deposited mainly on the cathode. The scale precipitated in the electrolytic tank increases the operating voltage of the electrolytic tank, and thus causes an increase in power consumption of the water softening device. Therefore, it is necessary to perform a polarity inversion operation of reversing the voltage applied to the electrodes of the electrolytic tank to remove the solid. However, since the electrodes are consumed by polarity inversion, it is necessary to perform the polarity inversion operation at an appropriate timing, but there is a problem that it is difficult to detect the timing.

The present disclosure has been made to solve the above conventional problems, and an object of the present disclosure is to provide a water softening device capable of detecting a timing of a polarity inversion operation and performing the polarity inversion operation at an appropriate timing.

In order to achieve this object, a water softening device according to the present disclosure includes a water softening tank that softens raw water with a weakly acidic cation exchange resin, a neutralization tank that neutralizes the pH of the soft water passing through the water softening tank with a weakly basic anion exchange resin, an electrolytic tank that generates acidic electrolytic water and alkaline electrolytic water, a detector that detects a voltage of the electrolytic tank, and a controller that controls an electrode regeneration treatment of the electrolytic tank based on the voltage detected by the detector. The controller continues the resin regeneration treatment or shifts to the water softening treatment in a case where the voltage detected by the detector is less than the first reference value during the resin regeneration treatment in which at least one of regeneration of a weakly acidic cation exchange resin using acidic electrolytic water and regeneration of a weakly basic anion exchange resin using alkaline electrolytic water is performed, and stops the resin regeneration treatment and shifts to the electrode regeneration treatment in a case where the voltage detected by the detector is more than or equal to the first reference value. At the time of the electrode regeneration treatment, in a case where the voltage detected by the detector is more than or equal to the second reference value, the electrode regeneration treatment is continued, and in a case where the voltage detected by the detector is less than the second reference value, the electrode regeneration treatment is terminated and the process proceeds to the resin regeneration treatment or the water softening treatment. The above structure can achieve the intended object.

According to the present disclosure, it is possible to provide a water softening device capable of detecting the timing of the polarity inversion operation and performing the polarity inversion operation at an appropriate timing.

An exemplary embodiment of the present disclosure will now be explained with reference to some drawings. Note that the following exemplary embodiments are examples embodying the present disclosure, and do not limit the technical scope of the present disclosure. Furthermore, the drawings described in the exemplary embodiment are schematic views, and the ratios of the sizes and the thicknesses of the components in the drawings do not necessarily reflect the actual dimensional ratios.

The fourth exemplary embodiment includes at least the fourth exemplary embodiment-1, the fourth exemplary embodiment-2, and the fourth exemplary embodiment-3 described below.

### (Fourth exemplary embodiment-1)

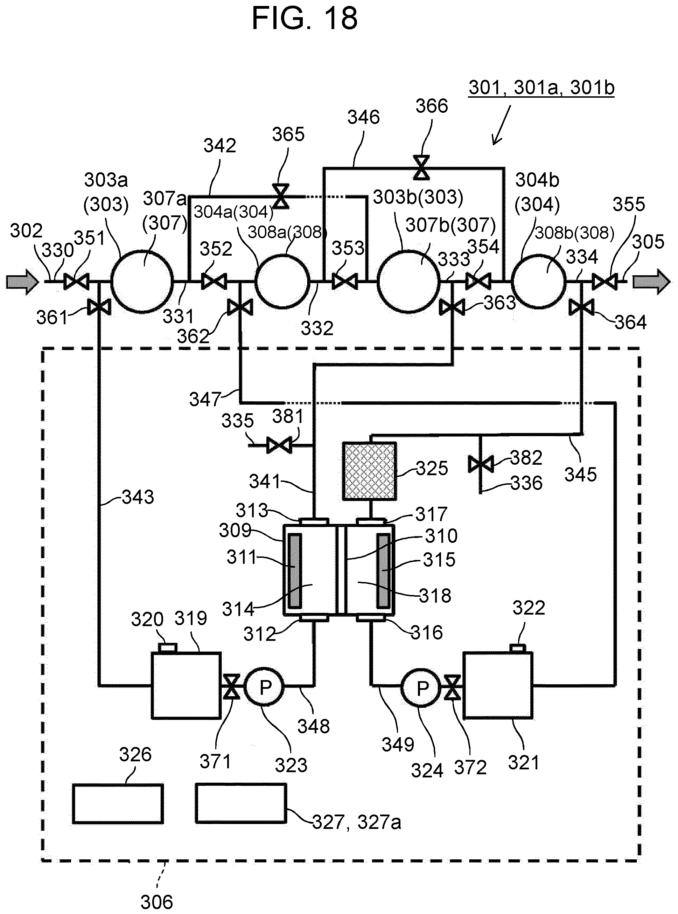

With reference to Fig. 18, water softening device 301 according to the fourth exemplary embodiment-1 of the present disclosure will be described. Fig. 18 is a conceptual diagram illustrating a configuration of water softening device 301 according to the fourth exemplary embodiment-1 of the present disclosure. Note that Fig. 18 conceptually illustrates each element of water softening device 301.

### (Overall configuration)

Water softening device 301 is a device that generates neutral soft water from raw water containing a hardness component supplied from the outside. Note that the raw water is water (water to be treated) introduced into the device from inlet port 302, and is, for example, city water or well water. The raw water includes a hardness component (e.g. calcium or magnesium ions).

Specifically, as illustrated in Fig. 18, water softening device 301 includes inlet port 302, water softening tank 303 (first water softening tank 303a and second water softening tank 303b), neutralization tank 304 (first neutralization tank 304a and second neutralization tank 304b), water intake port 305, and regeneration device 306.

Furthermore, water softening device 301 includes a plurality of on-off valves (on-off valve 351 to on-off valve 355, on-off valve 361 to on-off valve 366, on-off valve 371, on-off valve 372, on-off valve 381, and on-off valve 382) and a plurality of flow paths (flow path 330 to 336, first supply flow path 341, first bypass flow path 342, first collection flow path 343, second supply flow path 345, second bypass flow path 346, second collection flow path 347, water flow path 348, and water flow path 349), and details thereof will be described later. Note that as the plurality of flow paths (flow path 330 to 336, first supply flow path 341, first bypass flow path 342, first collection flow path 343, second supply flow path 345, second bypass flow path 346, second collection flow path 347, water flow path 348, and water flow path 349), for example, a pipe such as a pipe is used.

### ((Inlet port, water intake port, and flow paths 330 to 334))

Inlet port 302 is connected to a supply source of the raw water and flow path 330. Inlet port 302 is an opening through which raw water is introduced into the device.

Water intake port 305 is an opening through which neutral soft water treated by water softening tank 303 and neutralization tank 304 is discharged to the outside of the device. In water softening device 301, the soft water after the water softening treatment can be taken out from water intake port 305 by the pressure of the raw water flowing in from inlet port 302.

From inlet port 302 to water intake port 305 are connected by flow path 330, flow path 331, flow path 332, flow path 333, and flow path 334 in this order.

Flow path 330 is a flow path connecting from inlet port 302 to first water softening tank 303a. That is, flow path 330 is a flow path that guides raw water containing a hardness component from inlet port 302 to first water softening tank 303a.

Flow path 331 is a flow path connecting from first water softening tank 303a to first neutralization tank 304a. That is, flow path 331 is a flow path for guiding the acidic soft water (first soft water) softened in first water softening tank 303a to first neutralization tank 304a.

Flow path 332 is a flow path connecting from first neutralization tank 304a to second water softening tank 303b. That is, flow path 332 is a flow path for guiding the first soft water (first neutralized soft water) neutralized in first neutralization tank 304a to second water softening tank 303b.

Flow path 333 is a flow path connecting from second water softening tank 303b to second neutralization tank 304b. That is, flow path 333 is a flow path for guiding the acidic soft water (second soft water) softened in second water softening tank 303b to first neutralization tank 304a.

Flow path 334 is a flow path connecting from second neutralization tank 304b to water intake port 305. That is, flow path 334 is a flow path for guiding the second soft water (second neutralized soft water) neutralized in first neutralization tank 304a to water intake port 305.

In summary, in water softening device 301, in the water softening treatment, raw water supplied from the outside flows through inlet port 302, flow path 330, first water softening tank 303a, flow path 331, first neutralization tank 304a, flow path 332, second water softening tank 303b, flow path 333, second neutralization tank 304b, flow path 334, and water intake port 305 in this order, and is discharged as neutral soft water.

### ((Water softening tank))

Water softening tank 303 softens the raw water containing the hardness component by the action of weakly acidic cation exchange resin 307. Specifically, since water softening tank 303 exchanges cations (calcium ion, magnesium ion), which are hardness components contained in flowing water (raw water), with hydrogen ions, the hardness of the raw water decreases and the raw water is softened. Water softening tank 303 includes weakly acidic cation exchange resin 307 having a hydrogen ion at the terminal of the functional group.

Water softening tank 303 is configured by, for example, filling a cylindrical container with weakly acidic cation exchange resin 307. Water softening tank 303 includes first water softening tank 303a and second water softening tank 303b.

First water softening tank 303a is filled with first weakly acidic cation exchange resin 307a. First water softening tank 303a is connected to flow path 330 on the upstream side and is connected to flow path 331 on the downstream side.

Second water softening tank 303b is filled with second weakly acidic cation exchange resin 307b. Second water softening tank 303b is connected to flow path 332 on the upstream side and is connected to flow path 333 on the downstream side.

Furthermore, first water softening tank 303a and second water softening tank 303b have the same flow path length, the same flow path cross-sectional area, and the same volume of weakly acidic cation exchange resin 307. Accordingly, since first water softening tank 303a and second water softening tank 303b can be formed of the same members, the cost of water softening device 301 can be reduced.

Note that hereinafter, first weakly acidic cation exchange resin 307a and second weakly acidic cation exchange resin 307b will be described as weakly acidic cation exchange resin 307 unless it is particularly necessary to distinguish between them.

Weakly acidic cation exchange resin 307 is an ion exchange resin having a hydrogen ion at the terminal of the functional group. Weakly acidic cation exchange resin 307 adsorbs cations (calcium ion, magnesium ion), which are hardness components contained in the raw water to be passed, and releases hydrogen ions. Weakly acidic cation exchange resin 307 is not particularly limited, and general-purpose ones can be used, and examples thereof include those having a carboxyl group (-COOH) as an exchange group. Furthermore, as weakly acidic cation exchange resin 307, a resin in which a hydrogen ion (H+) as a counter ion of a carboxyl group is substituted by a cation such as a metal ion or an ammonium ion (NH4+) may be used.

### ((Neutralization tank))

Neutralization tank 304 neutralizes the pH of soft water (acidified soft water) containing hydrogen ions coming out of water softening tank 303 by the action of weakly basic anion exchange resin 308 to obtain neutral soft water. Specifically, since neutralization tank 304 adsorbs hydrogen ions contained in the soft water flowing in from water softening tank 303 together with anions, the pH of the soft water increases, and neutral soft water can be obtained.

Neutralization tank 304 includes weakly basic anion exchange resin 308.

Neutralization tank 304 is configured by, for example, filling a cylindrical container with weakly basic anion exchange resin 308. Furthermore, neutralization tank 304 includes first neutralization tank 304a and second neutralization tank 304b.

First neutralization tank 304a is configured by, for example, filling a cylindrical container with first weakly basic anion exchange resin 308a. First neutralization tank 304a is connected to flow path 331 on the upstream side and is connected to flow path 332 on the downstream side.

Second neutralization tank 304b is filled with second weakly basic anion exchange resin 308b. Second neutralization tank 304b is connected to flow path 333 on the upstream side and is connected to flow path 334 on the downstream side.

First neutralization tank 304a and second neutralization tank 304b have the same flow path length, the same flow path cross-sectional area, and the same volume of weakly basic anion exchange resin 308. As a result, since first neutralization tank 304a and second neutralization tank 304b can be formed of the same members, the cost of water softening device 301 can be reduced.

Note that hereinafter, first weakly basic anion exchange resin 308a and second weakly basic anion exchange resin 308b will be described as weakly basic anion exchange resin 308 unless it is particularly necessary to distinguish between them.

Weakly basic anion exchange resin 308 neutralizes hydrogen ions contained in the passed water to produce neutral water. Weakly basic anion exchange resin 308 is not particularly limited, and a general-purpose anion exchange resin can be used, and examples thereof include a free base type anion exchange resin. Weakly basic anion exchange resin 308 is regenerated using alkaline electrolytic water in a resin regeneration treatment described later.

### ((Regeneration device))

Regeneration device 306 is a device that regenerates weakly acidic cation exchange resin 307 in water softening tank 303 and regenerates weakly basic anion exchange resin 308 in neutralization tank 304. Specifically, regeneration device 306 includes electrolytic tank 309, acidic electrolytic water storage tank 319, acidic electrolytic water circulation pump 323, alkaline electrolytic water storage tank 321, alkaline electrolytic water circulation pump 324, capture unit 325, controller 326, and detector 327. In the regeneration device 306, first supply flow path 341, first collection flow path 343, second supply flow path 345, and second collection flow path 347 are connected to flow path 333, flow path 330, flow path 334, and flow path 331 from inlet port 302 to water intake port 305, respectively.

### ((Electrolytic tank))

Electrolytic tank 309 generates acidic electrolytic water for regenerating weakly acidic cation exchange resin 307 and alkaline electrolytic water for regenerating weakly basic anion exchange resin 308 by electrolysis of water. By generating the acidic electrolytic water and the alkaline electrolytic water in electrolytic tank 309, in a case where the water softening performance of water softening device 301 has deteriorated, the regeneration treatment can be performed. Note that electrolytic tank 309 is configured such that an energization state to anode 311 and cathode 315 can be controlled by controller 326 described later. Furthermore, the voltage of electrolytic tank 309 is detected by detector 327 to be described later during the resin regeneration treatment and the electrode regeneration treatment.

Electrolytic tank 309 includes diaphragm 310, anode chamber 314, and cathode chamber 318.

Electrolytic tank 309 is separated into an anode chamber 314 and a cathode chamber 318 by diaphragm 310 provided therein.

Diaphragm 310 separates the inside of electrolytic tank 309 into anode chamber 314 and cathode chamber 318. Diaphragm 310 suppresses mixing of acidic electrolytic water produced in anode chamber 314 and alkaline electrolytic water produced in cathode chamber 318. This makes it possible to suppress consumption of hydrogen ions in acidic electrolytic water and hydroxide ions in alkaline electrolytic water by neutralization reaction, so that it is possible to suppress a decrease in regeneration efficiency of weakly acidic cation exchange resin 307 and weakly basic anion exchange resin 308.

Furthermore, diaphragm 310 can also suppress a decrease in regeneration efficiency of the other ion exchange resin when regeneration of one ion exchange resin ends first. Specifically, when diaphragm 310 is not provided, an environment in which acidic electrolytic water and alkaline electrolytic water are easily mixed is obtained. For example, when the regeneration of weakly acidic cation exchange resin 307 is completed earlier than the regeneration of weakly basic anion exchange resin 308, hydrogen ions in the acidic electrolytic water subjected to the regeneration of weakly acidic cation exchange resin 307 react with hydroxide ions in the alkaline electrolytic water, and the hydroxide ions are consumed by neutralization. That is, in a case where diaphragm 310 is not provided, when the regeneration of one ion exchange resin is completed first, the regeneration efficiency of the other ion exchange resin is likely to decrease. However, by separating the inside of electrolytic tank 309 into anode chamber 314 and cathode chamber 318 by diaphragm 310, even when the regeneration of one ion exchange resin is completed, it is possible to suppress the mixing with the electrolytic water used for the regeneration of the other ion exchange resin. Therefore, diaphragm 310 can also suppress a decrease in the regeneration efficiency of the other ion exchange resin when the regeneration of one ion exchange resin ends first.

As diaphragm 310, for example, a fluorine-based porous membrane can be used. Note that as the porous membrane used for diaphragm 310, in addition to a fluorine-based porous membrane, a generally used porous membrane such as a hydrocarbon-based porous membrane may be used, but a fluorine-based porous membrane is used in water softening device 301 because a fluorine-based porous membrane is excellent in durability.

Anode chamber 314 is a part where acidic electrolytic water is generated during electrolysis of water. Anode chamber 314 includes anode 311, first water intake port 312, and first discharge port 313.

Anode 311 generates hydrogen ions by electrolyzing water. Therefore, in anode chamber 314 including anode 311, the hydrogen ion concentration of water increases and the water becomes acidic electrolytic water. As anode 311, for example, a platinum electrode can be used.

First water intake port 312 is an opening through which acidic electrolytic water stored in acidic electrolytic water storage tank 319 is introduced into anode chamber 314 through water flow path 348. First water intake port 312 is connected to water flow path 348.

First discharge port 313 is an opening for supplying acidic electrolytic water containing hydrogen ions generated by anode 311 to water softening tank 303 through first supply flow path 341. First discharge port 313 is connected to first supply flow path 341.

Cathode chamber 318 is a part where alkaline electrolytic water is generated during electrolysis of water. Cathode chamber 318 includes cathode 315, second water intake port 316, and second discharge port 317.

Cathode 315 generates hydroxide ions by electrolyzing water. Therefore, in cathode chamber 318 including cathode 315, the hydroxide ion concentration of water increases, and alkaline electrolytic water is obtained. As cathode 315, for example, a platinum electrode can be used.

Second water intake port 316 is an opening through which alkaline electrolytic water stored in alkaline electrolytic water storage tank 321 is introduced into cathode chamber 318 through water flow path 349. Second water intake port 316 is connected to water flow path 349.

Second discharge port 317 is an opening for supplying alkaline electrolytic water containing hydroxide ions generated in cathode 315 to neutralization tank 304 through second supply flow path 345. Second discharge port 317 is connected to second supply flow path 345.

That is, electrolytic tank 309 electrolyzes water (water supplied from acidic electrolytic water storage tank 319) flowing in from first water intake port 312 using anode 311 to generate acidic electrolytic water in anode chamber 314, and discharges the acidic electrolytic water from first discharge port 313. Furthermore, electrolytic tank 309 generates alkaline electrolytic water in cathode chamber 318 by electrolyzing water (water supplied from alkaline electrolytic water storage tank 321) flowing in from second water intake port 316 using cathode 315, and discharges the alkaline electrolytic water from second discharge port 317.

Note that the case where anode 311 is energized to have a high potential with respect to cathode 315 (positive electrolysis) has been described above. On the other hand, in a case where current is supplied to electrodes so that cathode 315 has higher potential than anode 311 (reverse electrolysis), alkaline electrolytic water is generated in anode chamber 314, and acidic electrolytic water is generated in cathode chamber 318. In water softening device 301, electrolytic tank 309 performs positive electrolysis during the resin regeneration treatment and performs reverse electrolysis during the electrode regeneration treatment.

### ((Acidic electrolytic water storage tank and alkaline electrolytic water storage tank))

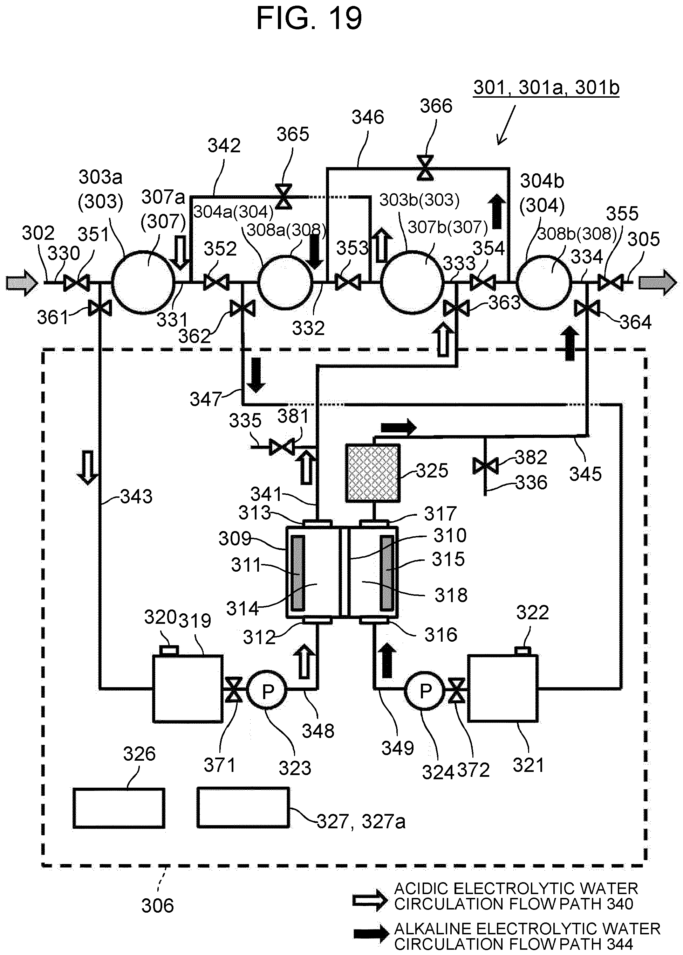

Acidic electrolytic water storage tank 319 is connected to first collection flow path 343 on the upstream side, and is connected to water flow path 348 on the downstream side. Acidic electrolytic water storage tank 319 is a tank or container including air bleed valve 320. Acidic electrolytic water storage tank 319 secures and stores water to be flowed in acidic electrolytic water circulation flow path 340 (see Fig. 19) when weakly acidic cation exchange resin 307 is regenerated.

By storing acidic electrolytic water in acidic electrolytic water storage tank 319, it is possible to control the total amount of acidic electrolytic water flowing through acidic electrolytic water circulation flow path 340. For example, by increasing the volume of acidic electrolytic water storage tank 319, the ion concentration in acidic electrolytic water circulation flow path 340 can be reduced when the amount of ions in acidic electrolytic water circulation flow path 340 is constant. Since the equilibrium of the reaction in weakly acidic cation exchange resin 307 is inclined to the regeneration reaction (reaction in which hardness components are desorbed from weakly acidic cation exchange resin 307 and hydrogen ions are adsorbed) side due to the decrease in the concentration of cations such as hardness components, the regeneration efficiency can be increased. Furthermore, by reducing the volume of acidic electrolytic water storage tank 319, the ion concentration in acidic electrolytic water circulation flow path 340 can be increased when the amount of ions (cations such as hardness components) in acidic electrolytic water circulation flow path 340 is constant. Due to the increase in the ion concentration of the acidic electrolytic water, the solution resistance at the time of performing electrolysis in electrolytic tank 309 decreases. Therefore, the applied voltage applied by electrolytic tank 309 can be reduced, and the power consumption can be reduced. That is, the performance of water softening device 301 can be improved by using acidic electrolytic water storage tank 319 having a volume according to a purpose.

Air bleed valve 320 is configured to vent gas contained in acidic electrolytic water to prevent gas from accumulating in acidic electrolytic water circulation flow path 340.

Alkaline electrolytic water storage tank 321 is connected to second collection flow path 347 on the upstream side, and is connected to water flow path 349 on the downstream side. Alkaline electrolytic water storage tank 321 is a tank or a container provided with air bleed valve 322. Alkaline electrolytic water storage tank 321 secures and stores water to be flowed in alkaline electrolytic water circulation flow path 344 (see Fig. 19) when weakly basic anion exchange resin 308 is regenerated.

By storing the alkaline electrolytic water in alkaline electrolytic water storage tank 321, the total amount of the alkaline electrolytic water flowing through alkaline electrolytic water circulation flow path 344 can be controlled. For example, by increasing the volume of alkaline electrolytic water storage tank 321, the ion concentration in alkaline electrolytic water circulation flow path 344 can be reduced in a case where the amount of ions in alkaline electrolytic water circulation flow path 344 is constant. Due to the decrease in anion concentration, the equilibrium of the reaction in weakly basic anion exchange resin 308 is inclined to the regeneration reaction side, so that the regeneration efficiency can be enhanced. Furthermore, by reducing the volume of alkaline electrolytic water storage tank 321, the ion concentration in alkaline electrolytic water circulation flow path 344 can be increased in a case where the amount of ions in alkaline electrolytic water circulation flow path 344 is constant. Due to the increase in the ion concentration of the alkaline electrolytic water, the solution resistance at the time of performing electrolysis in electrolytic tank 309 decreases. Therefore, the applied voltage applied by electrolytic tank 309 can be reduced, and the power consumption can be reduced. That is, the performance of water softening device 301 can be improved by using alkaline electrolytic water storage tank 321 having a volume according to the purpose.

Air bleed valve 322 is configured to vent gas contained in alkaline electrolytic water to prevent gas from accumulating in alkaline electrolytic water circulation flow path 344.

### ((Acidic electrolytic water circulation pump and alkaline electrolytic water circulation pump))

Acidic electrolytic water circulation pump 323 is a device that flows water in acidic electrolytic water circulation flow path 340 (see Fig. 19) during the resin regeneration treatment by regeneration device 306. Acidic electrolytic water circulation pump 323 is provided in water flow path 348 that communicatively connects acidic electrolytic water storage tank 319 and first water intake port 312.

Acidic electrolytic water circulation pump 323 can control a flow rate of acidic electrolytic water flowing through acidic electrolytic water circulation flow path 340. For example, when the flow rate of the acidic electrolytic water is increased in a case where the production rate of hydrogen ions in electrolytic tank 309 is constant, the hydrogen ion concentration decreases (pH increases). Furthermore, when the flow rate of the acidic electrolytic water is reduced, the hydrogen ion concentration increases (pH decreases). That is, the hydrogen ion concentration in the acidic electrolytic water to be supplied to weakly acidic cation exchange resin 307 can be adjusted by adjusting the flow rate of the acidic electrolytic water by acidic electrolytic water circulation pump 323. Therefore, hydrogen ions can be supplied according to the state of weakly acidic cation exchange resin 307, and the performance of water softening device 301 can be improved.

Alkaline electrolytic water circulation pump 324 is a device that flows water in alkaline electrolytic water circulation flow path 344 (see Fig. 19) during the resin regeneration treatment by regeneration device 306. Alkaline electrolytic water circulation pump 324 is provided in water flow path 349 that communicatively connects alkaline electrolytic water storage tank 321 and second water intake port 316.

The flow rate of the alkaline electrolytic water flowing through alkaline electrolytic water circulation flow path 344 can be controlled by alkaline electrolytic water circulation pump 324. For example, when the rate of generation of hydroxide ions in electrolytic tank 309 is constant and the flow rate of the alkaline electrolytic water is increased, the hydroxide ion concentration decreases. Furthermore, when the flow rate of the alkaline electrolytic water is reduced, the hydroxide ion concentration increases. That is, the hydroxide ion concentration of the alkaline electrolytic water to be supplied to weakly basic anion exchange resin 308 can be adjusted by adjusting the flow rate of the alkaline electrolytic water by alkaline electrolytic water circulation pump 324. Therefore, hydroxide ions can be supplied according to the state of weakly basic anion exchange resin 308, and the performance of water softening device 301 can be improved.

By providing acidic electrolytic water circulation pump 323 and alkaline electrolytic water circulation pump 324 independently of each other without forming one pump, it is possible to individually set the flow rate of acidic electrolytic water capable of supplying hydrogen ions suitable for regeneration of weakly acidic cation exchange resin 307 and the flow rate of alkaline electrolytic water capable of supplying hydroxide ions suitable for regeneration of weakly basic anion exchange resin 308.

Acidic electrolytic water circulation pump 323 and alkaline electrolytic water circulation pump 324 are connected to controller 326 to be described later so as to be able to communicate with the controller 326 in a wireless or wired manner.

### ((Capture unit))

Capture unit 325 is provided in second supply flow path 345 at the rear stage of electrolytic tank 309 and the front stage of second neutralization tank 304b.

Capture unit 325 separates a solid contained in the alkaline electrolytic water supplied from electrolytic tank 309. The solid is a reaction product precipitated by reaction between a hardness component in alkaline electrolytic water and hydroxide ions generated by cathode 315 in cathode chamber 318 of electrolytic tank 309. For example, in a case where the hardness component contained in the alkaline electrolytic water is magnesium ions, magnesium hydroxide is generated. The solid precipitated during the resin regeneration treatment remains in neutralization tank 304 if not removed, and the hardness component is eluted from the solid, so that the soft water hardness during the water softening treatment is increased, that is, the water softening performance is deteriorated. Therefore, by separating the precipitates by capture unit 325, inflow and deposition of the precipitates into second neutralization tank 304b can be suppressed, and deterioration in water softening performance during the water softening treatment can be suppressed.

The form of capture unit 325 is not limited as long as a reaction product with the hardness component contained in the alkaline electrolytic water supplied from electrolytic tank 309 can be separated. For example, a form using a cartridge type filter, a filtration layer using a granular filter material, a cyclone type solid-liquid separator, a hollow fiber membrane, or the like can be mentioned.

### ((Controller))

Controller 326 controls water softening treatment for softening raw water containing a hardness component. Furthermore, controller 326 controls the resin regeneration treatment of weakly acidic cation exchange resin 307 in water softening tank 303 and weakly basic anion exchange resin 308 in neutralization tank 304. Moreover, controller 326 controls an electrode regeneration treatment for regenerating electrolytic tank 309. In addition, controller 326 controls switching of the water softening treatment, the resin regeneration treatment, and the electrode regeneration treatment of water softening device 301. At this time, controller 326 controls operations of anode 311, cathode 315, acidic electrolytic water circulation pump 323, alkaline electrolytic water circulation pump 324, on-off valve 351 to on-off valve 355, on-off valve 361 to on-off valve 366, on-off valve 371, on-off valve 372, on-off valve 381, and on-off valve 382, switches the water softening treatment, the resin regeneration treatment, and the electrode regeneration treatment, and executes each treatment.

Specifically, controller 326 compares the voltage detected by detector 327 with a first reference value or a second reference value to be described later, thereby determining whether to switch the water softening treatment, the resin regeneration treatment, and the electrode regeneration treatment.

Note that controller 326 includes a computer system including a processor and a memory. The computer system functions as a controller by causing the processor to execute a program stored in the memory. In the example explained herein, the program executed by the processor is recorded in the memory of the computer system in advance, but may be provided in a manner recorded in a non-transitory recording medium, such as a memory card, or provided over a telecommunication line such as the Internet.

### ((Detector))

Detector 327 detects a voltage in electrolytic tank 309 during the resin regeneration treatment and the electrode regeneration treatment. Furthermore, detector 327 is connected to controller 326. That is, controller 326 can determine whether to switch the water softening treatment, the resin regeneration treatment, and the electrode regeneration treatment based on the voltage detected by detector 327.

### ((Acidic electrolytic water circulation flow path and alkaline electrolytic water circulation flow path))

Next, acidic electrolytic water circulation flow path 340 and alkaline electrolytic water circulation flow path 344 formed during the resin regeneration treatment of water softening device 301 will be described with reference to Fig. 19. Fig. 19 is a view illustrating a state of each component at the time of resin regeneration treatment of water softening device 301.

As illustrated in Fig. 19 (white arrow), acidic electrolytic water circulation flow path 340 is a flow path through which water sent out from acidic electrolytic water storage tank 319 by acidic electrolytic water circulation pump 323 flows through electrolytic tank 309, second water softening tank 303b, and first water softening tank 303a, and returns to acidic electrolytic water storage tank 319 to circulate. More specifically, acidic electrolytic water circulation flow path 340 is a flow path through which water delivered from acidic electrolytic water storage tank 319 by acidic electrolytic water circulation pump 323 circulates through water flow path 348, first water intake port 312, anode chamber 314, first discharge port 313, first supply flow path 341, on-off valve 363, second water softening tank 303b, first bypass flow path 342, on-off valve 365, first water softening tank 303a, first collection flow path 343, on-off valve 361, and acidic electrolytic water storage tank 319 in this order.

First supply flow path 341 is a flow path connecting first discharge port 313 to flow path 333. That is, first supply flow path 341 is a flow path for supplying acidic electrolytic water from first discharge port 313 to the downstream side of second water softening tank 303b. Note that first supply flow path 341 is connected to flow path 333 between second water softening tank 303b and on-off valve 354. Then, on-off valve 354 is provided between a connection point between second bypass flow path 346 and flow path 333 and second water softening tank 303b. This makes it possible to suppress mixing of acidic electrolytic water flowing through first supply flow path 341 and alkaline electrolytic water flowing through second collection flow path 347. Note that on-off valve 363 is installed in first supply flow path 341.

First bypass flow path 342 is a flow path that bypasses first neutralization tank 304a and connects from flow path 332 to flow path 331. That is, first bypass flow path 342 is a flow path for supplying the acidic electrolytic water flowing through second water softening tank 303b to first water softening tank 303a while bypassing first neutralization tank 304a. Thus, the acidic electrolytic water can be supplied from second water softening tank 303b to the downstream side of first water softening tank 303a. Note that, by providing first bypass flow path 342, the resin regeneration treatment can be advanced without flowing through acidic electrolytic water in first neutralization tank 304a existing between first water softening tank 303a and second water softening tank 303b. Note that on-off valve 365 is installed in first bypass flow path 342.

First collection flow path 343 is a flow path connecting from flow path 330 to acidic electrolytic water storage tank 319. That is, first collection flow path 343 is a flow path for collecting the acidic electrolytic water containing the hardness component flowed out of water softening tank 303 by the resin regeneration treatment of water softening tank 303 into the acidic electrolytic water storage tank 319. Note that on-off valve 361 is installed in first collection flow path 343.

Water flow path 348 is a flow path connecting from acidic electrolytic water storage tank 319 to first water intake 312. Acidic electrolytic water circulation pump 323 is provided in water flow path 348. That is, water flow path 348 is a flow path for supplying acidic electrolytic water stored in acidic electrolytic water storage tank 319 to anode chamber 314 of electrolytic tank 309 by using acidic electrolytic water circulation pump 323. On-off valve 371 is installed in water flow path 348.

Here, the state of each flow path for circulating water in acidic electrolytic water circulation flow path 340 will be described.

In flow path 333, on-off valve 354 is installed on the downstream side of first supply flow path 341 and on the upstream side of first bypass flow path 342. By closing on-off valve 354 and opening on-off valve 363, first supply flow path 341 is communicatively connected to the downstream side of second water softening tank 303b. Accordingly, acidic electrolytic water from anode chamber 314 of electrolytic tank 309 can be supplied to second water softening tank 303b.

In flow path 331, on-off valve 352 is installed on the downstream side of first bypass flow path 342 and on the upstream side of second collection flow path 347. Furthermore, in flow path 332, on-off valve 353 is disposed on the downstream side of the second bypass flow path 346 and on the upstream side of first bypass flow path 342. By closing on-off valve 352 and on-off valve 353 and opening on-off valve 365, first bypass flow path 342 is communicatively connected to the upstream side of second water softening tank 303b and the downstream side of first water softening tank 303a. As a result, the acidic electrolytic water flowing through second water softening tank 303b can be supplied to first water softening tank 303a.

In flow path 330, on-off valve 351 is installed on the downstream side of inlet port 302 and on the upstream side of first collection flow path 343. By closing on-off valve 351 and on-off valve 352 and opening on-off valve 361, first collection flow path 343 is communicatively connected to the upstream side of first water softening tank 303a. As a result, water softening device 301 can recover water (acidic electrolytic water containing hardness components) flowing through first water softening tank 303a and second water softening tank 303b into acidic electrolytic water storage tank 319.

In water flow path 348, on-off valve 371 is disposed on a downstream side of acidic electrolytic water storage tank 319 (a position between acidic electrolytic water storage tank 319 and acidic electrolytic water circulation pump 323). By closing on-off valve 371, water can be stored in acidic electrolytic water storage tank 319. On the other hand, by opening on-off valve 371, water can be supplied to water flow path 348.

On the other hand, as illustrated in Fig. 19 (black arrow), alkaline electrolytic water circulation flow path 344 is a flow path through which water sent out from alkaline electrolytic water storage tank 321 by alkaline electrolytic water circulation pump 324 flows through electrolytic tank 309, second neutralization tank 304b, and first neutralization tank 304a, and returns to alkaline electrolytic water storage tank 321 to circulate. More specifically, alkaline electrolytic water circulation flow path 344 is a flow path through which water delivered from alkaline electrolytic water storage tank 321 by alkaline electrolytic water circulation pump 324 flows and circulates through water flow path 349, second water intake port 316, cathode chamber 318, second discharge port 317, second supply flow path 345, capture unit 325, on-off valve 364, second neutralization tank 304b, second bypass flow path 346, on-off valve 366, first neutralization tank 304a, second collection flow path 347, on-off valve 362, and alkaline electrolytic water storage tank 321 in this order.

Second supply flow path 345 is a flow path connecting from second discharge port 317 to flow path 334. That is, second supply flow path 345 is a flow path for supplying alkaline electrolytic water from electrolytic tank 309 to the downstream side of second neutralization tank 304b. On-off valve 364 is installed in second supply flow path 345.

Second bypass flow path 346 is a flow path that bypasses second water softening tank 303b and connects from flow path 333 to flow path 332. That is, second bypass flow path 346 is a flow path that supplies the alkaline electrolytic water flowing through second neutralization tank 304b to the downstream side of first neutralization tank 304a while bypassing second water softening tank 303b. On-off valve 366 is installed in second bypass flow path 346.

Second collection flow path 347 is a flow path connecting from flow path 331 to alkaline electrolytic water storage tank 321. That is, second collection flow path 347 is a flow path for collecting the alkaline electrolytic water having passed through first neutralization tank 304a into the alkaline electrolytic water storage tank 321. On-off valve 362 is installed in second collection flow path 347.

Water flow path 349 is a flow path connecting from alkaline electrolytic water storage tank 321 to second water intake port 316. In water flow path 349, alkaline electrolytic water circulation pump 324 is provided. That is, water flow path 349 is a flow path for supplying the acidic electrolytic water stored in alkaline electrolytic water storage tank 321 from second water intake port 316 to cathode chamber 318 of electrolytic tank 309 using alkaline electrolytic water circulation pump 324. On-off valve 372 is installed in water flow path 349.

Here, the state of each flow path for circulating water in alkaline electrolytic water circulation flow path 344 will be described.

In flow path 334, on-off valve 354 is installed on the downstream side of second supply flow path 345 and on the upstream side of second bypass flow path 346. Furthermore, in flow path 334, on-off valve 355 is installed on the upstream side of water intake port 305 and on the downstream side of second neutralization tank 304b. By closing on-off valve 354 and on-off valve 355 and opening on-off valve 364, second supply flow path 345 is in a state of being communicably connected to the downstream side of second neutralization tank 304b. As a result, the alkaline electrolytic water from cathode chamber 318 of electrolytic tank 309 can be supplied to second neutralization tank 304b.

In flow path 332, on-off valve 353 is installed on the downstream side of second bypass flow path 346 and on the upstream side of second water softening tank 303b. Furthermore, by closing on-off valve 352, on-off valve 353, and on-off valve 354 and opening on-off valve 366, second bypass flow path 346 is brought into a state of being communicably connected to the downstream side of first neutralization tank 304a and the upstream side of second neutralization tank 304b. As a result, the alkaline electrolytic water flowing through second neutralization tank 304b can be supplied to first neutralization tank 304a.

Furthermore, by closing on-off valve 352 and opening on-off valve 362, second collection flow path 347 is communicatively connected to the upstream side of first neutralization tank 304a. As a result, water softening device 301 can recover the water (alkaline electrolytic water containing anions) flowing through first neutralization tank 304a and second neutralization tank 304b into alkaline electrolytic water storage tank 321.

Furthermore, in water flow path 349, on-off valve 372 is disposed on a downstream side (a position between alkaline electrolytic water storage tank 321 and alkaline electrolytic water circulation pump 324) of alkaline electrolytic water storage tank 321. By closing on-off valve 372, water can be stored in alkaline electrolytic water storage tank 321. On the other hand, by opening on-off valve 372, water can be supplied to water flow path 349.

Furthermore, by closing on-off valve 351 and on-off valve 355, the circulation of water to acidic electrolytic water circulation flow path 340 and alkaline electrolytic water circulation flow path 344 can be started, and by opening on-off valve 351 and on-off valve 355, the circulation of water to acidic electrolytic water circulation flow path 340 and alkaline electrolytic water circulation flow path 344 can be stopped.

### ((Anode chamber electrolytic water drainage flow path, cathode chamber electrolytic water drainage flow path))

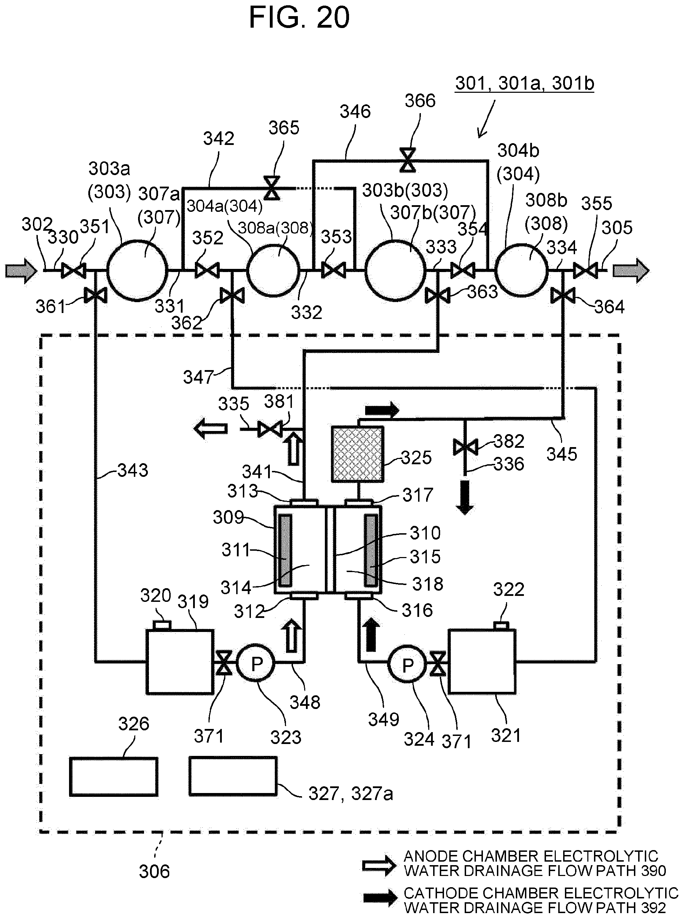

Next, anode chamber electrolytic water drainage flow path 390 and cathode chamber electrolytic water drainage flow path 392 formed during the electrode regeneration treatment of water softening device 301 will be described with reference to Fig. 20. Fig. 20 is a view illustrating a state of each component at the time of electrode regeneration treatment of water softening device 301.

As illustrated in Fig. 20 (white arrow), anode chamber electrolytic water drainage flow path 390 is a flow path through which water stored in acidic electrolytic water storage tank 319 is sent out by acidic electrolytic water circulation pump 323, flows through electrolytic tank 309, first supply flow path 341, and flow path 335, and is discharged to the outside of the device.

Flow path 335 is a flow path connected to first supply flow path 341 between on-off valve 363 and electrolytic tank 309. One end of flow path 335 is opened to the outside of the device. That is, flow path 335 is a flow path for discharging the electrolytic water fed from anode chamber 314 to the outside of the device.

As illustrated in Fig. 20 (black arrow), cathode chamber electrolytic water drainage flow path 392 is a flow path through which water stored in alkaline electrolytic water storage tank 321 is sent out by alkaline electrolytic water circulation pump 324, flows through electrolytic tank 309, second supply flow path 345, and flow path 336, and is discharged to the outside of the device.

Flow path 336 is a flow path connected to second supply flow path 345 between on-off valve 364 and electrolytic tank 309. One end of flow path 336 is opened to the outside of the device. That is, flow path 336 is a flow path for discharging the electrolytic water fed from cathode chamber 318 to the outside of the device.

### ((On-off valve))

A plurality of on-off valves (on-off valve 351 to on-off valve 355, on-off valve 361 to on-off valve 366, on-off valve 371, on-off valve 372, on-off valve 381, and on-off valve 382) are provided in the respective flow paths, and are switched between an "open" state and a "closed" state in the respective flow paths. Furthermore, each of the plurality of on-off valves (on-off valve 351 to on-off valve 355, on-off valve 361 to on-off valve 366, on-off valve 371, on-off valve 372, on-off valve 381, and on-off valve 382) is connected to the controller 326 so as to communicate with controller 326 in a wireless or wired manner.

The above is the configuration of water softening device 301.

Next, the operation of water softening device 301 will be described.

### ((Water softening treatment, resin regeneration treatment, and electrode regeneration treatment))

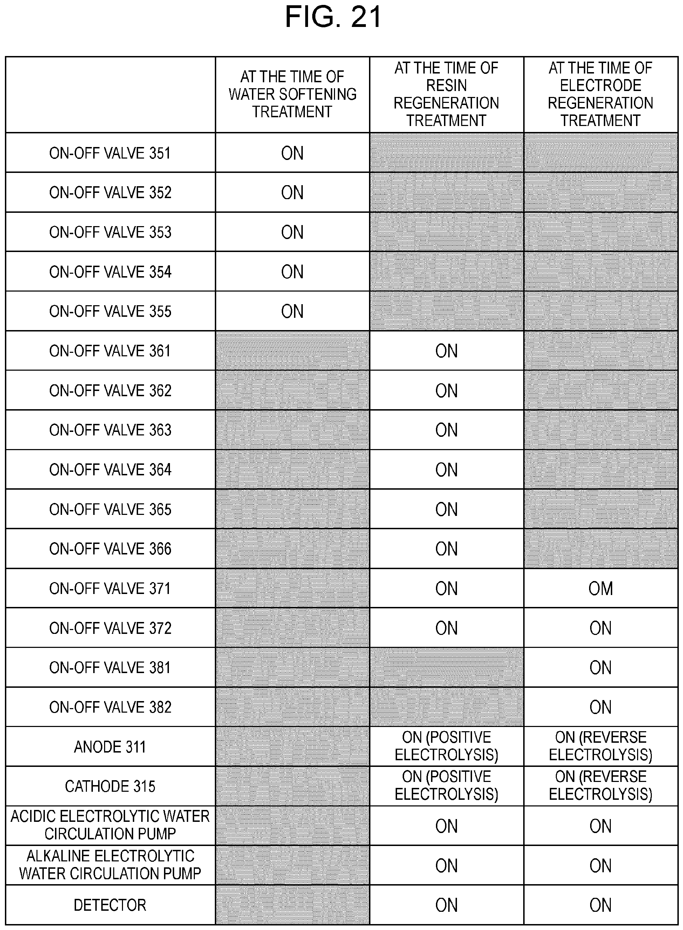

Next, the water softening treatment, the resin regeneration treatment, and the electrode regeneration treatment of water softening device 301 will be described with reference to Fig. 21. Fig. 21 is a diagram illustrating a state of water softening device 301 during operation.

In the water softening treatment, the regeneration treatment, and the wastewater treatment, as illustrated in Fig. 21, controller 326 switches on-off valve 351 to on-off valve 355, on-off valve 361 to on-off valve 366, on-off valve 371, on-off valve 372, on-off valve 381, on-off valve 382, anode 311, cathode 315, acidic electrolytic water circulation pump 323, alkaline electrolytic water circulation pump 324, and detector 327, and controls them so as to be in their respective flowing states and operating states.

Here, "ON" in Fig. 21 indicates a state in which the corresponding on-off valve is "opened", a state in which acidic electrolytic water circulation pump 323 and alkaline electrolytic water circulation pump 324 are operating, and a state in which detector 327 is operating. "ON (positive electrolysis)" refers to a state in which current is supplied to electrodes so that anode 311 has higher potential than that of cathode 315 (positive electrolysis state). "ON (reverse electrolysis)" is a state in which current is supplied to electrodes so that cathode 315 has higher potential than anode 311 (reverse electrolysis state). Blanks indicate a state in which the corresponding on-off valve is "closed", a state in which anode 311 and cathode 315 are not energized, a state in which acidic electrolytic water circulation pump 323 and alkaline electrolytic water circulation pump 324 are stopped, and a state in which detector 327 is not operated.

### ((Water softening treatment))

The operation of water softening device 301 at the time of water softening treatment will be described with reference to Fig. 18 and the columns of "at the time of water softening treatment" in Fig. 21.

As illustrated in Fig. 21, in water softening device 301, on-off valve 351 provided in water intake port 305 is opened in a state where on-off valve 355 to on-off valve 354 are opened during the water softening treatment. As a result, since the raw water into which the raw water containing the hardness component flows from the outside flows through water softening tank 303 and neutralization tank 304, water softening device 301 can take out softened water (neutral soft water) from water intake port 305. At this time, all of on-off valve 361 to on-off valve 366, on-off valve 371, on-off valve 372, on-off valve 381, and on-off valve 382 are in a closed state. Furthermore, the operations of anode 311, cathode 315, acidic electrolytic water circulation pump 323, alkaline electrolytic water circulation pump 324, and detector 327 are also stopped.

Specifically, as illustrated in Fig. 18, in the water softening treatment, the raw water to be supplied is supplied from inlet port 302 to first water softening tank 303a through flow path 330 by the pressure of the city water. The raw water supplied to first water softening tank 303a flows through first weakly acidic cation exchange resin 307a provided in first water softening tank 303a. At this time, cations as hardness components in the raw water are adsorbed by the action of first weakly acidic cation exchange resin 307a, and hydrogen ions are released (ion exchange is performed). Then, cations are removed from the raw water, whereby the raw water is softened. Since softened water contains a large amount of hydrogen ions that have been exchanged for hardness components and have flowed out, the softened water is acidified to be acidic water (first soft water) having a low pH. Here, when water containing a large amount of the permanent hardness component (for example, a sulfate such as calcium sulfate or a chloride such as magnesium chloride) as the hardness component is softened, the pH of water containing a large amount of the permanent hardness component is likely to decrease compared with the pH of water containing a large amount of the temporary hardness component (carbonates such as, for example, calcium carbonate). Since water softening is less likely to proceed in a state in which the pH is lowered, water flowing through first water softening tank 303a is caused to pass through first neutralization tank 304a to perform neutralization.

The softened water further flows through flow path 331 and flows into first neutralization tank 304a. In first neutralization tank 304a, hydrogen ions contained in the softened water are adsorbed by the action of first weakly basic anion exchange resin 308a. That is, since hydrogen ions are removed from the water softened by first water softening tank 303a, the lowered pH is increased and neutralized. Therefore, as compared with the case where water softened in first water softening tank 303a is directly softened in second water softening tank 303b, the water softening treatment in second water softening tank 303b easily proceeds.

The water (neutralized first soft water) neutralized by first neutralization tank 304a further flows through flow path 332 and flows into second water softening tank 303b. In second water softening tank 303b, cations as hardness components are adsorbed and hydrogen ions are released by the action of second weakly acidic cation exchange resin 307b. Second water softening tank 303b exchanges the hardness component that could not be removed in first water softening tank 303a with hydrogen ions of second weakly acidic cation exchange resin 307b. That is, the water flowing into second water softening tank 303b is further softened to become soft water (second soft water).

The second soft water flows through flow path 333 and flows into second neutralization tank 304b. In second neutralization tank 304b, hydrogen ions contained in the inflowing second soft water are adsorbed by the action of second weakly basic anion exchange resin 308b. That is, since hydrogen ions are removed from the second soft water, the lowered pH increases, and the second soft water becomes neutral soft water (neutralized second soft water) that can be used as domestic water. The neutralized second soft water can be taken out from water intake port 305 through flow path 334.

That is, in the water softening treatment, the raw water flows through first water softening tank 303a, first neutralization tank 304a, second water softening tank 303b, and second neutralization tank 304b in this order. As a result, the raw water containing the hardness component flows out of first water softening tank 303a before the pH of the raw water is lowered by the water softening treatment in first water softening tank 303a, is neutralized in first neutralization tank 304a, is softened in second water softening tank 303b, and is neutralized in second neutralization tank 304b. Therefore, as compared with the case where each of water softening tank 303 and neutralization tank 304 is constituted by a single body, it is possible to suppress a decrease in pH of water flowing in water softening tank 303, that is, acidification, and thus exchange of hardness components with hydrogen ions held by the weakly acidic cation exchange resin in water softening tank 303 (particularly, second water softening tank 303b) easily occurs. Therefore, the water softening performance can be improved.

Then, water softening device 301 executes the resin regeneration treatment when the time zone specified by controller 326 is reached or when the water softening treatment exceeds a certain period of time.

### ((Resin regeneration treatment))

Next, the operation of water softening device 301 at the time of resin regeneration treatment by regeneration device 306 will be described in order with reference to Fig. 19 and the columns of "at the time of resin regeneration treatment" in Fig. 21.

In water softening device 301, in water softening tank 303 filled with weakly acidic cation exchange resin 307, the cation exchange capacity decreases or disappears as the use is continued. That is, ion exchange cannot be performed after all the hydrogen ions, which are functional groups of the cation exchange resin, are exchanged for calcium ions or magnesium ions, which are hardness components. In such a state, the hardness component is contained in the treatment water. Therefore, in water softening device 301, it is necessary to perform the resin regeneration treatment of water softening tank 303 and neutralization tank 304 by regeneration device 306.

When on-off valve 351 to on-off valve 355, on-off valve 381, and on-off valve 382 are closed and on-off valve 361 to on-off valve 366, on-off valve 371, and on-off valve 372 are opened during the resin regeneration treatment, acidic electrolytic water circulation flow path 340 and alkaline electrolytic water circulation flow path 344 are formed, respectively, as illustrated in Fig. 19.

Then, when acidic electrolytic water circulation pump 323 and alkaline electrolytic water circulation pump 324 are operated, the water stored in acidic electrolytic water storage tank 319 and alkaline electrolytic water storage tank 321 circulates through acidic electrolytic water circulation flow path 340 and alkaline electrolytic water circulation flow path 344, respectively.

Furthermore, electrolytic tank 309 energizes electrodes so that anode 311 have higher potential with respect to cathode 315 (positive electrolysis). As a result, hydrogen ions are generated in anode 311 and acidic electrolytic water is generated in anode chamber 314 during electrolysis. On the other hand, hydroxide ions are generated in cathode 315, and alkaline electrolytic water is generated in cathode chamber 318.

Furthermore, by operating detector 327, the voltage of electrolytic tank 309 during the resin regeneration treatment can be detected.

The acidic electrolytic water generated in anode chamber 314 of electrolytic tank 309 is supplied from first discharge port 313 through first supply flow path 341 into second water softening tank 303b, and flows through second weakly acidic cation exchange resin 307b inside. Then, the acidic electrolytic water flowing through second water softening tank 303b flows through first bypass flow path 342, is supplied into first water softening tank 303a, and flows through first weakly acidic cation exchange resin 307a therein. That is, by passing acidic electrolytic water through first weakly acidic cation exchange resin 307a and second weakly acidic cation exchange resin 307b, cations (hardness components) adsorbed on first weakly acidic cation exchange resin 307a and second weakly acidic cation exchange resin 307b undergo an ion exchange reaction with hydrogen ions contained in the acidic electrolytic water. As a result, first weakly acidic cation exchange resin 307a and second weakly acidic cation exchange resin 307b are regenerated.

Thereafter, the acidic electrolytic water flowing through first weakly acidic cation exchange resin 307a contains cations and flows into first collection flow path 343. That is, the acidic electrolytic water containing cations that have flowed through first weakly acidic cation exchange resin 307a and second weakly acidic cation exchange resin 307b is recovered in acidic electrolytic water storage tank 319 via first bypass flow path 342 and first collection flow path 343.

As described above, acidic electrolytic water circulation flow path 340 is configured to cause the acidic electrolytic water to flow from the downstream side of second water softening tank 303b located most downstream from the inlet port of the raw water and including second weakly acidic cation exchange resin 307b having a small adsorption amount of hardness components, and to flow into the downstream side of first water softening tank 303a located upstream and including first weakly acidic cation exchange resin 307a to which more hardness components are adsorbed as compared with second weakly acidic cation exchange resin 307b. That is, acidic electrolytic water circulation flow path 340 is a flow path that causes the acidic electrolytic water delivered from electrolytic tank 309 to flow through second water softening tank 303b, then to be delivered to first water softening tank 303a by first bypass flow path 342, to flow through first water softening tank 303a, to be collected in acidic electrolytic water storage tank 319, and then to flow from first water intake port 312 into electrolytic tank 309. As a result, during the regeneration treatment, the acidic electrolytic water discharged from anode chamber 314 of electrolytic tank 309 flows into second water softening tank 303b having a smaller adsorption amount of the hardness component than first water softening tank 303a, and the acidic electrolytic water containing the hardness component is discharged from second water softening tank 303b to first water softening tank 303a. In the regeneration of second weakly acidic cation exchange resin 307b in second water softening tank 303b, since the consumption of hydrogen ions in the acidic electrolytic water is smaller than that in first water softening tank 303a, a reduction in the hydrogen ion concentration can be suppressed as compared with the regeneration of first water softening tank 303a. Therefore, it is possible to suppress the acidic electrolytic water containing a large amount of hydrogen ions from flowing into first water softening tank 303a and the hardness components from being re-adsorbed in first water softening tank 303a. Therefore, it is possible to suppress a decrease in the regeneration treatment efficiency and to shorten the regeneration time.

Furthermore, acidic electrolytic water circulation flow path 340 is a path for introducing the acidic electrolytic water fed from electrolytic tank 309 into first water softening tank 303a and second water softening tank 303b from the downstream sides of first water softening tank 303a and second water softening tank 303b, and allowing the acidic electrolytic water to flow out from the upstream side where the adsorption amount of the hardness component is larger than that on the downstream side of water softening tank 303. Note that the downstream side refers to the downstream side in the flow path during the water softening treatment.

On the other hand, the alkaline electrolytic water generated in cathode chamber 318 of electrolytic tank 309 is supplied from second discharge port 317 into second neutralization tank 304b through second supply flow path 345 and capture unit 325, and flows through second weakly basic anion exchange resin 308b inside. Then, the alkaline electrolytic water flowing through second neutralization tank 304b flows through second bypass flow path 346, is supplied into first neutralization tank 304a, and flows through first weakly basic anion exchange resin 308a therein. That is, by allowing the alkaline electrolytic water to pass through first weakly basic anion exchange resin 308a and second weakly basic anion exchange resin 308b, anions adsorbed on first weakly basic anion exchange resin 308a and second weakly basic anion exchange resin 308b cause an ion exchange reaction with hydroxide ions contained in the alkaline electrolytic water. As a result, first weakly basic anion exchange resin 308a and second weakly basic anion exchange resin 308b are regenerated.

Thereafter, the alkaline electrolytic water flowing through second weakly basic anion exchange resin 308b contains anions and flows into second collection flow path 347. That is, the alkaline electrolytic water containing anions that has flowed through first weakly basic anion exchange resin 308a and second weakly basic anion exchange resin 308b is recovered into alkaline electrolytic water storage tank 321 via second bypass flow path 346 and second collection flow path 347.

As described above, alkaline electrolytic water circulation flow path 344 is configured to cause the alkaline electrolytic water to flow from the downstream side of second neutralization tank 304b located most downstream from the inlet port of the raw water and including second weakly basic anion exchange resin 308b having a small adsorption amount of anions, and to flow into the downstream side of first neutralization tank 304a located upstream and including first weakly basic anion exchange resin 308a to which more anions are adsorbed as compared with second weakly basic anion exchange resin 308b. That is, alkaline electrolytic water circulation flow path 344 is a flow path that allows the alkaline electrolytic water fed from electrolytic tank 309 to flow through second neutralization tank 304b, then feeds the alkaline electrolytic water to first neutralization tank 304a by second bypass flow path 346, causes the alkaline electrolytic water to flow through first neutralization tank 304a, recovers the alkaline electrolytic water in alkaline electrolytic water storage tank 321, and then causes the alkaline electrolytic water to flow into electrolytic tank 309 from second water intake port 316. As a result, during the regeneration treatment, the alkaline electrolytic water flows into second neutralization tank 304b having a smaller adsorption amount of anions than first neutralization tank 304a, and the alkaline electrolytic water containing anions is discharged from second neutralization tank 304b to first neutralization tank 304a. In the regeneration of second weakly basic anion exchange resin 308b in second neutralization tank 304b, since the consumption of hydroxide ions in the alkaline electrolytic water is smaller than that in first neutralization tank 304a, the reduction in the hydroxide ion concentration can be suppressed as compared with the regeneration of first neutralization tank 304a. Therefore, it is possible to suppress the alkaline electrolytic water containing a large amount of hydroxide ions from flowing into first neutralization tank 304a, and to suppress re-adsorption of anions in first neutralization tank 304a. Therefore, it is possible to suppress a decrease in the regeneration treatment efficiency and to shorten the regeneration time.

Furthermore, alkaline electrolytic water circulation flow path 344 introduces the alkaline electrolytic water fed from electrolytic tank 309 into first neutralization tank 304a and second neutralization tank 304b from the downstream sides of first neutralization tank 304a and second neutralization tank 304b, and causes the alkaline electrolytic water to flow out from the upstream side where the adsorption amount of anions is larger than that on the downstream side of each neutralization tank. As a result, the alkaline electrolytic water flows in from the downstream side where the adsorption amount of the anion component is smaller, and neutralization tank 304 is regenerated. In the regeneration of weakly basic anion exchange resin 308 on the downstream side, since the consumption of hydroxide ions in the alkaline electrolytic water is smaller than that on the upstream side, a reduction in the hydroxide ion concentration of the alkaline electrolytic water can be suppressed. Accordingly, it is possible to suppress re-adsorption on the upstream side of anions contained in the alkaline electrolytic water from the downstream side. Therefore, it is possible to suppress a decrease in the regeneration treatment efficiency of neutralization tank 304 and to shorten the regeneration time. Note that the downstream side refers to the downstream side in the flow path during the water softening treatment.

During the resin regeneration treatment, detector 327 detects the voltage of electrolytic tank 309. The voltage of electrolytic tank 309 detected by detector 327 is compared with the first reference value to determine the shift to the electrode regeneration treatment. Note that the first reference value is set to a predetermined voltage value. The predetermined voltage value may be set, for example, from the viewpoint of power consumption. In a case where the voltage value is low, power consumption can be reduced.

Specifically, in a case where the voltage of electrolytic tank 309 detected by detector 327 is less than the first reference value, controller 326 continues the resin regeneration treatment. Note that in a case where the detected voltage is less than the first reference value and, in a case where a certain time (for example, 7 hours) has elapsed from the start of the resin regeneration treatment (at the start of the operation of anode 311 and cathode 315), controller 326 finishes the resin regeneration treatment and proceeds to the water softening treatment.

Alternatively, in a case where the voltage of electrolytic tank 309 detected by detector 327 is more than or equal to the first reference value, controller 326 ends the resin regeneration treatment and proceeds to the electrode regeneration treatment.

### ((Electrode regeneration treatment))

Next, the operation of water softening device 301 at the time of electrode regeneration treatment by regeneration device 306 will be sequentially described with reference to Fig. 20 and the columns of "at the time of electrode regeneration treatment" in Fig. 21.

During the resin regeneration treatment, when electrolytic tank 309 is operating, a hardness component (calcium ions or magnesium ions) in water is precipitated as a solid (scale) on cathode 315. Since the solid precipitated on cathode 315 is a non-conductor, the operating voltage of electrolytic tank 309 is increased, and the power consumption during the resin regeneration treatment is increased. Therefore, it is necessary to perform an electrode regeneration treatment for removing the solid precipitated on cathode 315.

During the electrode regeneration treatment, on-off valve 351 to on-off valve 355 and on-off valve 361 to on-off valve 366 are closed, and on-off valve 371, on-off valve 372, on-off valve 381, and on-off valve 382 are opened. With such a configuration, as illustrated in Fig. 20, anode chamber electrolytic water drainage flow path 390 and cathode chamber electrolytic water drainage flow path 392 are formed.

Then, when acidic electrolytic water circulation pump 323 and alkaline electrolytic water circulation pump 324 are operated, the water stored in acidic electrolytic water storage tank 319 and alkaline electrolytic water storage tank 321 flows through electrolytic tank 309.

In the electrode regeneration treatment, controller 326 energizes electrodes so that cathode 315 has higher potential than anode 311 (reverse electrolysis). Therefore, electrolytic tank 309 electrolyzes water flowing into the electrolytic tank to generate alkaline electrolytic water in anode chamber 314 and generate acidic electrolytic water in cathode chamber 318.

At this time, the acidic electrolytic water generated in cathode chamber 318 can dissolve the solid deposited on cathode 315. Therefore, by performing the electrode regeneration treatment, the voltage of electrolytic tank 309 detected by detector 327 decreases.

During the electrode regeneration treatment, detector 327 detects the voltage of electrolytic tank 309. Controller 326 compares the voltage of electrolytic tank 309 detected by detector 327 with the second reference value, and determines the end of the electrode regeneration treatment. Note that the second reference value is set to a predetermined voltage value according to the degree of dissolution of the solid precipitated on cathode 315. As the predetermined voltage value, for example, a value higher than the voltage at the initial stage of the resin regeneration treatment may be set as the second reference value. In this case, a certain amount of the solid precipitated on cathode 315 can be dissolved. Furthermore, more preferably, the voltage at the initial stage of the resin regeneration treatment is set as the second reference value. In this case, most of the solid precipitated on cathode 315 can be dissolved.

Specifically, in a case where the voltage of electrolytic tank 309 detected by detector 327 is more than or equal to the second reference value, controller 326 continues the electrode regeneration treatment.

On the other hand, in a case where the voltage of electrolytic tank 309 is less than the second reference value, controller 326 ends the electrode regeneration treatment and proceeds to the resin regeneration treatment or the water softening treatment. Specifically, in a case where the electrode regeneration treatment is started at a stage where a certain time (for example, 7 hours) has not elapsed from the start of the resin regeneration treatment, the process proceeds to the resin regeneration treatment. On the other hand, in a case where a certain time (for example, 7 hours) has already elapsed from the start of the resin regeneration treatment at the start of the electrode regeneration treatment, the process may proceed to the water softening treatment.

As described above, in water softening device 301, the water softening treatment, the resin regeneration treatment, and the electrode regeneration treatment are repeatedly executed.

As described above, according to water softening device 301 of the fourth exemplary embodiment-1, the following effects can be obtained.
(1) Water softening device 301 includes water softening tank 303, neutralization tank 304, electrolytic tank 309, detector 327, and controller 326. Water softening tank 303 softens the raw water containing the hardness component with weakly acidic cation exchange resin 307. Neutralization tank 304 neutralizes the pH of soft water that has passed through water softening tank 303 with weakly basic anion exchange resin 308. Electrolytic tank 309 generates acidic electrolytic water for regenerating weakly acidic cation exchange resin 307 and alkaline electrolytic water for regenerating weakly basic anion exchange resin 308.

Detector 327 detects a voltage of electrolytic tank 309. During the resin regeneration treatment in which at least one of the regeneration of weakly acidic cation exchange resin 307 using acidic electrolytic water and the regeneration of weakly basic anion exchange resin 308 using alkaline electrolytic water is performed, controller 326 continues the resin regeneration treatment or shifts to the water softening treatment in a case where the voltage detected by detector 327 is less than the first reference value, stops the resin regeneration treatment and shifts to the electrode regeneration treatment in a case where the voltage detected by detector 327 is more than or equal to the first reference value, continues the electrode regeneration treatment in a case where the voltage detected by detector 327 is more than or equal to the second reference value during the electrode regeneration treatment, and ends the electrode regeneration treatment and shifts to the resin regeneration treatment or the water softening treatment in a case where the voltage detected by detector 327 is less than the second reference value.

This makes it possible to suppress a voltage rise to the first reference value or more due to the scale generated in electrolytic tank 309 during the resin regeneration treatment. Therefore, it is possible to determine the start and end of the electrode regeneration treatment and the transition to the resin regeneration treatment or the water softening treatment. That is, it is possible to detect the timing of the electrode regeneration treatment and perform the polarity inversion operation at an appropriate timing. Therefore, since the electrode regeneration treatment is not excessively performed, the consumption of the electrodes can be suppressed, and water softening device 301 that can be used for a long period of time can be obtained.

### (Fourth exemplary embodiment-2)

Water softening device 301a according to the fourth exemplary embodiment-2 of the present disclosure is different from that of the fourth exemplary embodiment-1 in that a voltage of electrolytic tank 309 is detected by detector 327a at a timing after a resin regeneration treatment is completed and before the water softening treatment is started, and implementation of an electrode regeneration treatment is determined. Other configurations are the same as those of water softening device 301 according to the fourth exemplary embodiment-1. In the following, description of the contents already described in the fourth exemplary embodiment-1 will be omitted as appropriate, and differences from the fourth exemplary embodiment-1 will be mainly described.

### ((Detector))

Detector 327a detects the voltage of electrolytic tank 309 after the end of the resin regeneration treatment and before the start of the water softening treatment. Furthermore, detector 327a detects the voltage of electrolytic tank 309 during the electrode regeneration treatment. Furthermore, detector 327a is connected to controller 326. That is, based on the voltage detected by detector 327a, controller 326 can determine switching among the water softening treatment, the resin regeneration treatment, and the electrode regeneration treatment.

### ((Water softening treatment, resin regeneration treatment, and electrode regeneration treatment))

### ((Water softening treatment))

In water softening device 301a, on-off valve 355 provided in water intake port 305 is opened in a state where on-off valve 351 to on-off valve 354 are opened during the water softening treatment. As a result, since the raw water into which the raw water containing the hardness component flows from the outside flows through water softening tank 303 and neutralization tank 304, water softening device 301a can take out softened water (neutral soft water) from water intake port 305.

Then, water softening device 301a executes the resin regeneration treatment when the time zone specified by controller 326 is reached or when the water softening treatment exceeds a certain period of time.

### ((Resin regeneration treatment))

The resin regeneration treatment may be finished after a certain period of time (for example, 7 hours) from the start of the resin regeneration treatment (at the start of operation of anode 311 and cathode 315). Note that the certain time can be arbitrarily set depending on the water quality of the installation region, the hardness of the raw water, the property of the resin, or the like.

After the resin regeneration treatment is completed and before the water softening treatment is started, detector 327a detects the voltage of electrolytic tank 309. In a case where the voltage of electrolytic tank 309 detected by detector 327a is less than the first reference value, controller 326 does not shift to the electrode regeneration treatment but shifts to the water softening treatment. On the other hand, in a case where the voltage of electrolytic tank 309 detected by detector 327a is more than or equal to the first reference value at the time point the resin regeneration treatment is completed, controller 326 performs the electrode regeneration treatment and the water softening treatment in parallel.

### ((Electrode regeneration treatment and water softening treatment))

The operations of the resin regeneration treatment and the water softening treatment of water softening device 301a will be sequentially described with reference to the columns of "at the time of water softening treatment" and "at the time of resin regeneration treatment" in Fig. 21.

In a case where the resin regeneration treatment is shifted to the electrode regeneration treatment and the water softening treatment by controller 326, on-off valve 361 to on-off valve 366 are closed, and on-off valve 351 to on-off valve 355, on-off valve 371, on-off valve 372, on-off valve 381, and on-off valve 382 are opened. That is, anode chamber electrolytic water drainage flow path 390 and cathode chamber electrolytic water drainage flow path 392 are formed.

Then, when acidic electrolytic water circulation pump 323 and alkaline electrolytic water circulation pump 324 are operated, the water stored in acidic electrolytic water storage tank 319 and alkaline electrolytic water storage tank 321 flows through electrolytic tank 309. Moreover, the alkaline electrolytic water and the acidic electrolytic water electrolyzed by electrolytic tank 309 are discharged from flow path 335 and flow path 336.

Furthermore, in the electrode regeneration treatment, controller 326 energizes electrodes such that cathode 315 has higher potential than anode 311 (reverse electrolysis). Thus, alkaline electrolytic water can be generated in anode chamber 314, and acidic electrolytic water can be generated in cathode chamber 318.

At this time, the acidic electrolytic water generated in cathode chamber 318 can dissolve the solid precipitated on cathode 315. Therefore, by performing the electrode regeneration treatment, the voltage of electrolytic tank 309 detected by detector 327a decreases.

During the electrode regeneration treatment, detector 327a detects the voltage of electrolytic tank 309. Controller 326 compares the voltage of electrolytic tank 309 detected by detector 327a with the second reference value, and determines the end of the electrode regeneration treatment. Note that the second reference value is set to a predetermined voltage value according to the degree of dissolution of the solid precipitated on cathode 315. As the predetermined voltage value, for example, a value higher than the voltage at the initial stage of the resin regeneration treatment may be set as the second reference value. In this case, a certain amount of the solid precipitated on cathode 315 can be dissolved. Furthermore, more preferably, the voltage at the initial stage of the resin regeneration treatment is set as the second reference value. In this case, most of the solid precipitated on cathode 315 can be dissolved.

Specifically, in a case where the voltage of electrolytic tank 309 detected by detector 327a is more than or equal to the second reference value, controller 326 continues the electrode regeneration treatment.

On the other hand, in a case where the voltage of electrolytic tank 309 is less than the second reference value, controller 326 ends the electrode regeneration treatment. At the end of the electrode regeneration treatment, on-off valve 371, on-off valve 372, on-off valve 381, and on-off valve 382 are closed, and the energization to anode 311 and cathode 315 is stopped. Furthermore, the operations of acidic electrolytic water circulation pump 323, alkaline electrolytic water circulation pump 324, and detector 327 are stopped. Since the time required for the water softening treatment is longer than the time required for the electrode regeneration treatment, the water softening treatment is continued.

As described above, in water softening device 301a, the water softening treatment, the resin regeneration treatment, and the electrode regeneration treatment are repeatedly executed.

As described above, water softening device 301 according to the fourth exemplary embodiment-2 can obtain the following effects in addition to the effects of the fourth exemplary embodiment-1.

(2) Water softening device 301a includes water softening tank 303, neutralization tank 304, electrolytic tank 309, detector 327, and controller 326. Water softening tank 303 softens the raw water containing the hardness component with weakly acidic cation exchange resin 307. Neutralization tank 304 neutralizes the pH of soft water that has passed through water softening tank 303 with weakly basic anion exchange resin 308. Electrolytic tank 309 generates acidic electrolytic water for regenerating weakly acidic cation exchange resin 307 and alkaline electrolytic water for regenerating weakly basic anion exchange resin 308. Detector 327a detects a voltage of electrolytic tank 309. In a case where the voltage detected by detector 327a is less than the first reference value after the end of the resin regeneration treatment in which at least one of the regeneration of weakly acidic cation exchange resin 307 using acidic electrolytic water and the regeneration of weakly basic anion exchange resin 308 using alkaline electrolytic water is performed and before the start of the water softening treatment, controller 326 does not shift to the electrode regeneration treatment but shifts to the water softening treatment.

According to such a configuration, it is possible to determine whether or not to shift to the electrode regeneration treatment after performing the water softening treatment and the resin regeneration treatment as one set, and in a case where the electrode regeneration treatment is not necessary, it is possible to shift to the water softening treatment without performing the electrode regeneration treatment after the resin regeneration treatment. Therefore, it is possible to perform control so as not to perform excessive electrode regeneration treatment. Therefore, water softening device 301a that can suppress the consumption of the electrodes and can be used for a long period of time can be provided. Furthermore, since detector 327a detects the voltage of electrolytic tank 309 when the resin regeneration treatment is completed, detector 327a does not need to operate constantly. Therefore, the life of detector 327a can be prolonged.

(3) In water softening device 301a, in a case where the voltage detected by detector 327a is more than or equal to the first reference value, the electrode regeneration treatment and the water softening treatment are executed in parallel.

According to such a configuration, the electrode regeneration treatment and the water softening treatment can be simultaneously performed in parallel. Therefore, since the water softening treatment can be quickly performed after the resin regeneration treatment, the time during which the water softening treatment can be performed can be extended.

(4) In water softening device 301a, when the voltage detected by detector 327a becomes less than the second reference value during the electrode regeneration treatment, the electrode regeneration treatment ends.

According to such a configuration, it is possible to determine the end of the electrode regeneration treatment performed in parallel with the water softening treatment. Therefore, since the end of the electrode regeneration treatment can be determined at an appropriate timing, consumption of the electrodes can be suppressed, and water softening device 301a that can be used for a long period of time can be obtained.

### (Fourth exemplary embodiment-3)

A water softening device 301b according to the fourth exemplary embodiment-3 of the present disclosure is different from the fourth exemplary embodiment-2 in that the voltage of electrolytic tank 309 is detected by detector 327 at a timing after the end of the resin regeneration treatment and before the start of the water softening treatment, and in a case where the voltage of electrolytic tank 309 is more than or equal to the first reference value, the electrode regeneration treatment and the water softening treatment are not performed in parallel, but only the electrode regeneration treatment is performed. Other configurations are similar to those of water softening device 301a according to the fourth exemplary embodiment-2. Hereinafter, the contents described in the fourth exemplary embodiment-2 will be omitted as appropriate, and differences from the fourth exemplary embodiment-2 will be mainly described.

### ((Water softening treatment, resin regeneration treatment, and electrode regeneration treatment))

### ((Water softening treatment))

In water softening device 301b, on-off valve 355 provided in water intake port 305 is opened in a state where on-off valve 351 to on-off valve 354 are opened during the water softening treatment. As a result, since the raw water into which the raw water containing the hardness component flows from the outside flows through water softening tank 303 and neutralization tank 304, water softening device 301b can take out softened water (neutral soft water) from water intake port 305.

Then, water softening device 301b executes the resin regeneration treatment when the time zone specified by controller 326 is reached or when the water softening treatment exceeds a certain period of time.

### ((Resin regeneration treatment))

The resin regeneration treatment may be finished after a certain period of time (for example, 7 hours) from the start of the resin regeneration treatment (at the start of operation of anode 311 and cathode 315). Note that the certain time can be arbitrarily set depending on the water quality of the installation region, the hardness of the raw water, the property of the resin, or the like.

After the resin regeneration treatment is completed and before the water softening treatment is started, detector 327a detects the voltage of electrolytic tank 309. In a case where the voltage of electrolytic tank 309 detected by detector 327a is less than the first reference value, controller 326 does not shift to the electrode regeneration treatment but shifts to the water softening treatment. On the other hand, in a case where the voltage of electrolytic tank 309 detected by detector 327a is more than or equal to the first reference value at the time point the resin regeneration treatment is completed, controller 326 proceeds to the electrode regeneration treatment.

### ((Electrode regeneration treatment))

The operations of the resin regeneration treatment and the water softening treatment of water softening device 301b will be sequentially described with reference to the column of "at the time of resin regeneration treatment" in Fig. 21.

In a case where controller 326 shifts from the resin regeneration treatment to the electrode regeneration treatment, on-off valve 351 to on-off valve 355 and on-off valve 361 to on-off valve 366 are closed, and on-off valve 371, on-off valve 372, on-off valve 381, and on-off valve 382 are opened. Then, anode chamber electrolytic water drainage flow path 390 and cathode chamber electrolytic water drainage flow path 392 are formed.

Then, when acidic electrolytic water circulation pump 323 and alkaline electrolytic water circulation pump 324 are operated, water stored in acidic electrolytic water storage tank 319 and alkaline electrolytic water storage tank 321 flows through electrolytic tank 309, and is further drained from flow path 335 and flow path 336.

Furthermore, in the electrode regeneration treatment, controller 326 energizes electrodes such that cathode 315 has higher potential than anode 311 (reverse electrolysis). Thus, alkaline electrolytic water can be generated in anode chamber 314, and acidic electrolytic water can be generated in cathode chamber 318.

At this time, the acidic electrolytic water generated in cathode chamber 318 can dissolve the solid precipitated on cathode 315. As a result, the voltage of electrolytic tank 309 detected by detector 327a decreases.

During the electrode regeneration treatment, detector 327a detects the voltage of electrolytic tank 309. Controller 326 compares the voltage of electrolytic tank 309 detected by detector 327a with the second reference value, and determines the end of the electrode regeneration treatment. Note that the second reference value is set to a predetermined voltage value according to the degree of dissolution of the solid precipitated on cathode 315. As the predetermined voltage value, for example, a value higher than the voltage at the initial stage of the resin regeneration treatment may be set as the second reference value. In this case, a certain amount of the solid precipitated on cathode 315 can be dissolved. Furthermore, more preferably, the voltage at the initial stage of the resin regeneration treatment is set as the second reference value. In this case, most of the solid precipitated on cathode 315 can be dissolved.

Specifically, in a case where the voltage of electrolytic tank 309 detected by detector 327a is more than or equal to the second reference value, controller 326 continues the electrode regeneration treatment.

On the other hand, in a case where the voltage of electrolytic tank 309 is less than the second reference value, controller 326 ends the electrode regeneration treatment and proceeds to the water softening treatment. At the end of the electrode regeneration treatment, on-off valve 371, on-off valve 372, on-off valve 381, and on-off valve 382 are closed, and the energization to anode 311 and cathode 315 is stopped. Furthermore, the operations of acidic electrolytic water circulation pump 323, alkaline electrolytic water circulation pump 324, and detector 327a are stopped. Then, on-off valve 351 to on-off valve 355 are opened, and the process proceeds to the water softening treatment.

As described above, in water softening device 301, the water softening treatment, the resin regeneration treatment, and the electrode regeneration treatment are repeatedly executed.

As described above, according to water softening device 301 of the fourth exemplary embodiment-3, the following effects can be obtained in addition to the effects (2) to (4) of the fourth exemplary embodiment-2.

(5) In water softening device 301b, in a case where the voltage detected by detector 327b is more than or equal to the first reference value, the process proceeds to the electrode regeneration treatment and then proceeds to the water softening treatment.

According to such a configuration, in a case where the voltage of electrolytic tank 309 becomes more than or equal to the first reference value during the resin regeneration treatment, the treatment proceeds to the water softening treatment after the electrode regeneration treatment is performed. Therefore, the electrode regeneration treatment and the water softening treatment are not simultaneously performed, and the control of water softening device 301 can be simplified.

The present disclosure has been described above based on the exemplary embodiments. It will be understood by those skilled in the art that the exemplary embodiments are merely examples, that the components or the processes disclosed in the exemplary embodiments may be combined as various modifications, and that such modifications also fall within the scope of the present disclosure.

In water softening device 301 according to the fourth exemplary embodiment-1, the number of water softening tanks 303 and the number of neutralization tanks 304 are two, respectively, but the present disclosure is not limited thereto. For example, one each may be used. This simplifies the device configuration. Furthermore, for example, the number may be three or more. As a result, since the number of times of alternately performing water softening and neutralization in the water softening treatment increases, the water softening performance can be further improved.

Furthermore, in water softening device 301 according to the fourth exemplary embodiment-1, the flow path length and the flow path cross-sectional area of first water softening tank 303a and second water softening tank 303b are equal to each other, but the present disclosure is not limited thereto. For example, the flow path length or the flow path cross-sectional area may be different, or both the flow path length and the flow path cross-sectional area may be different. Even in this case, the same effects as those of the fourth exemplary embodiment-1 can be obtained.

Furthermore, in water softening device 301 according to the fourth exemplary embodiment-1, the volumes of first weakly acidic cation exchange resin 307a filled in first water softening tank 303a and second weakly acidic cation exchange resin 307b filled in second water softening tank 303b are the same, but the present disclosure is not limited thereto. For example, the volumes of first weakly acidic cation exchange resin 307a and second weakly acidic cation exchange resin 307b may be different from each other, or different types of weakly acidic cation exchange resins 307 may be used. As a result, the water softening performance can be adjusted, and water softening device 301 having water softening performance according to the purpose can be obtained.

Furthermore, in water softening device 301 according to the fourth exemplary embodiment-1, the flow path lengths and the flow path cross-sectional areas of first neutralization tank 304a and second neutralization tank 304b are equal to each other, but the present disclosure is not limited thereto. For example, the same effect as that of the fourth exemplary embodiment-1 can be obtained in this manner in which the flow path length or the flow path cross-sectional area may be different, or both the flow path length and the flow path cross-sectional area may be different.

Furthermore, in water softening device 301 according to the fourth exemplary embodiment-1, the volumes of first weakly basic anion exchange resin 308a filled in first neutralization tank 304a and second weakly basic anion exchange resin 308b filled in second neutralization tank 304b are the same, but the present disclosure is not limited thereto. For example, the volumes of first weakly basic anion exchange resin 308a and second weakly basic anion exchange resin 308b may be different from each other, or different types of weakly basic anion exchange resins 308 may be used. However, the volume of second weakly basic anion exchange resin 308b filled in second neutralization tank 304b may be a volume sufficient to adsorb hydrogen ions released from second water softening tank 303b and to make acidic soft water flowing in from second water softening tank 303b into neutral soft water. As a result, the water softening performance can be adjusted, and water softening device 301 having water softening performance according to the purpose can be obtained.

Furthermore, in water softening device 301 according to the fourth exemplary embodiment-1, the acidic electrolytic water is flowed through in the order of second water softening tank 303b and first water softening tank 303a, but the present disclosure is not limited thereto. For example, the acidic electrolytic water may be flowed through first water softening tank 303a and second water softening tank 303b in this order. Furthermore, in water softening device 301 according to the fourth exemplary embodiment-1, the acidic electrolytic water is flowed from the downstream side of water softening tank 303, but may be flowed from the upstream side. Also in this way, water softening tank 303 can be regenerated.

Furthermore, in water softening device 301 according to the fourth exemplary embodiment-1, the acidic electrolytic water is flowed through in the order of second water softening tank 303b and first water softening tank 303a, but the present disclosure is not limited thereto. For example, a first regeneration device and a second regeneration device having functions equivalent to those of regeneration device 306 may be used to perform the regeneration treatment in independent distribution routes. As a result, the regeneration treatment of first water softening tank 303a and second water softening tank 303b can be independently performed, and the time required for the regeneration treatment can be shortened.

Furthermore, in water softening device 301 according to the fourth exemplary embodiment-1, the alkaline electrolytic water is flowed through second neutralization tank 304b and first neutralization tank 304a in this order, but the present disclosure is not limited thereto. For example, the alkaline electrolytic water may flow through first neutralization tank 304a and second neutralization tank 304b in this order. Further, in water softening device 301 according to the fourth exemplary embodiment-1, the acidic electrolytic water is flowed from the downstream side of neutralization tank 304, but may be flowed from the upstream side. Also in this way, the regeneration treatment of neutralization tank 304 can be performed.

Furthermore, in water softening device 301 according to the fourth exemplary embodiment-1, the alkaline electrolytic water is flowed through in the order of second neutralization tank 304b and first neutralization tank 304a, but the present disclosure is not limited thereto. For example, a first regeneration device and a second regeneration device having functions equivalent to those of regeneration device 306 may be used to perform the regeneration treatment in independent distribution routes. As a result, the regeneration treatment of first neutralization tank 304a and second neutralization tank 304b can be independently performed, and the time required for the regeneration treatment can be shortened.

Furthermore, in water softening device 301 according to the fourth exemplary embodiment-1, the regeneration treatment is executed when the time zone specified by controller 326 is reached or when the water softening treatment exceeds a certain period of time, but the present disclosure is not limited thereto. For example, an ion concentration detection unit may be provided on the downstream side of second neutralization tank 304b and on the upstream side of on-off valve 355, the ion concentration detection unit may constantly detect the ion concentration (for example, the hardness component concentration) of soft water flowing through flow path 334, and the regeneration treatment may be executed not only in a case where the time zone specified by controller 326 is reached or the water softening treatment exceeds a certain time, but also in a case where the ion concentration exceeds a preset reference value. Thus, the execution of the regeneration treatment can be determined based on the ion concentration of water after flowing through second neutralization tank 304b. Therefore, the state of weakly acidic cation exchange resin 307 in water softening tank 303 can be more accurately determined, and weakly acidic cation exchange resin 307 and weakly basic anion exchange resin 308 can be regenerated at an appropriate timing.

### (Fifth exemplary embodiment)

Many conventional water softening devices using a cation exchange resin have been proposed. For example, a method is known in which a cation exchange resin (strongly acidic ion exchange resin) having a sodium ion as a functional group is used, and calcium ions and magnesium ions, which are hardness components contained in raw water, are ion-exchanged with sodium ions to obtain soft water. When the use of the cation exchange resin is continued, the ion exchange capacity decreases or disappears. That is, ion exchange cannot be performed after all the sodium ions, which are functional groups of the cation exchange resin, are exchanged for calcium ions and magnesium ions, which are hardness components. Therefore, it is necessary to regenerate the cation exchange resin in order to enable ion exchange again. As the regeneration treatment, a treatment of causing regenerating water such as saturated saline water to pass through the cation exchange resin is performed. In such a regeneration treatment, it is necessary to replenish salt periodically according to the amount of soft water used, and it takes time and effort to replenish salt. Furthermore, the use of a large amount of common salt causes environmental problems.

Therefore, as a method for regenerating a cation exchange resin not using common salt, a method is known in which a weakly acidic cation exchange resin is used, and the cation exchange resin is regenerated with acidic electrolytic water generated by electrolysis (See, for example, PTL 1.). The weakly acidic cation exchange resin has a proton (hydrogen ion) at the terminal of the functional group, and softens the raw water by exchanging the hardness component (for example, calcium ions and magnesium ions) in the raw water with the proton. Water softened by the weakly acidic cation exchange resin becomes acidic because protons are released instead of hardness components. In order to neutralize this, a weakly acidic cation exchange resin may be used in combination with a weakly basic anion exchange resin. The weakly basic anion exchange resin neutralizes softened raw water by adsorbing protons and anions contained in water softened by the weakly acidic cation exchange resin. As a method for regenerating a weakly basic anion exchange resin, a method using alkaline electrolytic water generated by electrolysis is known (See, for example, PTL 2.).

The conventional water softening device using such a weakly acidic cation exchange resin has a problem that the water softening device using such a weakly acidic cation exchange resin has a lower hardness reduction ability during the water softening treatment than the water softening device using a strongly acidic cation exchange resin. Therefore, it is required to provide a water softening device that uses a weakly acidic cation exchange resin but has a higher hardness reduction capability.

The present disclosure has been made to solve the above-mentioned conventional problems, and an object of the present disclosure is to provide a water softening device which has high hardness reduction capability and facilitates regeneration of an ion exchange resin.

In order to achieve this object, a water softening device according to the present disclosure includes a water softening tank for softening raw water with a weakly acidic cation exchange resin, a neutralization tank for neutralizing the pH of first soft water flowing out of the water softening tank with a weakly basic anion exchange resin, a branch unit for branching second soft water flowing out of the neutralization tank, and a circulation pipe for supplying the second soft water branched at the branch unit to the water softening tank. The above structure can achieve the intended object.

According to the present disclosure, it is possible to provide a water softening device that has high hardness reduction capability and facilitates regeneration of an ion exchange resin.

An exemplary embodiment of the present disclosure will now be explained with reference to some drawings. Note that the following exemplary embodiments are examples embodying the present disclosure, and do not limit the technical scope of the present disclosure. Furthermore, the drawings described in the exemplary embodiment are schematic views, and the ratios of the sizes and the thicknesses of the components in the drawings do not necessarily reflect the actual dimensional ratios.

The fifth exemplary embodiment includes at least the fifth exemplary embodiment-1 and the fifth exemplary embodiment-2 described below.

### (Fifth exemplary embodiment-1)

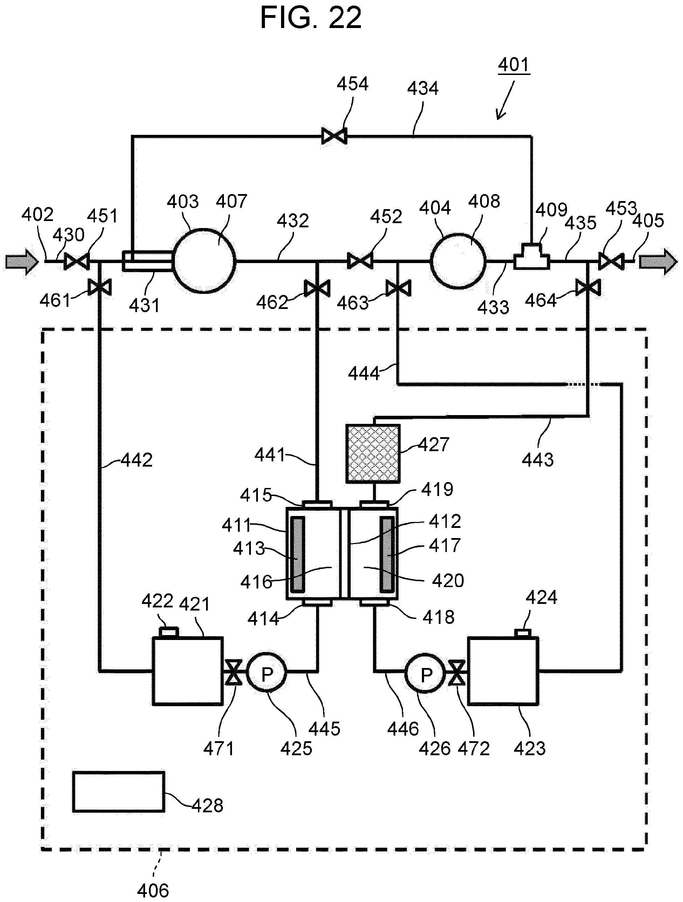

With reference to Fig. 22, water softening device 401 according to the fifth exemplary embodiment-1 of the present disclosure will be described. Fig. 22 is a conceptual diagram illustrating a configuration of water softening device 401 according to the fifth exemplary embodiment-1 of the present disclosure. Note that Fig. 22 conceptually illustrates each element of water softening device 401.

Water softening device 401 is a device that generates neutral soft water from raw water containing a hardness component supplied from the outside. Specifically, as illustrated in Fig. 22, water softening device 401 includes inlet port 402, water softening tank 403, neutralization tank 404, water intake port 405, regeneration device 406, introduction pipe 431, branch unit 409, and circulation pipe 434. Note that the raw water is water (water to be treated) introduced into the device from inlet port 402, and is, for example, raw water or well water. The raw water includes hardness components (e.g. calcium and magnesium ions). Although details will be described later, by treating the raw water, the raw water becomes diluted raw water, first soft water, or second soft water. That is, by performing the water softening treatment using water softening device 401, neutral soft water having reduced hardness can be obtained, and the soft water can be used even in an area where the hardness of raw water is high.

Details of water softening tank 403, neutralization tank 404, regeneration device 406, introduction pipe 431, branch unit 409, and circulation pipe 434 will be described later.

Furthermore, water softening device 401 includes a plurality of on-off valves (on-off valve 451 to on-off valve 454, on-off valve 461 to on-off valve 464, on-off valve 471, and on-off valve 472) and a plurality of flow paths (flow path 430, flow path 432, flow path 433, flow path 435, first supply flow path 441, first collection flow path 442, second supply flow path 443, and second collection flow path 444), which will be described later in detail. Note that as the plurality of flow paths (Flow path 430, flow path 432, flow path 433, flow path 435, first supply flow path 441, first collection flow path 442, second supply flow path 443, and second collection flow path 444), for example, a pipe such as a pipe may be used.

Inlet port 402 is connected to a supply source of the raw water and flow path 430. Inlet port 402 is an opening through which raw water is introduced into the device.

Water intake port 405 is an opening through which neutral soft water (second soft water) treated by water softening tank 403 and neutralization tank 404 is discharged to the outside of water softening device 401. Water intake port 405 is connected to flow path 435. That is, in water softening device 401, the soft water after the water softening treatment can be taken out from water intake port 405 by the pressure of the raw water flowing in from inlet port 402.

Flow path 430, introduction pipe 431, flow path 432, flow path 433, branch unit 409, circulation pipe 434, and flow path 435 connect between inlet port 402 and water intake port 405.

Flow path 430 is a flow path connecting from inlet port 402 to introduction pipe 431. That is, flow path 430 is a flow path that guides raw water containing a hardness component from inlet port 402 to introduction pipe 431.

Introduction pipe 431 is connected to flow path 430, circulation pipe 434, and water softening tank 403. Introduction pipe 431 is a pipe that joins flow path 430 and circulation pipe 434 and connects them to water softening tank 403. That is, introduction pipe 431 is a pipe that merges the raw water containing the hardness component flowing in from flow path 430 and the second soft water neutralized in neutralization tank 404 flowing in from circulation pipe 434, and guides the merged water (diluted raw water) to water softening tank 403. The raw water and the second soft water are mixed by introduction pipe 431 to become diluted raw water. That is, the hardness of the raw water can be diluted by introduction pipe 431, and the diluted raw water having a hardness lower than that of the raw water can be introduced into water softening tank 403.

Flow path 432 is a flow path connecting from water softening tank 403 to neutralization tank 404. That is, flow path 432 is a flow path for guiding the acidic soft water (first soft water) softened in water softening tank 403 to neutralization tank 404.

Flow path 433 is a flow path connecting from neutralization tank 404 to branch unit 409. That is, flow path 433 is a flow path that guides neutral soft water (second soft water) neutralized in neutralization tank 404 to branch unit 409.

Branch unit 409 is connected to flow path 433, circulation pipe 434, and flow path 435. Branch unit 409 branches the second soft water flowing in from flow path 433 into circulation pipe 434 and flow path 435. Branch unit 409 is, for example, a joint. The second soft water supplied to circulation pipe 434 by branch unit 409 is supplied to introduction pipe 431 in order to dilute the raw water. On the other hand, the second soft water supplied to flow path 435 by circulation pipe 434 is supplied to water intake port 405 and can be used as neutral soft water.

Circulation pipe 434 is a flow path connecting from branch unit 409 to introduction pipe 431. That is, circulation pipe 434 introduces the second soft water branched by branch unit 409 into introduction pipe 431.

Flow path 435 is a flow path connecting from branch unit 409 to water intake port 405. That is, flow path 435 is a flow path that guides the second soft water branched at branch unit 409 to water intake port 405.

In summary, in water softening device 401, in the water softening treatment, the raw water supplied from the outside flows through inlet port 402, flow path 430, introduction pipe 431, water softening tank 403, flow path 432, neutralization tank 404, flow path 433, and branch unit 409 in this order. The second soft water branched into circulation pipe 434 at branch unit 409 flows through circulation pipe 434, joins the raw water at introduction pipe 431, becomes diluted raw water, and flows to water softening tank 403. Furthermore, the second soft water branched into flow path 435 at branch unit 409 flows through flow path 435 and water intake port 405, and is discharged as neutral soft water.

### ((Water softening tank and neutralization tank))

Water softening tank 403 is connected to introduction pipe 431 on the upstream side, and is connected to flow path 432 on the downstream side. Water softening tank 403 is configured by, for example, filling a cylindrical container with weakly acidic cation exchange resin 407. More specifically, water softening tank 403 includes weakly acidic cation exchange resin 407 having a proton at the terminal of the functional group. Water softening tank 403 softens raw water or diluted raw water containing a hardness component by the action of weakly acidic cation exchange resin 407 to obtain first soft water. water softening tank 403 exchanges cations (Calcium ion, magnesium ion), which are hardness components contained in flowing water (raw water or diluted raw water), with hydrogen ions, so that the hardness of the raw water or diluted raw water is reduced, and the raw water or diluted raw water can be softened. Furthermore, since the terminal of the functional group of weakly acidic cation exchange resin 407 is a proton, weakly acidic cation exchange resin 407 can be regenerated using acidic electrolytic water in the regeneration treatment described later. At this time, cations, which are hardness components taken in during the water softening treatment, are released from weakly acidic cation exchange resin 407.

More specifically, in water softening tank 403, raw water containing a hardness component or diluted raw water is introduced from introduction pipe 431 and passes through weakly acidic cation exchange resin 407 filled inside, thereby softening the raw water containing a hardness component, and allowing the softened first soft water to pass through flow path 432 to neutralization tank 404. However, the first soft water softened by weakly acidic cation exchange resin 407 contains many protons that have been exchanged for hardness components and flowed out, and is acidic water having a low pH.

Here, weakly acidic cation exchange resin 407 is not particularly limited, and a general-purpose one can be used, and examples thereof include one having a carboxyl group (-COOH) as an exchange group. Furthermore, a proton (H⁺) as a counter ion of a carboxyl group may be a cation such as a metal ion or an ammonium ion (NH₄⁺).

Neutralization tank 404 is connected to flow path 432 on the upstream side and is connected to flow path 433 on the downstream side. Neutralization tank 404 is configured by, for example, filling a cylindrical container with weakly basic anion exchange resin 408. Neutralization tank 404 neutralizes the first soft water (acidified soft water) containing protons coming out of water softening tank 403 by the action of weakly basic anion exchange resin 408, and converts the first soft water into neutral second soft water. Specifically, neutralization tank 404 includes weakly basic anion exchange resin 408, and adsorbs protons contained in the first soft water from water softening tank 403, so that the pH of the soft water increases and the neutral second soft water can be obtained. Furthermore, weakly basic anion exchange resin 408 can be regenerated using alkaline electrolytic water in a regeneration treatment to be described later.

More specifically, in neutralization tank 404, proton-containing softened first soft water is introduced from flow path 432 and flows through weakly basic anion exchange resin 408 filled inside, thereby neutralizing the first soft water which is acidic soft water flowing out of water softening tank 403 and allowing the first soft water to pass to the outside via flow path 433, branch unit 409, and flow path 435 as neutral second soft water. That is, neutralization tank 404 neutralizes the first soft water which flows out from water softening tank 403 and is acidic water containing protons released from weakly acidic cation exchange resin 407, thereby flowing out the neutral second soft water. The second soft water is flowed through circulation pipe 434 and flow path 435 by branch unit 409.

Note that in general, the anion exchange resin adsorbs anions together with protons in water passed through the resin. Since anions in water contain an alkali component, the anion exchange resin has a property of adsorbing the alkali component. That is, it can be said that the anion exchange resin has a property of reducing the alkalinity in water. The alkalinity is an amount of an alkali component such as a hydrogen carbonate, a carbonate, or a hydroxide contained in water represented by a concentration of calcium carbonate corresponding to the alkali component, and is an index of an ability to neutralize an acid. Therefore, the alkalinity of the raw water flowing through the neutralization tank including the anion exchange resin may be reduced.

Therefore, weakly basic anion exchange resin 408 of water softening device 401 preferably contains more tertiary amines as an ion exchange group instead of primary amine or secondary amine in order to suppress reduction in alkalinity in neutralization tank 404. This is because weakly basic anion exchange resin 408 having more tertiary amines can suppress reduction in alkalinity of the flowed water as compared with the weakly basic anion exchange resin having more primary amines or secondary amines.

By using weakly basic anion exchange resin 408 having more tertiary amines, it is possible to suppress reduction in alkalinity in neutralization tank 404 when the first soft water flows through neutralization tank 404, and it is possible to maintain the alkalinity of the second soft water at a value close to that of the raw water. When the alkalinity of the second soft water is kept at the same level as that of the raw water, the water after the raw water and the second soft water are mixed has a lower hardness than that of the raw water and has substantially the same alkalinity, and the hardness reduction effect at the time of softening treatment becomes larger.

For example, when the hardness of the raw water is 450 ppm, the alkalinity is 315 ppm, the reduction in alkalinity is small in the neutralization tank, and the alkalinity of the second soft water is 315 ppm, which is about the same as that of the raw water, the alkalinity is the same as that of the raw water even if the raw water hardness is diluted twice with the second soft water. That is, in the water softening tank, water having a hardness of 225 ppm and an alkalinity of 315 ppm is subjected to a water softening treatment. In a case where this water is softened, the alkalinity that buffers pH decrease due to hydrogen ions is present at 315 ppm, and thus even if the hardness of 225 ppm in the raw water is adsorbed to the weakly acidic cation exchange resin, the pH of the raw water takes a value higher than 3 due to the buffering action by the alkalinity. At this time, the hardness of the water after the water softening treatment is close to 0 ppm. Therefore, it is preferable to use weakly basic anion exchange resin 408 having more tertiary amines.

Furthermore, weakly basic anion exchange resin 408 preferably does not have a gel type structure polymerized into a homogeneous gel but has a macroporous structure. This is because weakly basic anion exchange resin 408 having a macroporous structure can suppress reduction in alkalinity of the distributed water more than the weakly basic anion exchange resin having a gel structure. Even in the case of using weakly basic anion exchange resin 408 having a macroporous structure, as in the case of using weakly basic anion exchange resin 408 having more tertiary amines, when the first soft water flows through neutralization tank 404, it is possible to suppress reduction in alkalinity in neutralization tank 404, and it is possible to maintain the alkalinity of the second soft water at a value close to that of the raw water. When the alkalinity of the second soft water is kept at the same level as that of the raw water, the water after the raw water and the second soft water are mixed has a lower hardness than that of the raw water and has substantially the same alkalinity, and the hardness reduction effect at the time of softening treatment becomes larger. Therefore, it is preferable to use weakly basic anion exchange resin 408 having a macroporous structure.

### ((Regeneration device))

Regeneration device 406 is a device that regenerates weakly acidic cation exchange resin 407 in water softening tank 403 and regenerates weakly basic anion exchange resin 408 in neutralization tank 404. Specifically, regeneration device 406 includes electrolytic tank 411, acidic electrolytic water storage tank 421, acidic electrolytic water circulation pump 425, alkaline electrolytic water storage tank 423, alkaline electrolytic water circulation pump 426, capture unit 427, and controller 428. In the regeneration device 406, first supply flow path 441, first collection flow path 442, second supply flow path 443, and second collection flow path 444 are connected to flow path 432, flow path 430, flow path 435, and flow path 432 from inlet port 402 to water intake port 405, respectively.

First supply flow path 441 is a flow path connecting from first discharge port 415 to flow path 432. That is, first supply flow path 441 is a flow path for supplying acidic electrolytic water from electrolytic tank 411 to water softening tank 403. Note that first supply flow path 441 is connected to flow path 432 between water softening tank 403 and on-off valve 452. This makes it possible to suppress mixing of acidic electrolytic water flowing through first supply flow path 441 and alkaline electrolytic water flowing through second collection flow path 444.

First collection flow path 442 is a flow path connecting from flow path 430 to acidic electrolytic water storage tank 421. That is, first collection flow path 442 is a flow path for collecting water containing a hardness component that has passed through water softening tank 403 into acidic electrolytic water storage tank 421.

Second supply flow path 443 is a flow path connecting from second discharge port 419 to flow path 435. That is, second supply flow path 443 is a flow path for supplying alkaline electrolytic water from electrolytic tank 411 to neutralization tank 404.

Second collection flow path 444 is a flow path connecting from flow path 432 to alkaline electrolytic water storage tank 423. That is, second collection flow path 444 is a flow path for collecting water having passed through neutralization tank 404 into alkaline electrolytic water storage tank 423. Note that second collection flow path 444 is connected to flow path 432 between neutralization tank 404 and on-off valve 452. This makes it possible to suppress mixing of acidic electrolytic water flowing through first supply flow path 441 and alkaline electrolytic water flowing through second collection flow path 444.

### ((Electrolytic tank (electrolytic water generation unit)))

Electrolytic tank 411 includes diaphragm 412, anode chamber 416, and cathode chamber 420. Electrolytic tank 411 generates acidic electrolytic water for regenerating weakly acidic cation exchange resin 407 and alkaline electrolytic water for regenerating weakly basic anion exchange resin 408 by electrolysis of water. By generating the acidic electrolytic water and the alkaline electrolytic water in electrolytic tank 411, in a case where the water softening performance of water softening device 401 has deteriorated, the regeneration treatment can be performed. Note that electrolytic tank 411 is configured such that an energization state to anode 413 and cathode 417 can be controlled by controller 428 described later.

Electrolytic tank 411 is separated into anode chamber 416 and cathode chamber 420 by diaphragm 412 provided therein.

Diaphragm 412 separates the inside of electrolytic tank 411 into anode chamber 416 and cathode chamber 420. Diaphragm 412 can suppress mixing of acidic electrolytic water generated in anode chamber 416 and alkaline electrolytic water generated in cathode chamber 420.

Anode chamber 416 includes anode 413, first water intake port 414, and first discharge port 415. In anode chamber 416, acidic electrolytic water is generated by electrolysis of water.

Anode 413 generates hydrogen ions by electrolyzing water. Therefore, in anode chamber 416 including anode 413, the hydrogen ion concentration of water increases to become acidic electrolytic water. As anode 413, for example, a platinum electrode can be used.

First water intake port 414 is connected to water flow path 445. First water intake port 414 is an opening through which acidic electrolytic water stored in acidic electrolytic water storage tank 421 is introduced into anode chamber 416 through water flow path 445.

First discharge port 415 is connected to first supply flow path 441. First discharge port 415 is an opening for supplying acidic electrolytic water containing hydrogen ions generated by anode 413 to water softening tank 403 through first supply flow path 441.

Cathode chamber 420 includes cathode 417, second water intake port 418, and second discharge port 419. In cathode chamber 420, alkaline electrolytic water is generated by electrolysis of water.

Cathode 417 generates hydroxide ions by electrolyzing water. Therefore, in cathode chamber 420 including cathode 417, the hydroxide ion concentration of water increases, and alkaline electrolytic water is obtained. As cathode 417, for example, a platinum electrode can be used.

Second water intake port 418 is connected to water flow path 446. Second water intake port 418 is an opening through which alkaline electrolytic water stored in alkaline electrolytic water storage tank 423 is introduced into cathode chamber 420 through water flow path 446.

Second discharge port 419 is connected to second supply flow path 443. Second discharge port 419 is an opening for supplying alkaline electrolytic water containing hydroxide ions generated in cathode 417 to neutralization tank 404 through second supply flow path 443.

That is, electrolytic tank 411 electrolyzes water (water supplied from acidic electrolytic water storage tank 421) flowing in from first water intake port 414 using anode 413 to generate acidic electrolytic water in anode chamber 416, and discharges the acidic electrolytic water from first discharge port 415. Furthermore, electrolytic tank 411 generates alkaline electrolytic water in cathode chamber 420 by electrolyzing water (water supplied from alkaline electrolytic water storage tank 423) flowing in from second water intake port 418 using cathode 417, and discharges the alkaline electrolytic water from second discharge port 419. More specifically, during the electrolysis, protons are generated by the electrolysis in anode 413, and acidic electrolytic water is generated. Furthermore, during the electrolysis, at cathode 417, hydroxide ions are generated by the electrolysis, and alkaline electrolytic water is generated. Then, electrolytic tank 411 supplies the acidic electrolytic water to water softening tank 403 via first supply flow path 441. Furthermore, electrolytic tank 411 supplies the alkaline electrolytic water to neutralization tank 404 via second supply flow path 443. Although details will be described later, the acidic electrolytic water generated by electrolytic tank 411 is used for regenerating weakly acidic cation exchange resin 407 in water softening tank 403. Furthermore, the alkaline electrolytic water produced by electrolytic tank 411 is used for regenerating weakly basic anion exchange resin 408 in neutralization tank 404.

### ((Capture unit))

Capture unit 427 is provided in second supply flow path 443 at the rear stage of electrolytic tank 411 and the front stage of neutralization tank 404. Capture unit 427 separates a precipitate contained in the alkaline electrolytic water supplied from electrolytic tank 411. The precipitate is a reaction product generated by reaction of hardness components contained in the alkaline electrolytic water when the alkaline electrolytic water is generated in cathode chamber 420 of electrolytic tank 411. For example, when the hardness component in the acidic electrolytic water is calcium ions, mixing with the alkaline electrolytic water causes a reaction in which calcium carbonate or calcium hydroxide is generated.

In a case where capture unit 427 is not provided, the precipitate flows into neutralization tank 404 and accumulates. In a case where the water softening treatment is started after the end of the regeneration treatment, the precipitate is dissolved by the acidic first soft water flowing into neutralization tank 404 and becomes a hardness component. Therefore, since the water having flowed through neutralization tank 404 contains a hardness component, the water softening performance is deteriorated. However, by providing capture unit 427 and separating the precipitates by capture unit 427, accumulation of the precipitates in neutralization tank 404 can be suppressed. Therefore, even when the water softening treatment is started after the end of the regeneration treatment, deterioration of water softening performance can be suppressed.

The form of capture unit 427 is not limited as long as a reaction product with the hardness component contained in the alkaline electrolytic water supplied from electrolytic tank 411 can be separated. For example, a form using a cartridge type filter, a filtration layer using a granular filter material, a cyclone type solid-liquid separator, a hollow fiber membrane, or the like can be mentioned.

### ((Acidic electrolytic water storage tank and alkaline electrolytic water storage tank))

Acidic electrolytic water storage tank 421 is a tank or container including air bleed valve 422. Acidic electrolytic water storage tank 421 secures and stores water to be flowed through when weakly acidic cation exchange resin 407 is regenerated. Acidic electrolytic water storage tank 421 is connected to first collection flow path 442 on the upstream side, and is connected to water flow path 445 on the downstream side. That is, acidic electrolytic water discharged from water softening tank 403 flows into acidic electrolytic water storage tank 421 during the regeneration treatment. Furthermore, acidic electrolytic water is supplied from acidic electrolytic water storage tank 421 to first water intake port 414 by acidic electrolytic water circulation pump 425.

Air release valve 422 is a valve for releasing gas contained in acidic electrolytic water storage tank 421. Air bleed valve 422 can suppress accumulation of gas in the flow path.

Alkaline electrolytic water storage tank 423 is a tank or a container provided with air bleed valve 424. Alkaline electrolytic water storage tank 423 secures and stores water to be flowed through when weakly basic anion exchange resin 408 is regenerated. Alkaline electrolytic water storage tank 423 is connected to second collection flow path 444 on the upstream side, and is connected to water flow path 446 on the downstream side. That is, the alkaline electrolytic water discharged from neutralization tank 404 flows into alkaline electrolytic water storage tank 423 during the regeneration treatment. Furthermore, alkaline electrolytic water is supplied from alkaline electrolytic water storage tank 423 to second water intake port 418 by alkaline electrolytic water circulation pump 426.

Air release valve 424 is a valve for releasing the gas contained in alkaline electrolytic water storage tank 423. Air bleed valve 424 can suppress accumulation of gas in the flow path.

### ((Acidic electrolytic water circulation pump and alkaline electrolytic water circulation pump))

Acidic electrolytic water circulation pump 425 is a device that flows water in a flow path during regeneration treatment by regeneration device 406. Acidic electrolytic water circulation pump 425 is provided in water flow path 445 that communicatively connects between acidic electrolytic water storage tank 421 and first water intake port 414.

Alkaline electrolytic water circulation pump 426 is a device that flows water in the flow path during the regeneration treatment by regeneration device 406. Alkaline electrolytic water circulation pump 426 is provided in water flow path 446 that communicatively connects between alkaline electrolytic water storage tank 423 and second water intake port 418.

Furthermore, acidic electrolytic water circulation pump 425 and alkaline electrolytic water circulation pump 426 are connected to controller 428 to be described later so as to be able to communicate with the controller 428 in a wireless or wired manner.

### ((Controller))

Controller 428 controls water softening treatment for softening raw water containing a hardness component. Furthermore, controller 428 controls the regeneration treatment of weakly acidic cation exchange resin 407 in water softening tank 403 and weakly basic anion exchange resin 408 in neutralization tank 404. Moreover, controller 428 controls switching of the water softening treatment, the regeneration treatment, and the wastewater treatment of water softening device 401. At this time, controller 428 controls operations of anode 413, cathode 417, acidic electrolytic water circulation pump 425, alkaline electrolytic water circulation pump 426, on-off valve 451 to on-off valve 454, on-off valve 461 to on-off valve 464, on-off valve 471, and on-off valve 472, switches water softening treatment, regeneration treatment, and wastewater treatment, and executes each treatment.

Note that controller 428 includes a computer system including a processor and a memory. The computer system functions as a controller by causing the processor to execute a program stored in the memory. In the example explained herein, the program executed by the processor is recorded in the memory of the computer system in advance, but may be provided in a manner recorded in a non-transitory recording medium, such as a memory card, or provided over a telecommunication line such as the Internet.

### ((On-off valve))

A plurality of on-off valves (on-off valve 451 to on-off valve 454, on-off valve 461 to on-off valve 464, on-off valve 471, and on-off valve 472) are provided in the respective flow paths, and are switched between an "open" state and a "closed" state in the respective flow paths. Furthermore, each of the plurality of on-off valves (on-off valve 451 to on-off valve 454, on-off valve 461 to on-off valve 464, on-off valve 471, and on-off valve 472) is connected to controller 428 to be described later so as to be able to communicate with controller 428 in a wireless or wired manner.

### (Water softening treatment and regeneration treatment)

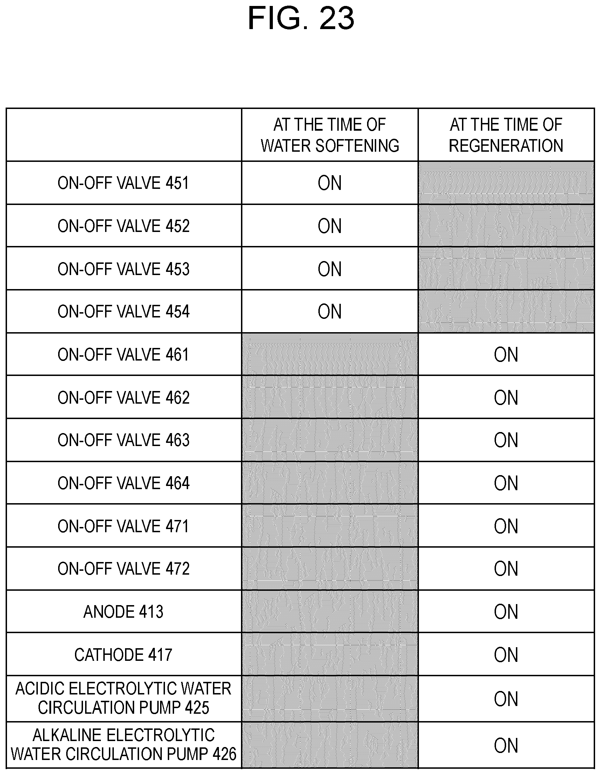

Next, the water softening treatment and the regeneration treatment of water softening device 401 starting from the regeneration treatment will be described with reference to Fig. 23. Fig. 23 is a diagram illustrating a state of water softening device 401 during operation.

In the water softening treatment and the regeneration treatment, as illustrated in Fig. 23, controller 428 switches on-off valve 451 to on-off valve 454, on-off valve 461 to on-off valve 464, on-off valve 471, on-off valve 472, anode 413, cathode 417, acidic electrolytic water circulation pump 425, and alkaline electrolytic water circulation pump 426 to control them to be in their respective flowing states and operating states.

Here, "ON" in Fig. 23 indicates a state in which the corresponding on-off valve is "opened", a state in which anode 413 and cathode 417 are energized, and a state in which acidic electrolytic water circulation pump 425 and alkaline electrolytic water circulation pump 426 are operating. Blanks indicate a state in which the corresponding on-off valve is "closed", a state in which anode 413 and cathode 417 are not energized, and a state in which acidic electrolytic water circulation pump 425 and alkaline electrolytic water circulation pump 426 are stopped.

### (Regeneration treatment)

First, the operation of water softening device 401 at the time of regeneration treatment by regeneration device 406 will be sequentially described with reference to the column of "at the time of regeneration" in Fig. 23.

In water softening device 401, in water softening tank 403 filled with weakly acidic cation exchange resin 407, the cation exchange capacity decreases or disappears as the use is continued. That is, ion exchange cannot be performed after all the hydrogen ions, which are functional groups of the cation exchange resin, are exchanged for calcium ions or magnesium ions, which are hardness components. In such a state, the hardness component is contained in the treatment water. Therefore, in water softening device 401, it is necessary to regenerate water softening tank 403 and neutralization tank 404 by regeneration device 406.

At the time of regeneration, on-off valve 451 to on-off valve 454 are closed, and on-off valve 461 to on-off valve 464, on-off valve 471, and on-off valve 472 are opened. When anode 413, cathode 417, acidic electrolytic water circulation pump 425, and alkaline electrolytic water circulation pump 426 are operated, the water stored in acidic electrolytic water storage tank 421 and alkaline electrolytic water storage tank 423 starts to flow to electrolytic tank 411, water softening tank 403, and neutralization tank 404, and the regeneration treatment is started.

At this time, the acidic electrolytic water generated in anode chamber 416 of electrolytic tank 411 flows from first discharge port 415 through first supply flow path 441, is supplied into water softening tank 403, and flows through weakly acidic cation exchange resin 407 inside. That is, by passing the acidic electrolytic water through weakly acidic cation exchange resin 407, cations (hardness components) adsorbed to weakly acidic cation exchange resin 407 undergo an ion exchange reaction with protons contained in the acidic electrolytic water. As a result, weakly acidic cation exchange resin 407 is regenerated. Thereafter, the acidic electrolytic water flowing through weakly acidic cation exchange resin 407 contains cations and flows into first collection flow path 442. That is, the acidic electrolytic water containing cations having flowed through weakly acidic cation exchange resin 407 is recovered in acidic electrolytic water storage tank 421 via first collection flow path 442.

In this manner, the acidic electrolytic water is caused to flow from the downstream side of water softening tank 403 having weakly acidic cation exchange resin 407. That is, the acidic electrolytic water delivered from electrolytic tank 411 is flowed in water softening tank 403, then collected in acidic electrolytic water storage tank 421, and again flowed from first water intake port 414 into electrolytic tank 411 by acidic electrolytic water circulation pump 425 to be circulated. In this way, by allowing the acidic electrolytic water to flow in from the downstream side, the regeneration efficiency can be enhanced. Note that the downstream side refers to the downstream side in the flow path during the water softening treatment.

On the other hand, the alkaline electrolytic water generated in cathode chamber 420 of electrolytic tank 411 is supplied from second discharge port 419 into neutralization tank 404 through second supply flow path 443 and capture unit 427, and flows through weakly basic anion exchange resin 408 inside. That is, by allowing the alkaline electrolytic water to pass through weakly basic anion exchange resin 408, anions adsorbed on weakly basic anion exchange resin 408 cause an ion exchange reaction with hydroxide ions contained in the alkaline electrolytic water. As a result, weakly basic anion exchange resin 408 is regenerated. Thereafter, the alkaline electrolytic water flowing through weakly basic anion exchange resin 408 contains anions and flows into second collection flow path 444. That is, the alkaline electrolytic water containing anions that has flowed through weakly basic anion exchange resin 408 is recovered into alkaline electrolytic water storage tank 423 via second collection flow path 444.

As described above, the alkaline electrolytic water is flowed from the downstream side of neutralization tank 404 having weakly basic anion exchange resin 408. That is, the alkaline electrolytic water delivered from electrolytic tank 411 is flowed in neutralization tank 404, then collected in alkaline electrolytic water storage tank 423, and again flowed from second water intake port 418 into electrolytic tank 411 by alkaline electrolytic water circulation pump 426 to be circulated. As described above, by allowing the alkaline electrolytic water to flow in from the downstream side, the regeneration efficiency can be enhanced. Note that the downstream side refers to the downstream side in the flow path during the water softening treatment.

Then, when the regeneration treatment is completed, water softening device 401 closes on-off valve 461 to on-off valve 464, on-off valve 471, and on-off valve 472, and stops the operations of anode 413, cathode 417, acidic electrolytic water circulation pump 425, and alkaline electrolytic water circulation pump 426. Furthermore, when on-off valve 451 to on-off valve 454 are opened, water softening treatment is started. Note that the end of the regeneration treatment may be a certain period of time (for example, 7 hours) from the start of the regeneration treatment (at the start of operation of anode 413 and cathode 417).

### (Water softening treatment)

Next, the operation at the time of water softening treatment by water softening device 401 will be described with reference to the column of "at the time of water softening" in Fig. 23.

In water softening device 401, as illustrated in Fig. 23, in the water softening treatment (at the time of water softening), on-off valve 453 provided in water intake port 405 is opened in a state where on-off valve 451 to on-off valve 452 are opened. As a result, the raw water containing the hardness component flows in from the outside. Since the flowed raw water or diluted raw water flows through water softening tank 403 and neutralization tank 404, water softening device 401 can take out softened water (neutral soft water) from water intake port 405. Furthermore, the second soft water branched into circulation pipe 434 by branch unit 409 is used for diluting the raw water. At this time, all of on-off valve 461 to on-off valve 464, on-off valve 471, and on-off valve 472 are in a closed state. Furthermore, the operations of anode 413, cathode 417, acidic electrolytic water circulation pump 425, and alkaline electrolytic water circulation pump 426 are also stopped.

Specifically, immediately after the start of the water softening treatment, the raw water to be supplied is supplied from inlet port 402 to water softening tank 403 through flow path 430 and introduction pipe 431 by the pressure of the raw water. On the other hand, after a lapse of a certain period (for example, 1 minute) from the start of the water softening treatment, since the second soft water is supplied from circulation pipe 434 to introduction pipe 431, the raw water is diluted and supplied to water softening tank 403 as diluted raw water. The raw water or diluted raw water supplied to water softening tank 403 flows through weakly acidic cation exchange resin 407 provided in water softening tank 403. At this time, cations as hardness components in the raw water or the diluted raw water are adsorbed by the action of weakly acidic cation exchange resin 407, and protons are released (ion exchange is performed). Then, by removing cations from the raw water or the diluted raw water, the raw water or the diluted raw water is softened. The water softened by weakly acidic cation exchange resin 407 is referred to as first soft water. Since the first soft water contains a large amount of protons that have been exchanged for the hardness components and flowed out, the first soft water is acidified to be acidic water having a low pH. The first soft water flows through flow path 432 and flows into neutralization tank 404. In neutralization tank 404, protons contained in the first soft water are adsorbed by the action of weakly basic anion exchange resin 408. That is, since protons are removed from the first soft water softened by water softening tank 403, the lowered pH is increased and neutralized. The water obtained by neutralizing the first soft water by neutralization tank 404 is referred to as second soft water. The neutral second soft water flows into branch unit 409 via flow path 433. In branch unit 409, the second soft water is branched into circulation pipe 434 and flow path 435. The second soft water branched into circulation pipe 434 flows through circulation pipe 434 and flows into introduction pipe 431. The second soft water flowing into introduction pipe 431 joins the raw water flowing into introduction pipe 431 through flow path 430 in introduction pipe 431. When the raw water and the second soft water join together, the hardness of the raw water is diluted to become diluted raw water. Although details will be described later, the diluted raw water has less hardness components and more alkalinity components than the raw water, and thus is more easily softened. The diluted raw water flows into water softening tank 403 by introduction pipe 431 and flows through water softening tank 403 to become first soft water. Furthermore, the second soft water branched into flow path 435 at branch unit 409 can flow through flow path 435 and be taken out from water intake port 405.

Then, water softening device 401 executes the regeneration treatment when the time zone specified by controller 428 is reached or when the water softening treatment exceeds a certain period of time. More specifically, in water softening device 401, on-off valve 451 to on-off valve 454 are closed. Furthermore, on-off valve 461 to on-off valve 464, on-off valve 471, and on-off valve 472 are opened, and the operations of anode 413, cathode 417, acidic electrolytic water circulation pump 425, and alkaline electrolytic water circulation pump 426 are started, whereby the process shifts to the regeneration treatment.

As described above, in water softening device 401, the water softening treatment and the regeneration treatment are repeatedly executed.

Here, advantages of supplying the second soft water by circulation pipe 434 and diluting the raw water will be described. In general, in a water softening device, water softening treatment is performed by passing raw water through a weakly acidic cation exchange resin in a water softening tank and a weakly basic anion exchange resin in a neutralization tank.

A general weakly acidic cation exchange resin adsorbs a hardness component according to the following reaction formula. Furthermore, the acid dissociation constant pKa of this reaction is about 3.

[Chemical Formula 1] R - COOH + Ca²⁺ ⇄ ((R - COO)₂+2H⁺

When 1 mol of the hardness ions in the raw water are adsorbed to the weakly acidic cation exchange resin, 2 mol of hydrogen ions are released, and the pH of the raw water is lowered by the released hydrogen ions. Since the acid dissociation constant pKa of the reaction between the weakly acidic cation exchange resin and the hardness ions is about 3, when the pH of the raw water approaches 3, adsorption of the hardness component to the weakly acidic cation exchange resin is unlikely to occur. For example, in a case where raw water having a hardness of 450 ppm and an alkalinity of 315 ppm is softened with a weakly acidic cation exchange resin, the pH of the raw water becomes close to 3 at the time point when the hardness of 365 ppm in the raw water is adsorbed to the weakly acidic cation exchange resin, and adsorption of hardness components is unlikely to occur because the alkalinity that buffers pH decrease due to hydrogen ions is present at 315 ppm. At this time, the hardness of the raw water after the water softening treatment is about 85 ppm, and the hardness component still remains, but it is difficult to further reduce the hardness because of the acid dissociation constant of the weakly acidic cation exchange resin.

However, according to water softening device 401, a part of the second soft water flowing out of neutralization tank 404 is branched by branch unit 409, and the second soft water can be supplied to introduction pipe 431 by circulation pipe 434. As a result, in introduction pipe 431, the hardness of the raw water is diluted with the second soft water having a hardness lower than that of the raw water to become diluted raw water, and the diluted raw water having a hardness lower than that of the raw water is subjected to the water softening treatment in water softening tank 403. For example, in a case where raw water having a hardness of 450 ppm and an alkalinity of 315 ppm is diluted twice with the second soft water, water having a hardness of 225 ppm and an alkalinity of 157 ppm is subjected to a water softening treatment in the water softening tank. Ina case where this diluted raw water is subjected to a water softening treatment, since the alkalinity that buffers pH decrease due to hydrogen ions is present at 157 ppm, when the hardness of 207 ppm in the raw water is adsorbed to the weakly acidic cation exchange resin, the pH of the raw water becomes close to 3, and the adsorption of hardness components is unlikely to occur. At this time, the hardness of the water after the water softening treatment is about 18 ppm, and it is possible to obtain soft water having reduced hardness as compared with the case where raw water having a hardness of 450 ppm and an alkalinity of 315 ppm is treated without diluting the raw water. That is, when the second soft water having the alkalinity similar to that of the raw water is supplied to water softening tank 403 through circulation pipe 434, the hardness of the raw water decreases due to dilution, but the alkalinity does not decrease, and the hardness alkalinity ratio becomes larger than that of the raw water. Here, the hardness alkalinity ratio is a ratio of alkalinity to hardness, and when the alkalinity is constant, the hardness alkalinity ratio increases as the hardness decreases. In a case where water having the same hardness is softened, water having a higher hardness alkalinity ratio can obtain the first soft water in a state where the hardness is further reduced, and the hardness of the soft water flowing out from water intake port 405 can be reduced with respect to the raw water hardness. Therefore, by supplying the second soft water by circulation pipe 434 and mixing the second soft water with the raw water, the hardness of the water flowing into water softening tank 403 can be reduced, and water softening device 401 having high hardness reduction capability can be obtained.

As described above, according to water softening device 401 of the fifth exemplary embodiment-1, the following effects can be obtained.
(1) Water softening device 401 includes water softening tank 403, neutralization tank 404, branch unit 409, and circulation pipe 434. Water softening tank 403 softens the raw water containing the hardness component with weakly acidic cation exchange resin 407. Neutralization tank 404 neutralizes the pH of the first soft water that has passed through water softening tank 403 with weakly basic anion exchange resin 408. Branch unit 409 branches the second soft water flowing out of neutralization tank 404. Circulation pipe 434 supplies the second soft water branched at the branch unit to water softening tank 403.
   As a result, during the water softening treatment, the second soft water branched by branch unit 409 and supplied to water softening tank 403 via circulation pipe 434 dilutes the raw water, and the hardness can be reduced. As the water with diluted raw water hardness flows through water softening tank 403, the hardness of the first soft water after being subjected to the water softening treatment in water softening tank 403 is lower than the hardness of the first soft water obtained when raw water without dilution is subjected to the water softening treatment. Therefore, the hardness of the soft water can be reduced.
(2) Water softening device 401 includes, on the upstream side of water softening tank 403, introduction pipe 431 for mixing raw water and second soft water to obtain diluted raw water and passing the diluted raw water through water softening tank 403.
   According to such a configuration, the raw water and the second soft water flowing out of neutralization tank 404 merge in introduction pipe 431 located on the upstream side of water softening tank 403. That is, the raw water and the second soft water flow into water softening tank 403 in a mixed state. Therefore, since the hardness components of the diluted raw water flow into water softening tank 403 in a relatively uniform state, the variation in the hardness of the first soft water after the water softening treatment is reduced, and the hardness of the soft water flowing out from water intake port 405 can be stabilized.
(3) Water softening device 401 was configured to include weakly basic anion exchange resin 408 having a tertiary amine as an ion exchange group.
   According to such a configuration, in neutralization tank 404, reduction in alkalinity at the time of neutralizing the first soft water can be suppressed. Therefore, when the second soft water is supplied to introduction pipe 431 by circulation pipe 434 to form diluted raw water, the alkalinity of the diluted raw water can be increased, and water softening device 401 having higher water softening performance can be obtained.
(4) Water softening device 401 includes weakly basic anion exchange resin 408 which is a macroporous ion exchange resin.
   According to such a configuration, in neutralization tank 404, reduction in alkalinity at the time of neutralizing the first soft water can be suppressed. Therefore, when the second soft water is supplied to introduction pipe 431 by circulation pipe 434 to form diluted raw water, the alkalinity of the diluted raw water can be increased, and water softening device 401 having higher water softening performance can be obtained.
(5) Water softening device 401 includes electrolytic tank 411 that generates acidic electrolytic water and alkaline electrolytic water, and regeneration device 406 that regenerates weakly acidic cation exchange resin 407 using the acidic electrolytic water generated by electrolytic tank 411 and regenerates weakly basic anion exchange resin 408 using the alkaline electrolytic water generated by electrolytic tank 411.

According to such a configuration, weakly acidic cation exchange resin 407 and weakly basic anion exchange resin 408 can be regenerated using regeneration device 406 including electrolytic tank 411. Therefore, even in a case where the water softening performance has deteriorated, water softening device 401 can perform the regeneration treatment and can repeatedly perform the water softening treatment.

### (Fifth exemplary embodiment-2)

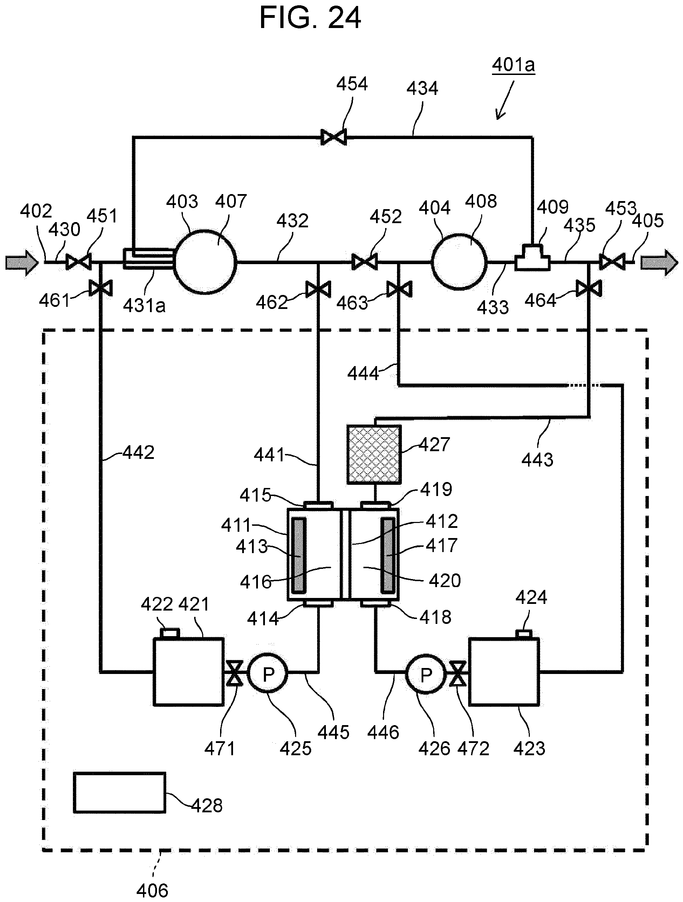

With reference to Fig. 24, water softening device 401a according to the fifth exemplary embodiment-2 of the present disclosure will be described. Fig. 24 is a conceptual diagram illustrating a configuration of water softening device 401a according to the fifth exemplary embodiment-2 of the present disclosure. Note that Fig. 24 conceptually illustrates each element of water softening device 401a. Water softening device 401a according to the fifth exemplary embodiment-2 of the present disclosure is different from the fifth exemplary embodiment-1 in that raw water and second soft water independently pass through water softening tank 403. Other configurations of water softening device 401a are similar to those of water softening device 401 according to the fifth exemplary embodiment-1. Hereinafter, the contents described in the fifth exemplary embodiment-1 will be omitted as appropriate, and differences from the fifth exemplary embodiment-1 will be mainly described.

Water softening device 401a is a device that generates raw water containing a hardness component supplied from the outside as neutral soft water that can be used as living water. Specifically, water softening device 401a includes inlet port 402 for raw water from the outside, water softening tank 403, neutralization tank 404, water intake port 405 for treated soft water, regeneration device 406, introduction pipe 431a, branch unit 409, and circulation pipe 434.

Introduction pipe 431a causes raw water containing a hardness component flowing in from flow path 430 and second soft water flowing in from circulation pipe 434 to independently flow into water softening tank 403. Flow path 430 and circulation pipe 434 are independently connected to the inside of introduction pipe 431a. The raw water and the second soft water introduced into water softening tank 403 by introduction pipe 431a are mixed in water softening tank 403 to become diluted raw water.

As described above, water softening device 401a according to the present the fifth exemplary embodiment-2 can obtain the following effects in addition to the effects (1) and effects (3) to (5) described in the fifth exemplary embodiment-1.

(6) Water softening device 401a includes an introduction pipe 431a that allows raw water and second soft water to independently pass through water softening tank 403.

According to such a configuration, the raw water flowing into introduction pipe 431a through flow path 430 and the second soft water flowing into introduction pipe 431a through circulation pipe 434 independently flow into water softening tank 403 and are mixed in water softening tank 403. The raw water hardness is diluted by mixing the raw water and the second soft water. As a result, during the water softening treatment, the second soft water branched by branch unit 409 and supplied to water softening tank 403 via circulation pipe 434 dilutes the raw water, and the hardness can be reduced. As the water with diluted raw water hardness flows through water softening tank 403, the hardness of the first soft water after being subjected to the water softening treatment in water softening tank 403 is lower than the hardness of the first soft water obtained when raw water without dilution is subjected to the water softening treatment. Therefore, the hardness of the soft water can be reduced, and water softening device 401a having high hardness reduction capability can be provided.

The present disclosure has been described above based on the exemplary embodiments. It will be understood by those skilled in the art that the exemplary embodiments are merely examples, that the components or the processes disclosed in the exemplary embodiments may be combined as various modifications, and that such modifications also fall within the scope of the present disclosure.

### (Modified example)

Furthermore, in water softening device 401 according to the fifth exemplary embodiment-1, when the time zone specified by controller 428 is reached or when the water softening treatment exceeds a certain period of time, the regeneration treatment is executed, but the present disclosure is not limited thereto. For example, an ion concentration detection unit may be provided on the downstream side of neutralization tank 404 and on the upstream side of on-off valve 453, the ion concentration detection unit may constantly detect the ion concentration (for example, the hardness component concentration) of the second soft water flowing through flow path 435, and the regeneration treatment may be executed not only in a case where the time zone specified by controller 428 is reached or the water softening treatment exceeds a certain time, but also in a case where the ion concentration exceeds a preset reference value. Thus, the execution of the regeneration treatment can be determined based on the ion concentration of water after flowing through neutralization tank 404. Therefore, the state of weakly acidic cation exchange resin 407 in water softening tank 403 can be more accurately determined, and weakly acidic cation exchange resin 407 and weakly basic anion exchange resin 408 can be regenerated at an appropriate timing.

Furthermore, in water softening device 401 according to the fifth exemplary embodiment-1, the acidic electrolytic water and the alkaline electrolytic water generated by electrolytic tank 411 flow without being mixed, and flow into electrolytic tank 411, but the present disclosure is not limited thereto. For example, the acidic electrolytic water after flowing through water softening tank 403 and the alkaline electrolytic water after flowing through neutralization tank 404 may be merged and supplied to electrolytic tank 411. In this way, one water storage tank and one circulation pump may be provided, so that the number of components can be reduced.

Furthermore, in water softening device 401 according to the fifth exemplary embodiment-1, one water softening tank 403 and one neutralization tank 404 are provided, but the present disclosure is not limited thereto. For example, a plurality of water softening tanks 403 and a plurality of neutralization tanks 404 may be provided and alternately installed. In this way, it is possible to provide a water softening device having a higher water softening ability.

Furthermore, in water softening device 401 according to the fifth exemplary embodiment-1, acidic electrolytic water or alkaline electrolytic water is introduced from the downstream sides of water softening tank 403 and neutralization tank 404, respectively, at the time of the regeneration treatment, but the present disclosure is not limited thereto. For example, acidic electrolytic water and alkaline electrolytic water may be introduced from the upstream side of water softening tank 403 or neutralization tank 404, respectively. Also in this way, weakly acidic cation exchange resin 407 or weakly basic anion exchange resin 408 can be regenerated.

### (Outline of present disclosure)

A water softening device according to the present disclosure includes a water softening tank, a neutralization tank, a branch unit, and a circulation pipe. The water softening tank softens raw water containing a hardness component with a weakly acidic cation exchange resin. The neutralization tank neutralizes the pH of the first soft water flowing out of the water softening tank with a weakly basic ion exchange resin. The branch unit branches the second soft water flowing out of the neutralization tank. The circulation pipe supplies the second soft water branched at the branch unit to the water softening tank. Thus, during the water softening treatment, the second soft water branched by the branch unit and supplied to the water softening tank via the circulation pipe dilutes the raw water, and the hardness can be reduced. As the water with the diluted raw water hardness flows through the water softening tank, the hardness of the first soft water after being subjected to the water softening treatment in the water softening tank is lower than the hardness of the first soft water obtained when the raw water without dilution is subjected to the water softening treatment. Therefore, the hardness of soft water can be reduced, and a water softening device having high water softening ability can be provided.

Furthermore, the water softening device according to the present disclosure may be configured to include an introduction pipe for mixing raw water and second soft water on the upstream side of the water softening tank to obtain diluted raw water and allowing the diluted raw water to pass through the water softening tank. As a result, the raw water and the second soft water flowing out of the neutralization tank join together in the introduction pipe positioned on the upstream side of the water softening tank. That is, the raw water and the second soft water flow into the water softening tank in a mixed state. Therefore, since the hardness components in the diluted raw water flow into the water softening tank in a relatively uniform state, the variation in hardness of the first soft water after the water softening treatment is reduced, and the hardness of the soft water flowing out from the water intake port can be stabilized.

Furthermore, the water softening device according to the present disclosure may be configured to include an introduction pipe through which the second soft water and the raw water independently pass into the water softening tank. As a result, the raw water and the second soft water are mixed in the water softening tank, and water having hardness lower than that of the raw water is softened in the water softening tank. Therefore, the hardness of the soft water flowing into the water softening tank can be reduced, and the water softening device has high hardness reduction capability.

Furthermore, in the water softening device according to the present disclosure, the weakly basic anion exchange resin may include a tertiary amine as an ion exchange group. According to such a configuration, in neutralization tank 404, reduction in alkalinity at the time of neutralizing the first soft water can be suppressed. Therefore, when the second soft water is supplied to introduction pipe 431 by circulation pipe 434 to form diluted raw water, the alkalinity of the diluted raw water can be increased, and water softening device 401 having higher water softening performance can be obtained. Therefore, the present disclosure provides a water softening device having high hardness reduction capability as compared with a conventional water softening device.

Furthermore, in the water softening device according to the present disclosure, the weakly basic anion exchange resin may include a macroporous ion exchange resin. As a result, when the first soft water flows through the neutralization tank, reduction in alkalinity can be suppressed, and the alkalinity of the second soft water can be maintained at a value close to that of the raw water. When the alkalinity of the second soft water is kept at the same level as that of the raw water, the water after the raw water and the second soft water are mixed has a lower hardness than that of the raw water and has substantially the same alkalinity. Therefore, the present disclosure provides a water softening device having high hardness reduction capability as compared with a conventional water softening device.

Furthermore, the water softening device according to the present disclosure may include an electrolytic water generation unit that generates acidic electrolytic water and alkaline electrolytic water, and a regeneration device that regenerates a weakly acidic cation exchange resin using the acidic electrolytic water generated by the electrolytic water generation unit and regenerates a weakly basic anion exchange resin using the alkaline electrolytic water generated by the electrolytic water generation unit. This makes it possible to regenerate the weakly acidic cation exchange resin and the weakly basic anion exchange resin after the water softening treatment. Therefore, the water softening device is capable of repeatedly performing the water softening treatment.

### (Sixth exemplary embodiment)

In a conventional water softening device, as a method for regenerating a cation exchange resin without using salt, a method of regenerating a cation exchange resin with acidic electrolytic water generated by electrolysis is known (See, for example, PTL 1.). The weakly acidic cation exchange resin has a proton at the terminal of the functional group, and softens raw water by exchanging hardness components (for example, calcium ions and magnesium ions) in raw water with hydrogen ions. The raw water softened with the weakly acidic cation exchange resin contains hydrogen ions and is acidic. The hydrogen ions in the soft water are adsorbed to the weakly basic anion exchange resin, whereby the softened raw water is neutralized. In a conventional water softening device, as a method for regenerating a weakly basic anion exchange resin, a method for regenerating a weakly basic anion exchange resin with alkaline electrolytic water generated by electrolysis is known (See, for example, PTL 2.).

In such a conventional water softening device, as the regeneration treatment of the weakly acidic cation exchange resin and the weakly basic anion exchange resin proceeds, the hardness of the acidic electrolytic water increases due to the hardness component (for example, calcium ions and magnesium ions) released from the water softening tank. Therefore, in a system in which the acidic electrolytic water having increased hardness is electrolyzed again and reused for the regeneration treatment, the hardness of the acidic electrolytic water increases as the time from the start of the regeneration treatment elapses. After the end of the regeneration treatment, the process proceeds to the water softening treatment, but immediately after the start of the water softening treatment, the mixed water of the raw water flowing into the device and the acidic electrolytic water having increased hardness flows through the water softening device, so that the hardness of the mixed water becomes higher than that of the raw water, and there is a problem that initial water softening performance is deteriorated, that is, the quality of the soft water is deteriorated.

As a means for preventing this, a method of draining soft water obtained at the initial stage of the water softening treatment is conceivable, but since highly hard neutral water caused by acidic electrolytic water flows through the weakly acidic ion exchange resin at the time of draining, there arises a problem that hardness components are adsorbed to the weakly acidic cation exchange resin, and the amount of water that can maintain the quality of soft water to be supplied is reduced.

Furthermore, in the regeneration treatment, a precipitate is generated by the reaction between the hardness component and the alkaline electrolytic water. When this precipitate flows into the ion exchange resin, the ion exchange performance is deteriorated, so that it is also conceivable to provide a capture unit that captures the precipitate. However, in this case, since precipitates are gradually deposited on the capture unit, there is a problem that a single treatment needs to be performed to remove the precipitates.

The present disclosure has been made to solve the above problems, and an object of the present disclosure is to provide a water softening device capable of removing precipitates while suppressing deterioration in water softening performance and maintaining the quality of soft water for a long period of time.

In order to achieve this object, a water softening device according to the present disclosure includes: a water softening tank that softens raw water used in a water softening treatment and containing a hardness component with a weakly acidic cation exchange resin; a neutralization tank that neutralizes the pH of the soft water used in the water softening treatment and having passed through the water softening tank with a weakly basic anion exchange resin; an electrolytic tank that generates acidic electrolytic water used in a regeneration treatment and regenerating the weakly acidic cation exchange resin in the water softening tank and alkaline electrolytic water that regenerates the weakly basic anion exchange resin in the neutralization tank; a water softening tank regenerating flow path that communicates the water softening tank with the electrolytic tank independently of the neutralization tank; a neutralization tank regeneration flow path that communicates the neutralization tank and the electrolytic tank independently of the water softening tank, a capture unit that captures a precipitate caused by the acidic electrolytic water introduced into the electrolytic tank from the water softening tank through the water softening tank regeneration flow path and a precipitate caused by the hardness component contained in the alkaline electrolytic water introduced into the electrolytic tank from the neutralization tank through the neutralization tank regeneration flow path during the regeneration treatment; and a controller that controls the water softening treatment and the regeneration treatment, in which the controller executes a regeneration flow path washing treatment of discharging water containing the hardness component in the water softening tank regeneration flow path to the outside of the device after completion of the regeneration treatment, and an electrolytic tank washing treatment of removing the precipitate caused by the hardness component in the electrolytic tank and the neutralization tank regeneration flow path, and, after completion of the regeneration flow path washing treatment and the electrolytic tank washing treatment, a capture unit washing treatment of removing the precipitate captured by the capture unit is executed, and after completion of the capture unit washing treatment, the water softening treatment is executed, thereby achieving a desired object.

According to the present disclosure, it is possible to provide a water softening device capable of preventing a decrease in water softening performance caused by high hardness water generated during a regeneration treatment and maintaining the water softening performance.

An exemplary embodiment of the present disclosure will now be explained with reference to some drawings. Note that the following exemplary embodiments are merely examples of exemplary embodiments of the present disclosure, and are not intended to limit the technical scope of the present disclosure in any way. Furthermore, the drawings explained in the exemplary embodiments are schematic representations, and the ratios of the sizes and the thicknesses of the elements in each of the drawings do not necessarily reflect the actual dimensional ratios.

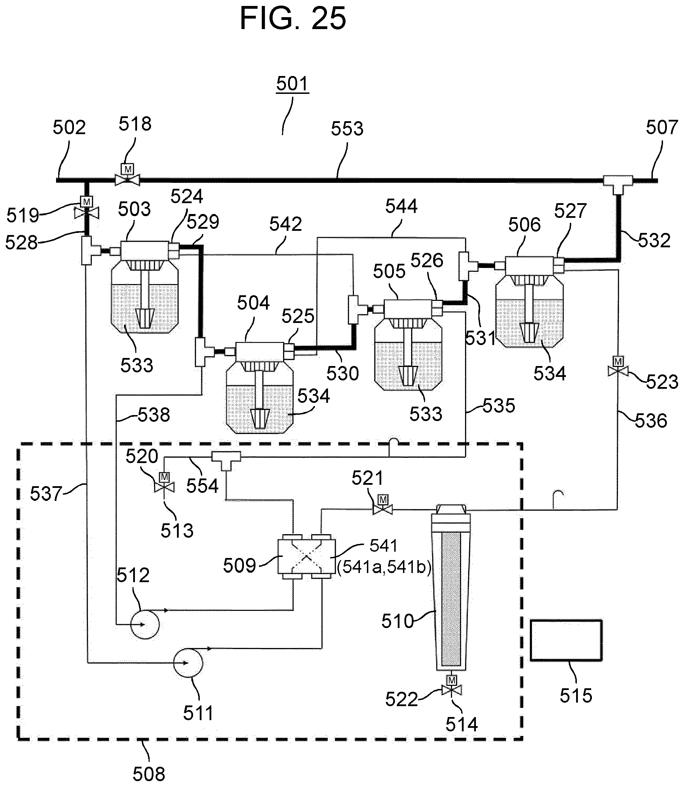

With reference to Fig. 25, water softening device 501 according to the sixth exemplary embodiment of the present disclosure will be described. Fig. 25 is a conceptual diagram illustrating a configuration of water softening device 501 according to the sixth exemplary embodiment of the present disclosure. Note that Fig. 25 conceptually illustrates each element of water softening device 501.

### (Overall configuration)

Water softening device 501 is a device that generates neutral soft water from raw water containing a hardness component supplied from the outside. Note that the raw water is water (water to be treated) introduced into the device from inlet port 502, and is, for example, city water or well water. The raw water includes a hardness component (e.g. calcium or magnesium ions). By performing the water softening treatment using water softening device 501, neutral soft water having reduced hardness can be obtained, and soft water can be used even in an area where the hardness of raw water is high.

Specifically, as illustrated in Fig. 25, water softening device 501 includes inlet port 502, a water softening tank, a neutralization tank, water intake port 507, regeneration device 508, and controller 515.

Furthermore, water softening device 501 includes drainage port 513, a plurality of on-off valves (on-off valve 518, on-off valve 519, on-off valve 520, on-off valve 521, on-off valve 522, and on-off valve 523), and a plurality of flow path switching valves (flow path switching valves 524 to 527). Details of these will be described later.

### (Inlet port and water intake port)

Inlet port 502 is connected to a source of raw water. Inlet port 502 is an opening for introducing raw water into water softening device 501.

Water intake port 507 is an opening for supplying the water flowed and softened in water softening device 501 to the outside of the device. Water softening device 501 can take out the water after the water softening treatment from water intake port 507 by the pressure of the raw water flowing in from inlet port 502.

In water softening device 501, in the water softening treatment for performing the water softening treatment, raw water supplied from the outside flows through inlet port 502, flow path 528, first water softening tank 503, flow path 529, first neutralization tank 504, flow path 530, second water softening tank 505, flow path 531, second neutralization tank 506, flow path 532, and water intake port 507 in this order, and is discharged as neutral soft water.

### (Water softening tank)

The water softening tanks (first water softening tank 503 and second water softening tank 505) soften the raw water containing the hardness component by the action of the weakly acidic cation exchange resin. Specifically, in the water softening tank, cations (calcium ion, magnesium ion) which are hardness components contained in flowing water (raw water) are exchanged for hydrogen ions, so that the hardness of the raw water decreases and the raw water is softened. Water softening device 501 according to the present the sixth exemplary embodiment includes first water softening tank 503 and second water softening tank 505 as water softening tanks.

First water softening tank 503 softens the raw water flowing in from inlet port 502. First water softening tank 503 includes flow path switching valve 524. Details of the flow paths switching valves will be collectively described later.

Second water softening tank 505 softens the water flowing through first neutralization tank 504 described later. Second water softening tank 505 includes flow path switching valve 526.

First water softening tank 503 and second water softening tank 505 are filled with weakly acidic cation exchange resin 533.

Weakly acidic cation exchange resin 533 is an ion exchange resin having a hydrogen ion at the terminal of the functional group. Weakly acidic cation exchange resin 533 adsorbs cations (calcium ion, magnesium ion), which are hardness components contained in the raw water to be passed, and releases hydrogen ions. The soft water treated with weakly acidic cation exchange resin 533 contains a large amount of hydrogen ions exchanged for hardness components. That is, the soft water flowing out of first water softening tank 503 and second water softening tank 505 is soft water (acidic soft water) acidified by containing a large amount of hydrogen ions.

Since the terminal of the functional group of weakly acidic cation exchange resin 533 is a hydrogen ion, weakly acidic cation exchange resin 533 can be regenerated using acidic electrolytic water in the regeneration treatment described later. At this time, cations, which are hardness components taken in during the water softening treatment, are released from weakly acidic cation exchange resin 533.

Weakly acidic cation exchange resin 533 is not particularly limited, and general-purpose ones can be used, and examples thereof include those having a carboxyl group (-COOH) as an exchange group. Furthermore, a resin in which a hydrogen ion (H+) as a counter ion of a carboxyl group is substituted by a cation such as a metal ion or an ammonium ion (NH4+) may also be used.

### (Neutralization tank)

The neutralization tanks (first neutralization tank 504 and second neutralization tank 506) neutralize the pH of soft water (acidified soft water) containing hydrogen ions coming out of the water softening tank by the action of weakly basic anion exchange resin 534 to obtain neutral soft water. Specifically, since the neutralization tank adsorbs hydrogen ions contained in the soft water from the water softening tank together with anions (anions), the pH of the soft water increases, and neutral soft water can be obtained. Water softening device 501 according to the present the sixth exemplary embodiment includes a first neutralization tank 504 and a second neutralization tank 506 as neutralization tanks.

First neutralization tank 504 neutralizes the acidic soft water flowing through first water softening tank 503. First neutralization tank 504 includes flow path switching valve 525.

Second neutralization tank 506 neutralizes the acidic soft water flowing through second water softening tank 505. Second neutralization tank 506 includes flow path switching valve 527.

First neutralization tank 504 and second neutralization tank 506 are filled with weakly basic anion exchange resin 534.

Weakly basic anion exchange resin 534 neutralizes hydrogen ions contained in the passed water to produce neutral water. Weakly basic anion exchange resin 534 can be regenerated using alkaline electrolytic water in a regeneration treatment to be described later.

Weakly basic anion exchange resin 534 is not particularly limited, and general-purpose resins can be used, and examples thereof include those in a free base form.

### (Regeneration device)

Regeneration device 508 is a device that regenerates weakly acidic cation exchange resin 533 filled in first water softening tank 503 and second water softening tank 505, and regenerates weakly basic anion exchange resin 534 filled in first neutralization tank 504 and second neutralization tank 506.

Regeneration device 508 includes electrolytic tank 509, capture unit 510, first water pump 511, and second water pump 512. In regeneration device 508, first supply flow path 535, second supply flow path 536, first collection flow path 537, and second collection flow path 538 are connected to second water softening tank 505, second neutralization tank 506, flow path 528, and flow path 529, respectively. Details of each flow path will be described later. Note that first supply flow path 535, second supply flow path 536, first collection flow path 537, second collection flow path 538, the neutralization tank bypass flow path 542, and the water softening tank bypass flow path 544 form a water softening tank regeneration circulation flow path 539 and a neutralization tank regeneration circulation flow path 540 described later.

### ((Electrolytic tank))

Electrolytic tank 509 generates acidic electrolytic water and alkaline electrolytic water by electrolyzing water (water supplied from inlet port 502) that has entered using a pair of electrodes 541 (electrode 541a and electrode 541b) provided inside, and discharges the acidic electrolytic water and the alkaline electrolytic water. More specifically, in electrode 541a serving as an anode during electrolysis in the regeneration treatment, hydrogen ions are generated by electrolysis, and acidic electrolytic water is generated. Furthermore, in electrode 541b serving as a cathode during electrolysis in the regeneration treatment, hydroxide ions are generated by electrolysis, and alkaline electrolytic water is generated. Electrolytic tank 509 supplies the acidic electrolytic water to first water softening tank 503 and second water softening tank 505 via first supply flow path 535 and neutralization tank bypass flow path 542, and supplies the alkaline electrolytic water to first neutralization tank 504 and second neutralization tank 506 via second supply flow path 536 and water softening tank bypass flow path 544. Although details will be described later, the acidic electrolytic water generated by electrolytic tank 509 is used for regenerating weakly acidic cation exchange resin 533 in first water softening tank 503 and second water softening tank 505, and the alkaline electrolytic water generated by electrolytic tank 509 is used for regenerating weakly basic anion exchange resin 534 in first neutralization tank 504 and second neutralization tank 506. Note that electrolytic tank 509 is configured such that an energization state to the pair of electrodes 541 can be controlled by controller 515 described later.

### ((Water pump))

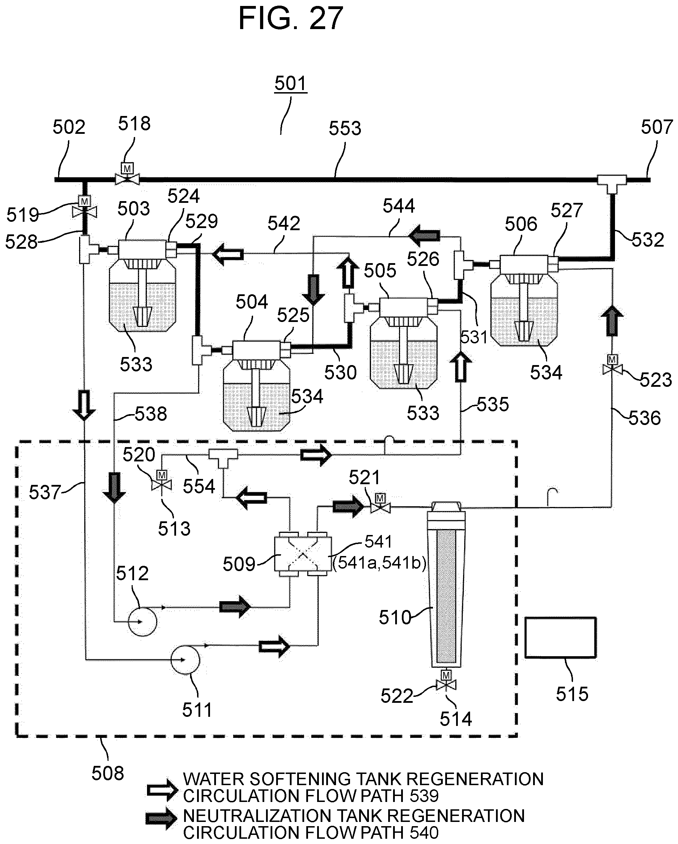

First water pump 511 is a device that flows acidic electrolytic water in water softening tank regeneration circulation flow path 539 (see Fig. 27) during a regeneration treatment by regeneration device 508. First water pump 511 is provided in first collection flow path 537 that communicatively connects between first water softening tank 503 and electrolytic tank 509. Such an arrangement is adopted because acidic electrolytic water can be easily circulated through water softening tank regeneration circulation flow path 539 only by first water pump 511.

Second water pump 512 is a device that flows alkaline electrolytic water through neutralization tank regeneration circulation flow path 540 (see Fig. 27). Second water pump 512 is provided in second collection flow path 538 that communicatively connects between first neutralization tank 504 and electrolytic tank 509. Such an arrangement is adopted because the alkaline electrolytic water can be easily circulated through neutralization tank regeneration circulation flow path 540 only by second water pump 512.

Furthermore, first water pump 511 and second water pump 512 are connected to a controller 515 described later so as to be able to communicate with controller 515 in a wireless or wired manner.

### ((Capture unit))

Capture unit 510 is provided in second supply flow path 536 that communicatively connects electrolytic tank 509 and second neutralization tank 506.

Capture unit 510 catches a precipitate contained in the alkaline electrolytic water fed from electrolytic tank 509. The precipitate is a reaction product generated when hardness components, which are cations released from first water softening tank 503 and second water softening tank 505 during the regeneration treatment, react with alkaline electrolytic water in electrolytic tank 509. More specifically, while the electrolysis of water is performed in electrolytic tank 509, the hardness components (for example, calcium ions and magnesium ions) released from first water softening tank 503 and second water softening tank 505 during the regeneration treatment move to the cathode (electrode 541b) side. Since alkaline electrolytic water is generated on the cathode side, the hardness component and the alkaline electrolytic water react with each other to form a precipitate. For example, when the hardness component is calcium ions, a reaction in which calcium carbonate is generated or calcium hydroxide is generated occurs by mixing the calcium ions with the alkaline electrolytic water. Precipitates derived from the hardness component are captured as precipitates by capture unit 510 provided in second supply flow path 536. The precipitates derived from the hardness components are captured by capture unit 510, so that the precipitates can be prevented from flowing into second neutralization tank 506 and accumulating. Therefore, in a case where the water softening treatment is resumed after the end of the regeneration treatment, it is possible to suppress an increase in hardness of soft water fed from second neutralization tank 506 due to ionization of a precipitate deposited in second neutralization tank 506 by reaction with hydrogen ions released from first water softening tank 503 and second water softening tank 505.

Furthermore, in the regeneration treatment, the alkaline electrolytic water in which the precipitate derived from the hardness component has passed through capture unit 510 flows through second neutralization tank 506 and first neutralization tank 504, is then electrolyzed again in electrolytic tank 509, and is used again as alkaline electrolytic water to regenerate weakly basic anion exchange resin 534. At this time, the hardness component contained in the acidic electrolytic water is reduced as compared with the case where capture unit 510 is not provided. That is, since the hardness of the acidic electrolytic water is reduced by capturing the precipitate by capture unit 510, the hardness components flowing into first water softening tank 503 and second water softening tank 505 can be reduced, and a decrease in the regeneration efficiency of weakly acidic cation exchange resin 533 can be suppressed.

Note that "the hardness component reacts" includes not only a state in which all the hardness components react but also a state in which a component that does not react or a component that does not exceed the solubility product is contained.

The form of capture unit 510 is not limited as long as the precipitate generated by the reaction between the hardness component and the alkaline electrolytic water can be separated. For example, a form using a cartridge type filter, a filtration layer using a granular filter material, a cyclone type solid-liquid separator, a hollow fiber membrane, or the like can be mentioned.

As a means generally used as a form of capture unit 510, a cartridge type filter can be exemplified. As the cartridge type filter, a deep filtration type such as a yarn winding filter, a surface filtration type such as a pleated filter and a membrane filter, or a combination thereof can be used.

The yarn winding filter corresponds to a particle diameter of 1 micrometer to 150 micrometers, and is mainly used as a pre-filter. The pleated filter and the membrane filter exist corresponding to a wide particle diameter of about 0.03 micrometers to 100 micrometers. However, in particular, in the implementation of the present disclosure, it is preferable to use one with an accuracy of 0.5 micrometers or more in order to reduce the possibility of blockage of the filter. Furthermore, it is preferable to use those with an accuracy of 1.5 micrometers or less in order to ensure the capture performance of precipitates. Since alkaline electrolytic water flows in the capture unit 510 in the regeneration treatment described later and acidic electrolytic water flows in the washing treatment, the material of the cartridge-type filter is preferably a material (for example, polypropylene) having high corrosion resistance to acid and alkali.

The granular filter medium used for the filtration layer is intended to capture and remove hardness components, but it is also possible to remove particles having a surface potential to be adsorbed to the granular filter medium, particles having a particle diameter of about 1 micrometer to 10 micrometers, or chromaticity depending on the existence state of ions and the like in raw water. As the granular filter material, a filter material suitable for an object to be removed, such as filtration sand, a pellet fiber filter material, or the like, can be used. The material of the granular filter material may be, for example, a material having hardness that is likely to settle in water and is less likely to be deformed by pressure, such as sand, anthracite, garnet, ceramics, granular activated carbon, iron oxyhydroxide, or manganese sand. The particle diameter may be, for example, 0.3 micrometers to 5.0 millimeters, and the equivalent coefficient may be 1.2 to 2.0.

Furthermore, multilayer filtration method in which a plurality of types of filter materials having different specific gravities are mixed and used is a method in which particles having different sizes are layered in order from smallest particles to largest from the bottom as a layer for filtration. In the multilayer filtration method, particles having a large specific gravity and a small size and particles having a small specific gravity and a large size are usually mixed to form a multilayer structure. The multilayer filtration method is preferable because there are advantages such as high filtration efficiency per unit volume and low head loss as compared with a case where a single kind of filter material is used. As a granular filter material, for example, 0.3 millimeters of garnet, 0.6 meters of sand, and 1.0 millimeters of anthracite are mixed at 2:1:1 and used, and it is preferable to adjust the mixing ratio or the particle diameter according to the particle characteristics of the turbidity.

Capture unit 510 includes on-off valve 522 and a capture unit drainage port 514.

On-off valve 522 is a valve provided below capture unit 510, and is a valve that controls drainage in capture unit 510. By opening on-off valve 522, water in capture unit 510 can be discharged from capture unit drainage port 514 to the outside of the device.

Capture unit drainage port 514 is an opening through which water in capture unit 510 is discharged to the outside of the device. By opening on-off valve 522 provided upstream of capture unit drainage port 514, water in the capture unit can be discharged from capture unit drainage port 514 to the outside of the device.

### (On-off valve and flow path switching valve)

A plurality of on-off valves (on-off valve 518 to on-off valve 523) are provided in the respective flow paths, and switch between an "open" state and a "closed" state in the respective flow paths.

The plurality of on-off valves (on-off valve 518, on-off valve 519, on-off valve 521, and on-off valve 523) start or stop the flow of water to the respective flow paths by opening and closing the valves.

On-off valve 520 and on-off valve 522 are opened at the time of the regeneration flow path washing treatment, the electrolytic tank washing treatment, and the capture unit washing treatment to be described later, and discharge the regenerated circulating water to the outside of the device.

The plurality of flow path switching valves (flow path switching valve 524 to flow path switching valve 527) are provided in first water softening tank 503, second water softening tank 505, first neutralization tank 504, and second neutralization tank 506, respectively. Each of the plurality of flow path switching valves includes three openings. A first opening is an inflow and outflow port through which water can flow in and out, a second opening is an inlet port that does not function as an outflow port and functions as an inlet port, and a third opening is an outflow port that does not function as an inlet port and functions as an outflow port. In each of the plurality of flow path switching valves, the inflow and outflow port is always "opened", and when either the inlet port or the outflow port is "opened" depending on the water flowing direction, the other outflow port is "closed". By providing flow path switching valves 524 to 527, the number of on-off valves required for each flow path in water softening device 501 can be reduced, and the cost of water softening device 501 can be reduced.

Furthermore, the plurality of on-off valves (on-off valve 518 to on-off valve 523) and the plurality of flow path switching valves (flow path switching valve 524 to flow path switching valve 527) are each connected to a controller described later so as to be able to communicate with controller 515 in a wireless or wired manner.

### (Drainage port)

Drainage port 513 is an opening provided at an end of drainage flow path 554, and is an opening for discharging water in the device to the outside of the device in the regeneration path washing treatment and the electrolytic tank washing treatment. On-off valve 520 is provided upstream of drainage port 513, and drainage from drainage port 513 can be performed by opening on-off valve 520.

### (Controller)

The controller controls execution of each treatment of the water softening treatment, the regeneration treatment, the regeneration flow path washing treatment, the electrolytic tank washing treatment, and the capture unit washing treatment, and switching among the treatments.

Specifically, regarding the control of switching among the treatments, controller 515 controls switching from the water softening treatment to the regeneration treatment, switching from the regeneration treatment to the regeneration flow path washing treatment, switching from the regeneration flow path washing treatment to the electrolytic tank washing treatment, switching from the electrolytic tank washing treatment to the capture unit washing treatment, and switching from the capture unit washing treatment to the water softening treatment. Furthermore, controller 515 controls on-off valve 520 and on-off valve 522 to control the drainage in the regeneration flow path washing treatment, the electrolytic tank washing treatment, and the capture unit washing treatment.

In addition, controller 515 controls flow path switching valve 524 to flow path switching valve 527, on-off valve 518, on-off valve 519, on-off valve 521, and on-off valve 523, and executes switching of the flow paths.

### (Flow path)

Flow path 553 is a flow path that communicably connects inlet port 502 and water intake port 507, and on-off valve 518 is provided on the flow path. Even in a case where any one of the regeneration treatment, the regeneration flow path washing treatment, the electrolytic tank washing treatment, and the capture unit washing treatment is performed by flow path 553, the user of water softening device 501 can obtain raw water from water intake port 507.

### (Water softening flow path)

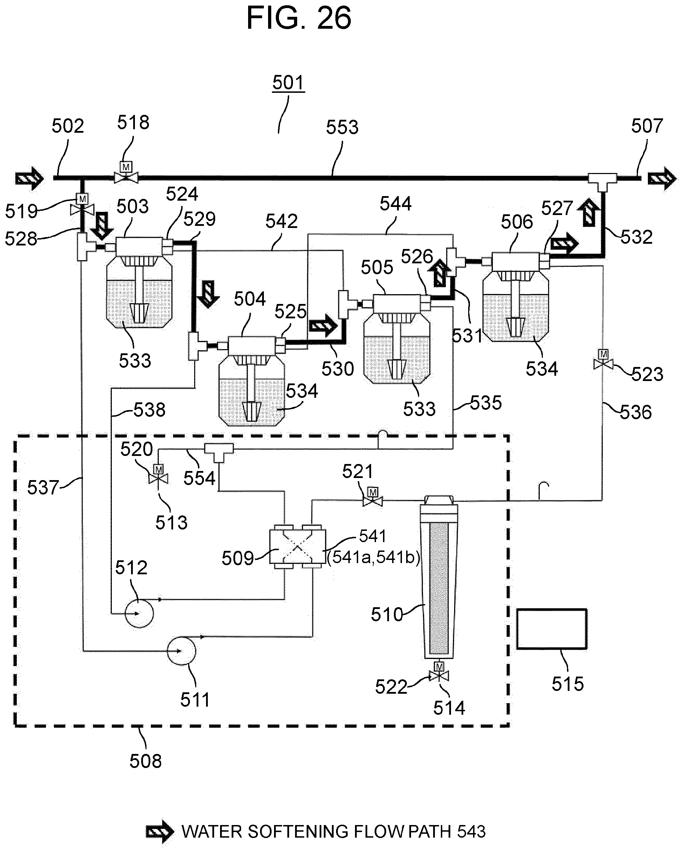

Water softening flow path 543 formed at the time of the water softening treatment of water softening device 501 will be described with reference to Fig. 26. Fig. 26 is a configuration diagram illustrating water softening flow path 543 of water softening device 501.

Water softening flow path 543 (hatched arrow in Fig. 26) is a flow path for softening raw water, and the raw water flowing through water softening flow path 543 becomes neutral soft water and is discharged from water intake port 507 to the outside of the device.

Water softening flow path 543 is formed by inlet port 502, flow path 528, first water softening tank 503, flow path 529, first neutralization tank 504, flow path 530, second water softening tank 505, flow path 531, second neutralization tank 506, flow path 532, and water intake port 507.

Flow path 528 is a flow path connecting from inlet port 502 to first water softening tank 503. That is, flow path 528 is a flow path that guides raw water containing a hardness component from inlet port 502 to first water softening tank 503.

Flow path 529 is a flow path connecting from first water softening tank 503 to first neutralization tank 504. That is, flow path 529 is a flow path for guiding the water softened in first water softening tank 503 to first neutralization tank 504.

Flow path 530 is a flow path connecting from first neutralization tank 504 to second water softening tank 505. That is, flow path 530 is a flow path for guiding the water neutralized in first neutralization tank 504 to second water softening tank 505.

Flow path 531 is a flow path connecting from second water softening tank 505 to second neutralization tank 506. That is, flow path 531 is a flow path for guiding the water softened in second water softening tank 505 to second neutralization tank 506.

Flow path 532 is a flow path connecting from the second neutralization tank to water intake port 507. That is, flow path 532 is a flow path that guides the softened raw water from second neutralization tank 506 to water intake port 507.

As illustrated in Fig. 26, on-off valve 519 is installed on flow path 528 on the downstream side of inlet port 502 and on the upstream side of first water softening tank 503. Furthermore, on-off valve 518 is installed in flow path 553 described later. By closing on-off valve 518 and opening on-off valve 519, first water softening tank 503 and inlet port 502 are communicably connected. Furthermore, flow path switching valve 524 is switched so that first water softening tank 503 and first neutralization tank 504 communicate with each other, flow path switching valve 525 is switched so that second water softening tank 505 and second neutralization tank 506 communicate with each other, flow path switching valve 526 is switched so that first neutralization tank 504 and second water softening tank 505 communicate with each other, and flow path switching valve 527 is switched so that second water softening tank 505 and second neutralization tank 506 communicate with each other. As a result, water softening flow path 543 that communicatively connects from inlet port 502 to the flow path 528, first water softening tank 503, flow path 529, first neutralization tank 504, flow path 530, second water softening tank 505, flow path 531, second neutralization tank 506, flow path 532, and water intake port 507 is formed. At this time, on-off valve 520, on-off valve 521, and on-off valve 523 are closed.

### (Regeneration circulation flow path)

Next, water softening tank regeneration circulation flow path 539 and neutralization tank regeneration circulation flow path 540 formed at the time of the regeneration treatment of water softening device 501 will be described with reference to Fig. 27. Fig. 27 is a configuration diagram illustrating water softening tank regeneration circulation flow path 539 and neutralization tank regeneration circulation flow path 540 of water softening device 501.

First, water softening tank regeneration circulation flow path 539 will be described.

Water softening tank regeneration circulation flow path 539 is a flow path for regenerating first water softening tank 503 and second water softening tank 505 by flowing acidic electrolytic water during the regeneration treatment, and as illustrated in Fig. 27 (white arrow), is a flow path in which water delivered by first water pump 511 flows through electrolytic tank 509, second water softening tank 505, and first water softening tank 503, returns to electrolytic tank 509, and circulates.

Specifically, water softening tank regeneration circulation flow path 539 is constituted by the respective flow paths of first supply flow path 535, neutralization tank bypass flow path 542, and first collection flow path 537 connecting electrolytic tank 509, second water softening tank 505, first water softening tank 503, and first water pump 511.

First supply flow path 535 is a flow path communicably connecting from the downstream side of electrolytic tank 509 to the downstream side of second water softening tank 505, and is a flow path for supplying acidic electrolytic water from electrolytic tank 509 to second water softening tank 505.

Neutralization tank bypass flow path 542 is a flow path that bypasses first neutralization tank 504 and communicatively connects from the upstream side of second water softening tank 505 to the downstream side of first water softening tank 503, and is a flow path for supplying acidic electrolytic water from second water softening tank 505 to first water softening tank 503.

First collection flow path 537 is a flow path that communicably connects from the upstream side of first water softening tank 503 to electrolytic tank 509, and is a flow path that collects acidic electrolytic water containing a hardness component that has passed through first water softening tank 503 and second water softening tank 505 into electrolytic tank 509. First collection flow path 537 is provided with first water pump 511.

Furthermore, water softening tank regeneration circulation flow path 539 is a flow path for introducing the acidic electrolytic water delivered from electrolytic tank 509 into first water softening tank 503 and second water softening tank 505 from the downstream side of first water softening tank 503 and second water softening tank 505, and causing the acidic electrolytic water to flow out from the upstream side where the adsorption amount of the hardness component is larger than that on the downstream side of the water softening tank. Note that the downstream side refers to the downstream side in the flow path during the water softening treatment.

Next, neutralization tank regeneration circulation flow path 540 will be described.

Neutralization tank regeneration circulation flow path 540 is a flow path for regenerating first neutralization tank 504 and second neutralization tank 506 by flowing alkaline electrolytic water during the regeneration treatment. As illustrated in Fig. 27 (black arrow), the water delivered by second water pump 512 flows through electrolytic tank 509, second neutralization tank 506, and first neutralization tank 504, and returns to electrolytic tank 509 to circulate.

Specifically, neutralization tank regeneration circulation flow path 540 is constituted by respective flow paths of second supply flow path 536, water softening tank bypass flow path 544, and second collection flow path 538 connecting electrolytic tank 509, second neutralization tank 506, first neutralization tank 504, and second water pump 512.

Second supply flow path 536 is a flow path communicably connecting from the downstream side of electrolytic tank 509 to the downstream side of second neutralization tank 506, and is a flow path for supplying alkaline electrolytic water from electrolytic tank 509 to second neutralization tank 506. In second supply flow path 536, capture unit 510, on-off valve 521, and on-off valve 523 are installed.

Water softening tank bypass flow path 544 is a flow path that bypasses second water softening tank 505 and communicatively connects from the upstream side of second neutralization tank 506 to the downstream side of first neutralization tank 504, and is a flow path for supplying alkaline electrolytic water from second neutralization tank 506 to first neutralization tank 504.

Second collection flow path 538 is a flow path that communicatively connects from the upstream side of first neutralization tank 504 to electrolytic tank 509, and is a flow path that collects the alkaline electrolytic water having passed through first neutralization tank 504 and second neutralization tank 506 into electrolytic tank 509. Second water pump 512 is provided in second collection flow path 538.

### (Regeneration flow path washing flow path)

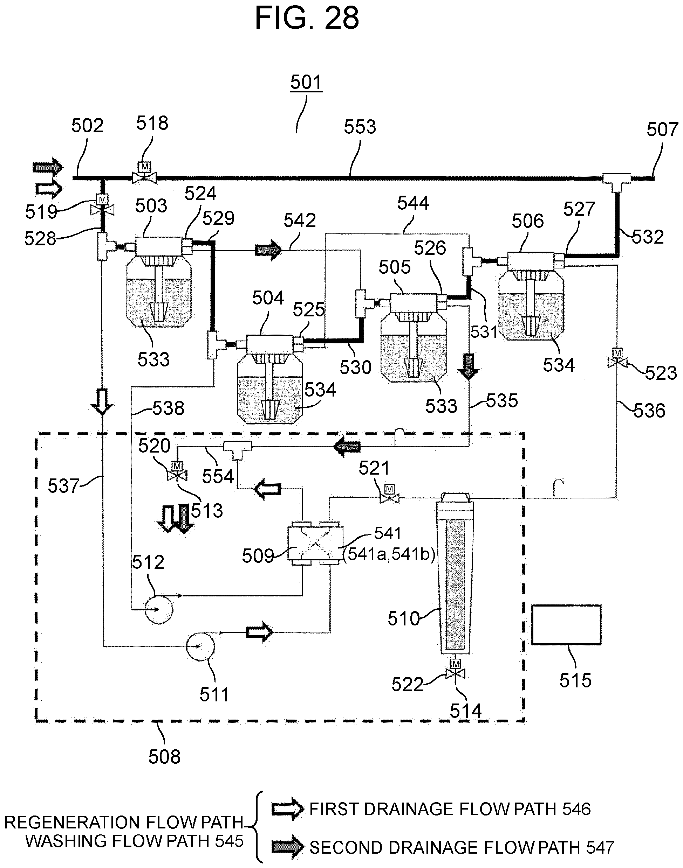

Next, regeneration flow path washing flow path 545 formed in the regeneration flow path washing treatment of water softening device 501 will be described with reference to Fig. 28. Fig. 28 is a configuration diagram illustrating regeneration flow path washing flow path 545 of water softening device 501.

Regeneration flow path washing flow path 545 is a flow path for discharging the high hardness water remaining in the flow path to the outside of the device without flowing into first neutralization tank 504 and second neutralization tank 506 at the time of a regeneration flow path washing treatment to be described later. Regeneration flow path washing flow path 545 includes first drainage flow path 546 and second drainage flow path 547.

As illustrated in Fig. 28 (white arrow), first drainage flow path 546 is constituted by flow paths connecting first water pump 511, electrolytic tank 509, on-off valve 520, and drainage port 513 from inlet port 502. Specifically, first drainage flow path 546 is a flow path that causes the raw water flowing in from inlet port 502 to flow through flow path 528, first collection flow path 537, first water pump 511, electrolytic tank 509, drainage flow path 554, on-off valve 520, and drainage port 513 in this order.

Drainage flow path 554 is a flow path connected to first supply flow path 535 at one end, and is a flow path connected to drainage port 513 at the other end. On-off valve 520 is provided in drainage flow path 554, and water in the flow path can be drained to the outside of the device by opening on-off valve 520, and drainage from drainage port 513 can be stopped by closing on-off valve 520.

As illustrated in Fig. 28 (black arrow), second drainage flow path 547 is constituted by respective flow paths communicatively connecting from inlet port 502 to first water softening tank 503, second water softening tank 505, on-off valve 520, and drainage port 513. Specifically, second drainage flow path 547 is a flow path that causes the raw water flowing in from inlet port 502 to flow through flow path 528, first water softening tank 503, the neutralization tank bypass flow path 542, second water softening tank 505, first supply flow path 535, on-off valve 520, and drainage port 513 in this order.

Note that the flow rate of water flowing through second drainage flow path 547 is preferably controlled to be larger than the flow rate of water flowing through first drainage flow path. As a result, it is possible to preferentially replace the high hardness water in the second drainage flow path which is a flow path including the water softening tank used at the time of the water softening treatment with the raw water. Therefore, it is possible to suppress the influence of high hardness water when the water softening treatment is started.

### (Electrolytic tank washing flow path)

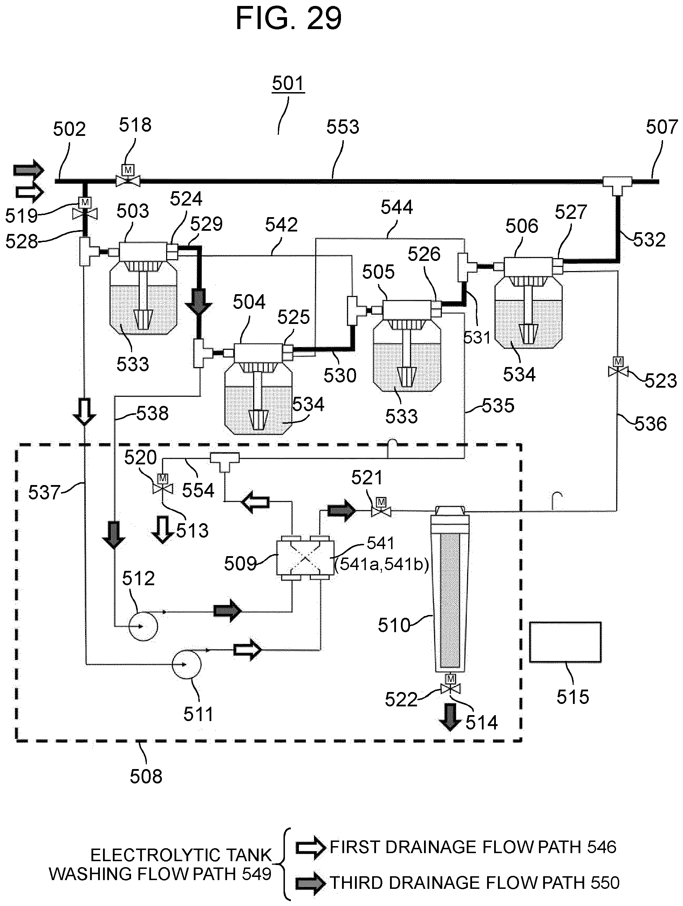

Next, electrolytic tank washing flow path 549 formed in the electrolytic tank washing treatment of water softening device 501 will be described with reference to Fig. 29. Fig. 29 is a configuration diagram illustrating electrolytic tank washing flow path 549 of water softening device 501.

Electrolytic tank washing flow path 549 is a flow path for removing a precipitate caused by a hardness component in electrolytic tank 509 and neutralization tank regeneration circulation flow path 540 during an electrolytic tank washing treatment described later. Electrolytic tank washing flow path 549 includes first drainage flow path 546 and third drainage flow path 550.

As illustrated in Fig. 29 (black arrow), third drainage flow path 550 is constituted by respective flow paths communicatively connecting from inlet port 502 to first water softening tank 503, second water pump 512, electrolytic tank 509, on-off valve 521, capture unit 510, on-off valve 522, and capture unit drainage port 514. Specifically, third drainage flow path 550 is a flow path that causes the raw water flowing in from inlet port 502 to flow through flow path 528, first water softening tank 503, second collection flow path 538, second water pump 512, electrolytic tank 509, second supply flow path 536, on-off valve 521, capture unit 510, and on-off valve 522 in this order, and discharges the raw water from capture unit drainage port 514 to the outside of the device. More specifically, in third drainage flow path 550, the raw water flowing in from inlet port 502 is caused to flow into first water softening tank 503 via flow path 528 to obtain acidic soft water. The generated acid soft water is caused to flow into electrolytic tank 509 through second water pump 512 by second collection flow path 538. Thereafter, the acidic soft water is allowed to flow through on-off valve 521, capture unit 510, and on-off valve 522 in this order through second supply flow path 536 to dissolve the precipitate of capture unit 510, and is discharged to the outside of the device from the capture unit drainage port 514.

### (Capture unit washing flow path)

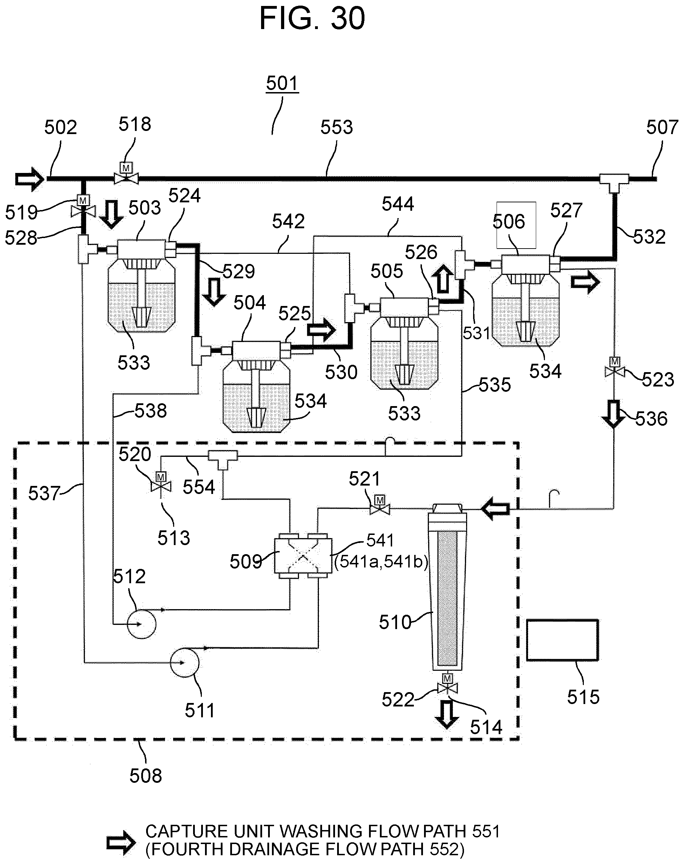

Next, capture unit washing flow path 551 formed at the time of the capture unit washing treatment of water softening device 501 will be described with reference to Fig. 30. Fig. 30 is a configuration diagram illustrating capture unit washing flow path 551 of water softening device 501.

Capture unit washing flow path 551 is a flow path for removing a precipitate derived from the hardness component precipitated in capture unit 510 in a capture unit washing treatment to be described later. Capture unit washing flow path 551 includes fourth drainage flow path 552.

As illustrated in Fig. 30, capture unit washing flow path 551 is constituted by respective flow paths which communicably connect from inlet port 502 to first water softening tank 503, first neutralization tank 504, second water softening tank 505, second neutralization tank 506, capture unit 510, and capture unit drainage port 514. Specifically, capture unit washing flow path 551 is a flow path that causes the raw water flowing in from inlet port 502 to flow through flow path 528, first water softening tank 503, flow path 529, first neutralization tank 504, flow path 530, second water softening tank 505, flow path 531, second neutralization tank 506, second supply flow path 536, on-off valve 523, capture unit 510, and on-off valve 522 in this order, and discharges the raw water from the capture unit drainage port to the outside of the device.

The above is the configuration of water softening device 501.

Next, the operation of water softening device 501 will be described.

### (Water softening treatment, regeneration treatment, regeneration flow path washing treatment, electrolytic tank washing treatment, and capture unit washing treatment)

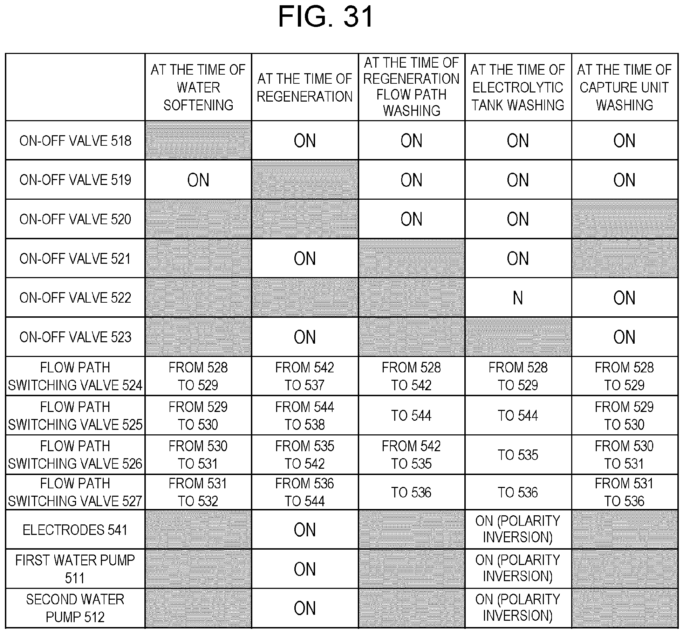

Next, the water softening treatment, the regeneration treatment, the regeneration flow path washing treatment, the electrolytic tank washing treatment, and the capture unit washing treatment of water softening device 501 will be described with reference to Fig. 31. Fig. 31 is a diagram illustrating a state of water softening device 501 during operation.

In the water softening treatment, the regeneration treatment, the regeneration flow path washing treatment, the electrolytic tank washing treatment, and the capture unit washing treatment, as illustrated in Fig. 31, controller 515 switches on-off valve 518 to on-off valve 523, flow path switching valve 524 to flow path switching valve 527, the electrodes 541 of electrolytic tank 509, first water pump 511, and second water pump 512 to control them to be in respective circulation states.

Here, "ON" in Fig. 31 indicates a state in which the corresponding on-off valve is "opened", a state in which electrodes 541 are energized, and a state in which the corresponding water pump is operating, respectively. Blanks indicate a state in which the corresponding on-off valve is "closed", a state in which electrodes 541 are not energized, and a state in which the corresponding water pump is stopped, respectively.

Furthermore, "from (component number) to (component number)" in Fig. 31 indicates a state in which the corresponding flow path switching valve connects the flow paths in a direction in which water is supplied from the corresponding component to the corresponding component. For example, flow path switching valve 524 for water softening treatment connects the respective flow paths so that water can be supplied from flow path 528 to flow path 529.

"To (component number)" in Fig. 31 indicates a state in which the corresponding flow path switching valve connects the flow paths in a direction in which there is a possibility of supplying water to the corresponding component. At this time, although the flow path is connected, since the water is in an environment in which inflow and outflow of water to and from the water softening tank or neutralization tank provided with the corresponding flow path switching valve is unlikely to occur, water feeding from the corresponding flow path switching valve is extremely unlikely to occur.

### (Water softening treatment)

First, the operation at the time of water softening treatment by water softening device 501 will be described with reference to Fig. 26 and the columns of "at the time of water softening" in Fig. 31.

In water softening device 501, as illustrated in Fig. 31, in the water softening treatment, on-off valve 519 provided in flow path 528 is opened in a state where on-off valve 518 is closed. As a result, the raw water containing the hardness component flows in from the outside. Since the flowed raw water flows through first water softening tank 503, first neutralization tank 504, second water softening tank 505, and second neutralization tank 506 in this order, water softening device 501 can take out softened water (neutral soft water) from water intake port 507. At this time, flow path switching valve 524 is in a connection state capable of supplying water from flow path 528 to flow path 529, flow path switching valve 525 is in a connection state capable of supplying water from flow path 529 to flow path 530, flow path switching valve 526 is in a connection state capable of supplying water from flow path 530 to flow path 531, and flow path switching valve 527 is in a connection state capable of supplying water from flow path 531 to flow path 532. On-off valve 520 to on-off valve 523 are all closed. Furthermore, the operations of the electrodes 541 of electrolytic tank 509, first water pump 511, and second water pump 512 are also stopped.

Specifically, as illustrated in Fig. 25, in the water softening treatment, the raw water is supplied from inlet port 502 to first water softening tank 503 through flow path 528 by the pressure of the raw water flowing in from the outside. The raw water supplied to first water softening tank 503 flows through weakly acidic cation exchange resin 533 provided in first water softening tank 503. At this time, cations as hardness components in the raw water are adsorbed by the action of weakly acidic cation exchange resin 533, and hydrogen ions are released (ion exchange is performed). Then, cations are removed from the raw water, whereby the raw water is softened. Since softened water contains a large amount of hydrogen ions that have been exchanged for hardness components and have flowed out, the softened water is acidified to be acidic water (first soft water) having a low pH. Here, when water containing a large amount of the permanent hardness component (for example, a sulfate such as calcium sulfate or a chloride such as magnesium chloride) as the hardness component is softened, the pH of water containing a large amount of the permanent hardness component is likely to decrease compared with the pH of water containing a large amount of the temporary hardness component (carbonates such as, for example, calcium carbonate). Since water softening is less likely to proceed in a state in which the pH is lowered, water flowing through first water softening tank 503 is caused to pass through first neutralization tank 504 to perform neutralization.

The softened water flows through flow path 529 via flow path switching valve 524 provided in first water softening tank 503 and flows into first neutralization tank 504. In first neutralization tank 504, hydrogen ions contained in the softened water are adsorbed by the action of weakly basic anion exchange resin 534. That is, since hydrogen ions are removed from the water softened by first water softening tank 503, the lowered pH is increased and neutralized. Therefore, as compared with the case where water softened in first water softening tank 503 is directly softened in second water softening tank 505, the water softening treatment in second water softening tank 505 easily proceeds.

Water (neutralized first soft water) neutralized by first neutralization tank 504 flows through flow path 530 via flow path switching valve 525 provided in first neutralization tank 504, and flows into second water softening tank 505. In second water softening tank 505, cations as hardness components are adsorbed and hydrogen ions are released by the action of weakly acidic cation exchange resin 533. In second water softening tank 505, hardness components that cannot be removed in first water softening tank 503 are exchanged for hydrogen ions contained in weakly acidic cation exchange resin 533. That is, the water flowing into second water softening tank 505 is further softened to become soft water (second soft water).

The second soft water flows through flow path 531 via flow path switching valve 526 provided in second water softening tank 505, and flows into second neutralization tank 506. In second neutralization tank 506, hydrogen ions contained in the inflowing second soft water are adsorbed by the action of weakly basic anion exchange resin 534. That is, since hydrogen ions are removed from the second soft water, the lowered pH increases, and the second soft water becomes neutral soft water (neutralized second soft water) that can be used as domestic water. The neutralized second soft water flows through flow path 532 via flow path switching valve 527 provided in second neutralization tank 506, and can be taken out from water intake port 507.

That is, in the water softening treatment, the raw water flows through first water softening tank 503, first neutralization tank 504, second water softening tank 505, and second neutralization tank 506 in this order. As a result, the raw water containing the hardness component flows out of first water softening tank 503 before the pH of the raw water is lowered by the water softening treatment in first water softening tank 503, is neutralized in first neutralization tank 504, is softened in second water softening tank 505, and is neutralized in second neutralization tank 506. Therefore, as compared with the case where each of the water softening tank and the neutralization tank is constituted by a single body, it is possible to suppress a decrease in pH of water flowing in the water softening tank, that is, acidification, and thus exchange between the hardness components and hydrogen ions held by weakly acidic cation exchange resin 533 in the water softening tank (particularly, second water softening tank 5) easily occurs. Therefore, the water softening performance can be improved.

Then, in water softening device 501, when the time zone specified by controller 515 is reached or when the water softening treatment exceeds a certain amount of water, the water softening treatment is terminated and the regeneration treatment is executed.

### (Regeneration treatment)

Next, the operation of water softening device 501 at the time of regeneration treatment by regeneration device 508 will be sequentially described with reference to Fig. 27 and the columns of "at the time of regeneration" in Fig. 31.

In water softening device 501, the cation exchange capacity of first water softening tank 503 and second water softening tank 505 filled with weakly acidic cation exchange resin 533 decreases or disappears as the use is continued. That is, ion exchange cannot be performed after all the hydrogen ions, which are functional groups of the cation exchange resin, are exchanged for calcium ions or magnesium ions, which are hardness components. Even before all the hydrogen ions are exchanged for the hardness components, the ion exchange reaction is less likely to occur as the hydrogen ions decrease, so that the water softening performance is deteriorated. In such a state, the hardness component is contained in the treatment water. Therefore, in water softening device 501, it is necessary to perform the regeneration treatment of first water softening tank 503, second water softening tank 505, first neutralization tank 504, and second neutralization tank 506 by regeneration device 508.

At the time of the regeneration treatment, on-off valve 519, on-off valve 520, and on-off valve 522 are closed, on-off valve 518, on-off valve 521, and on-off valve 523 are opened, flow path switching valve 524 is in a connection state in which water can be supplied from the neutralization tank bypass flow path 542 to first collection flow path 537, flow path switching valve 525 is in a connection state in which water can be supplied from water softening tank bypass flow path 544 to second collection flow path 538, flow path switching valve 526 is in a connection state in which water can be supplied from first supply flow path 535 to the neutralization tank bypass flow path 542, and flow path switching valve 527 is in a connection state in which water can be supplied from second supply flow path 536 to water softening tank bypass flow path 544. That is, a state in which first water softening tank 503 and second water softening tank 505 are communicably connected to each other, a state in which first neutralization tank 504 and second neutralization tank 506 are communicably connected to each other, and a state in which the drainage of drainage port 513 and the capture unit drainage port 514 is stopped are obtained. As a result, as illustrated in Fig. 27, water softening tank regeneration circulation flow path 539 and neutralization tank regeneration circulation flow path 540 are formed.

When first water pump 511 and second water pump 512 are operated, the acidic electrolytic water and the alkaline electrolytic water in electrolytic tank 509 circulate through water softening tank regeneration circulation flow path 539 and neutralization tank regeneration circulation flow path 540, respectively.

Furthermore, in electrolytic tank 509, electrodes are energized so that the anode has a high potential with respect to the cathode (positive electrolysis). As a result, hydrogen ions are generated at the anode during electrolysis, and acidic electrolytic water is generated near the anode. On the other hand, hydroxide ions are generated at the cathode, and alkaline electrolytic water is generated near the cathode.

The acidic electrolytic water generated in electrolytic tank 509 flows through first supply flow path 535, is supplied into second water softening tank 505 via flow path switching valve 526, and flows through weakly acidic cation exchange resin 533 inside. Then, the acidic electrolytic water flowing through second water softening tank 505 flows through neutralization tank bypass flow path 542, is supplied into first water softening tank 503 via flow path switching valve 524, and flows through weakly acidic cation exchange resin 533 inside. That is, by passing the acidic electrolytic water through weakly acidic cation exchange resin 533, cations (hardness components) adsorbed to weakly acidic cation exchange resin 533 undergo an ion exchange reaction with hydrogen ions contained in the acidic electrolytic water. As a result, weakly acidic cation exchange resin 533 is regenerated.

Thereafter, the acidic electrolytic water flowing through first water softening tank 503 contains cations and flows into first collection flow path 537. That is, the acidic electrolytic water containing cations that have flowed through weakly acidic cation exchange resin 533 is collected in electrolytic tank 509 via first collection flow path 537.

As described above, water softening regeneration circulation flow path 539 is configured to cause the acidic electrolytic water to flow from the downstream side of second water softening tank 505, which is a water softening tank located most downstream from the inlet port of the raw water and is a water softening tank having weakly acidic cation exchange resin 533 in which the adsorption amount of hardness components is smaller than that in the water softening tank on the upstream side, and to flow into the downstream side of first water softening tank 503 having weakly acidic cation exchange resin 533 which is located upstream and has more hardness components adsorbed than those in second water softening tank 505. That is, water softening tank regeneration circulation flow path 539 is a flow path that causes the acidic electrolytic water fed from electrolytic tank 509 to flow through second water softening tank 505, then feeds the acidic electrolytic water to first water softening tank 503 by neutralization tank bypass flow path 542, causes the acidic electrolytic water to flow through first water softening tank 503, and causes the acidic electrolytic water to flow into electrolytic tank 509 via first collection flow path 537. As a result, during the regeneration treatment, the acidic electrolytic water discharged from electrolytic tank 509 flows into the second water softening tank 505 having a smaller adsorption amount of the hardness component than the first water softening tank 503, and the acidic electrolytic water containing the hardness component is discharged from the second water softening tank 505 to the first water softening tank 503. In the regeneration of the weakly acidic cation exchange resin 533 in second water softening tank 505, since the consumption of hydrogen ions in the acidic electrolytic water is smaller than that in first water softening tank 503, a reduction in the hydrogen ion concentration can be suppressed as compared with the regeneration of first water softening tank 503. Therefore, it is possible to suppress the acidic electrolytic water containing a large amount of hydrogen ions from flowing into first water softening tank 503 and the hardness components from being re-adsorbed in first water softening tank 503. Therefore, it is possible to suppress a decrease in the regeneration treatment efficiency and to shorten the regeneration time.

On the other hand, the alkaline electrolytic water generated in the vicinity of the cathode of electrolytic tank 509 flows through second supply flow path 536 and capture unit 510, is supplied into second neutralization tank 506 through flow path switching valve 527, and flows through weakly basic anion exchange resin 534 inside. Then, the alkaline electrolytic water flowing through second neutralization tank 506 flows through water softening tank bypass flow path 544, is supplied into first neutralization tank 504 via flow path switching valve 525, and flows through weakly basic anion exchange resin 534 inside. That is, by allowing the alkaline electrolytic water to pass through weakly basic anion exchange resin 534, anions adsorbed on weakly basic anion exchange resin 534 cause an ion exchange reaction with hydroxide ions contained in the alkaline electrolytic water. As a result, weakly basic anion exchange resin 534 is regenerated.

Thereafter, the alkaline electrolytic water flowing through first neutralization tank 504 contains anions and flows into second collection flow path 538. That is, the alkaline electrolytic water containing anions that has flowed through weakly basic anion exchange resin 534 is collected in electrolytic tank 509 via second collection flow path 538.

As described above, neutralization tank regeneration circulation flow path 540 is configured to cause the alkaline electrolytic water to flow from the downstream side of second neutralization tank 506 that is a neutralization tank located most downstream from the inlet port of the raw water and includes weakly basic anion exchange resin 534 having a smaller amount of adsorbed anions than the neutralization tank on the upstream side, and to flow into the downstream side of first neutralization tank 504 that is located on the upstream side and includes weakly basic anion exchange resin 534 to which more anions are adsorbed than second neutralization tank 506. That is, neutralization tank regeneration circulation flow path 540 is a flow path that causes the alkaline electrolytic water fed from electrolytic tank 509 to flow through second neutralization tank 506, then feeds the alkaline electrolytic water to first neutralization tank 504 by water softening tank bypass flow path 544, causes the alkaline electrolytic water to flow through first neutralization tank 504, and causes the alkaline electrolytic water to flow into electrolytic tank 509 via second collection flow path 538. As a result, during the regeneration treatment, the alkaline electrolytic water flows into second neutralization tank 506 having a smaller adsorption amount of anions than first neutralization tank 504, and the alkaline electrolytic water containing anions is discharged from second neutralization tank 506 to first neutralization tank 504. In the regeneration of weakly basic anion exchange resin 534 in second neutralization tank 506, since the consumption of hydroxide ions in the alkaline electrolytic water is smaller than that in first neutralization tank 504, a reduction in the hydroxide ion concentration can be suppressed as compared with the regeneration of first neutralization tank 504. Therefore, it is possible to suppress the alkaline electrolytic water containing a large amount of hydroxide ions from flowing into first neutralization tank 504, and re-adsorption of anions in first neutralization tank 504. Therefore, it is possible to suppress a decrease in the regeneration treatment efficiency and to shorten the regeneration time.

Furthermore, neutralization tank regeneration circulation flow path 540 introduces the alkaline electrolytic water delivered from electrolytic tank 509 into first neutralization tank 504 and second neutralization tank 506 from the downstream side of first neutralization tank 504 and second neutralization tank 506, and causes the alkaline electrolytic water to flow out from the upstream side where the adsorption amount of anions is larger than that on the downstream side of each neutralization tank. As a result, the alkaline electrolytic water flows in from the downstream side where the adsorption amount of the anion component is smaller, and the neutralization tank is regenerated. In the regeneration of weakly basic anion exchange resin 534 on the downstream side, since the consumption of hydroxide ions in the alkaline electrolytic water is smaller than that on the upstream side, a reduction in the hydroxide ion concentration of the alkaline electrolytic water can be suppressed. Accordingly, it is possible to suppress re-adsorption on the upstream side of anions contained in the alkaline electrolytic water from the downstream side. Therefore, it is possible to suppress a decrease in the regeneration treatment efficiency of the neutralization tank and to shorten the regeneration time. Note that the downstream side refers to the downstream side in the flow path during the water softening treatment.

Then, in water softening device 501, in a case where the time zone specified by controller 515 is reached or in a case where the regeneration treatment exceeds a certain period of time (for example, 4 hours), the regeneration treatment is terminated and the regeneration flow path washing treatment is executed.

Note that, in a case where the user desires to obtain soft water during the regeneration treatment, by opening a faucet (not illustrated) or the like connected to water softening device 501, the raw water passes through flow path 553 from inlet port 502 and flows out from the water intake port 507, so that the raw water can be used without waiting for the end of the regeneration treatment.

### (Regeneration flow path washing treatment)

Next, the operation of water softening device 501 during the regeneration flow path washing treatment will be sequentially described with reference to Fig. 28 and the columns of "at the time of regeneration flow path washing" in Fig. 31.

In water softening device 501, during the regeneration treatment, hardness components are released from first water softening tank 503 and second water softening tank 505 into the acidic electrolytic water, and the acidic electrolytic water circulates in the flow path without being discharged from water softening tank regeneration circulation flow path 539. Therefore, the inside of water softening tank regeneration circulation flow path 539 after completion of the regeneration treatment is filled with high hardness water containing hardness components discharged from first water softening tank 503 and second water softening tank 505. The hardness of the high hardness water is significantly higher than the hardness (for example, 450 ppm) of the raw water, and may increase to, for example, about 2000 ppm. When the water softening treatment is shifted to the water softening treatment in a state where the high hardness water remains in water softening device 501, the high hardness water or the mixed water of the raw water and the high hardness water is discharged from water intake port 507. Therefore, in a case where the user of water softening device 501 executes the water softening treatment after the end of the regeneration treatment, there arises a problem that not only soft water cannot be obtained but also water having hardness higher than that of raw water is obtained immediately after the start of the water softening treatment. Furthermore, the high hardness water flows through weakly acidic cation exchange resin 533 in first water softening tank 503 and second water softening tank 505, and the water containing the hardness component flows again although the hardness component adsorbed in the regeneration treatment is replaced with the hydrogen ion and the regeneration is performed. Therefore, the hydrogen ion and the hardness component filled by the regeneration treatment that has been performed with great effort cause an exchange reaction, and the hardness component is adsorbed to weakly acidic cation exchange resin 533 again. Therefore, the amount of hydrogen ions available for softening raw water is reduced, and the softening performance is deteriorated. In order to solve these problems, a regeneration flow path washing treatment for draining high hardness water in water softening tank regeneration circulation flow path 539 is performed.

At the time of the regeneration flow path washing treatment, on-off valve 521 to on-off valve 523 are closed, on-off valve 518 to on-off valve 520 are opened, flow path switching valve 524 is in a connection state in which water can be supplied from flow path 528 to the neutralization tank bypass flow path 542, flow path switching valve 525 is in a connection state in which water can be supplied to the water softening tank bypass flow path 544, flow path switching valve 526 is in a connection state in which water can be supplied from the neutralization tank bypass flow path 542 to first supply flow path 535, and flow path switching valve 527 is in a connection state in which water can be supplied to second supply flow path 536. That is, a state in which first water softening tank 503 and second water softening tank 505 communicate with each other, a state in which second water softening tank 505 and drainage port 513 communicate with each other, a state in which electrolytic tank 509 and drainage port 513 communicate with each other, and a state in which drainage of the capture unit drainage port 514 is stopped are obtained. As a result, as illustrated in Fig. 28, first drainage flow path 546 and second drainage flow path 547 are formed. Note that at this time, the operations of electrodes 541, first water pump 511, and second water pump 512 are stopped.

In the regeneration flow path washing treatment, specifically, by opening on-off valve 519, the raw water flows into first drainage flow path 546 and second drainage flow path 547 from the outside.

In first drainage flow path 546, the high hardness water in flow path 528, first collection flow path 537, first water pump 511, electrolytic tank 509, and first supply flow path 535 is swept away by the pressure of the flowed raw water, and flows into drainage flow path 554. The high hardness water flowing into drainage flow path 554 is discharged from drainage port 513 to the outside of the device.

In second drainage flow path 547, the high hardness water in flow path 528, first water softening tank 503, the neutralization tank bypass flow path 542, second water softening tank 505, and first supply flow path 535 is swept away by the pressure of the raw water that has flowed in, and flows into drainage flow path 554. The high hardness water flowing into drainage flow path 554 is discharged from drainage port 513 to the outside of the device.

In this way, by the regeneration flow path washing treatment, the high hardness water in first drainage flow path 546 and second drainage flow path 547, which are main remaining portions of the high hardness water after the regeneration treatment, can be replaced with the raw water while the flowing to the neutralization tank is suppressed. Therefore, in the regeneration flow path washing treatment, adsorption of hydrogen ions to weakly basic anion exchange resin 534 in the neutralization tank can be suppressed, so that consumption of filled hydroxide ions can be suppressed, and neutralization performance can be maintained. Therefore, it is possible to suppress a decrease in water softening performance caused by high hardness water.

Note that controller 515 supplies the raw water to each flow path such that the flow rate of the raw water flowing through second drainage flow path 547 is larger than the flow rate of the raw water flowing through first drainage flow path 546.

As a result, it is possible to preferentially replace the high hardness water in second drainage flow path 547, which is a flow path including the water softening tank used at the time of the water softening treatment and is a flow path in which drainage of the high hardness water in the flow path is essential, with the raw water. Therefore, it is possible to suppress a decrease in water softening performance caused by high hardness water when the water softening treatment is started. Furthermore, since the amount of water discharged from first drainage flow path 546, which is a flow path that is not used during the water softening treatment and is a flow path that has little influence on the water softening treatment even if high hardness water remains, can be reduced, wasteful drainage can be prevented, and the amount of water required for the regeneration flow path washing treatment can be suppressed.

Thus, the high hardness water is discharged to the outside of the device by the flow path not including the neutralization tank. That is, the hardness components in the high hardness water stored in water softening tank regeneration circulation flow path 539 are inhibited from being adsorbed to weakly basic anion exchange resin 534 in the neutralization tank and can be drained, so that it is possible to prevent a decrease in water softening performance caused by high hardness water generated during the regeneration treatment and maintain the water softening performance.

Then, in water softening device 501, when the time zone specified by controller 515 is reached, or when the regeneration flow path washing treatment exceeds a certain time (for example, 1 minute), or when the amount of water passing through the regeneration flow path washing treatment exceeds a certain value, the regeneration flow path washing treatment is terminated, and the electrolytic tank washing treatment is executed.

Note that in a case where the user desires to obtain soft water during the regeneration flow path washing treatment, by opening a faucet (not illustrated) or the like connected to water softening device 501, the raw water passes through flow path 553 from inlet port 502 and flows out from water intake port 507, so that the raw water can be used without waiting for the end of the regeneration flow path washing treatment.

### (Electrolytic tank washing treatment)

Next, the operation of water softening device 501 during the electrolytic tank washing treatment will be sequentially described with reference to Fig. 29 and the columns of "at the time of electrolytic tank washing" in Fig. 31.

In the regeneration treatment, when electrolytic tank 509 is operating, a hardness component (calcium ions or magnesium ions) in water is precipitated as a solid (scale) on the cathode. Since the precipitates deposited on the cathode is a non-conductor, the operating voltage of electrolytic tank 509 is increased, and the power consumption during the regeneration treatment is increased. Therefore, it is necessary to perform an electrolytic tank washing treatment for removing precipitates deposited on the cathode.

In the electrolytic tank washing treatment, on-off valve 518 to on-off valve 522 are opened, and on-off valve 523 is closed. Furthermore, flow path switching valve 524 is in a connection state capable of supplying water from flow path 528 to flow path 529, flow path switching valve 525 is in a connection state capable of supplying water to water softening tank bypass flow path 544, flow path switching valve 526 is in a connection state capable of supplying water to first supply flow path 535, and flow path switching valve 527 is in a connection state capable of supplying water to second supply flow path 536. That is, a state in which first water softening tank 503 and electrolytic tank 509 communicate with each other, a state in which electrolytic tank 509 and drainage port 513 communicate with each other, and a state in which electrolytic tank 509 and capture unit drainage port 514 communicate with each other are obtained. As a result, as illustrated in Fig. 29, first drainage flow path 546 and third drainage flow path 550 are formed.

In the electrolytic tank washing treatment, specifically, by opening on-off valve 519, the raw water flows into first drainage flow path 546 and third drainage flow path 550 from the outside.

In first drainage flow path 546, the introduced raw water flows through flow path 528, first collection flow path 537, and first water pump 511, and flows into electrolytic tank 509.

On the other hand, in third drainage flow path 550, the flowed raw water flows through flow path 528, first water softening tank 503, second collection flow path 538, and second water pump 512, and flows into electrolytic tank 509.

In the electrolytic tank washing treatment, controller 515 energizes electrodes so that the cathode has higher potential than the anode (reverse electrolysis). Therefore, electrolytic tank 509 electrolyzes the raw water flowing into the electrolytic tank to generate alkaline electrolytic water near the anode and acidic electrolytic water near the cathode.

At this time, the precipitate deposited on the cathode can be dissolved by the acidic electrolytic water generated on the cathode. Therefore, it is possible to suppress a decrease in electrolytic performance due to adhesion of precipitates to the surface of the electrodes 541.

The alkaline electrolytic water generated at the anode flows through first supply flow path 535, flows into drainage flow path 554, and is discharged from drainage port 513 to the outside of the device.

On the other hand, the acidic electrolytic water generated at the cathode dissolves precipitates deposited at the cathode, and flows into capture unit 510 through second supply flow path 536. The acidic electrolytic water flowing into capture unit 510 can dissolve the precipitate adhering to capture unit 510, and can preliminarily wash capture unit 510. Therefore, it is possible to shorten the time required for the capture unit washing treatment which is the next treatment. Then, the acidic electrolytic water is discharged to the outside of the device from capture unit drainage port 514 provided in a lower portion of capture unit 510.

That is, in the electrolytic tank washing treatment, the removal of the precipitate in electrolytic tank 509 and the removal of the precipitate in capture unit 510 can be simultaneously performed, and the time required from the end of the regeneration treatment to the start of the water softening treatment can be shortened.

Then, in water softening device 501, when the time zone specified by controller 515 is reached or when the electrolytic tank washing treatment exceeds a certain period of time (for example, 5 minutes), the electrolytic tank washing treatment is ended, and the capture unit washing treatment is executed.

Note that in third drainage flow path 550, since the raw water passes through first water softening tank 503, the acidified water passes through capture unit 510. Therefore, capture unit 510 becomes acidic, and the precipitate adhering to capture unit 510 is dissolved by the acidic water. Therefore, since capture unit 510 can be preliminarily washed, the time required for the capture unit washing treatment which is the next treatment can be shortened. That is, the removal of the precipitate in electrolytic tank 509 and the removal of the precipitate in capture unit 510 can be simultaneously performed, and the time required from the end of the regeneration treatment to the start of the water softening treatment can be shortened.

Note that in a case where the user desires to obtain soft water during the electrolytic tank washing treatment, by opening a faucet (not illustrated) or the like connected to water softening device 501, the raw water passes through flow path 553 from inlet port 502 and flows out from water intake port 507, so that the raw water can be used without waiting for the end of the electrolytic tank washing treatment.

### (Capture unit washing treatment)

Next, the operation of water softening device 501 at the time of the capture unit washing treatment will be sequentially described with reference to Fig. 30 and the columns of "at the time of capture unit washing" in Fig. 31.

In the regeneration treatment, the high hardness water containing the hardness components discharged from first water softening tank 503 and second water softening tank 505 flows into electrolytic tank 509. The hardness component moves to the cathode side during electrolysis, reacts with hydroxide ions generated at the cathode, and becomes a precipitate. A part of the precipitated precipitate is contained in the alkaline electrolytic water discharged from electrolytic tank 509, flows through second supply flow path 536, and is captured by capture unit 510. Therefore, since the precipitate gradually accumulates in capture unit 510 during the regeneration treatment, the pressure loss caused by capture unit 510 gradually increases, and the flow rate of the alkaline electrolytic water flowing through neutralization tank regeneration circulation flow path 540 gradually decreases. Therefore, when the precipitates are left, the time required for regenerating weakly basic anion exchange resin 534 in first neutralization tank 504 and second neutralization tank 506 is extended, and the filling of weakly basic anion exchange resin 534 with hydroxide ions may not be completed at the end. Therefore, it is necessary to perform a capture unit washing treatment for removing a precipitate adhering to or precipitating on capture unit 510.

In the capture unit washing treatment, on-off valve 518, on-off valve 519, on-off valve 522, and on-off valve 523 are opened, and on-off valve 520 and on-off valve 521 are closed. Furthermore, flow path switching valve 524 is in a connection state capable of supplying water from flow path 528 to flow path 529, flow path switching valve 525 is in a connection state capable of supplying water from flow path 529 to flow path 530, flow path switching valve 526 is in a connection state capable of supplying water from flow path 530 to flow path 531, and flow path switching valve 527 is in a connection state capable of supplying water from flow path 531 to second supply flow path 536. That is, a state in which first water softening tank 503 and first neutralization tank 504 communicate with each other, a state in which first neutralization tank 504 and second water softening tank 505 communicate with each other, a state in which second water softening tank 505 and second neutralization tank 506 communicate with each other, and a state in which second neutralization tank 506 and the capture unit drainage port 514 communicate with each other are set. Accordingly, as illustrated in Fig. 30, fourth drainage flow path 552 is formed.

In the capture unit washing treatment, specifically, by opening on-off valve 519, the raw water flows into flow path 528 from the outside. The flowed raw water flows through flow path 528, first water softening tank 503, flow path 529, first neutralization tank 504, flow path 530, second water softening tank 505, flow path 531, second neutralization tank 506, and second supply flow path 536, and flows into capture unit 510.

In capture unit 510, neutral soft water flows in from the side opposite to the water flowing direction of the regeneration treatment. That is, backwashing of capture unit 510 is performed by the inflow neutral soft water. At this time, since a part of the precipitate fixed or precipitated on capture unit 510 is dissolved in advance by the electrolytic tank washing treatment, capture unit 510 can be easily washed with neutral soft water. The neutral soft water containing the precipitate is discharged to the outside of the device from capture unit drainage port 514 provided in the lower portion of capture unit 510.

In this way, since capture unit 510 can be backwashed, precipitates remaining in capture unit 510 can be removed. Therefore, the blockage of capture unit 510 can be suppressed, and the pressure loss caused by capture unit 510 can be reduced when the regeneration treatment is performed again. As a result, reduction in the flow rate of neutralization tank regeneration circulation flow path 540, which is a regeneration flow path including capture unit 510, can be suppressed, and the flow rate of the alkaline electrolytic water can be secured, so that regeneration performance can be secured.

Then, in water softening device 501, when the time zone specified by controller 515 is reached or when the capture unit washing treatment exceeds a certain period of time (for example, 5 minutes), the capture unit washing treatment is ended, and the water softening treatment is executed.

Note that the flow path from inlet port 502 to second neutralization tank 506 is the same as the flow path during the water softening treatment. That is, by using the fourth drainage flow path 552, second neutralization tank 506, which is the neutralization tank at the last stage in the water softening treatment, is filled with softened water. Therefore, by performing the water softening treatment after performing the capture unit washing treatment using fourth drainage flow path 552, the user of water softening device 501 can obtain, from water intake port 507, soft water subjected to the water softening treatment and having reduced hardness immediately after the start of the water softening treatment.

Note that in a case where the user desires to obtain soft water during the capture unit washing treatment, by opening a faucet (not illustrated) or the like connected to water softening device 501, the raw water passes through flow path 553 from inlet port 502 and flows out from water intake port 507, so that the raw water can be used without waiting for the end of the capture unit washing treatment.

As described above, in water softening device 501, the water softening treatment, the regeneration treatment, the regeneration flow path washing treatment, the electrolytic tank washing treatment, and the capture unit washing treatment are repeatedly executed in this order. By performing the capture unit washing treatment immediately before the water softening treatment, the neutralization tank at the last stage in the water softening treatment is filled with softened water. Therefore, when the user of water softening device 501 opens the faucet, discharge of high hardness water from water intake port 507 can be suppressed, and soft water having stable hardness can be provided immediately after the start of the water softening treatment.

Furthermore, by performing the electrolytic tank washing treatment after performing the regeneration flow path washing treatment, the high hardness water has already been discharged to the outside of the device at the time of polarity inversion in the electrolytic tank washing treatment, and the possibility of electrolyzing the high hardness water can be suppressed. Therefore, it is possible to suppress electrolysis of water having high hardness, and it is possible to suppress generation of a large amount of scale in a flow path through which alkaline electrolytic water is supplied at the time of polarity inversion.

As described above, according to water softening device 501 of the present the sixth exemplary embodiment, the following effects can be obtained.
(1) Water softening device 501 includes a water softening tank that softens raw water used in a water softening treatment and containing a hardness component with a weakly acidic cation exchange resin, a neutralization tank that neutralizes pH of soft water used in the water softening treatment and having passed through the water softening tank with a weakly basic anion exchange resin, electrolytic tank 509 that generates acidic electrolytic water used in a regeneration treatment and regenerating the weakly acidic cation exchange resin in the water softening tank, and alkaline electrolytic water that regenerates the weakly basic anion exchange resin in the neutralization tank, water softening tank regeneration circulation flow path 539 that communicates the water softening tank and electrolytic tank 509 independently of the neutralization tank, neutralization tank regeneration circulation flow path 540 that communicates the neutralization tank and the electrolytic tank independently of the water softening tank, capture unit 510 that captures acidic electrolytic water introduced into electrolytic tank 509 from the water softening tank through the water softening tank regeneration circulation flow path 539 and precipitates resulting from hardness components contained in alkaline electrolytic water introduced into electrolytic tank 509 from the neutralization tank through the neutralization tank regeneration circulation flow path 540 during a regeneration treatment, and controller 515 that controls the water softening treatment and the regeneration treatment. After completion of the regeneration treatment, controller 515 executes a regeneration flow path washing treatment for discharging water containing a hardness component in water softening tank regeneration circulation flow path 539 to the outside of the device, and an electrolytic tank washing treatment for removing precipitates resulting from the hardness components in electrolytic tank 509 and neutralization tank regeneration circulation flow path 540, and after completion of the regeneration flow path washing treatment and the electrolytic tank washing treatment, executes a capture unit washing treatment for removing precipitates captured by capture unit 510, and after completion of the capture unit washing treatment, executes the water softening treatment.
   According to such a configuration, since the hardness components in the high hardness water stored in water softening tank regeneration circulation flow path 539 can be drained without being adsorbed to weakly basic anion exchange resin 534 in the neutralization tank, it is possible to prevent a decrease in water softening performance caused by the high hardness water generated during the regeneration treatment and maintain the water softening performance.
(2) In water softening device 501, controller 515 executes the regeneration flow path washing treatment, the electrolytic tank washing treatment, and the capture unit washing treatment in this order after the end of the regeneration treatment.

According to such a configuration, by performing the capture unit washing treatment immediately before the water softening treatment, the neutralization tank at the last stage in the water softening treatment is filled with softened water. Therefore, when the user of water softening device 501 opens the faucet, discharge of high hardness water from water intake port 507 can be suppressed, and soft water having stable hardness can be provided immediately after the start of the water softening treatment.

Furthermore, by performing the electrolytic tank washing treatment after performing the regeneration flow path washing treatment, the high hardness water contained in the regenerated water is not electrolyzed at the time of polarity inversion, so that it is possible to suppress generation of a large amount of scale in the alkaline flow path at the time of polarity inversion.

(3) In water softening device 501, the water softening tank includes a first water softening tank 503 and a second water softening tank 505, and the neutralization tank includes a first neutralization tank 504 and a second neutralization tank 506. In the water softening treatment, controller 515 causes the raw water to pass through first water softening tank 503, first neutralization tank 504, second water softening tank 505, and second neutralization tank 506 in this order.

In this way, by alternately providing the water softening tank and the neutralization tank, hydrogen ions eluted by ion exchange with the hardness components in the water softening tank can be adsorbed by weakly basic anion exchange resin 534 in the neutralization tank on the downstream side, so that a decrease in pH of water in the water softening tank can be suppressed, and water softening efficiency can be improved.

(4) Water softening device 501 includes a first drainage flow path 546 that communicates inlet port 502 of the raw water, electrolytic tank 509, and drainage port 513 independently from the neutralization tank, and a second drainage flow path 547 that communicates the water softening tank and drainage port 513 independently from the neutralization tank. In the regeneration flow path washing treatment, controller 515 causes the raw water to pass through first drainage flow path 546 and second drainage flow path 547, and replaces the high hardness water remaining in first drainage flow path 546 and second drainage flow path 547 with the raw water.

As a result, the high hardness water in water softening tank regeneration circulation flow path 539, which is the main remaining portion of the high hardness water after the regeneration treatment, can be replaced with the raw water without flowing into the neutralization tank. Therefore, in the regeneration flow path washing treatment, adsorption of hydrogen ions to weakly basic anion exchange resin 534 in the neutralization tank can be suppressed, so that consumption of the filled hydroxide ions can be suppressed, and neutralization performance can be maintained.

(5) In water softening device 501, controller 515 supplies the raw water to each flow path so that the flow rate of the raw water flowing through second drainage flow path 547 is larger than the flow rate of the raw water flowing through first drainage flow path 546.

As a result, it is possible to preferentially replace the high hardness water in second drainage flow path 547, which is a flow path including the water softening tank used at the time of the water softening treatment and is a flow path in which drainage of the high hardness water in the flow path is essential, with the raw water. Therefore, it is possible to suppress the influence of high hardness water when the water softening treatment is started. Furthermore, since the amount of water discharged from first drainage flow path 546, which is a flow path not used at the time of water softening treatment and is a flow path that has little influence on the water softening treatment even if high hardness water remains, can be reduced, wasteful drainage can be prevented, and the amount of water required for maintenance can be suppressed.

(6) Water softening device 501 includes a capture unit drainage port 514 provided in a lower portion of capture unit 510, first drainage flow path 546 that communicates inlet port 502, electrolytic tank 509, and drainage port 513 independently of the neutralization tank, and third drainage flow path 550 that communicates first water softening tank 503, electrolytic tank 509, and capture unit drainage port 514 independently of the neutralization tank. Then, in the electrolytic tank washing treatment, controller 515 performs the polarity inversion of electrolytic tank 509, discharges the water in first drainage flow path 546 to the outside of the device by allowing the raw water to pass through first drainage flow path 546, and washes electrolytic tank 509 by allowing the raw water to pass through third drainage flow path 550.

As a result, it is possible to perform the polarity inversion of electrolytic tank 509, and it is possible to dissolve and discharge the precipitate mainly precipitated in the vicinity of the cathode before the polarity inversion. Therefore, it is possible to suppress a decrease in electrolytic performance due to adhesion of precipitates to the surface of the electrodes 541. Furthermore, in third drainage flow path 550, since the raw water passes through first water softening tank 503, the acidified water passes through capture unit 510. Therefore, capture unit 510 becomes acidic, and the precipitate adhering to capture unit 510 is dissolved by the acidic water. Therefore, since capture unit 510 can be preliminarily washed, the time required for the capture unit washing treatment which is the next treatment can be shortened. That is, the removal of the precipitate in electrolytic tank 509 and the removal of the precipitate in capture unit 510 can be simultaneously performed, and the time required from the end of the regeneration treatment to the start of the water softening treatment can be shortened.

(7) Water softening device 501 includes water intake port 507 that discharges soft water generated by the water softening treatment to the outside of the device, a backwash control valve (flow path switching valve 527) that is provided on a downstream side of second neutralization tank 506 and switches a water flowing direction of the soft water flowing through second neutralization tank 506 to a side of water intake port 507 and a side of capture unit 510, capture unit drainage port 514 provided in a lower portion of capture unit 510, and fourth drainage flow path 552 that communicates first water softening tank 503, first neutralization tank 504, second water softening tank 505, second neutralization tank 506, the backwash control valve, and capture unit drainage port 514. Then, in the capture unit washing treatment, controller 515 causes the raw water to flow into capture unit 510 from the downstream side by causing the raw water to pass through the fourth drainage flow path 552, and washes capture unit 510.

As a result, since capture unit 510 can be backwashed, the precipitate remaining in capture unit 510 can be removed. Therefore, the blockage of capture unit 510 can be suppressed, and the pressure loss caused by capture unit 510 can be reduced when the regeneration treatment is performed again. As a result, reduction in the flow rate of neutralization tank regeneration circulation flow path 540, which is a regeneration flow path including capture unit 510, can be suppressed, and the flow rate of the alkaline electrolytic water can be secured, so that regeneration performance can be secured. Furthermore, by using the fourth drainage flow path 552, second neutralization tank 506, which is the neutralization tank at the last stage in the water softening treatment, is filled with softened water. Therefore, when the user opens the faucet, discharge of high hardness water can be suppressed, and soft water having stable hardness can be provided immediately after the start of the water softening treatment.

The present disclosure has been described above based on the exemplary embodiments. It will be understood by those skilled in the art that the exemplary embodiments are merely examples, that the components or the processes disclosed in the exemplary embodiments may be combined as various modifications, and that such modifications also fall within the scope of the present disclosure.

In water softening device 501 according to the present the sixth exemplary embodiment, after the end of the regeneration treatment, the regeneration flow path washing treatment, the electrolytic tank washing treatment, and the capture unit washing treatment are executed in this order, but the present disclosure is not limited thereto. For example, the regeneration flow path washing treatment may be performed after the electrolytic tank washing treatment, and the capture unit washing treatment may be preferably performed before the water softening treatment. Even if the inside of the device is washed in such order, the precipitates in electrolytic tank 509 and the capture unit can be removed, and second neutralization tank 506 immediately before the water softening treatment can be filled with soft water.

### (Seventh exemplary embodiment)

In a conventional water softening device, as a method for regenerating a cation exchange resin without using salt, a method of regenerating a cation exchange resin with acidic electrolytic water generated by electrolysis is known (See, for example, PTL 1.). The weakly acidic cation exchange resin has a proton at the terminal of the functional group, and softens raw water by exchanging hardness components (for example, calcium ions and magnesium ions) in raw water with hydrogen ions. The raw water softened with the weakly acidic cation exchange resin contains hydrogen ions and becomes acidic. The hydrogen ions in the soft water are adsorbed to the weakly basic anion exchange resin, whereby the softened raw water is neutralized. In a conventional water softening device, as a method for regenerating a weakly basic anion exchange resin, a method for regenerating a weakly basic anion exchange resin with alkaline electrolytic water generated by electrolysis is known (See, for example, PTL 2.).

In such a conventional water softening device, it is common to use raw water at the time of electrolysis, but when raw water having low conductivity is used, the voltage applied between the electrodes in the electrolytic tank increases. Therefore, there is a problem that the electrodes in the electrolytic tank are consumed in a short period of time, and it is difficult to stably supply acidic electrolytic water and alkaline electrolytic water over a long period of time.

As a means for preventing this, a method of adding a chemical such as sodium sulfate to raw water to increase the conductivity can be considered, but there arises a problem that the chemical needs to be supplied.

The present disclosure has been made to solve the above problems, and an object of the present disclosure is to provide a water softening device capable of increasing the conductivity of water supplied to an electrolytic tank without adding a chemical and suppressing an increase in voltage applied to electrodes.

In order to achieve this object, a water softening device according to the present disclosure includes: a water softening tank that softens raw water containing a hardness component by using a weakly acidic cation exchange resin, the raw water being used in a water softening treatment; an electrolytic tank that generates acidic electrolytic water for regenerating the weakly acidic cation exchange resin in the water softening tank, the acidic electrolytic water being used in a regeneration treatment; and a mixing unit that mixes the raw water with post-regeneration water containing a hardness component precipitated from the weakly acidic cation exchange resin during the regeneration treatment to generate mixed water, in which the electrolytic tank generates acidic electrolytic water with mixed water. As a result, the above structure can achieve the intended object.

According to the present disclosure, it is possible to provide a water softening device capable of increasing the conductivity of water supplied to an electrolytic tank without adding a chemical and suppressing an increase in voltage applied to electrodes.

An exemplary embodiment of the present disclosure will now be explained with reference to some drawings. Note that the following exemplary embodiments are merely examples of exemplary embodiments of the present disclosure, and are not intended to limit the technical scope of the present disclosure in any way. Furthermore, the drawings explained in the exemplary embodiments are schematic representations, and the ratios of the sizes and the thicknesses of the elements in each of the drawings do not necessarily reflect the actual dimensional ratios.

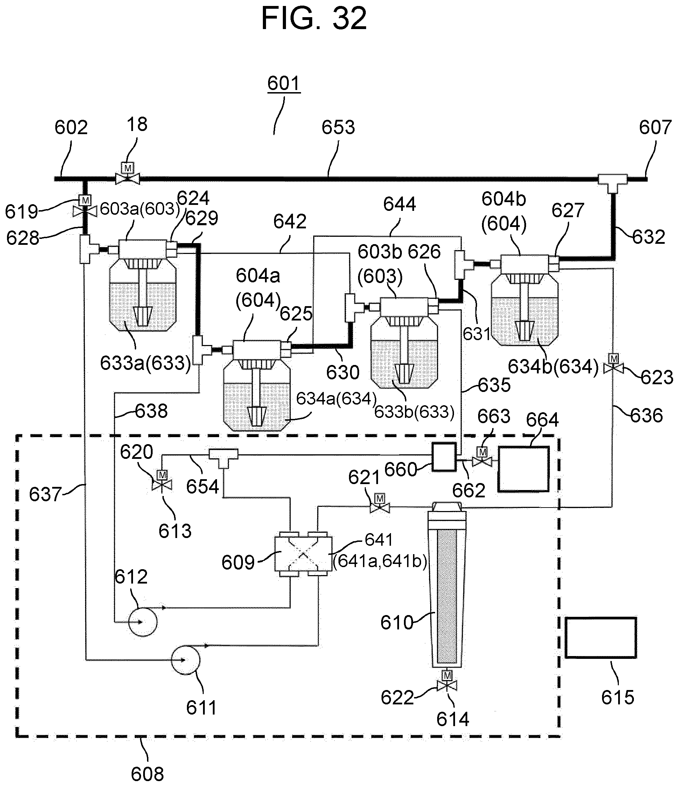

With reference to Fig. 32, water softening device 601 according to the seventh exemplary embodiment of the present disclosure will be described. Fig. 32 is a conceptual diagram illustrating a configuration of water softening device 601 according to the seventh exemplary embodiment of the present disclosure. Note that Fig. 32 conceptually illustrates each element of water softening device 601.

### <Overall configuration>

Water softening device 601 is a device that generates neutral soft water from raw water containing a hardness component supplied from the outside. Note that the raw water is water (water to be treated) introduced into the device from inlet port 602, and is, for example, city water or well water. The raw water includes a hardness component (e.g. calcium or magnesium ions). By performing the water softening treatment using water softening device 601, neutral soft water having reduced hardness can be obtained, and soft water can be used even in an area where the hardness of raw water is high.

Specifically, as illustrated in Fig. 32, water softening device 601 includes inlet port 602, water softening tank 603, neutralization tank 604, water intake port 607, regeneration device 608, controller 615, and mixing unit 660.

Furthermore, water softening device 601 includes drainage port 613, a plurality of on-off valves (on-off valve 618, on-off valve 619, on-off valve 620, on-off valve 621, on-off valve 622, on-off valve 623, and on-off valve 663), and a plurality of flow path switching valves (flow path switching valves 624 to 627). Details of these will be described later.

### <Inlet port and water intake port>

Inlet port 602 is connected to a source of raw water. Inlet port 602 is an opening for introducing raw water into water softening device 601.

Water intake port 607 is an opening that supplies the water flowed and softened in water softening device 601 to the outside of the device. Water softening device 601 can take out the water after the water softening treatment from water intake port 607 by the pressure of the raw water flowing in from the inlet port 602.

In water softening device 601, in the water softening treatment for performing the water softening treatment, raw water supplied from the outside flows through inlet port 602, flow path 628, first water softening tank 603a, flow path 629, first neutralization tank 604a, flow path 630, second water softening tank 603b, flow path 631, second neutralization tank 604b, flow path 632, and water intake port 607 in this order, and is discharged as neutral soft water.

### <Water softening tank>

Water softening tank 603 softens the raw water containing the hardness component by the action of weakly acidic cation exchange resin 633 filled inside. Specifically, water softening tank 603 exchanges cations (calcium ion, magnesium ion), which are hardness components contained in flowing water (raw water), with hydrogen ions, so that the hardness of the raw water decreases and the raw water is softened. Water softening device 601 according to the present the seventh exemplary embodiment includes a first water softening tank 603a and a second water softening tank 603b as water softening tank 603.

First water softening tank 603a softens the raw water flowing in from inlet port 602 by the action of first weakly acidic cation exchange resin 633a filled therein. First water softening tank 603a includes flow path switching valve 624. Details of the flow paths switching valves will be collectively described later.

Second water softening tank 603b softens the water flowing through first neutralization tank 604a described later by the action of second weakly acidic cation exchange resin 633b filled inside. Second water softening tank 603b includes flow path switching valve 626.

Note that hereinafter, first weakly acidic cation exchange resin 633a and second weakly acidic cation exchange resin 633b will be described as weakly acidic cation exchange resin 633 unless it is particularly necessary to distinguish between them.

Weakly acidic cation exchange resin 633 is an ion exchange resin having a hydrogen ion at the terminal of the functional group. Weakly acidic cation exchange resin 633 adsorbs cations (calcium ion, magnesium ion), which are hardness components contained in the raw water to be passed, and releases hydrogen ions. The soft water treated with weakly acidic cation exchange resin 633 contains a large amount of hydrogen ions exchanged for hardness components. That is, the soft water flowing out of first water softening tank 603a and second water softening tank 603b is soft water (acidic soft water) acidified by containing a large amount of hydrogen ions.

Since the terminal of the functional group of weakly acidic cation exchange resin 633 is a hydrogen ion, weakly acidic cation exchange resin 633 can be regenerated using acidic electrolytic water in the regeneration treatment described later. At this time, cations, which are hardness components taken in during the water softening treatment, are released from weakly acidic cation exchange resin 633.

Weakly acidic cation exchange resin 633 is not particularly limited, and general-purpose ones can be used, and examples thereof include those having a carboxyl group (-COOH) as an exchange group. Furthermore, a resin in which a hydrogen ion (H+) as a counter ion of a carboxyl group is substituted by a cation such as a metal ion or an ammonium ion (NH4+) may also be used.

### <Neutralization Tank>

In neutralization tank 604, the pH of soft water (acidified soft water) containing hydrogen ions coming out of water softening tank 603 is neutralized by the action of weakly basic anion exchange resin 634 filled inside, and becomes neutral soft water. Specifically, since the neutralization tank 604 adsorbs hydrogen ions contained in the soft water from water softening tank 603 together with anions (anions), the pH of the soft water increases, and neutral soft water can be obtained. Water softening device 601 according to the present the seventh exemplary embodiment includes a first neutralization tank 604a and a second neutralization tank 604b as the neutralization tanks 604.

First neutralization tank 604a neutralizes the acidic soft water flowing through first water softening tank 603a by the action of first weakly basic anion exchange resin 634a filled therein. First neutralization tank 604a includes flow path switching valve 625.

Second neutralization tank 604b neutralizes the acidic soft water flowing through second water softening tank 603b by the action of second weakly basic anion exchange resin 634b filled inside. Second neutralization tank 604b includes flow path switching valve 627.

Note that hereinafter, first weakly basic anion exchange resin 634a and second weakly basic anion exchange resin 634b will be described as weakly basic anion exchange resin 634 unless it is particularly necessary to distinguish between them.

Weakly basic anion exchange resin 634 neutralizes hydrogen ions contained in the passed water to produce neutral water. Weakly basic anion exchange resin 634 can be regenerated using alkaline electrolytic water in a regeneration treatment to be described later.

Weakly basic anion exchange resin 634 is not particularly limited, and general-purpose resins can be used, and examples thereof include those in a free base form.

### <Regeneration device>

Regeneration device 608 regenerates weakly acidic cation exchange resin 633 filled in first water softening tank 603a and second water softening tank 603b, and regenerates weakly basic anion exchange resin 634 filled in first neutralization tank 604a and second neutralization tank 604b.

Regeneration device 608 includes electrolytic tank 609, capture unit 610, first water pump 611, and second water pump 612. Then, in regeneration device 608, first supply flow path 635, second supply flow path 636, first collection flow path 637, and second collection flow path 638 are connected to second water softening tank 603b, second neutralization tank 604b, flow path 628, and flow path 629, respectively. Details of each flow path will be described later. Note that first supply flow path 635, second supply flow path 636, first collection flow path 637, second collection flow path 638, neutralization tank bypass flow path 642, and water softening tank bypass flow path 644 form water softening tank regeneration circulation flow path 639 and neutralization tank regeneration circulation flow path 640 described later.

### ((Electrolytic tank))

Electrolytic tank 609 generates and discharges acidic electrolytic water and alkaline electrolytic water by electrolyzing the inflowing water using a pair of electrodes 641 (electrode 641a and electrode 641b) provided inside. More specifically, in electrode 641a serving as an anode during electrolysis in the regeneration treatment, hydrogen ions are generated by electrolysis, and acidic electrolytic water is generated. Furthermore, in electrode 641b serving as a cathode during electrolysis in the regeneration treatment, hydroxide ions are generated by electrolysis, and alkaline electrolytic water is generated. Then, electrolytic tank 609 supplies the acidic electrolytic water to first water softening tank 603a and second water softening tank 603b via first supply flow path 635 and neutralization tank bypass flow path 642, and supplies the alkaline electrolytic water to first neutralization tank 604a and second neutralization tank 604b via second supply flow path 636 and water softening tank bypass flow path 644. Although details will be described later, the acidic electrolytic water generated by electrolytic tank 609 is used for regenerating weakly acidic cation exchange resin 633 in first water softening tank 603a and second water softening tank 603b, and the alkaline electrolytic water generated by electrolytic tank 609 is used for regenerating weakly basic anion exchange resin 634 in first neutralization tank 604a and second neutralization tank 604b. Note that electrolytic tank 609 is configured such that an energization state to the pair of electrodes 641 can be controlled by controller 615 described later.

### ((Water pump))

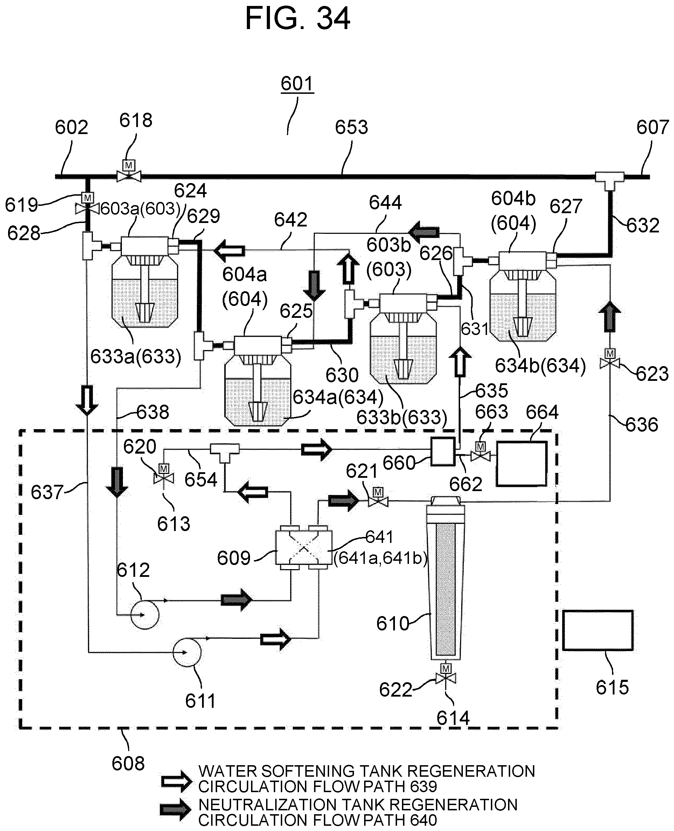

First water pump 611 is a device that flows acidic electrolytic water in water softening tank regeneration circulation flow path 639 (see Fig. 34) during a regeneration treatment by regeneration device 608. First water pump 611 is provided in first collection flow path 637 that communicatively connects first water softening tank 603a and electrolytic tank 609. Such an arrangement is adopted because acidic electrolytic water can be easily circulated through water softening tank regeneration circulation flow path 639 only by first water pump 611.

Second water pump 612 is a device that flows alkaline electrolytic water through neutralization tank regeneration circulation flow path 640 (see Fig. 34). Second water pump 612 is provided in second collection flow path 638 that communicatively connects first neutralization tank 604a and electrolytic tank 609. Such an arrangement is adopted because the alkaline electrolytic water can be easily circulated through neutralization tank regeneration circulation flow path 640 only by second water pump 612.

Furthermore, first water pump 611 and second water pump 612 are connected to controller 615 described later so as to be able to communicate with controller 615 in a wireless or wired manner.

### ((Capture unit))

Capture unit 610 is provided in second supply flow path 636 that communicatively connects electrolytic tank 609 and second neutralization tank 604b.

Capture unit 610 captures a precipitate contained in the alkaline electrolytic water fed from electrolytic tank 609. The precipitate is a reaction product generated when hardness components, which are cations released from first water softening tank 603a and second water softening tank 603b during the regeneration treatment, react with alkaline electrolytic water in electrolytic tank 609. More specifically, while the electrolysis of water is performed in electrolytic tank 609, the hardness components (for example, calcium ions and magnesium ions) released from first water softening tank 603a and second water softening tank 603b during the regeneration treatment move to the cathode (electrode 641b) side. Since alkaline electrolytic water is generated on the cathode side, the hardness component and the alkaline electrolytic water react with each other to form a precipitate. For example, when the hardness component is calcium ions, a reaction in which calcium carbonate is generated or calcium hydroxide is generated occurs by mixing the calcium ions with the alkaline electrolytic water. Precipitates derived from the hardness component are captured as precipitates by capture unit 610 provided in second supply flow path 636. The precipitates derived from the hardness components are captured by capture unit 610, so that the precipitates can be prevented from flowing into second neutralization tank 604b and accumulating. Therefore, in a case where the water softening treatment is resumed after the end of the regeneration treatment, it is possible to suppress an increase in hardness of soft water fed from second neutralization tank 604b due to ionization of a precipitate deposited in second neutralization tank 604b by reaction with hydrogen ions released from first water softening tank 603a and second water softening tank 603b.

Furthermore, in the regeneration treatment, the alkaline electrolytic water in which the precipitate derived from the hardness component has passed through capture unit 610 flows through second neutralization tank 604b and first neutralization tank 604a, is then electrolyzed again in electrolytic tank 609, and is used again as alkaline electrolytic water to regenerate weakly basic anion exchange resin 634. At this time, the hardness component contained in the acidic electrolytic water is reduced as compared with the case where capture unit 610 is not provided. That is, since the hardness of the acidic electrolytic water is reduced by capturing the precipitate by capture unit 610, the hardness components flowing into first water softening tank 603a and second water softening tank 603b can be reduced, and a decrease in the regeneration efficiency of weakly acidic cation exchange resin 633 can be suppressed.

Note that "the hardness component reacts" includes not only a state in which all the hardness components react but also a state in which a component that does not react or a component that does not exceed the solubility product is contained.

The form of capture unit 610 is not limited as long as the precipitate generated by the reaction between the hardness component and the alkaline electrolytic water can be separated. For example, a form using a cartridge type filter, a filtration layer using a granular filter material, a cyclone type solid-liquid separator, a hollow fiber membrane, or the like can be mentioned.

As a means generally used as a form of capture unit 610, a cartridge type filter can be exemplified. As the cartridge type filter, a deep filtration type such as a yarn winding filter, a surface filtration type such as a pleated filter and a membrane filter, or a combination thereof can be used.

Capture unit 610 includes on-off valve 622 and capture unit drainage port 614.

On-off valve 622 is a valve provided below capture unit 610, and is a valve that controls drainage in capture unit 610. By opening on-off valve 622, water in capture unit 610 can be discharged from capture unit drainage port 614 to the outside of the device.

Capture unit drainage port 614 is an opening through which water in capture unit 610 is discharged to the outside of the device. By opening on-off valve 622 provided upstream of capture unit drainage port 614, water in capture unit 610 can be discharged from capture unit drainage port 614 to the outside of the device.

### <Post-regeneration water storage tank>

Post-regeneration water storage tank 664 is a tank that stores the high hardness water (post-regeneration water) remaining in water softening tank regeneration circulation flow path 639 after the regeneration treatment. Although details will be described later, post-regeneration water which is water containing a large amount of hardness components released from water softening tank 603 exists in water softening tank regeneration circulation flow path 639 after the regeneration treatment. By storing the post-regeneration water and mixing the water with the raw water to obtain mixed water, electrolytic tank 609 can be filled with mixed water having high electrical conductivity at the time of the next regeneration treatment.

Post-regeneration water storage tank 664 is communicably connected to mixing unit 660 by post-regeneration water introduction flow path 662, and can send the post-regeneration water in the tank to mixing unit 660.

Post-regeneration water storage tank 664 may be installed at any place as long as it is in water softening tank regeneration circulation flow path 639, but is preferably provided on the downstream side of electrolytic tank 609 and on the upstream side of second water softening tank 603b starting from electrolytic tank 609 in water softening tank regeneration circulation flow path 639. By providing in this manner, water can be stored while suppressing the influence of post-regeneration water on the water softening treatment. Furthermore, since the acidic post-regeneration water can be stored, adsorption to weakly acidic cation exchange resin 633 on the downstream side can be prevented, and the load on electrodes 641 at the time of electrolysis can be reduced as compared with the case of electrolysis from neutral water.

### <Mixing unit>

Mixing unit 660 mixes the raw water with post-regeneration water generated during a regeneration treatment to be described later to obtain mixed water. Mixing unit 660 makes it possible to obtain mixed water having higher electrical conductivity than raw water. The generated mixed water is supplied to electrolytic tank 609 through supply flow path 672.

Mixing unit 660 is communicably connected to post-regeneration water storage tank 664 by post-regeneration water introduction flow path 662.

Mixing unit 660 may be installed at any place as long as it is in water softening tank regeneration circulation flow path 639, but is preferably provided on the downstream side of electrolytic tank 609 and on the upstream side of second water softening tank 603b starting from electrolytic tank 609 in water softening tank regeneration circulation flow path 639.

### <On-off valve and flow path switching valve>

A plurality of on-off valves (on-off valve 618 to on-off valve 623 and on-off valve 663) are provided in the respective flow paths, and switch between an "open" state and a "closed" state in the respective flow paths.

The plurality of on-off valves (on-off valve 618, on-off valve 619, on-off valve 621, on-off valve 623, and on-off valve 663) start or stop the flow of water to the respective flow paths by opening and closing the valves.

On-off valve 620 and on-off valve 622 are opened at the time of the regeneration flow path washing treatment, the electrolytic tank washing treatment, and the capture unit washing treatment to be described later, and discharge the regenerated circulating water to the outside of the device.

The plurality of flow path switching valves (flow path switching valve 624 to flow path switching valve 627) are provided in first water softening tank 603a, second water softening tank 603b, first neutralization tank 604a, and second neutralization tank 604b, respectively. Each of the plurality of flow path switching valves includes three openings. A first opening is an inflow and outflow port through which water can flow in and out, a second opening is an inlet port that does not function as an outflow port and functions as an inlet port, and a third opening is an outflow port that does not function as an inlet port and functions as an outflow port. In each of the plurality of flow path switching valves, the inflow and outflow port is always "opened", and when either the inlet port or the outflow port is "opened" depending on the water flowing direction, the other inlet port or outflow port is "closed". By providing flow path switching valves 624 to 627, the number of on-off valves required for each flow path in water softening device 601 can be reduced, and the cost of water softening device 601 can be reduced.

Furthermore, the plurality of on-off valves (on-off valve 618 to on-off valve 623 and on-off valve 663) and the plurality of flow path switching valves (flow path switching valve 624 to flow path switching valve 627) are each connected to controller 615 described later so as to communicate with the controller 615 in a wireless or wired manner.

### <Drainage port>

Drainage port 613 is an opening provided at an end of drainage flow path 654, and is an opening for discharging water in the device to the outside of the device in the regeneration path washing treatment and the electrolytic tank washing treatment. On-off valve 620 is provided upstream of drainage port 613, and drainage from drainage port 613 can be performed by opening on-off valve 620.

### <Controller>

Controller 615 controls the execution of each treatment of the water softening treatment, the mixing treatment, the regeneration treatment, the water storage treatment, the regeneration flow path washing treatment, the electrolytic tank washing treatment, and the capture unit washing treatment, and switching among the treatments.

Specifically, controller 615 controls switching from the water softening treatment to the mixing treatment, switching from the mixing treatment to the regeneration treatment, switching from the regeneration treatment to the water storage treatment, switching from the water storage treatment to the regeneration flow path washing treatment, switching from the regeneration flow path washing treatment to the electrolytic tank washing treatment, switching from the electrolytic tank washing treatment to the capture unit washing treatment, and switching from the capture unit washing treatment to the water softening treatment.

Furthermore, controller 615 controls on-off valve 620 and on-off valve 622 to control the drainage in the regeneration flow path washing treatment, the electrolytic tank washing treatment, and the capture unit washing treatment.

Furthermore, controller 615 controls flow path switching valve 624 to flow path switching valve 627, on-off valve 618, on-off valve 619, on-off valve 621, on-off valve 623, and on-off valve 663, and executes switching of the flow paths.

### (Each flow path)

### ((Flow path))

Flow path 653 is a flow path that communicably connects inlet port 602 and water intake port 607, and on-off valve 618 is provided on the flow path. Even when any one of the regeneration treatment, the regeneration flow path washing treatment, the electrolytic tank washing treatment, and the capture unit washing treatment is performed, the user of water softening device 601 can obtain raw water from water intake port 607 by flow path 653.

### ((Post-regeneration water introduction flow path>>

Post-regeneration water introduction flow path 662 is a flow path that supplies post-regeneration water to post-regeneration water storage tank 664 after completion of the regeneration treatment, and supplies post-regeneration water to mixing unit 660 at the time of a mixing treatment to be described later.

Post-regeneration water introduction flow path 662 is a flow path that communicatively connects mixing unit 660 connected to first supply flow path 635 and post-regeneration water storage tank 664, and includes on-off valve 663 on the flow path. After completion of the regeneration treatment, post-regeneration water introduction flow path 662 introduces post-regeneration water remaining in water softening tank regeneration circulation flow path 639, particularly first supply flow path 635, into post-regeneration water storage tank 664 in accordance with opening of on-off valve 663. Furthermore, at the time of mixing treatment, post-regeneration water introduction flow path 662 introduces the post-regeneration water stored in post-regeneration water storage tank 664 into mixing unit 660 in accordance with opening of on-off valve 663.

### ((Water softening flow path))

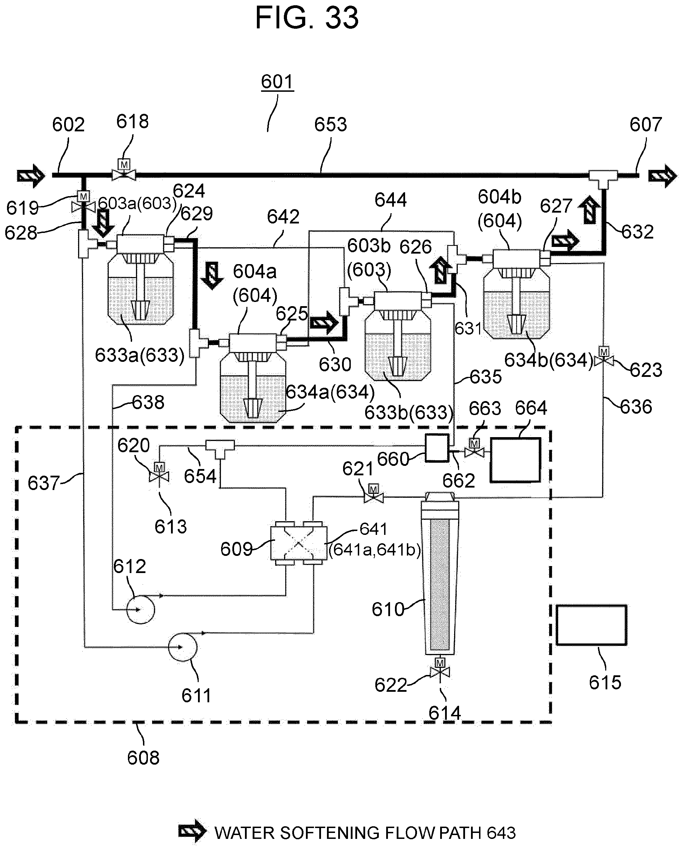

Water softening flow path 643 formed at the time of the water softening treatment of water softening device 601 will be described with reference to Fig. 33. Fig. 33 is a configuration diagram illustrating water softening flow path 643 of water softening device 601.

Water softening flow path 643 (hatched arrow in Fig. 33) is a flow path for softening raw water, and the raw water flowing through water softening flow path 643 becomes neutral soft water and is discharged from water intake port 607 to the outside of the device.

Water softening flow path 643 is formed by inlet port 602, flow path 628, first water softening tank 603a, flow path 629, first neutralization tank 604a, flow path 630, second water softening tank 603b, flow path 631, second neutralization tank 604b, flow path 632, and water intake port 607.

Flow path 628 is a flow path connecting from the inlet port 602 to first water softening tank 603a. That is, flow path 628 is a flow path that guides raw water containing a hardness component from inlet port 602 to first water softening tank 603a.

Flow path 629 is a flow path connecting from first water softening tank 603a to first neutralization tank 604a. That is, flow path 629 is a flow path for guiding the water softened in first water softening tank 603a to first neutralization tank 604a.

Flow path 630 is a flow path connecting from first neutralization tank 604a to second water softening tank 603b. That is, flow path 630 is a flow path for guiding the water neutralized in first neutralization tank 604a to second water softening tank 603b.

Flow path 631 is a flow path connecting from second water softening tank 603b to second neutralization tank 604b. That is, flow path 631 is a flow path for guiding the water softened in second water softening tank 603b to second neutralization tank 604b.

Flow path 632 is a flow path connecting from the second neutralization tank to water intake port 607. That is, flow path 632 is a flow path that guides the softened raw water from second neutralization tank 604b to water intake port 607.

As illustrated in Fig. 33, on-off valve 619 is installed on flow path 628 on the downstream side of the inlet port 602 and on the upstream side of first water softening tank 603a. Furthermore, on-off valve 618 is installed in flow path 653 described later. By closing on-off valve 618 and opening on-off valve 619, first water softening tank 603a and inlet port 602 are communicably connected. Furthermore, flow path switching valve 624 is switched so that first water softening tank 603a and first neutralization tank 604a communicate with each other, flow path switching valve 625 is switched so that second water softening tank 603b and second neutralization tank 604b communicate with each other, flow path switching valve 626 is switched so that first neutralization tank 604a and second water softening tank 603b communicate with each other, and flow path switching valve 627 is switched so that second water softening tank 603b and second neutralization tank 604b communicate with each other. As a result, water softening flow path 643 that communicatively connects from inlet port 602 to flow path 628, first water softening tank 603a, flow path 629, first neutralization tank 604a, flow path 630, second water softening tank 603b, flow path 631, second neutralization tank 604b, flow path 632, and water intake port 607 is formed. At this time, on-off valve 620, on-off valve 621, and on-off valve 623 are closed.

### ((Regeneration circulation flow path))

Next, water softening tank regeneration circulation flow path 639 and neutralization tank regeneration circulation flow path 640 formed at the time of the regeneration treatment of water softening device 601 will be described with reference to Fig. 34. Fig. 34 is a configuration diagram illustrating water softening tank regeneration circulation flow path 639 and neutralization tank regeneration circulation flow path 640 of water softening device 601.

First, water softening tank regeneration circulation flow path 639 will be described.

Water softening tank regeneration circulation flow path 639 is a flow path for regenerating first water softening tank 603a and second water softening tank 603b by flowing acidic electrolytic water during the regeneration treatment, and as illustrated in Fig. 34 (white arrow), is a flow path in which water delivered by first water pump 611 flows through electrolytic tank 609, second water softening tank 603b, and first water softening tank 603a, returns to electrolytic tank 609, and circulates.

Specifically, water softening tank regeneration circulation flow path 639 is constituted by the respective flow paths of first supply flow path 635, neutralization tank bypass flow path 642, and first collection flow path 637 connecting electrolytic tank 609, second water softening tank 603b, first water softening tank 603a, and first water pump 611.

First supply flow path 635 is a flow path communicably connecting from the downstream side of electrolytic tank 609 to the downstream side of second water softening tank 603b, and is a flow path for supplying acidic electrolytic water from electrolytic tank 609 to second water softening tank 603b.

Neutralization tank bypass flow path 642 is a flow path that bypasses first neutralization tank 604a and communicatively connects from the upstream side of second water softening tank 603b to the downstream side of first water softening tank 603a, and is a flow path for supplying acidic electrolytic water from second water softening tank 603b to first water softening tank 603 a.

First collection flow path 637 is a flow path that communicably connects from the upstream side of first water softening tank 603a to electrolytic tank 609, and is a flow path that collects acidic electrolytic water containing a hardness component that has passed through first water softening tank 603a and second water softening tank 603b into electrolytic tank 609. First collection flow path 637 is provided with a first water pump 611.

Furthermore, water softening regeneration circulation flow path 639 is a flow path for introducing the acidic electrolytic water delivered from electrolytic tank 609 into first water softening tank 603a and second water softening tank 603b from the downstream side of first water softening tank 603a and second water softening tank 603b, and causing the acidic electrolytic water to flow out from the upstream side where the adsorption amount of the hardness component is larger than that on the downstream side of the water softening tank. Note that the downstream side refers to the downstream side in the flow path during the water softening treatment.

Next, neutralization tank regeneration circulation flow path 640 will be described.

Neutralization tank regeneration circulation flow path 640 is a flow path for regenerating first neutralization tank 604a and second neutralization tank 604b by flowing alkaline electrolytic water during the regeneration treatment. As illustrated in Fig. 34 (black arrow), the water delivered by second water pump 612 flows through electrolytic tank 609, second neutralization tank 604b, and first neutralization tank 604a, and returns to electrolytic tank 609 to circulate.

Specifically, neutralization tank regeneration circulation flow path 640 is constituted by the respective flow paths of second supply flow path 636, water softening tank bypass flow path 644, and second collection flow path 638 connecting electrolytic tank 609, second neutralization tank 604b, first neutralization tank 604a, and second water pump 612.

Second supply flow path 636 is a flow path communicatively connecting from the downstream side of electrolytic tank 609 to the downstream side of second neutralization tank 604b, and is a flow path for supplying alkaline electrolytic water from electrolytic tank 609 to second neutralization tank 604b. In second supply flow path 636, a capture unit 610, on-off valve 621, and on-off valve 623 are installed.

Water softening tank bypass flow path 644 is a flow path that bypasses second water softening tank 603b and communicatively connects from the upstream side of second neutralization tank 604b to the downstream side of first neutralization tank 604a, and is a flow path for supplying alkaline electrolytic water from second neutralization tank 604b to first neutralization tank 604a.

Second collection flow path 638 is a flow path that communicatively connects from the upstream side of first neutralization tank 604a to electrolytic tank 609, and is a flow path that collects the alkaline electrolytic water having passed through first neutralization tank 604a and second neutralization tank 604b into electrolytic tank 609. Second water pump 612 is provided in second collection flow path 638.

### ((Water storage flow path))

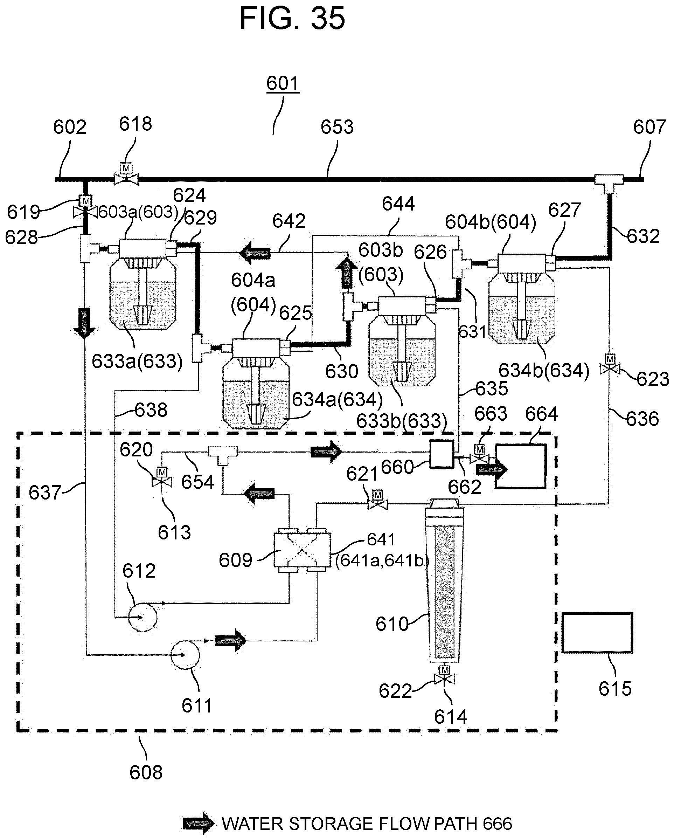

Next, water storage flow path 666 formed at the time of water storage treatment of water softening device 601 will be described with reference to Fig. 35. Fig. 35 is a configuration diagram illustrating water storage flow path 666 of water softening device 601.

Water storage flow path 666 is a flow path for feeding post-regeneration water, which is high hardness water remaining in the flow path, to post-regeneration water storage tank 664 during a water storage treatment to be described later.

As illustrated in Fig. 35 (black arrow), water storage flow path 666 is a flow path for supplying post-regeneration water in first supply flow path 635, second water softening tank 603b, neutralization tank bypass flow path 642, first water softening tank 603a, first collection flow path 637, first water pump 611, electrolytic tank 609, first supply flow path 635, and mixing unit 660 to post-regeneration water storage tank 664 via post-regeneration water introduction flow path 662.

### ((Regeneration flow path washing flow path))

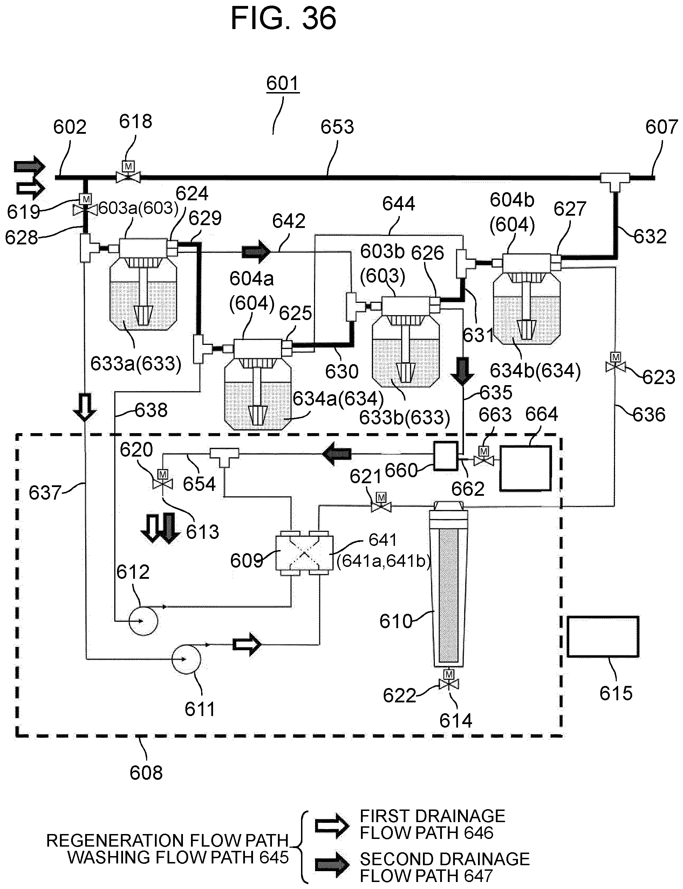

Next, regeneration flow path washing flow path 645 formed in the regeneration flow path washing treatment of water softening device 601 will be described with reference to Fig. 36. Fig. 36 is a configuration diagram illustrating the regeneration flow path washing flow path 645 of water softening device 601.

Regeneration flow path washing flow path 645 is a flow path for discharging the high hardness water remaining in the flow path to the outside of the device without flowing into first neutralization tank 604a and second neutralization tank 604b during a regeneration flow path washing treatment to be described later. Regeneration flow path washing flow path 645 includes first drainage flow path 646 and second drainage flow path 647.

As illustrated in Fig. 36 (white arrow), first drainage flow path 646 is constituted by flow paths connecting first water pump 611, electrolytic tank 609, on-off valve 620, and drainage port 613 from inlet port 602. Specifically, first drainage flow path 646 is a flow path that causes the raw water flowing in from the inlet 602 to flow through flow path 628, first collection flow path 637, first water pump 611, electrolytic tank 609, drainage flow path 654, on-off valve 620, and drainage port 613 in this order.

Drainage flow path 654 is a flow path connected to first supply flow path 635 at one end, and is a flow path connected to drainage port 613 at the other end. On-off valve 620 is provided in drainage flow path 654, and water in the flow path can be drained to the outside of the device by opening on-off valve 620, and drainage from drainage port 613 can be stopped by closing on-off valve 620.

As illustrated in Fig. 36 (black arrow), second drainage flow path 647 is constituted by respective flow paths communicatively connecting from the inlet port 602 to first water softening tank 603a, second water softening tank 603b, on-off valve 620, and drainage port 613. Specifically, second drainage flow path 647 is a flow path that causes the raw water flowing in from inlet port 602 to flow through flow path 628, first water softening tank 603a, neutralization tank bypass flow path 642, second water softening tank 603b, first supply flow path 635, on-off valve 620, and drainage port 613 in this order.

Note that the flow rate of water flowing through second drainage flow path 647 is preferably controlled to be larger than the flow rate of water flowing through first drainage flow path. As a result, it is possible to preferentially replace the high hardness water in the second drainage flow path which is a flow path including the water softening tank used at the time of the water softening treatment with the raw water. Therefore, it is possible to suppress the influence of high hardness water when the water softening treatment is started.

### ((Electrolytic tank washing flow path))

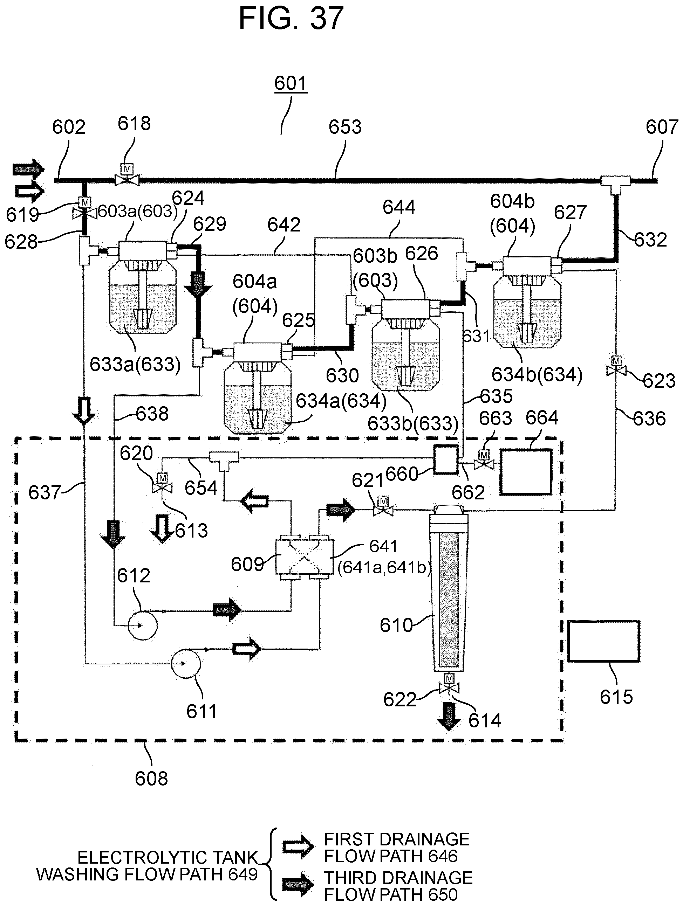

Next, electrolytic tank washing flow path 649 formed in the electrolytic tank washing treatment of water softening device 601 will be described with reference to Fig. 37. Fig. 37 is a configuration diagram illustrating electrolytic tank washing flow path 649 of water softening device 601.

Electrolytic tank washing flow path 649 is a flow path for removing a precipitate caused by a hardness component in electrolytic tank 609 and the neutralization tank regeneration circulation flow path 640 during an electrolytic tank washing treatment described later. Electrolytic tank washing flow path 649 includes first drainage flow path 646 and third drainage flow path 650.

As illustrated in Fig. 37 (black arrow), third drainage flow path 650 is constituted by respective flow paths communicably connecting from the inlet port 602 to first water softening tank 603a, second water pump 612, electrolytic tank 609, on-off valve 621, capture unit 610, on-off valve 622, and capture unit drainage port 614. Specifically, third drainage flow path 650 is a flow path that causes the raw water flowing in from inlet port 602 to flow through flow path 628, first water softening tank 603a, second collection flow path 638, second water pump 612, electrolytic tank 609, second supply flow path 636, on-off valve 621, capture unit 610, and on-off valve 622 in this order, and discharges the raw water from capture unit drainage port 614 to the outside of the device. More specifically, in third drainage flow path 650, the raw water flowing in from inlet port 602 is caused to flow into first water softening tank 603a via flow path 628 to obtain acidic soft water. The generated acid soft water is caused to flow into electrolytic tank 609 through second water pump 612 by second collection flow path 638. Thereafter, the acidic soft water is allowed to flow through on-off valve 621, capture unit 610, and on-off valve 622 in this order through second supply flow path 636 to dissolve the precipitate of capture unit 610, and is discharged to the outside of the device from the capture unit drainage port 614.

### ((Capture unit washing flow path))

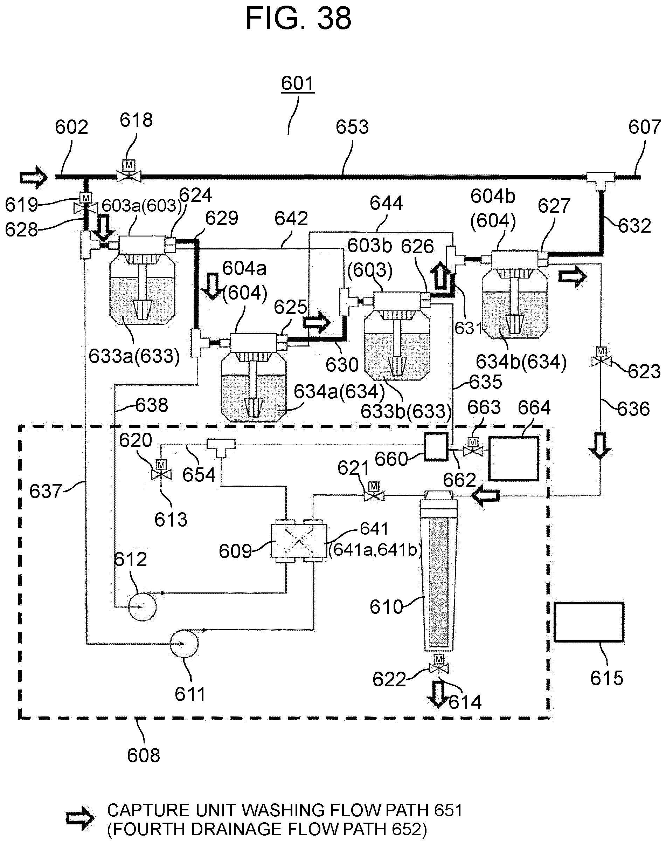

Next, the capture unit washing flow path 651 formed at the time of the capture unit washing treatment of water softening device 601 will be described with reference to Fig. 38. Fig. 38 is a configuration diagram illustrating capture unit washing flow path 651 of water softening device 601.

Capture unit washing flow path 651 is a flow path for removing a precipitate derived from the hardness component precipitated in capture unit 610 in a capture unit washing treatment to be described later. Capture unit washing flow path 651 includes fourth drainage flow path 652.

As illustrated in Fig. 38, capture unit washing flow path 651 is constituted by respective flow paths communicatively connecting from the inlet port 602 to first water softening tank 603 a, first neutralization tank 604a, second water softening tank 603b, second neutralization tank 604b, capture unit 610, and capture unit drainage port 614. Specifically, capture unit washing flow path 651 is a flow path that causes the raw water flowing in from the inlet port 602 to flow through flow path 628, first water softening tank 603a, flow path 629, first neutralization tank 604a, flow path 630, second water softening tank 603b, flow path 631, second neutralization tank 604b, second supply flow path 636, on-off valve 623, capture unit 610, and on-off valve 622 in this order, and discharges the raw water from capture unit drainage port 614 to the outside of the device.

### ((Raw water introduction flow path and supply flow path))

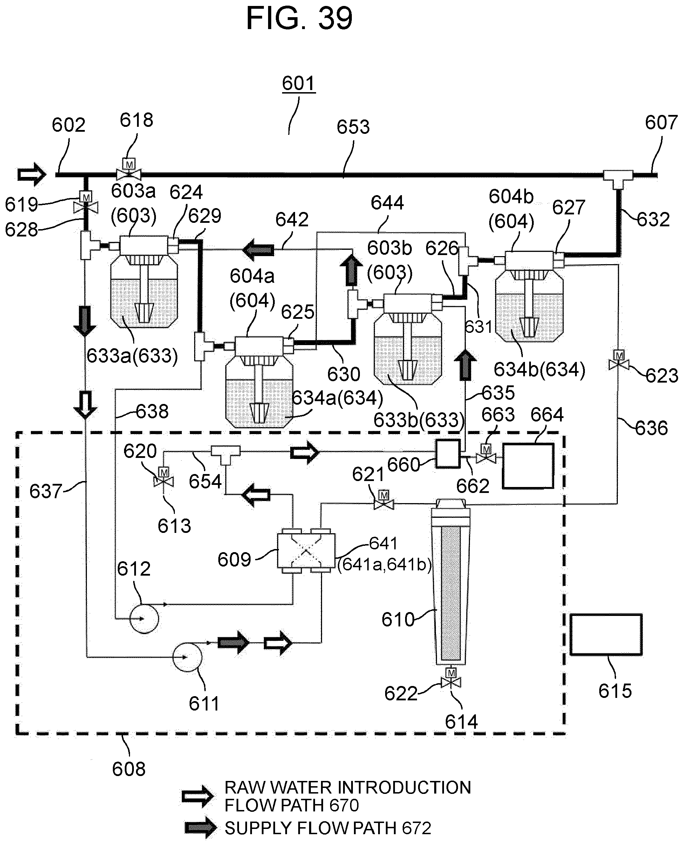

Next, with reference to Fig. 39, raw water introduction flow path 670 and supply flow path 672 formed at the time of mixing treatment to be described later will be described. Fig. 39 is a configuration diagram illustrating raw water introduction flow path 670 and supply flow path 672 of water softening device 601.

First, raw water introduction flow path 670 will be described. Raw water introduction flow path 670 is a flow path for supplying the raw water to mixing unit 660 at the time of mixing treatment to be described later.

As illustrated in Fig. 39 (white arrow), raw water introduction flow path 670 is a flow path that communicably connects from inlet port 602 to mixing unit 660, and specifically, in the seventh exemplary embodiment, raw water introduction flow path 670 is a flow path that causes raw water flowing in from inlet port 602 to flow through flow path 628, first collection flow path 637, first water pump 611, electrolytic tank 609, and first supply flow path 635 in this order, and to flow into mixing unit 660.

Supply flow path 672 is a flow path for supplying mixed water generated by mixing unit 660 to electrolytic tank 609 during mixing treatment to be described later.

As illustrated in Fig. 39 (black arrow), supply flow path 672 is a flow path that communicatively connects mixing unit 660 and electrolytic tank 609. Specifically, in the seventh exemplary embodiment, supply flow path 672 is a flow path that causes mixed water generated by mixing unit 660 to flow through first supply flow path 635, second water softening tank 603b, neutralization tank bypass flow path 642, first water softening tank 603a, first collection flow path 637, and first water pump 611 in this order, and to flow into electrolytic tank 609.

The above is the configuration of water softening device 601.

Next, the operation of water softening device 601 will be described.

### <Water softening treatment, mixing treatment, regeneration treatment, water storage treatment, regeneration flow path washing treatment, electrolytic tank washing treatment, and capture unit washing treatment>

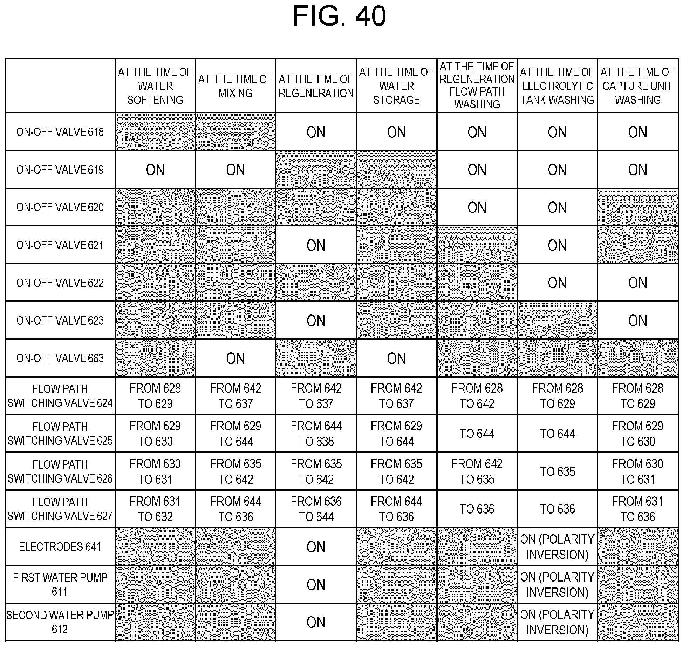

Next, the water softening treatment, the mixing treatment, the regeneration treatment, the water storage treatment, the regeneration flow path washing treatment, the electrolytic tank washing treatment, and the capture unit washing treatment of water softening device 601 will be described with reference to Fig. 40. Fig. 40 is a diagram illustrating a state of water softening device 601 during operation. Note that hereinafter, a series of flows of the water softening treatment, the mixing treatment, the regeneration treatment, the water storage treatment, the regeneration flow path washing treatment, the electrolytic tank washing treatment, and the capture unit washing treatment may be referred to as a softening regeneration treatment.

In the water softening treatment, the mixing treatment, the regeneration treatment, the water storage treatment, the regeneration flow path washing treatment, the electrolytic tank washing treatment, and the capture unit washing treatment, as illustrated in Fig. 40, controller 615 switches on-off valve 618 to on-off valve 623, on-off valve 663, flow path switching valve 624 to flow path switching valve 627, electrodes 641 of electrolytic tank 609, first water pump 611, and second water pump 612, and performs control so as to be in respective circulation states.

Here, "ON" in Fig. 40 indicates a state in which the corresponding on-off valve is "opened", a state in which electrodes 641 are energized, and a state in which the corresponding water pump is operating, respectively. Blanks indicate a state in which the corresponding on-off valve is "closed", a state in which electrodes 641 are not energized, and a state in which the corresponding water pump is stopped, respectively.

Furthermore, "from (component number) to (component number)" in Fig. 40 indicates a state in which the corresponding flow path switching valve connects the flow paths in a direction in which water is supplied from the corresponding component to the corresponding component. For example, flow path switching valve 624 for the water softening treatment connects the respective flow paths so that water can be supplied from flow path 628 to flow path 629.

"To (component number)" in Fig. 40 indicates a state in which the corresponding flow path switching valve connects the flow paths in a direction in which there is a possibility of supplying water to the corresponding component. At this time, although the flow path is connected, since it is under an environment in which inflow and outflow of water to and from the water softening tank or neutralization tank provided with the corresponding flow path switching valve are unlikely to occur, water feeding from the corresponding flow path switching valve is extremely unlikely to occur.

### ((Water softening treatment))

First, the operation at the time of water softening treatment by water softening device 601 will be described with reference to Fig. 33 and the columns of "at the time of water softening" in Fig. 40.

In water softening device 601, as illustrated in Fig. 40, in the water softening treatment, on-off valve 619 provided in flow path 628 is opened in a state where on-off valve 618 is closed. As a result, the raw water containing the hardness component flows in from the outside. Since the flowed raw water flows through first water softening tank 603a, first neutralization tank 604a, second water softening tank 603b, and second neutralization tank 604b in this order, water softening device 601 can take out softened water (neutral soft water) from water intake port 607. At this time, flow path switching valve 624 is in a connection state capable of supplying water from flow path 628 to flow path 629, flow path switching valve 625 is in a connection state capable of supplying water from flow path 629 to flow path 630, flow path switching valve 626 is in a connection state capable of supplying water from flow path 630 to flow path 631, and flow path switching valve 627 is in a connection state capable of supplying water from flow path 631 to flow path 632. On-off valve 620 to on-off valve 623 are all closed. Furthermore, the operations of electrodes 641 of electrolytic tank 609, first water pump 611, and second water pump 612 are also stopped.

Specifically, as illustrated in Fig. 32, in the water softening treatment, the raw water is supplied from the inlet port 602 to first water softening tank 603a through flow path 628 by the pressure of the raw water flowing in from the outside. The raw water supplied to first water softening tank 603a flows through weakly acidic cation exchange resin 633 provided in first water softening tank 603a. At this time, cations as hardness components in the raw water are adsorbed by the action of weakly acidic cation exchange resin 633, and hydrogen ions are released (ion exchange is performed). Then, cations are removed from the raw water, whereby the raw water is softened. Since softened water contains a large amount of hydrogen ions that have been exchanged for hardness components and have flowed out, the softened water is acidified to be acidic water (first soft water) having a low pH. Here, when water containing a large amount of the permanent hardness component (for example, a sulfate such as calcium sulfate or a chloride such as magnesium chloride) as the hardness component is softened, the pH of water containing a large amount of the permanent hardness component is likely to decrease compared with the pH of water containing a large amount of the temporary hardness component (carbonates such as, for example, calcium carbonate). Since water softening is less likely to proceed in a state in which the pH is lowered, water flowing through first water softening tank 603a is caused to pass through first neutralization tank 604a to perform neutralization.

The softened water flows through flow path 629 via flow path switching valve 624 provided in first water softening tank 603a and flows into first neutralization tank 604a. In first neutralization tank 604a, hydrogen ions contained in the softened water are adsorbed by the action of weakly basic anion exchange resin 634. That is, since hydrogen ions are removed from the water softened by first water softening tank 603a, the lowered pH is increased and neutralized. Therefore, as compared with the case where water softened in first water softening tank 603a is directly softened in second water softening tank 603b, the water softening treatment in second water softening tank 603b easily proceeds.

Water (neutralized first soft water) neutralized by first neutralization tank 604a flows through flow path 630 via flow path switching valve 625 provided in first neutralization tank 604a, and flows into second water softening tank 603b. In second water softening tank 603b, cations as hardness components are adsorbed and hydrogen ions are released by the action of weakly acidic cation exchange resin 633. Second water softening tank 603b exchanges the hardness components that could not be removed in first water softening tank 603a with hydrogen ions of weakly acidic cation exchange resin 633. That is, the water flowing into second water softening tank 603b is further softened to become soft water (second soft water).

Second soft water flows through flow path 631 via flow path switching valve 626 provided in second water softening tank 603b, and flows into second neutralization tank 604b. In second neutralization tank 604b, hydrogen ions contained in the inflowing second soft water are adsorbed by the action of weakly basic anion exchange resin 634. That is, since hydrogen ions are removed from the second soft water, the lowered pH increases, and the second soft water becomes neutral soft water (neutralized second soft water) that can be used as domestic water. The neutralized second soft water flows through flow path 632 via flow path switching valve 627 provided in second neutralization tank 604b, and can be taken out from water intake port 607.

That is, in the water softening treatment, the raw water flows through first water softening tank 603a, first neutralization tank 604a, second water softening tank 603b, and second neutralization tank 604b in this order. As a result, the raw water containing the hardness component flows out of first water softening tank 603a before the pH of the raw water is lowered by the water softening treatment in first water softening tank 603a, is neutralized in first neutralization tank 604a, is softened in second water softening tank 603b, and is neutralized in second neutralization tank 604b. Therefore, as compared with the case where each of the water softening tank and the neutralization tank is constituted by a single body, it is possible to suppress a decrease in pH of water flowing in the water softening tank, that is, acidification, and thus exchange between the hardness components and hydrogen ions held by weakly acidic cation exchange resin 633 in the water softening tank (particularly, second water softening tank 5) easily occurs. Therefore, the water softening performance can be improved.

Then, water softening device 601 ends the water softening treatment and executes the mixing treatment when the time zone specified by controller 615 is reached or when the amount of water to be treated in the water softening treatment exceeds a certain amount of water.

### ((Mixing treatment))

Next, the operation at the time of mixing treatment by water softening device 601 will be described with reference to Fig. 39 and the columns of "at the time of mixing" in Fig. 40.

In water softening device 601, the cation exchange capacity of first water softening tank 603a and second water softening tank 603b filled with weakly acidic cation exchange resin 633 decreases or disappears as the use is continued. Therefore, it is necessary to regenerate water softening tank 603 and neutralization tank 604 by a regeneration treatment to be described later.

In the regeneration treatment, water is electrolyzed in electrolytic tank 609, and the regeneration is performed using the generated acidic electrolytic water and alkaline electrolytic water. However, in a case where water having a low conductivity such as raw water is used in the electrolysis, resistance generated when the same current value is applied increases as compared with a case where water having a high conductivity is electrolyzed. Therefore, the voltage applied between electrodes 641 of electrolytic tank 609 increases, and electrodes 641 are consumed in a short period of time. That is, it becomes a factor of shortening the life of electrolytic tank 609, and it becomes difficult to stably supply the acidic electrolytic water and the alkaline electrolytic water over a long period of time. As a means for preventing this, a method of adding a chemical such as sodium sulfate to raw water to increase the conductivity is conceivable, but it is necessary to supply the chemical.

Therefore, in the seventh exemplary embodiment, mixing treatment is performed to prepare water having conductivity higher than that of the raw water. In the mixing treatment, post-regeneration water generated by the previous regeneration treatment is used.

In the regeneration treatment, as the regeneration treatment of the weakly acidic cation exchange resin and the weakly basic anion exchange resin proceeds, the hardness of the acidic electrolytic water increases due to the hardness component (for example, calcium ions and magnesium ions) released from the water softening tank. Therefore, in a system in which the acidic electrolytic water having increased hardness is electrolyzed again and reused for the regeneration treatment, the hardness of the acidic electrolytic water increases as the time from the start of the regeneration treatment elapses, and the acidic electrolytic water becomes high hardness water. The hardness component concentration of the high hardness water (post-regeneration water) after completion of the regeneration treatment is, for example, about 1500 ppm to 2000 ppm. That is, since the post-regeneration water contains a large amount of a hardness component which is an electrolyte, the conductivity can be increased by mixing with the raw water. Therefore, by using the post-regeneration water, it is possible to increase the conductivity of the liquid supplied to electrolytic tank 609 without adding a chemical such as sodium sulfate, and it is possible to suppress an increase in the voltage applied to the electrodes 641.

Furthermore, when the water softening treatment is started in a state where the high hardness water generated by the regeneration treatment remains in the device, water having a hardness higher than that of the raw water is discharged from water intake port 607 at the initial stage of the water softening treatment, so that it has been necessary to discharge the entire amount of the post-regeneration water. However, if the post-regeneration water is used for the mixing treatment, the amount of post-regeneration water discharged can be reduced.

In the mixing treatment, specifically, high hardness water (post-regeneration water) which is water generated in the previous regeneration treatment and contains a hardness component and has a conductivity higher than that of the raw water is mixed with the raw water to obtain mixed water. In other words, the post-regeneration water generated by the n-th regeneration treatment is mixed with the raw water at the time of the (n + 1)-th mixing treatment to obtain mixed water. Note that n is an integer of one or more.

More specifically, as illustrated in Fig. 40, on-off valve 618 and on-off valves 620 to 623 are closed, and on-off valve 619 is opened. As a result, as illustrated in Fig. 39, raw water introduction flow path 670 is formed.

In the mixing treatment, the raw water flows into raw water introduction flow path 670 from the outside by opening on-off valve 619.

In raw water introduction flow path 670, due to the pressure of the flowing raw water, the raw water flows through flow path 628, first collection flow path 637, first water pump 611, electrolytic tank 609, and first supply flow path 635 in this order, and flows into mixing unit 660. Furthermore, since on-off valve 663 is opened, the post-regeneration water stored in post-regeneration water storage tank 664 flows into mixing unit 660 via post-regeneration water introduction flow path 662. Therefore, in mixing unit 660, the raw water and the post-regeneration water are mixed, and mixed water having a conductivity higher than that of the raw water is generated.

Note that the conductivity of the raw water varies depending on the water collection site and the water quality, but is 30 µs/cm to 600 µs/cm, and the conductivity of the post-regeneration water is 1000 µs/cm to 3000 µs/cm.

Here, the flow path switching valve 624 is in a connection state capable of supplying water from the neutralization tank bypass flow path 642 to first collection flow path 637, and flow path switching valve 625 is in a connection state capable of supplying water from flow path 629 to water softening tank bypass flow path 644. Furthermore, flow path switching valve 626 is in a connection state capable of supplying water from first supply flow path 635 to neutralization tank bypass flow path 642, and flow path switching valve 627 is in a connection state capable of supplying water from water softening tank bypass flow path 644 to second supply flow path 636. That is, first water softening tank 603a and second water softening tank 603b are communicably connected to each other. As a result, as illustrated in Fig. 39, supply flow path 672 is formed. Note that at this time, the operations of electrodes 641, first water pump 611, and second water pump 612 are stopped.

Therefore, the generated mixed water is discharged from mixing unit 660, flows through first supply flow path 635, second water softening tank 603b, neutralization tank bypass flow path 642, first water softening tank 603a, first collection flow path 637, and first water pump 611, and flows into electrolytic tank 609.

In this way, by the mixing treatment, the raw water is mixed with the post-regeneration water to generate mixed water, and the generated mixed water can be supplied to electrolytic tank 609. Therefore, it is possible to reduce the applied voltage of electrolytic tank 609 at the time of the regeneration treatment to be described later, and it is possible to suppress the consumption of electrodes 641.

Note that the proportion of the post-regeneration water in the mixed water is preferably 15% or more, in other words, the proportion of the raw water in the mixed water is preferably 85% or less. In this way, since the ion concentration in the mixed water can be increased, the conductivity of the mixed water is increased, and the conductivity can be 1000 µs/cm or more. Therefore, it is possible to suppress an increase in the voltage applied to electrodes 641 at the time of electrolysis in the regeneration treatment.

Furthermore, the proportion of post-regeneration water in the mixed water is preferably 25% or less, in other words, the proportion of raw water in the mixed water is preferably 75% or more. This makes it possible to suppress a significant increase in the hardness component concentration in the mixed water. Therefore, it is possible to suppress the occurrence of a state in which a solid such as calcium carbonate is likely to precipitate due to high hardness of the mixed water. Note that in this case, the conductivity of the mixed water is preferably 3000 µs/cm or less.

That is, by setting the ratio of the post-regeneration water to the mixed water to 15% or more and 25% or less, the conductivity of the mixed water can be set to 1000 µs/cm to 3000 µs/cm, an increase in voltage applied to electrodes 641 during electrolysis in the regeneration treatment can be suppressed, and a state in which the post-regeneration water has high hardness and a solid such as calcium carbonate is likely to precipitate can be suppressed.

Then, in water softening device 601, when the time zone specified by controller 615 is reached or when the time of the mixing treatment exceeds a certain period of time (for example, 5 minutes), the mixing treatment is terminated and the regeneration treatment is executed.

### ((Regeneration treatment))

Next, the operation of water softening device 601 at the time of regeneration treatment by regeneration device 608 will be sequentially described with reference to Fig. 34 and the columns of "at the time of regeneration" in Fig. 40.

In water softening device 601, the cation exchange capacity of first water softening tank 603a and second water softening tank 603b filled with weakly acidic cation exchange resin 633 decreases or disappears as the use is continued. That is, ion exchange cannot be performed after all the hydrogen ions, which are functional groups of the cation exchange resin, are exchanged for calcium ions or magnesium ions, which are hardness components. Even before all the hydrogen ions are exchanged for the hardness components, the ion exchange reaction is less likely to occur as the hydrogen ions decrease, so that the water softening performance is deteriorated. In such a state, the hardness component is contained in the treatment water. Therefore, in water softening device 601, it is necessary to perform the regeneration treatment of first water softening tank 603a, second water softening tank 603b, first neutralization tank 604a, and second neutralization tank 604b by regeneration device 608.

At the time of the regeneration treatment, on-off valve 619, on-off valve 620, and on-off valve 622 are closed, on-off valve 618, on-off valve 621, and on-off valve 623 are opened, flow path switching valve 624 is brought into a connection state in which water can be supplied from neutralization tank bypass flow path 642 to first collection flow path 637, flow path switching valve 625 is brought into a connection state in which water can be supplied from water softening tank bypass flow path 644 to second collection flow path 638, flow path switching valve 626 is brought into a connection state in which water can be supplied from supply flow path 635 to neutralization tank bypass flow path 642, and flow path switching valve 627 is brought into a connection state in which water can be supplied from second supply flow path 636 to water softening tank bypass flow path 644. That is, a state in which first water softening tank 603a and second water softening tank 603b are communicably connected to each other, a state in which first neutralization tank 604a and second neutralization tank 604b are communicably connected to each other, and a state in which the drainage of drainage port 613 and the capture portion drainage port 614 is stopped are obtained. As a result, as illustrated in Fig. 34, water softening tank regeneration circulation flow path 639 and neutralization tank regeneration circulation flow path 640 are formed.

When first water pump 611 and second water pump 612 are operated, the acidic electrolytic water and the alkaline electrolytic water in electrolytic tank 609 circulate through water softening tank regeneration circulation flow path 639 and neutralization tank regeneration circulation flow path 640, respectively.

Furthermore, in electrolytic tank 609, the electrodes are energized so that the anode has a high potential with respect to the cathode (positive electrolysis). As a result, hydrogen ions are generated at the anode during electrolysis, and acidic electrolytic water is generated near the anode. On the other hand, hydroxide ions are generated at the cathode, and alkaline electrolytic water is generated near the cathode.

The acidic electrolytic water generated in electrolytic tank 609 flows through first supply flow path 635, is supplied into second water softening tank 603b via flow path switching valve 626, and flows through weakly acidic cation exchange resin 633 inside. Then, the acidic electrolytic water flowing through second water softening tank 603b flows through neutralization tank bypass flow path 642, is supplied into first water softening tank 603a via flow path switching valve 624, and flows through weakly acidic cation exchange resin 633 inside. That is, by passing the acidic electrolytic water through weakly acidic cation exchange resin 633, cations (hardness components) adsorbed to weakly acidic cation exchange resin 633 undergo an ion exchange reaction with hydrogen ions contained in the acidic electrolytic water. As a result, weakly acidic cation exchange resin 633 is regenerated.

Thereafter, the acidic electrolytic water flowing through first water softening tank 603a contains cations and flows into first collection flow path 637. That is, the acidic electrolytic water containing cations that have flowed through weakly acidic cation exchange resin 633 is recovered in electrolytic tank 609 via first collection flow path 637.

As described above, water softening tank regeneration circulation flow path 639 is configured to cause the acidic electrolytic water to flow from the downstream side of second water softening tank 603b, which is a water softening tank located most downstream from the inlet port of the raw water and is a water softening tank having weakly acidic cation exchange resin 633 in which the adsorption amount of hardness components is smaller than that in the water softening tank on the upstream side, and to flow into the downstream side of first water softening tank 603 a located upstream and having weakly acidic cation exchange resin 633 to which more hardness components are adsorbed as compared with second water softening tank 603b. That is, water softening tank regeneration circulation flow path 639 is a flow path that causes the acidic electrolytic water fed from electrolytic tank 609 to flow through second water softening tank 603b, then feeds the acidic electrolytic water to first water softening tank 603a by neutralization tank bypass flow path 642, causes the acidic electrolytic water to flow through first water softening tank 603a, and causes the acidic electrolytic water to flow into electrolytic tank 609 via first collection flow path 637. Thus, during the regeneration treatment, the acidic electrolytic water discharged from electrolytic tank 609 flows into second water softening tank 603b having a smaller adsorption amount of hardness components than first water softening tank 603a, and the acidic electrolytic water containing hardness components is discharged from second water softening tank 603b to first water softening tank 603a. In the regeneration of weakly acidic cation exchange resin 633 in second water softening tank 603b, since the consumption of hydrogen ions in the acidic electrolytic water is smaller than that in first water softening tank 603a, a reduction in the hydrogen ion concentration can be suppressed as compared with the regeneration of first water softening tank 603a. Therefore, it is possible to suppress the acidic electrolytic water containing a large amount of hydrogen ions from flowing into first water softening tank 603a and the hardness components from being re-adsorbed in first water softening tank 603a. Therefore, it is possible to suppress a decrease in the regeneration treatment efficiency and to shorten the regeneration time.

On the other hand, the alkaline electrolytic water generated in the vicinity of the cathode of electrolytic tank 609 flows through second supply flow path 636 and capture unit 610, is supplied into second neutralization tank 604b via flow path switching valve 627, and flows through weakly basic anion exchange resin 634 therein. Then, the alkaline electrolytic water flowing through second neutralization tank 604b flows through water softening tank bypass flow path 644, is supplied into first neutralization tank 604a via flow path switching valve 625, and flows through weakly basic anion exchange resin 634 inside. That is, by allowing the alkaline electrolytic water to pass through weakly basic anion exchange resin 634, anions adsorbed on weakly basic anion exchange resin 634 cause an ion exchange reaction with hydroxide ions contained in the alkaline electrolytic water. As a result, weakly basic anion exchange resin 634 is regenerated.

Thereafter, the alkaline electrolytic water flowing through first neutralization tank 604a contains anions and flows into second collection flow path 638. That is, the alkaline electrolytic water containing anions that has flowed through weakly basic anion exchange resin 634 is recovered in electrolytic tank 609 via second collection flow path 638.

As described above, neutralization tank regeneration circulation flow path 640 is configured to cause the alkaline electrolytic water to flow from the downstream side of second neutralization tank 604b, which is the neutralization tank located most downstream from the inlet port of the raw water and includes weakly basic anion exchange resin 634 having a smaller amount of adsorbed anions than the neutralization tank on the upstream side, and to flow into the downstream side of first neutralization tank 604a, which is located on the upstream side and includes weakly basic anion exchange resin 634 to which more anions are adsorbed than second neutralization tank 604b. That is, neutralization tank regeneration circulation flow path 640 is a flow path that causes the alkaline electrolytic water fed from electrolytic tank 609 to flow through second neutralization tank 604b, then feeds the alkaline electrolytic water to first neutralization tank 604a by water softening tank bypass flow path 644, causes the alkaline electrolytic water to flow through first neutralization tank 604a, and causes the alkaline electrolytic water to flow into electrolytic tank 609 via second collection flow path 638. As a result, during the regeneration treatment, the alkaline electrolytic water flows into second neutralization tank 604b having a smaller adsorption amount of anions than first neutralization tank 604a, and the alkaline electrolytic water containing anions is discharged from second neutralization tank 604b to first neutralization tank 604a. In the regeneration of the weakly basic anion exchange resin 634 in second neutralization tank 604b, the consumption of hydroxide ions in the alkaline electrolytic water is smaller than that in first neutralization tank 604a, so that the reduction in the hydroxide ion concentration can be suppressed as compared with the regeneration of first neutralization tank 604a. Therefore, it is possible to suppress the alkaline electrolytic water containing a large amount of hydroxide ions from flowing into first neutralization tank 604a, and re-adsorption of anions in first neutralization tank 604a. Therefore, it is possible to suppress a decrease in the regeneration treatment efficiency and to shorten the regeneration time.

Furthermore, neutralization tank regeneration circulation flow path 640 introduces the alkaline electrolytic water delivered from electrolytic tank 609 into first neutralization tank 604a and second neutralization tank 604b from the downstream sides of first neutralization tank 604a and second neutralization tank 604b, and causes the alkaline electrolytic water to flow out from the upstream side where the adsorption amount of anions is larger than that on the downstream side of each neutralization tank. As a result, the alkaline electrolytic water flows in from the downstream side where the adsorption amount of the anion component is smaller, and the neutralization tank is regenerated. In the regeneration of weakly basic anion exchange resin 634 on the downstream side, since the consumption of hydroxide ions in the alkaline electrolytic water is smaller than that on the upstream side, a reduction in the hydroxide ion concentration of the alkaline electrolytic water can be suppressed. Accordingly, it is possible to suppress re-adsorption on the upstream side of anions contained in the alkaline electrolytic water from the downstream side. Therefore, it is possible to suppress a decrease in the regeneration treatment efficiency of the neutralization tank and to shorten the regeneration time. Note that the downstream side refers to the downstream side in the flow path during the water softening treatment.

Then, in water softening device 601, when the time zone specified by controller 615 is reached or when the regeneration treatment exceeds a certain period of time (for example, 4 hours), the regeneration treatment is ended, and the water storage treatment is executed.

Note that in a case where the user desires to obtain water during the regeneration treatment, by opening a faucet (not illustrated) or the like connected to water softening device 601, the raw water passes through flow path 653 from the inlet port 602 and flows out from the water intake port 607, so that the raw water can be used without waiting for the end of the regeneration treatment.

### ((Water storage treatment))

Next, operations of water softening device 601 at the time of water storage treatment will be sequentially described with reference to Fig. 35 and the columns of "at the time of water storage" in Fig. 40.

During the period from the regeneration treatment to the water softening treatment, a regeneration flow path washing treatment, an electrolytic tank washing treatment, and a capture unit washing treatment, which will be described later, are executed. In any of these treatments, the water storage treatment is performed in order to secure the post-regeneration water in the mixing treatment in order to allow the raw water to flow into water softening tank regeneration circulation flow path 639.

At the time of the water storage treatment, on-off valve 619 to on-off valve 623 are closed, on-off valve 663 is opened, flow path switching valve 624 is in a connection state capable of supplying water from neutralization tank bypass flow path 642 to first collection flow path 637, and flow path switching valve 625 is in a connection state capable of supplying water from flow path 629 to water softening tank bypass flow path 644. Furthermore, flow path switching valve 626 is brought into a connection state capable of supplying water from first supply flow path 635 to neutralization tank bypass flow path 642, and flow path switching valve 627 is brought into a connection state capable of supplying water from water softening tank bypass flow path 644 to second supply flow path 636. As a result, water storage flow path 666 indicated by the black arrow in Fig. 35 is formed. Note that at this time, the operations of electrodes 641, first water pump 611, and second water pump 612 are stopped.

Therefore, the post-regeneration water remaining in water softening tank regeneration circulation flow path 639 flows through water softening tank regeneration circulation flow path 639 and flows into post-regeneration water storage tank 664 via post-regeneration water introduction flow path 662.

In this way, by the water storage treatment, the post-regeneration water in water softening tank regeneration circulation flow path 639 after the regeneration treatment can be stored in post-regeneration water storage tank 664. Therefore, even when the flow path washing or the washing of electrolytic tank 609 is performed between the regeneration treatment and the water softening treatment, the post-regeneration water can be used at the time of the next mixing treatment.

Then, in water softening device 601, in a case where the time zone specified by controller 615 is reached, in a case where the water storage treatment exceeds a certain time (for example, 5 minutes), or in a case where the water storage amount of post-regeneration water storage tank 664 exceeds a certain value, the water storage treatment is ended, and the regeneration flow path washing treatment is executed.

Note that, in a case where the user desires to obtain water during the water storage treatment, by opening a faucet (not illustrated) or the like connected to water softening device 601, the raw water passes through flow path 653 from the inlet port 602 and flows out from water intake port 607, so that the raw water can be used without waiting for the end of the water storage treatment.

### ((Regeneration flow path washing treatment))

Next, the operation of water softening device 601 during the regeneration flow path washing treatment will be sequentially described with reference to Fig. 36 and the columns of "at the time of regeneration flow path washing" in Fig. 40.

In water softening device 601, during the regeneration treatment, the hardness components are released from first water softening tank 603a and second water softening tank 603b into the acidic electrolytic water, and the acidic electrolytic water circulates in the flow path without being discharged from water softening tank regeneration circulation flow path 639. Therefore, the inside of water softening tank regeneration circulation flow path 639 after completion of the regeneration treatment is filled with high hardness water containing hardness components released from first water softening tank 603a and second water softening tank 603b. The hardness of the high hardness water is significantly higher than the hardness (for example, 450 ppm) of the raw water, and may increase to, for example, about 2000 ppm. When the process is shifted to the water softening treatment in a state where the high hardness water remains in water softening device 601, the high hardness water or the water in which the raw water and the high hardness water are mixed is discharged from water intake port 607. Therefore, in a case where the user of water softening device 601 executes the water softening treatment after the end of the regeneration treatment, there arises a problem that not only soft water cannot be obtained but also water having hardness higher than that of raw water is obtained immediately after the start of the water softening treatment. In order to solve these problems, a regeneration flow path washing treatment for draining high hardness water in water softening tank regeneration circulation flow path 639 is performed.

Note that, in the water storage treatment performed before the regeneration flow path washing treatment, a part of post-regeneration water in the flow path flows into post-regeneration water storage tank 664, but the regeneration flow path washing treatment is performed to discharge post-regeneration water remaining in the flow path even after the water storage treatment.

At the time of the regeneration flow path washing treatment, on-off valve 621 to on-off valve 623 are closed, on-off valve 618 to on-off valve 620 are opened, flow path switching valve 624 is brought into a connection state in which water can be supplied from flow path 628 to neutralization tank bypass flow path 642, flow path switching valve 625 is brought into a connection state in which water can be supplied to water softening tank bypass flow path 644, flow path switching valve 626 is brought into a connection state in which water can be supplied from neutralization tank bypass flow path 642 to first supply flow path 635, and flow path switching valve 627 is brought into a connection state in which water can be supplied to second supply flow path 636. That is, a state in which first water softening tank 603a and second water softening tank 603b communicate with each other, a state in which second water softening tank 603b and drainage port 613 communicate with each other, a state in which electrolytic tank 609 and drainage port 613 communicate with each other, and a state in which drainage of the capture unit drainage port 614 is stopped are set. As a result, as illustrated in Fig. 36, first drainage flow path 646 and second drainage flow path 647 are formed. Note that at this time, the operations of electrodes 641, first water pump 611, and second water pump 612 are stopped.

In the regeneration flow path washing treatment, specifically, by opening on-off valve 619, the raw water flows into first drainage flow path 646 and second drainage flow path 647 from the outside.

In first drainage flow path 646, the high hardness water in flow path 628, first collection flow path 637, first water pump 611, electrolytic tank 609, and first supply flow path 635 is swept away by the pressure of the flowed raw water, and flows into drainage flow path 654. The high hardness water flowing into drainage flow path 654 is discharged from drainage port 613 to the outside of the device.

In second drainage flow path 647, the high hardness water in flow path 628, first water softening tank 603a, neutralization tank bypass flow path 642, second water softening tank 603b, and first supply flow path 635 is swept away by the pressure of the raw water that has flowed in, and flows into drainage flow path 654. The high hardness water flowing into drainage flow path 654 is discharged from drainage port 613 to the outside of the device.

In this way, by the regeneration flow path washing treatment, the high hardness water in first drainage flow path 646 and second drainage flow path 647, which are main remaining portions of the high hardness water after the regeneration treatment, can be replaced with the raw water while the circulation to the neutralization tank 604 is suppressed. Therefore, in the regeneration flow path washing treatment, adsorption of hydrogen ions to weakly basic anion exchange resin 634 in neutralization tank 604 can be suppressed, so that consumption of the filled hydroxide ions can be suppressed, and neutralization performance can be maintained. Therefore, it is possible to suppress a decrease in water softening performance caused by high hardness water.

Then, in water softening device 601, when the time zone specified by controller 615 is reached, when the regeneration flow path washing treatment exceeds a certain time (for example, 1 minute), or when the amount of water passing through the regeneration flow path washing treatment exceeds a certain value, the regeneration flow path washing treatment is terminated, and the electrolytic tank washing treatment is executed.

Note that in a case where the user desires to obtain water during the regeneration flow path washing treatment, by opening a faucet (not illustrated) or the like connected to water softening device 601, the raw water passes through flow path 653 from the inlet port 602 and flows out from water intake port 607, so that the raw water can be used without waiting for the end of the regeneration flow path washing treatment.

### ((Electrolytic tank washing treatment))

Next, the operation of water softening device 601 during the electrolytic tank washing treatment will be sequentially described with reference to Fig. 37 and the columns of "at the time of electrolytic tank washing" in Fig. 40.

In the regeneration treatment, when electrolytic tank 609 is operating, a hardness component (calcium ions or magnesium ions) in water is precipitated as a solid (scale) on the cathode. Since the precipitate deposited on the cathode is a non-conductor, the operating voltage of electrolytic tank 609 is increased, and the power consumption during the regeneration treatment is increased. Therefore, it is necessary to perform an electrolytic tank washing treatment for removing precipitates deposited on the cathode.

In the electrolytic tank washing treatment, on-off valve 618 to on-off valve 622 are opened, and on-off valve 623 is closed. Furthermore, flow path switching valve 624 is in a connection state capable of supplying water from flow path 628 to flow path 629, flow path switching valve 625 is in a connection state capable of supplying water to water softening tank bypass flow path 644, flow path switching valve 626 is in a connection state capable of supplying water to first supply flow path 635, and flow path switching valve 627 is in a connection state capable of supplying water to second supply flow path 636. That is, a state in which first water softening tank 603a and electrolytic tank 609 communicate with each other, a state in which electrolytic tank 609 and drainage port 613 communicate with each other, and a state in which electrolytic tank 609 and the capture unit drainage port 614 communicate with each other are obtained. As a result, as illustrated in Fig. 37, first drainage flow path 646 and third drainage flow path 650 are formed.

In the electrolytic tank washing treatment, specifically, by opening on-off valve 619, the raw water flows into first drainage flow path 646 and third drainage flow path 650 from the outside.

In first drainage flow path 646, the introduced raw water flows through flow path 628, first collection flow path 637, and first water pump 611, and flows into electrolytic tank 609.

On the other hand, in third drainage flow path 650, the flowed raw water flows through flow path 628, first water softening tank 603a, second collection flow path 638, and second water pump 612, and flows into electrolytic tank 609.

In the electrolytic tank washing treatment, controller 615 energizes electrodes so that the cathode has higher potential than the anode (reverse electrolysis). Therefore, electrolytic tank 609 electrolyzes the raw water flowing into the electrolytic tank to generate alkaline electrolytic water near the anode and acidic electrolytic water near the cathode.

At this time, the precipitate deposited on the cathode can be dissolved by the acidic electrolytic water generated on the cathode. Therefore, it is possible to suppress a decrease in electrolytic performance due to adhesion of precipitates to the surface of electrodes 641.

The alkaline electrolytic water generated at the anode flows through first supply flow path 635, flows into drainage flow path 654, and is discharged from drainage port 613 to the outside of the device.

On the other hand, the acidic electrolytic water generated at the cathode dissolves precipitates deposited at the cathode, and flows into capture unit 610 through second supply flow path 636. The acidic electrolytic water flowing into capture unit 610 can dissolve the precipitate adhering to capture unit 610, and can preliminarily wash capture unit 610. Therefore, it is possible to shorten the time required for the capture unit washing treatment which is the next treatment. Then, the acidic electrolytic water is discharged to the outside of the device from capture unit drainage port 614 provided in a lower portion of capture unit 610.

That is, in the electrolytic tank washing treatment, the removal of the precipitate in electrolytic tank 609 and the removal of the precipitate in capture unit 610 can be simultaneously performed, and the time required from the end of the regeneration treatment to the start of the water softening treatment can be shortened.

Then, in water softening device 601, when the time zone specified by controller 615 is reached or when the electrolytic tank washing treatment exceeds a certain period of time (for example, 5 minutes), the electrolytic tank washing treatment is ended, and the capture unit washing treatment is executed.

Note that in third drainage flow path 650, since the raw water passes through first water softening tank 603a, the acidified water passes through capture unit 610. Therefore, capture unit 610 becomes acidic, and the precipitate adhering to capture unit 610 is dissolved by the acidic water. Therefore, since capture unit 610 can be preliminarily washed, the time required for the capture unit washing treatment which is the next treatment can be shortened. That is, the removal of the precipitate in electrolytic tank 609 and the removal of the precipitate in capture unit 610 can be simultaneously performed, and the time required from the end of the regeneration treatment to the start of the water softening treatment can be shortened.

Note that in a case where the user desires to obtain water during the electrolytic tank washing treatment, by opening a faucet (not illustrated) or the like connected to water softening device 601, the raw water passes through flow path 653 from the inlet port 602 and flows out from water intake port 607, so that the raw water can be used without waiting for the end of the electrolytic tank washing treatment.

### ((Capture unit washing treatment))

Next, the operation of water softening device 601 at the time of the capture unit washing treatment will be sequentially described with reference to Fig. 38 and the columns of "at the time of capture unit washing" in Fig. 40.

In the regeneration treatment, the high hardness water containing the hardness components discharged from first water softening tank 603a and second water softening tank 603b flows into electrolytic tank 609. The hardness component moves to the cathode side during electrolysis, reacts with hydroxide ions generated at the cathode, and becomes a precipitate. A part of the precipitated precipitate is contained in the alkaline electrolytic water discharged from electrolytic tank 609, flows through second supply flow path 636, and is captured by capture unit 610. Therefore, since the precipitate gradually accumulates in capture unit 610 during the regeneration treatment, the pressure loss caused by capture unit 610 gradually increases, and the flow rate of the alkaline electrolytic water flowing through neutralization tank regeneration circulation flow path 640 gradually decreases. Therefore, when the precipitates are left, the time required for regenerating weakly basic anion exchange resin 634 in first neutralization tank 604a and second neutralization tank 604b is extended, and the filling of weakly basic anion exchange resin 634 with hydroxide ions may not be completed in the end. Therefore, it is necessary to perform a capture unit washing treatment for removing a precipitate adhering to or precipitating on capture unit 610.

In the capture unit washing treatment, on-off valve 618, on-off valve 619, on-off valve 622, and on-off valve 623 are opened, and on-off valve 620 and on-off valve 621 are closed. Furthermore, flow path switching valve 624 is in a connection state capable of supplying water from flow path 628 to flow path 629, flow path switching valve 625 is in a connection state capable of supplying water from flow path 629 to flow path 630, flow path switching valve 626 is in a connection state capable of supplying water from flow path 630 to flow path 631, and flow path switching valve 627 is in a connection state capable of supplying water from flow path 631 to second supply flow path 636. That is, a state in which first water softening tank 603a and first neutralization tank 604a communicate with each other, a state in which first neutralization tank 604a and second water softening tank 603b communicate with each other, a state in which second water softening tank 603b and second neutralization tank 604b communicate with each other, and a state in which second neutralization tank 604b and the capture unit drainage port 614 communicate with each other are established. Accordingly, as illustrated in Fig. 38, fourth drainage flow path 652 is formed.

In the capture unit washing treatment, specifically, by opening on-off valve 619, the raw water flows into flow path 628 from the outside. The flowed raw water flows through flow path 628, first water softening tank 603a, flow path 629, first neutralization tank 604a, flow path 630, second water softening tank 603b, flow path 631, second neutralization tank 604b, and second supply flow path 636, and flows into capture unit 610.

In capture unit 610, neutral soft water flows in from the side opposite to the water flowing direction of the regeneration treatment. That is, backwashing of capture unit 610 is performed by the inflow neutral soft water. At this time, since a part of the precipitate fixed or precipitated on capture unit 610 is dissolved in advance by the electrolytic tank washing treatment, capture unit 610 can be easily washed with neutral soft water. The neutral soft water containing the precipitate is discharged to the outside of the device from capture unit drainage port 614 provided in the lower portion of capture unit 610.

In this way, since capture unit 610 can be backwashed, precipitates remaining in capture unit 610 can be removed. Therefore, the blockage of capture unit 610 can be suppressed, and the pressure loss caused by capture unit 610 can be reduced when the regeneration treatment is performed again. As a result, reduction in the flow rate of neutralization tank regeneration circulation flow path 640, which is a regeneration flow path including capture unit 610, can be suppressed, and the flow rate of the alkaline electrolytic water can be secured, so that regeneration performance can be secured.

Then, in water softening device 601, when the time zone specified by controller 615 is reached or when the capture unit washing treatment exceeds a certain period of time (for example, 5 minutes), the capture unit washing treatment is ended, and the water softening treatment is executed.

Note that the flow path from the inlet port 602 to second neutralization tank 604b is the same as the flow path during the water softening treatment. That is, by using the fourth drainage flow path 652, second neutralization tank 604b, which is the neutralization tank at the last stage in the water softening treatment, is filled with softened water. Therefore, by performing the water softening treatment after performing the capture unit washing treatment using the fourth drainage flow path 652, the user of water softening device 601 can obtain, from water intake port 607, soft water subjected to the water softening treatment and having reduced hardness immediately after the start of the water softening treatment.

Note that, in a case where the user desires to obtain water during the capture unit washing treatment, by opening a faucet (not illustrated) or the like connected to water softening device 601, the raw water passes through flow path 653 from inlet port 602 and flows out from water intake port 607, so that the raw water can be used without waiting for the end of the capture unit washing treatment.

As described above, in water softening device 601, the water softening treatment, the mixing treatment, the regeneration treatment, the water storage treatment, the regeneration flow path washing treatment, the electrolytic tank washing treatment, and the capture unit washing treatment are repeatedly executed in this order. By performing the capture unit washing treatment immediately before the water softening treatment, the neutralization tank at the last stage in the water softening treatment is filled with softened water. Therefore, when the user of water softening device 601 opens the faucet, discharge of high hardness water from water intake port 607 can be suppressed, and soft water having stable hardness can be provided immediately after the start of the water softening treatment.

Furthermore, by performing the electrolytic tank washing treatment after performing the regeneration flow path washing treatment, the high hardness water has already been discharged to the outside of the device at the time of polarity inversion in the electrolytic tank washing treatment, and the possibility of electrolyzing the high hardness water can be suppressed. Therefore, it is possible to suppress electrolysis of water having high hardness, and it is possible to suppress generation of a large amount of scale in a flow path through which alkaline electrolytic water is supplied at the time of polarity inversion.

As described above, according to water softening device 601 of the present the seventh exemplary embodiment, the following effects can be obtained.
(1) Water softening device 601 includes water softening tank 603 that softens raw water used in a water softening treatment and containing a hardness component with weakly acidic cation exchange resin 633, electrolytic tank 609 that generates acidic electrolytic water used in a regeneration treatment and regenerating weakly acidic cation exchange resin 633 in water softening tank 603, and mixing unit 660 that mixes the raw water with post-regeneration water containing a hardness component precipitated from weakly acidic cation exchange resin 633 during the regeneration treatment to generate mixed water. Then, electrolytic tank 609 generates acidic electrolytic water with the mixed water.
   According to such a configuration, since the electrolysis can be performed using the mixed water having a conductivity higher than that of the raw water, an increase in the voltage applied to electrodes 641 can be suppressed. Therefore, the consumption of electrodes 641 can be suppressed, and the service life of electrolytic tank 609 can be extended. Furthermore, since the conductivity of the raw water can be increased without adding a chemical or the like, there are advantages that the size of the device can be reduced, the operation cost can be reduced, and the complexity of adding the chemical can be avoided. Moreover, since water having conductivity higher than that of the raw water can be prepared by effectively utilizing the liquid generated by the treatment of water softening device 601 and drained, the amount of wastewater can be reduced, and the amount of the raw water to be newly introduced at the time of the regeneration treatment can be reduced.
(2) Water softening device 601 includes supply flow path 672 for supplying the mixed water generated by mixing unit 660 to electrolytic tank 609. Supply flow path 672 supplies the mixed water to electrolytic tank 609 at the start of the regeneration treatment.
   According to such a configuration, the mixed water is supplied to electrolytic tank 609 from the start of the regeneration treatment, and the mixed water having a higher conductivity than the raw water can be electrolyzed. Therefore, an increase in voltage applied to electrodes 641 is suppressed, and consumption of electrodes 641 can be suppressed.
(3) Water softening device 601 includes a water softening tank regeneration circulation flow path 639 that allows electrolytic tank 609 and water softening tank 603 to communicate with each other. Mixing unit 660 is provided downstream of electrolytic tank 609 and upstream of water softening tank 603 in water softening tank water softening regeneration circulation flow path 639 starting from electrolytic tank 609.
   According to such a configuration, it is possible to mix the raw water and the post-regeneration water while suppressing the influence of the raw water or the post-regeneration water on the water softening treatment. Furthermore, since the acidic post-regeneration water can be stored, adsorption to weakly acidic cation exchange resin 633 on the downstream side can be prevented, and the load on the electrodes at the time of electrolysis can be reduced as compared with the case of electrolysis from neutral water.
(4) In water softening device 601, a ratio of post-regeneration water to mixed water is set to 15% or more.
   In this way, since the ion concentration in the mixed water can be increased, the conductivity of the mixed water is increased. Therefore, it is possible to suppress an increase in the voltage applied to electrodes 641 at the time of electrolysis in the regeneration treatment.
(5) In water softening device 601, a ratio of post-regeneration water to mixed water is set to 25% or less.
   This makes it possible to suppress a significant increase in the hardness component concentration in the mixed water. Therefore, it is possible to suppress the occurrence of a state in which a solid such as calcium carbonate is likely to precipitate due to high hardness of the mixed water.
(6) Water softening device 601 includes raw water introduction flow path 670 for supplying raw water to mixing unit 660, post-regeneration water introduction flow path 662 for supplying post-regeneration water to mixing unit 660, and post-regeneration water storage tank 664 for storing post-regeneration water. Then, mixing unit 660 mixes the raw water supplied from raw water introduction flow path 670 and the post-regeneration water supplied from post-regeneration water storage tank 664 via post-regeneration water introduction flow path 662.
   According to such a configuration, the post-regeneration water can be stored in post-regeneration water storage tank 664. Therefore, even when liquid flows into water softening tank regeneration circulation flow path 639 between the regeneration treatment and the next regeneration treatment, post-regeneration water having high conductivity can be supplied to mixing unit 660 during the mixing treatment. Furthermore, since the acidic post-regeneration water can be stored, adsorption to weakly acidic cation exchange resin 633 on the downstream side can be prevented, and the load on the electrodes at the time of electrolysis can be reduced as compared with the case of electrolysis from neutral water.
(7) Water softening device 601 includes a controller that repeatedly executes a softening regeneration treatment including a water softening treatment and a regeneration treatment a plurality of times, and electrolytic tank 609 mixes post-regeneration water generated at the time of the n-th softening regeneration treatment with the raw water and uses the water as the mixed water at the time of the (n + 1)-th softening regeneration treatment.

According to such a configuration, the post-regeneration water generated in the previous regeneration treatment can be mixed with the raw water in the next mixing treatment and used as mixed water in the regeneration treatment. Therefore, since the electrolysis can be performed using the mixed water having a conductivity higher than that of the raw water, an increase in the voltage applied to electrodes 641 can be suppressed.

The present disclosure has been described above based on the exemplary embodiments. It is understood by those skilled in the art that these exemplary embodiments are merely examples, and that various modifications can be made to combinations of the components or the processing processes, and that such modifications are also within the scope of the present disclosure.

In water softening device 601 according to the present the seventh exemplary embodiment, the post-regeneration water stored in post-regeneration water storage tank 664 is mixed with the raw water at the time of the mixing treatment, but the present disclosure is not limited thereto. For example, raw water may be caused to flow into water softening tank regeneration circulation flow path 639, and mixed with post-regeneration water in the flow path. Even in this case, the raw water flows in through raw water introduction flow path 670, and the post-regeneration water flows through the post-regeneration water introduction flow path. However, the post-regeneration water introduction flow path in this case is a flow path corresponding to water softening tank regeneration circulation flow path 639. Furthermore, in the case of obtaining mixed water in this manner, when the regeneration flow path washing treatment, the electrolytic tank washing treatment, and the capture unit washing treatment are executed, the post-regeneration water or the mixed water is drained to outside the device or diluted with the raw water, and thus it is preferable to repeat the three treatments of the water softening treatment, the mixing process, and the regeneration treatment.

In water softening device 601 according to the present the seventh exemplary embodiment, after the end of the regeneration treatment, the regeneration flow path washing treatment, the electrolytic tank washing treatment, and the capture unit washing treatment are executed in this order, but the present disclosure is not limited thereto. For example, the regeneration flow path washing treatment may be performed after the electrolytic tank washing treatment, and the capture unit washing treatment may preferably be performed before the water softening treatment. Even if the inside of the device is washed in such order, the precipitates in electrolytic tank 609 and capture unit 610 can be removed, and second neutralization tank 604b immediately before the water softening treatment can be filled with soft water.

### INDUSTRIAL APPLICABILITY

The water softening device according to the present disclosure can be applied to a point-of-use (POU) water purification system or a point-of-entry (POE) water purification system.

### REFERENCE MARKS IN THE DRAWINGS

1: water softening device
2: inlet port
3: water softening tank
3a: first water softening tank
3b: second water softening tank
4: neutralization tank
4a: first neutralization tank
4b: second neutralization tank
5: water intake port
6: regeneration device
7: weakly acidic cation exchange resin
7a: first weakly acidic cation exchange resin
7b: second weakly acidic cation exchange resin
8: weakly basic anion exchange resin
8a: first weakly basic anion exchange resin
8b: second weakly basic anion exchange resin
9: electrolytic tank
10: diaphragm
11: anode
12: first water intake port
13: first discharge port
14: anode chamber
15: cathode
16: second water intake port
17: second discharge port
18: cathode chamber
19: acidic electrolytic water storage tank
20: air bleed valve
21: alkaline electrolytic water storage tank
22: air bleed valve
23: acidic electrolytic water circulation pump
24: alkaline electrolytic water circulation pump
25: capture unit
26: controller
30: flow path
31: flow path
32: flow path
33: flow path
34: flow path
40: acidic electrolytic water circulation flow path
41: first supply flow path
42: first bypass flow path
43: first collection flow path
44: alkaline electrolytic water circulation flow path
45: second supply flow path
46: second bypass flow path
47: second collection flow path
48: water flow path
49: water flow path
51: on-off valve
52: on-off valve
53: on-off valve
54: on-off valve
55: on-off valve
61: on-off valve
62: on-off valve
63: on-off valve
64: on-off valve
65: on-off valve
66: on-off valve
71: on-off valve
72: on-off valve
101: water softening device
102: inlet port
103: water softening tank
103a: first water softening tank
103b: second water softening tank
104: neutralization tank
104a: first neutralization tank
104b: second neutralization tank
105: water intake port
106: regeneration device
107: weakly acidic cation exchange resin
107a: first weakly acidic cation exchange resin
107b: second weakly acidic cation exchange resin
108: weakly basic anion exchange resin
108a: first weakly basic anion exchange resin
108b: second weakly basic anion exchange resin
109: electrolytic tank
110: electrodes
111: treatment tank
112: water pump
113: filtration unit
114: air bleed valve
115: controller
120: flow path
121: flow path
122: flow path
123: flow path
124: flow path
130: circulation flow path
130A: circulation flow path
130B: circulation flow path
130a: first circulation flow path
130b: second circulation flow path
130c: third circulation flow path
131: first supply flow path
132: second supply flow path
133: first bypass flow path
134: second bypass flow path
135: first collection flow path
136: second collection flow path
137: third collection flow path
140: water flow path
141: on-off valve
142: on-off valve
143: on-off valve
144: on-off valve
145: on-off valve
151: on-off valve
152: on-off valve
153: on-off valve
154: on-off valve
155: on-off valve
156: on-off valve
157: on-off valve
161: on-off valve
162: on-off valve
201: water softening device
201a: water softening device
201b: water softening device
201c: water softening device
202: inlet port
203: water softening tank
204: neutralization tank
205: water intake port
206: regeneration device
207: flow path
208: flow path
209: flow path
210: weakly acidic cation exchange resin
211: weakly basic anion exchange resin
212: electrolytic tank
213: electrodes
213a: electrode
213b: electrode
214: separation unit
215: water storage tank
216: drainage port
217: controller
219: water pump
220: circulation flow path
220a: first circulation flow path
220b: second circulation flow path
220c: circulation flow path
220d: first circulation flow path
220e: second circulation flow path
221: first supply flow path
222: first collection flow path
223: second supply flow path
224: second collection flow path
225: water flow path
226: drainage flow path
226a: drainage flow path
227: replacement flow path
227a: replacement flow path
229: flow path
231: on-off valve
232: on-off valve
233: on-off valve
234: on-off valve
235: on-off valve
236: on-off valve
237: on-off valve
238: on-off valve
239: on-off valve
240: selection valve
241: on-off valve
242: on-off valve
243: on-off valve
244: on-off valve
245: flow rate detection unit
246: static pressure detection unit
301, 301a, 301b: water softening device
302: inlet port
303: water softening tank
303a: first water softening tank
303b: second water softening tank
304: neutralization tank
304a: first neutralization tank
304b: second neutralization tank
305: water intake port
306: regeneration device
307: weakly acidic cation exchange resin
307a: first weakly acidic cation exchange resin
307b: second weakly acidic cation exchange resin
308: weakly basic anion exchange resin
308a: first weakly basic anion exchange resin
308b: second weakly basic anion exchange resin
309: electrolytic tank
310: diaphragm
311: anode
312: first water intake port
313: first discharge port
314: anode chamber
315: cathode
316: second water intake port
317: second discharge port
318: cathode chamber
319: acidic electrolytic water storage tank
320: air bleed valve
321: alkaline electrolytic water storage tank
322: air bleed valve
323: acidic electrolytic water circulation pump
324: alkaline electrolytic water circulation pump
325: capture unit
326: controller
327: detector
327a: detector
330, 331, 332, 333, 334, 335, 336: flow path
340: acidic electrolytic water circulation flow path
341: first supply flow path
342: first bypass flow path
343: first collection flow path
344: alkaline electrolytic water circulation flow path
345: second supply flow path
346: second bypass flow path
347: second collection flow path
348, 349: water flow path
351, 352, 353, 354, 355, 361, 362, 363, 364, 365, 366, 371, 372, 381, 382: on-off valve
390: anode chamber electrolytic water drainage flow path
392: cathode chamber electrolytic water drainage flow path
401: water softening device
401a: water softening device
402: inlet port
403: water softening tank
404: neutralization tank
405: water intake port
406: regeneration device
407: weakly acidic cation exchange resin
408: weakly basic anion exchange resin
409: branch unit
411: electrolytic tank
412: diaphragm
413: anode
414: first water intake port
415: first discharge port
416: anode chamber
417: cathode
418: second water intake port
419: second discharge port
420: cathode chamber
421: acidic electrolytic water storage tank
422: air bleed valve
423: alkaline electrolytic water storage tank
424: air bleed valve
425: acidic electrolytic water circulation pump
426: alkaline electrolytic water circulation pump
427: capture unit
428: controller
430, 432, 433, 435: flow path
431: introduction pipe
431a: introduction pipe
434: circulation pipe
441: first supply flow path
442: first collection flow path
443: second supply flow path
444: second collection flow path
445: water flow path
446: water flow path
451, 452, 453, 454, 461, 462, 463, 464, 471, 472: on-off valve
501: water softening device
502: inlet port
503: first water softening tank
504: first neutralization tank
505: second water softening tank
506: second neutralization tank
507: water intake port
508: regeneration device
509: electrolytic tank
510: capture unit
511: first water pump
512: second water pump
513: drainage port
514: capture unit drainage port
515: controller
518, 519, 520, 521, 522, 523: on-off valve
524, 525, 526, 527: flow path switching valve
528, 529, 530, 531, 532: flow path
533: weakly acidic cation exchange resin
534: weakly basic anion exchange resin
535: first supply flow path
536: second supply flow path
537: first collection flow path
538: second collection flow path
539: water softening tank regeneration circulation flow path
540: neutralization tank regeneration circulation flow path
541: electrodes
541a: electrode
541b: electrode
542: neutralization tank bypass flow path
543: water softening flow path
544: water softening tank bypass flow path
545: regeneration flow path washing flow path
546: first drainage flow path
547: second drainage flow path
549: electrolytic tank washing flow path
550: third drainage flow path
551: capture unit washing flow path
552: fourth drainage flow path
553: flow path
554: drainage flow path
601: water softening device
602: inlet port
603: water softening tank
603 a: first water softening tank
603b: second water softening tank
604: neutralization tank
604a: first neutralization tank
604b: second neutralization tank
607: water intake port
608: regeneration device
609: electrolytic tank
610: capture unit
611: first water pump
612: second water pump
613: drainage port
614: capture unit drainage port
615: controller
618, 619, 620, 621, 622, 623, 663: on-off valve
624, 625, 626, 627: flow path switching valve
628, 629, 630, 631, 632: flow path
633: weakly acidic cation exchange resin
633a: first weakly acidic cation exchange resin
633b: second weakly acidic cation exchange resin
634: weakly basic anion exchange resin
634a: first weakly basic anion exchange resin
634b: second weakly basic anion exchange resin
635: first supply flow path
636: second supply flow path
637: first collection flow path
638: second collection flow path
639: water softening tank regeneration circulation flow path
640: neutralization tank regeneration circulation flow path
641: electrodes
641a: electrode
641b: electrode
642: neutralization tank bypass flow path
643: water softening flow path
644: water softening tank bypass flow path
645: regeneration flow path washing flow path
646: first drainage flow path
647: second drainage flow path
649: electrolytic tank washing flow path
650: third drainage flow path
651: capture unit washing flow path
652: fourth drainage flow path
653: flow path
654: drainage flow path
660: mixing unit
662: post-regeneration water introduction flow path
664: post-regeneration water storage tank
666: water storage flow path
670: raw water introduction flow path
672: supply flow path

## Claims

1. A water softening device comprising:
a water softening tank that softens raw water containing a hardness component with a weakly acidic cation exchange resin;
a neutralization tank that neutralizes soft water passing through the water softening tank with a weakly basic anion exchange resin;
an electrolytic tank that generates acidic electrolytic water for regenerating the weakly acidic cation exchange resin and alkaline electrolytic water for regenerating the weakly basic anion exchange resin; wherein the electrolytic tank includes:
a first discharge port through which the acidic electrolytic water is discharged from the electrolytic tank to the water softening tank,
a first water intake port through which the soft water passing through the water softening tank is taken in the electrolytic tank,
a second discharge port through which the alkaline electrolytic water is discharged from the electrolytic tank to the neutralization tank, and
a second water intake port through which neutralized water passing through the neutralization tank is taken in the electrolytic tank; and wherein the water softening device further comprises:
an acidic electrolytic water circulation flow path that circulates the acidic electrolytic water through the electrolytic tank, the first discharge port, the water softening tank, and the first water intake port in the stated order; and
an alkaline electrolytic water circulation flow path that circulates the alkaline electrolytic water through the electrolytic tank, the second discharge port, the neutralization tank, and the second water intake port in the stated order.

2. The water softening device according to Claim 1, wherein the electrolytic tank further includes:
an anode chamber in which an anode is stored;
a cathode chamber in which a cathode is stored; and
a diaphragm provided between the anode chamber and the cathode chamber, and
the acidic electrolytic water is generated in the anode chamber, and the alkaline electrolytic water is generated in the cathode chamber.

3. The water softening device according to Claim 1 or Claim 2, further comprising:
an acidic electrolytic water circulation pump provided in the acidic electrolytic water circulation flow path; and
an alkaline electrolytic water circulation pump provided in the alkaline electrolytic water circulation flow path.

4. The water softening device according to any one of Claim 1 to Claim 3, further comprising an acidic electrolytic water storage tank provided at a rear stage of the water softening tank and a front stage of the first water intake port in the acidic electrolytic water circulation flow path.

5. The water softening device according to any one of Claim 1 to Claim 4, further comprising an alkaline electrolytic water storage tank provided at a rear stage of the neutralization tank and a front stage of the second water intake port in the alkaline electrolytic water circulation flow path.

6. The water softening device according to any one of Claim 1 to Claim 5, further comprising a capture unit that is provided at a rear stage of the second discharge port and a front stage of the neutralization tank in the alkaline electrolytic water circulation flow path and separates a solid in the alkaline electrolytic water.

7. The water softening device according to any one of Claim 1 to Claim 6, wherein the acidic electrolytic water discharged from the first discharge port circulates from a downstream side of the water softening tank when the weakly acidic cation exchange resin is regenerated.

8. The water softening device according to any one of Claim 1 to Claim 7, wherein the alkaline electrolytic water discharged from the second discharge port circulates from a downstream side of the neutralization tank when the weakly basic anion exchange resin is regenerated.

9. The water softening device according to any one of Claim 1 to Claim 8, wherein the water softening tank includes a first water softening tank and a second water softening tank, the neutralization tank includes a first neutralization tank and a second neutralization tank, and the water softening device is configured to circulate the raw water through the first water softening tank, the first neutralization tank, the second water softening tank, and the second neutralization tank in the stated order when the raw water is softened.

10. The water softening device according to Claim 9, wherein, when the weakly acidic cation exchange resin is regenerated, the water softening device is configured so that the acidic electrolytic water discharged from the first discharge port flows through the second water softening tank and then flows through the first water softening tank.

11. The water softening device according to Claim 9 or Claim 10, wherein, when the weakly basic anion exchange resin is regenerated, the water softening device is configured so that the alkaline electrolytic water discharged from the second discharge port flows through the second neutralization tank and then flows through the first neutralization tank.

12. The water softening device according to Claim 1, wherein
a plurality of the water softening tanks that softens the raw water containing the hardness component with the weakly acidic cation exchange resin; and
a plurality of the neutralization tanks that neutralizes pH of the soft water flowing through the water softening tanks with the weakly basic anion exchange resin are provided, and
wherein, in a water softening treatment, the water softening tanks and the neutralization tanks are alternately connected to communicate with each other to soften the raw water, and
in a regeneration treatment, the water softening tanks and the neutralization tanks are regenerated by a first regeneration treatment of regenerating the water softening tanks and the neutralization tanks excluding the neutralization tank at a last stage and a second regeneration treatment of regenerating the water softening tanks and the neutralization tanks including the neutralization tank at the last stage.

13. The water softening device according to Claim 12, wherein
the second regeneration treatment is executed in a set period set based on a use status of the water softening device, and
the first regeneration treatment is executed when the water softening treatment is not executed outside the set period.

14. The water softening device according to Claim 12 or Claim 13, wherein in a case where the second regeneration treatment is completed, the water softening treatment is executed after a wastewater treatment of discharging the acidic electrolytic water used for regenerating the water softening tanks and the alkaline electrolytic water used for regenerating the neutralization tanks to an outside is executed, and
in a case where the first regeneration treatment is completed, the water softening treatment is executed without executing the wastewater treatment.

15. The water softening device according to Claim 1, wherein a replacement treatment of allowing the raw water to pass through the water softening tank is performed in a middle of a regeneration treatment of the water softening tank.

16. The water softening device according to Claim 15, further comprising a separation unit that is provided in a flow path communicating the electrolytic tank and the neutralization tank and separates a precipitate caused by the hardness component contained in water introduced into the electrolytic tank,
wherein in the replacement treatment, the raw water flowing through the water softening tank is caused to flow to pass through the separation unit.

17. The water softening device according to Claim 16, wherein in the replacement treatment, the raw water flowing through the water softening tank is caused to flow into the separation unit from a downstream side of the separation unit.

18. The water softening device according to Claim 16 or Claim 17, further comprising a flow rate detection unit that detects a flow rate of water flowing through the separation unit,
wherein the replacement treatment is started in a case where the flow rate detected by the flow rate detection unit falls below a predetermined value.

19. The water softening device according to Claim 16 or Claim 17, further comprising a static pressure detection unit that detects a static pressure of flowing water at a front stage of the separation unit,
wherein the replacement treatment is performed in a case where the static pressure detected by the static pressure detection unit exceeds a predetermined value.

20. The water softening device according to Claim 1, further comprising:
a detector that detects a voltage of the electrolytic tank; and
a controller that controls an electrode regeneration treatment of the electrolytic tank based on the voltage detected by the detector,
wherein during a resin regeneration treatment of performing at least one of regeneration of the weakly acidic cation exchange resin using the acidic electrolytic water and regeneration of the weakly basic anion exchange resin using the alkaline electrolytic water, the controller continues the resin regeneration treatment or shifts to a water softening treatment in a case where the voltage detected by the detector is less than a first reference value, and the controller stops the resin regeneration treatment and shifts to the electrode regeneration treatment in a case where the voltage detected by the detector is more than or equal to the first reference value, and
during the electrode regeneration treatment, the controller continues the electrode regeneration treatment in a case where the voltage detected by the detector is more than or equal to a second reference value, and the controller terminates the electrode regeneration treatment and shifts to the resin regeneration treatment or the water softening treatment in a case where the voltage detected by the detector is less than the second reference value.

21. The water softening device according to Claim 1, further comprising:
a detector that detects a voltage of the electrolytic tank; and
a controller that controls an electrode regeneration treatment of the electrolytic tank based on the voltage detected by the detector,
wherein before start of a water softening treatment after completion of a resin regeneration treatment of performing at least one of regeneration of the weakly acidic cation exchange resin using the acidic electrolytic water and regeneration of the weakly basic anion exchange resin using the alkaline electrolytic water, the controller shifts to the water softening treatment without shifting to the electrode regeneration treatment in a case where the voltage detected by the detector is less than a first reference value.

22. The water softening device according to Claim 21, wherein the controller executes the electrode regeneration treatment and the water softening treatment in parallel in a case where the voltage detected by the detector is more than or equal to the first reference value.

23. The water softening device according to Claim 21, wherein in a case where the voltage detected by the detector is greater than or equal to the first reference value, the electrode regeneration treatment is performed and then the water softening treatment is performed.

24. The water softening device according to Claim 22 or Claim 23, wherein in a case where the voltage detected by the detector becomes less than a second reference value during the electrode regeneration treatment, the electrode regeneration treatment is ended.

25. The water softening device according to Claim 1, further comprising:
a branch unit that branches second soft water flowing out of the neutralization tank; and
a circulation pipe that supplies the second soft water branched at the branch unit to the water softening tank.

26. The water softening device according to Claim 25, further comprising an introduction pipe that mixes the raw water and the second soft water on an upstream side of the water softening tank to obtain diluted raw water and allows the diluted raw water to pass through the water softening tank.

27. The water softening device according to Claim 25, further comprising an introduction pipe that allows the second soft water and the raw water to independently pass through the water softening tank.

28. The water softening device according to any one of Claim 25 to Claim 27, wherein the weakly basic anion exchange resin further includes a tertiary amine as an ion exchange group.

29. The water softening device according to any one of Claim 25 to Claim 28, wherein the weakly basic anion exchange resin is a macroporous ion exchange resin.

30. The water softening device according to any one of Claim 25 to Claim 29, further comprising:
an electrolytic water generation unit that generates the acidic electrolytic water and the alkaline electrolytic water; and
a regeneration device that regenerates the weakly acidic cation exchange resin using the acidic electrolytic water generated by the electrolytic water generation unit and regenerates the weakly basic anion exchange resin using the alkaline electrolytic water generated by the electrolytic water generation unit.

31. The water softening device according to Claim 1, further comprising:
a water softening tank regeneration flow path that communicates the water softening tank and the electrolytic tank independently of the neutralization tank;
a neutralization tank regeneration flow path that communicates the neutralization tank and the electrolytic tank independently of the water softening tank;
a capture unit that captures a precipitate caused by the acidic electrolytic water introduced from the water softening tank into the electrolytic tank through the water softening tank regeneration flow path and the hardness component contained in the alkaline electrolytic water introduced from the neutralization tank into the electrolytic tank through the neutralization tank regeneration flow path during a regeneration treatment; and
a controller that controls a water softening treatment and the regeneration treatment,
wherein after completion of the regeneration treatment, the controller executes a regeneration flow path washing treatment of discharging water containing the hardness component in the water softening tank regeneration flow path to an outside of the water softening device, and an electrolytic tank washing treatment of removing a precipitate caused by the hardness component in the electrolytic tank and the neutralization tank regeneration flow path,
after completion of the regeneration flow path washing treatment and the electrolytic tank washing treatment, the controller executes a capture unit washing treatment of removing the precipitate captured by the capture unit, and
after completion of the capture unit washing treatment, the controller executes the water softening treatment.

32. The water softening device according to Claim 31, wherein the controller executes the regeneration flow path washing treatment, the electrolytic tank washing treatment, and the capture unit washing treatment in order of the treatments after the completion of the regeneration treatment.

33. The water softening device according to Claim 31 or Claim 32, wherein
the water softening tank includes a first water softening tank and a second water softening tank,
the neutralization tank includes a first neutralization tank and a second neutralization tank, and
in the water softening treatment, the controller causes the raw water to pass through the first water softening tank, the first neutralization tank, the second water softening tank, and the second neutralization tank in the stated order.

34. The water softening device according to any one of Claim 31 to Claim 33, further comprising:
a first drainage flow path that communicates an inlet port of the raw water, the electrolytic tank, and a drainage port independently of the neutralization tank; and
a second drainage flow path that communicates the water softening tank and the drainage port independently of the neutralization tank,
wherein in the regeneration flow path washing treatment, the controller causes the raw water to pass through the first drainage flow path and the second drainage flow path, and causes water in the first drainage flow path and the second drainage flow path to be replaced with the raw water.

35. The water softening device according to Claim 34, wherein the controller supplies the raw water such that the second drainage flow path having a flow rate larger than a flow rate of the first drainage flow path.

36. The water softening device according to any one of Claim 33 to Claim 35, further comprising:
a capture unit drainage port provided in a lower portion of the capture unit;
a first drainage flow path that communicates an inlet port of the raw water, the electrolytic tank, and a drainage port independently of the neutralization tank; and
a third drainage flow path that communicates the first water softening tank, the electrolytic tank, and the capture unit drainage port independently of the neutralization tank,
wherein in the electrolytic tank washing treatment, the controller drains water in the first drainage flow path by performing polarity inversion of the electrolytic tank and allowing the raw water to pass through the first drainage flow path, and allows the raw water to pass through the third drainage flow path to wash the electrolytic tank.

37. The water softening device according to any one of Claim 33 to Claim 36, further comprising:
a water intake port through which soft water generated by the water softening treatment is discharged to an outside of the water softening device;
a backwash control valve that is provided on a downstream side of the second neutralization tank and switches a water flowing direction of the soft water flowing through the second neutralization tank to a side of the water intake port and a side of the capture unit;
a capture unit drainage port provided in a lower portion of the capture unit; and
a fourth drainage flow path communicating the first water softening tank, the first neutralization tank, the second water softening tank, the second neutralization tank, the backwash control valve, and the capture unit drainage port,
wherein in the capture unit washing treatment, the controller causes the raw water to flow into the capture unit from a downstream side by causing the raw water to pass through the fourth drainage flow path to wash the capture unit.

38. The water softening device according to Claim 1, further comprising a mixing unit that mixes the raw water with post-regeneration water containing the hardness component precipitated from the weakly acidic cation exchange resin during a regeneration treatment to generate mixed water,
wherein the electrolytic tank generates the acidic electrolytic water with the mixed water.

39. The water softening device according to Claim 38, further comprising a supply flow path that supplies the mixed water generated by the mixing unit to the electrolytic tank,
wherein the supply flow path supplies the mixed water to the electrolytic tank at start of the regeneration treatment.

40. The water softening device according to Claim 38 or Claim 39, further comprising a water softening tank regeneration flow path that allows the electrolytic tank and the water softening tank to communicate with each other,
wherein the mixing unit is provided downstream of the electrolytic tank and upstream of the water softening tank in the water softening tank regeneration flow path with the electrolytic tank as a starting point.

41. The water softening device according to any one of Claim 38 to Claim 40, wherein the post-regeneration water has a ratio more than or equal to 15% to the mixed water.

42. The water softening device according to any one of Claim 38 to Claim 41, wherein the post-regeneration water has a ratio less than or equal to 25% to the mixed water.

43. The water softening device according to any one of Claim 38 to Claim 42, further comprising:
a raw water introduction flow path that supplies the raw water to the mixing unit; and
a post-regeneration water introduction flow path that supplies the post-regeneration water to the mixing unit,
wherein the mixing unit performs mixing by merging the raw water introduction flow path and the post-regeneration water introduction flow path.

44. The water softening device according to any one of Claim 38 to Claim 43, further comprising:
a raw water introduction flow path that supplies the raw water to the mixing unit;
a post-regeneration water introduction flow path that supplies the post-regeneration water to the mixing unit; and
a post-regeneration water storage tank that stores the post-regeneration water,
wherein the mixing unit mixes the raw water supplied from the raw water introduction flow path with the post-regeneration water supplied from the post-regeneration water storage tank via the post-regeneration water introduction flow path.

45. The water softening device according to any one of Claim 38 to Claim 44, further comprising a controller that repeatedly executes a softening regeneration treatment including a water softening treatment and the regeneration treatment a plurality of times,
wherein the electrolytic tank mixes the post-regeneration water generated in an n-th softening regeneration treatment, where n is an integer of 1 or more, with the raw water and uses the water as the mixed water in an (n + 1)-th softening regeneration treatment.
